# EUROPEAN PATENT APPLICATION

(11) **EP 1 473 639 A1**
(43) Date of publication of application: **03.11.2004**
(21) Application number: 03705045.7
(22) Date of filing: 04.02.2003
(51) Int. Cl.: G06F 17/30, G06F 19/00

(54) **DOCUMENT KNOWLEDGE MANAGEMENT APPARATUS AND METHOD**

(30) Priority: 04.02.2002 JP 2002027446; 16.08.2002 JP 2002237687; 16.08.2002 JP 2002237688; 16.08.2002 JP 2002237689; 25.12.2002 JP 2002375457
(71) Applicant: Celestar Lexico-Sciences, Inc., Chiba-shi, Chiba 261-8501 (JP)
(72) Inventor: NITTA, Kiyoshi, c/o Celestar Lexico-Sciences Inc., Chiba-shi, Chiba 261-8501 (JP); DOI, Hirofumi, c/o Celestar Lexico-Sciences, Inc., Chiba-shi, Chiba 261-8501 (JP); KIKUCHI, Yasuhiro, c/o Celestar Lexico-Scs, Inc., Chiba-shi, Chiba 261-8501 (JP); HORAI, Hisayuki, c/o Celestar Lexico-Sciences Inc., Chiba-shi, Chiba 261-8501 (JP)
(74) Representative: HOFFMANN - EITLE
(86) International application number: PCT/JP2003/001120
(87) International publication number: WO 2003/067471

(57) **Abstract**

In the present invention, a textual document is syntactically analyzed and knowledge is constructed from a single word or plural words. The knowledge is then marked, from the broken down knowledge (represented by the underscores in Fig. 1) or from a part-of-speech, as a related object (node) or a relation (edge) (represented by 'n' or 'e' shown in Fig. 1). In other words, in the present invention a textual document is treated as knowledge constructed from a single word or plural words. The knowledge extracted from the textual document is structured to form a knowledge structure (such as a graph structure constituted from nodes and edges). At least one link can be established between each of the knowledge structure elements and a semantically closest concept entry in a hierarchical concept dictionary.

## Description

### TECHNICAL FIELD

(I) The present invention relates to a literature knowledge management apparatus, a literature knowledge management method, a literature knowledge management program, and a recording medium, and more specifically to a literature knowledge management apparatus, a literature knowledge management method, a literature knowledge management program, and a recording medium by which knowledge contained in literatures can be managed by associating the knowledge to textual documents and a concept dictionary.
(II) The present invention relates to a literature knowledge management apparatus, a literature knowledge management method, a literature knowledge management program, and a recording medium, and more specifically to a literature knowledge management apparatus, a literature knowledge management method, a literature knowledge management program, and a recording medium by which knowledge contained in literatures can be managed by associating the knowledge to textual documents and a concept dictionary and which allows an efficient and precise search of the knowledge by means of a search query.
(III) The present invention relates to a dictionary information management apparatus, a dictionary information management method, a dictionary information management program, and a storage medium, and more particularly to a dictionary information management apparatus, a dictionary information management method, a dictionary information management program, and a recording medium by which different types of semantic dictionaries and category dictionaries employed in literature database searches are created, and by which the created dictionaries are automatically or semi-automatically checked.
(IV) The present invention relates to a document information extraction processing apparatus, a document information extraction processing method, a document information extraction processing program and a recording medium. The present invention relates more specifically to a document information extraction processing apparatus, a document information extraction processing method, a document information extraction processing program and a recording medium that seek to enable high accuracy in information extraction, increase the extraction volume, and enhance the extracted information.
(V) The present invention rotates to a text mining processing apparatus, a text mining processing method, a text mining processing program, and a recording medium. More specifically the present invention relates to text mining processing apparatus, a text mining processing method, a text mining processing program, and a recording medium that enable advanced, efficient, and automated analysis through text mining.
(VI) The present invention relates to a text mining analysis apparatus, a text mining analysis method, a text mining analysis program, and a recording medium. More specifically, the present invention relates to a text mining analysis unit, a text mining analysis method, a text mining analysis program, and a recording medium which allow to flexibly assign a concept and a view in a text mining analysis.

### BACKGROUND ART

(I) Natural language processing technology, which employs techniques such as syntactic, semantic analysis, etc, has been developed as a conventional technology for information processing. Other such information processing technologies that have been subsequently developed are ontology-based Worldnet, EDR, etc , sentence-based search technology such as vector space model, and a concept-based search technology which accepts queries in natural language and in which a concept can be directly specified. These technologies subsequently gave way to development of multi-window applications development technology such as MVC model.

However, all these technologies lacked a comprehensive system for extracting useful knowledge from the collection of data (for instance, textual document databases) from a large volume of literatures.

This problem will be explained next in greater detail.

The existing natural language processing technology can be used for extracting knowledge from the textual data obtained from the documents. The extracted knowledge can be converted to a concept dictionary using the existing ontological dictionary technology. The concept search technology can be used for searching the text, knowledge, or the concept dictionary. Further, multi-window application development technology can be used for displaying operation screens of plural tools.

However, no suitable tool was available for creating from the knowledge extracted from the textual documents a knowledge structure (for instance representing knowledge as a graphical representation constructed from nodes and edges), and a hierarchical concept dictionary corresponding to the knowledge structure. In other words, beginning with textual document handling right up to knowledge extraction and concept dictionary creation, the entire process is carried out en bloc. That is, even if a different word is used in the textual document, and this word conceptually conveys the same meaning as the one input in the search query, the computer treats the word as conveying the same meaning as in the textual document. Further, the correlation between knowledge and the textual document that contains it can be established by correlating the knowledge structure elements of the knowledge structure to the textual document. Furthermore, as the links to all the concept entries of the hierarchical concept dictionary are established from the knowledge structure elements, every concept entry has an instance of textual document through the knowledge structure element. However, there was no system in place to realize these processes comprehensively.

Consequently, conventionally these functions were realized by combining a plurality of tools of different types. However, the I/O interface or operability of each of these tools being different, simplification or efficiency of operation screens of these tools was practically impossible. In other words, the user had to enter data separately for each tool and this led to the possibility of erroneous inputs, etc. Another undesirable outcome was failure of knowledge to reflect in other tools or failure of creation of knowledge in other tools leading to enormous delay in the creation of the knowledge structure.

Further, if knowledge was modified, deleted, or added in any of the operating tools such as the text, knowledge, or concept dictionary, the knowledge had to be manually updated in the other tools as automatic editing was not possible. Besides, no knowledge structure was automatically created using similarity of literatures.

Therefore, the conventional system posed several problems both for the user of the knowledge and the administrator and hence was inefficient.

It is an object of the present invention to eliminate all the problems described above and to provide a literature knowledge management apparatus, literature knowledge management method, literature knowledge management program and a recording medium that can comprehensively manage the knowledge contained in the literatures.

(II) Natural language processing technology, which employs techniques such as syntactic, semantic analyses, etc, has been developed as a conventional technology for information processing. Other such information processing technologies that have been subsequently developed are ontology-based Worldnet, EDR, etc , document-based search technology such as vector space model, query building technology which expands a query projected for search (hereinafter called a "search query") into its synonyms and a concept-based search technology which accepts queries in natural language and in which a concept can be directly specified. Researchers retrieve known knowledge by accessing literature database, etc. using these information processing technologies.

However, though the researchers need to retrieve stored information by accessing a plurality of databases using these information processing technologies, the conventional information processing technologies are limited in that there is no comprehensive system for improved recurrence rate (an index showing how much percent of the search result contains the relevant cluster) while maintaining the search precision (an index showing how much percent of the search result is relevant).

This problem will be explained next in greater detail.

For instance, if a search query "A activates B" is projected in a conventional retrieval systems based on the vector space model in which each literature is indexed, the retrieval system retrieves not only all the literatures that include the words "A", "activates", and "B", but also all the literatures that have any one of these words, and documents in which these words are in the reverse order. Conversely, the retrieval system retrieves only those literatures in which the three words of the search query appear in the same order. In other words, in conventional technology, the retrieval system either retrieves more than what is required (low search precision) or far too less than what is required (low recurrence rate). Further, conventional retrieval systems based on the vector space model cannot distinguish if a word has more than one conceptual meaning or if a word appears in two different documents. Consequently, the search result that the conventional retrieval system throws up is garbage for the most part and is low on recurrence rate.

In the conventional search query expansion technology which uses a synonym dictionary and reverse search result, when the query "A suppresses B" is put forth, A and B are individually expanded to such an extent that the final search result has very low precision.

Thus, the conventional system posed several problems both for the user of the knowledge and the administrator and hence was inefficient.

It is an object of the present invention to eliminate all the problems described above and to provide a literature knowledge management apparatus, a literature knowledge management method, a literature knowledge management program, and a recording medium which, when a search is made on the literature knowledge, can improve the recurrence rate while maintaining the search precision.

(III) In recent years the Internet has come to serve as a medium for gathering, and building literature databases of technical journals, and disseminating knowledge contained in technical literatures such as dissertations, etc. For instance, the website of the American-based National Center for Biotechnology Information (NCBI) has a link to several literature databases, one of which is PubMed (URL: http://www.ncbi.nlm.gov/entrez/) published by the American-based National Library of Medicine (NLM).

In order to function efficiently, the conventional database search services required a 'semantic dictionary' that stored terms as canonical form and variant forms in a correlated manner, and a 'category dictionary' which stored terms categorized into types.

IBM (company name) came up with a text mining system called TAKMI (a product) that employs existing semantic dictionary and category dictionary (The URL of the home page of introduction to text mining by IBM's Tokyo Research Laboratory is http://www.trl.ibm.com/projects/s7710/tm/takmi/takmi.htm, and the URL of the home page of introduction to TAKMI is http://www.trl.ibm.com/projects/s7710/tm/takmi/takmi.htm).

MeSH (Medical Subject Headings) is another thesaurus search service for medical terms (The URL of the MeSH home page by NLM is http://www.nlm.nih.gov/mesh/meshhome.html, the URL of the home page that has the thesis explaining the concept of MeSH is http://www.nlm.nih.gov/mesh/patterns.html, and the URL of the MeSH Browser Service home page is http://www.ncbi.nih.gov/entrez/meshbrowser.cgi).

However, the creation and checking of the semantic dictionary and category dictionary required in the conventional literature database search service had to be manually carried out by the administrator. It could prove to be a monumental task involving a lot of time if an exhaustive and accurate semantic dictionary containing the latest terminology is to be prepared.

This problem will be explained next in greater detail.

In the conventional literature database search service, in order to search any word, the word first needs to be converted to a canonical form corresponding to the variant forms in which the word appears in the semantic dictionary. In other words, the search precision can be improved by matching the variant of a word with its canonical form. The text mining precision that depends on the count of the number of terms can also be improved.

However, the conventional semantic dictionary had to be prepared manually and it proved to be a laborious process involving an enormous amount of time and effort to create an exhaustive and highly accurate one containing the latest terminology.

In the conventional database search service the category dictionary that categorizes the words in their canonical form into categories was also required. The canonical forms and categories have very complex hierarchical and binary relational structures with the canonical forms and categories having a many-to-many relation. The category dictionary, again, needs to be manually prepared, and therefore this too involved an enormous amount of time and effort in order to prepare an exhaustive and accurate category dictionary.

The created semantic dictionary and category dictionary usually have many bugs and errors. The category classification and definition needs to correct and change by the progress of technology. In this case, the check of the information of dictionary needs to be manually prepared, and therefore this too involved an enormous amount of time and effort in order to check the exhaustive and accurate information of the dictionary.

Thus, the conventional system posed several problems both for the user of the literature database search service and the administrator and hence was inefficient.

The conventional technology explained so far and the issues the present invention proposes to encompass literature data pertaining to all domains and not just natural science such as life science, medicine or technology.

It is an object of the present invention to eliminate all the problems explained above and to provide a dictionary information processing apparatus, a dictionary information management method, a dictionary information management program, and a recording medium that create semantic dictionary and category dictionary required for the literature database search service, and automatically check the created dictionaries.

(IV) In recent years the Internet has come to serve as a medium for gathering, and building literature databases of technical journals, and disseminating knowledge contained in technical literatures such as dissertations, etc. For instance, the website of the American-based National Center for Biotechnology Information (NCBI) has a link to several literature databases, one of which is PubMed (URL: http://www.ncbi.nlm.gov/entrez/) published by the American-based National Library of Medicine (NLM).

In order to function efficiently, the conventional database search services required a 'semantic dictionary' that stored terms as canonical form and variant forms in a correlated manner, and a 'category dictionary' which stored terms categorized into types.

IBM (company name) came up with a text mining system called TAKMI (a product) that employs existing semantic dictionary and category dictionary (The URL of the home page of introduction to text mining by IBM's Tokyo Research Laboratory is http://www.trl.ibm.com/projects/s7710/tm/takmi/takmi.htm, and the URL of the home page of introduction to TAKMI is http://www.trl.ibm.com/projects/s7710/tm/takmi/takmi.htm).

MeSH (Medical Subject Headings) is another thesaurus search service for medical terms (The URL of the MeSH home page by NLM is http://www.nlm.nih.gov/mesh/meshhome.html, the URL of the home page that has the thesis explaining the concept of MeSH is http://www.nlm.nih.gov/mesh/patterns.html, and the URL of the MeSH Browser Service home page is http://www.ncbi.nih.gov/entrez/meshbrowser.cgi).

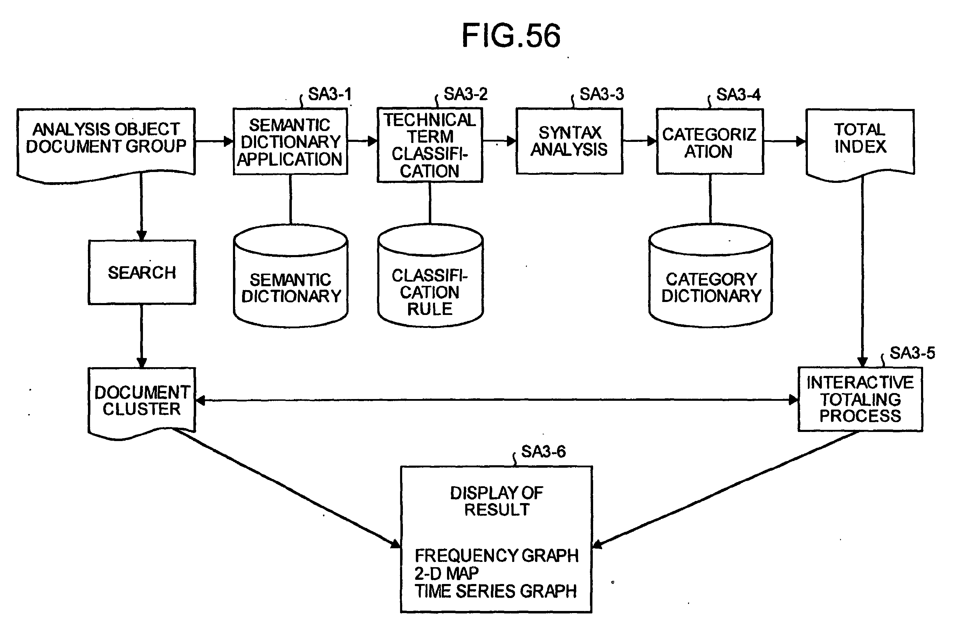

An outline of the text mining system is explained next with reference to Fig. 56. Fig. 56 is a schematic diagram illustrating a text mining system.

In this system, the following steps were executed in order to obtain the correlation between a concept and a text string of a language that appeared in each document information from the analysis object document group, as is shown in Fig.56.

A semantic dictionary is created (manually), and the semantic dictionary is applied to each word of the document information which is indicated in English, Japanese, etc. (Step SA3-1).

The technical term is classified based on the classification rule (Step SA3-2), and syntax analysis process is applied next to the document information with the words seperated partially (Step SA3-3). Step SA3-2 and Step SA3-3 can be executed parallal to each other, since the application of semantic dictionary and the syntax analysis can be executed in random order.

A category dictionary is created (manually), and categorized next by applying the category dictionary to the result. This result is obtained by applying the semantic dictionary, and the suitable sentence structure of document information which is a result of the syntax anylysis. The term corresponding to the category is totaled and an index is created (Step SA3-4).

The appearance frequency, such as a categorized concept, etc. is calculated/totaled (Step SA3-5). The calculated/totaled results are displayed by plotting in various formats, namely, a frequency graph by plotting the frequency in which the word in the document information appears, a frequency time series graph by plotting frequency for every document issue date, a 2-D map, and the like (Step SA3-6). As a result, a user can extract the desired information manually/by viewing from the information such as the displayed frequency.

However, in the conventional text mining processing system, the canonical form or the variant form of each term that was defined in the semantic dictionary information was extracted from the textual document of the analysis object document. When totaling/analyzing for the appearance frequency of a term which was registered in the semantic dictionary, system noise was introduced at the time of semantic dictionary information extraction.

Since the conventional semantic dictionary was mainly created/updated manually, there were many inconsistencies in the contents of each entry that was registered in the dictionary. In the conventional text mining processing system, even though there were inconsistencies in the registered entries, the process of information extraction was carried out on the basis of these semantic dictionaries which lacked precise information.

In the conventional text mining system, when a word was extracted from a semantic dictionary, all the information of a similar word was extracted eventhough there was difference in part-of-speech or difference in meaning. Thus large system noise was generated when the information was extracted.

Therefore, the conventional system posed several problems both for the user and the administrator and hence was inefficient.

The conventional technology explained so far and the issues the present invention proposes to address encompass literature data pertaining to all domains and not just natural science such as life science, medicine or technology.

It is an object of the present invention to eliminate all the problems described above and to provide a document information extraction processing apparatus, method, program and recording medium that can provide precision in information extraction, increased extraction volume and enhancement of the extracted information.

(V) In recent years, the Internet has come to serve as a medium for gathering, and building literature databases of technical journals, and disseminating knowledge contained in technical literatures such as dissertations, etc. For instance, the website of the American-based National Center for Biotechnology Information (NCBI) has a link to several literature databases, one of which is PubMed (URL: http://www.ncbi.nlm.gov/entrez/) published by the American-based National Library of Medicine (NLM).

In order to function efficiently, the conventional database search services require a 'semantic dictionary' that stores terms as canonical forms and variants in a correlated manner, and a 'category dictionary' which stores terms categorized into types.

IBM (company name) came up with a text mining system called TAKMI (a product) that employs existing semantic dictionary and category dictionary (The URL of the home page of introduction to text mining by IBM's Tokyo Research Laboratory is http://www.trl.ibm.com/projects/s7710/tm/takmi/takmi.htm, and the URL of the home page of introduction to TAKMI is http://www.trl.ibm.com/projects/s7710/tm/takmi/takmi.htm).

MeSH (Medical Subject Headings) is another thesaurus search service for medical terms (The URL of the MeSH home page by NLM is http://www.nlm.nih.gov/mesh/meshhome.html, the URL of the home page that has the thesis explaining the concept of MeSH is http://www.nlm.nih.gov/mesh/patterns.html, and the URL of the MeSH Browser Service home page is http://www.ncbi.nih.gov/entrez/meshbrowser.cgi).

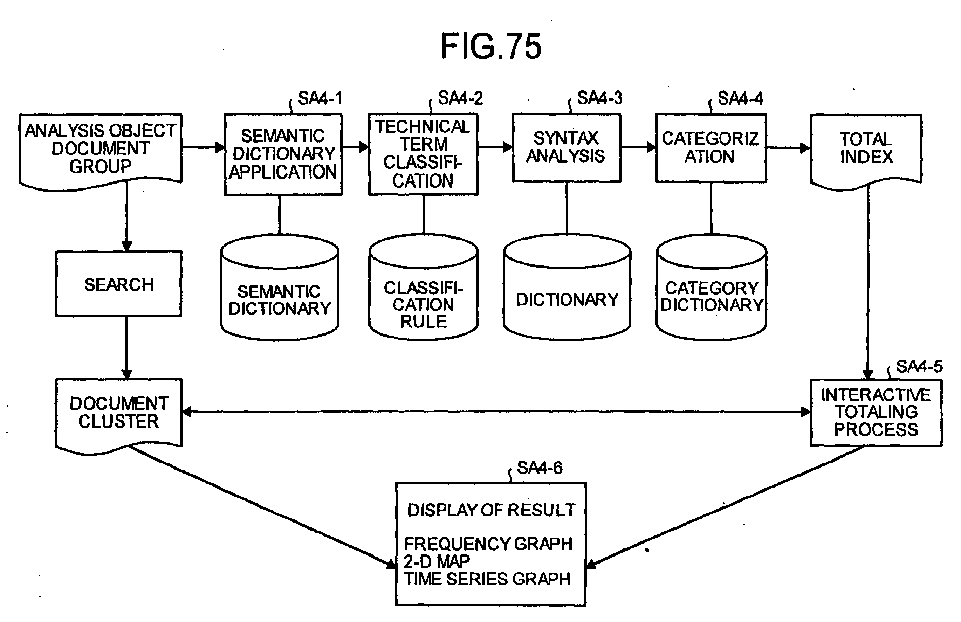

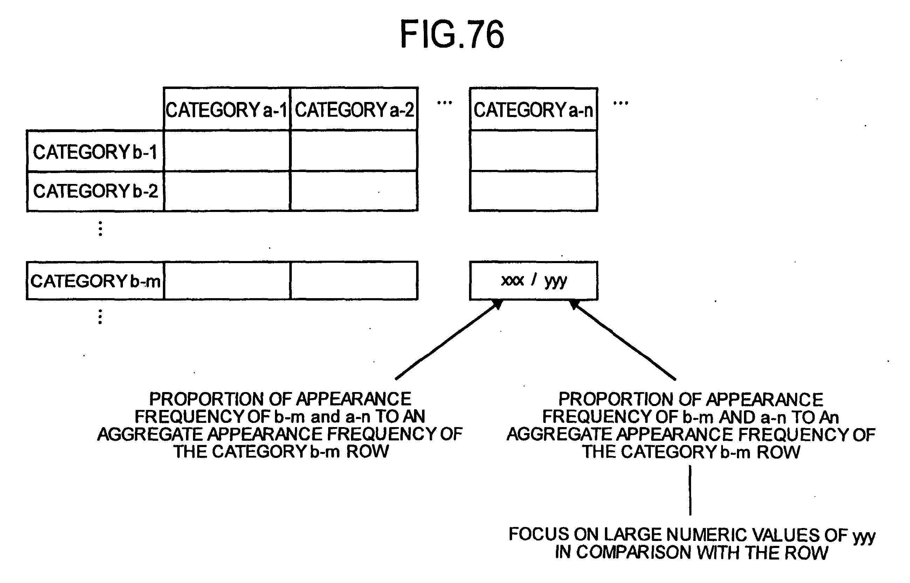

An overview of a text mining system will be explained next with reference to Fig. 75 and Fig. 76. Fig. 75 is a schematic diagram illustrating an overview of a text mining process.

As shown in Fig. 75, in the present system, the following sequence of steps is involved for establishing a correlation between a text string of a word appearing in document information that is included in an analysis object document group.

A semantic dictionary is first created (manually), and the semantic dictionary is applied to each word of the document information entered in English, Japanese, etc. (Step SA4-1).

The technical terms in the document information, which is separated into words, are classified based on classification rules (Step SA4-2). Subsequently, and syntax analysis process is applied (Step SA4-3). The application of the semantic dictionary and the syntax analysis may be carried out in any sequence, or even may be carried out side by side.

A category dictionary is created next (manually). Categorization is carried out by applying the category dictionary to the appropriate sentence structure of the document information obtained as a syntax analysis result and to the result obtained by applying the semantic dictionary. The terms corresponding to each category are totalled and an index is created (Step SA4-4).

The appearance frequency, etc.of a categorized concept, etc. is calculated/totaled (Step SA4-5). The calculated/totaled results are displayed as graphs in various formats, such as, a frequency graph which shows the frequency in which a word appears in the document information, or an information time series graph which shows the frequency by the issue date of literatures, or a 2-D map shown in Fig. 76, etc. (Step SA4-6). As a result, the user extracts the desired information manually/visually from the information such as the displayed appearance frequency.

Fig. 76 is a schematic diagram illustrating an overview of a 2-D map shown in Step SA4-6 of Fig. 75. Each column of the 2-D map displays, the appearance frequency of the document containing the term which belongs to two corresponding categories namely the longitudinal direction (row) and a transverse direction (column), and the ratio of appearance frequency which is occupied in the total sum of appearance frequency of each line. The desired information is extracted by observing the comparatively higher appearance frequency (value of yyy of the column shown in Fig. 76).

Thus, in the existing text mining system, an end user performs a series of interactive analytical operations and reaches the text. As a result the end user does not have a means to acquire the reliability directly since the reliability of each operation changes with every text processing technique. In other words, it was difficult to search directly as to what term was extracted and from which document. Thus, to extract useful information by employing the existing text mining system needed experience as well as proficiency. In order to have mass appeal with which a general user utilizes text mining system, it was necessary to provide information considering the reliability of the interactive analytical operation. Such kind of text mining system was unavailable.

In the conventional method, the word of the same representation was totaled as a same category and consequently the meaning of a word that changed contextually could not be handled correctly.

Conventionally, in order to switchover between single screens or to handle a plurality of documents and analytical axes, the analysis method was dependent on the memory of the end user.

After having performed the 2-D map analysis, if the number of category elements increased, it was difficult to search for a particular category element.

When the user had to analyze many elements or when there were many methods for analysis, considerable time was expended in interactive process.

When large-scale concept dictionaries (several tens of thousands of categories) were used, it was difficult to look through or search through the concept items by using a 1-dimensional list.

Thus, conventional system posed several problems, both for the user as well as the administrator, and as a result the system proved inconvenient and inefficient.

However, the conventional system discussed until now is not to be limited'to document database search system for the documents pertaining to natural sciences namely living things, medical science, or chemistry, but can be considered in similar way for all the systems, with which the document information which relates to all searchable fields.

It is an object of the present invention to solve the problems described above and to provide a text mining analysis apparatus, a text mining method, a text mining program, and a recording medium which can perform sophisticated text mining analysis efficiently and automatically.

(VI) In recent years the Internet has come to serve as a medium for gathering, and building literature databases of technical journals, and disseminating knowledge contained in technical literatures such as dissertations, etc. For instance, the website of the American-based National Center for Biotechnology Information (NCBI) has a link to several literature databases, one of which is PubMed (URL: http://www.ncbi.nlm.gov/entrez/) published by the American-based National Library of Medicine (NLM) (for instance, see the nonpatented literature 1).
Nonpatented Literature: URL of PubMed on the Internet: http://www.ncbi.nlm.gov/entrez/).

In order to function efficiently, the conventional database search services required a 'semantic dictionary' that stored terms as canonical form and variants in a correlated manner, and a 'category dictionary' which stored terms categorized into types.

IBM (company name) came up with a text mining system called TAKMI (a product) that employs existing semantic dictionary and category dictionary (for instance, see the nonpatented literature 2). Nonpatented Literature 2: URL of the homepage of introduction to the text mining technique by the IBM Tokyo Research Laboratory: http://www.trl.ibm.com/projects/s7710/tm/index.htm, and URL of the homepage of introduction to TAKMI: http://www.trl.ibm.com/projects/s7710/takmi.htm).

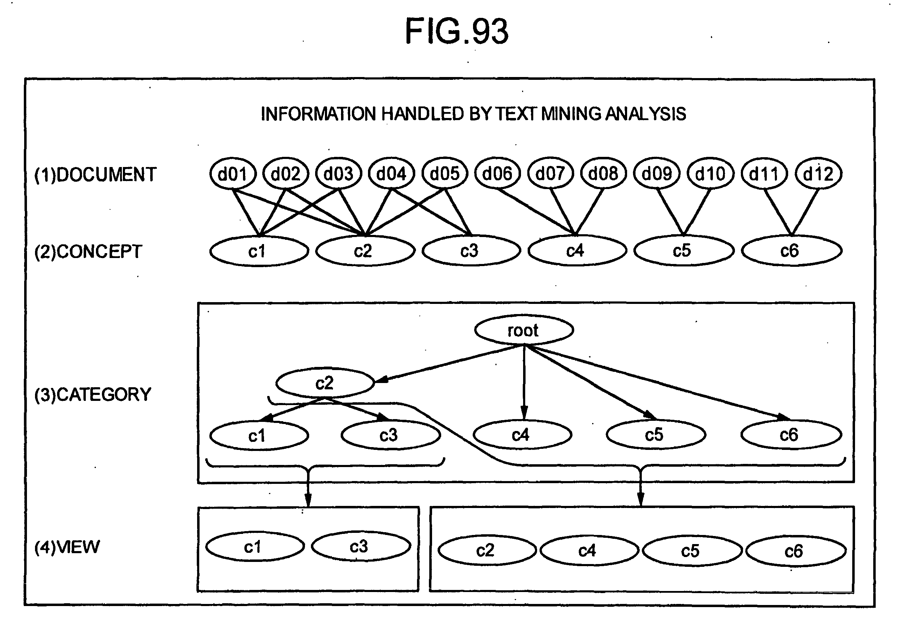

In the existing text mining system, the analysis is done using four kinds of information (a document, a concept, a category, and a view) as shown in Fig. 93. Fig. 93 is a schematic diagram illustrating the concept of a document, a concept, a category, and a view which has the information handled by the text mining analysis in the text mining system. This information will be explained next with reference to Fig. 93.
(1) Document
   A "Document" means a text data to be analyzed by text mining analysis (corresponds to reference numerals d01 through d1 2 shown in Fig. 93). Generally a field divides each document.
(2) Concept
   A "concept" means a set of the document contained in a specific concept (corresponds to the reference numerals c1 through c6 as shown in Fig. 93). In the existing system, a synonym dictionary and its set of canonical form determine the concept. The concept maintains a set of documents which have been described by specified concept.
(3) Category
   A "category" means a set of a view trim line constituting concepts (corresponds to the tree structure which consists of concept c1 through c6 belonging to a lower rank as shown in Fig. 93). In the existing system, the category dictionary determines a category. The category maintains a concept set according to the structure of a paperweight type or a tree structure type.
(4) View

A "View (viewpoint)" means the sequential cluster that is formed from a concept within the category. In the existing system, in case of flat weighted structure of the category, a view in all the concept clusters contained in this category is determined by the sequence of alphabets (for instance, a concept ID), the appearance frequency or the magnification of appearance frequency.

When the category is a tree structure, a view is determined by the specifications of a concept node which forms the object for text mining analysis by the user. The view retains the cluster of child concepts on the category tree structure for the specified concept which appear in alphabetical order (for instance, an ID of the concept), the appearance frequency or the magnification of appearance frequency.

Fig. 93 illustrates a tree structure of a category. Fig. 93 illustrates a first view which consists of c1 and c3 when the concept node to be used for text mining analysis is specified by the user, is c2, and the second view which consists of c2, c4, c5, and c6 when the concept node specified by the user is a root.

The existing text mining system poses a basic problem on the system structure due to which the assigning method of the concept and the assigning method of a view at the category is limited.

The contents of this problem will be discussed next in greater details.

The assigning method of the concept in the existing text mining system determines the concept according to the set of synonym dictionary and its canonical form. Since the concept, which is not defined in the synonym dictionary and the category dictionary, cannot be handled, a new concept cannot be created.

The existing text mining system includes two view assigning methods, namely, when category has a flat weighted structure and when category has a tree structure. In case of the category having the flat weighted structure, the view is determined as a set of ranking specified in the set of all concepts which are included in this category, while in case of category having tree structure, the view is determined as a set of concepts corresponding to the subordinate concept according to the concept node which is specified by the user. However, in both the cases an excessive concept may go into the view.

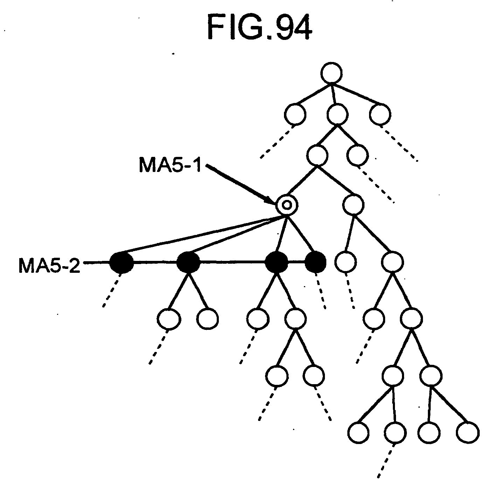

In the assigning method of the view in the existing text mining system, the concept that does not have a brother relation on the structure cannot be put in order as a view. This problem is discussed in greater details next with reference to Fig. 94. As shown in Fig. 94, in the assigning method of the view in the existing text mining system, the analysis object concept (concept to be analyzed) is selected from the category (MA5-1). A view is assigned to be a "child concept" (namely, the concept which is directly connected to the lower rank by a path on the structure) of the concept (MA5-2). Thus in the conventional assigning method of the view, only the concept which has a brother relation in the category was set as a view, and as a result only the limited concepts having brother relationship could be compared.

Since the conventional system can use only the concept and category which were prepared before hand according to the usage situation, it posed a problem where the concept or a view could not be assigned flexibly, regardless of the category. As a result, the conventional system was inconvenient for the user as well as the administrator of the system, and utilization efficiency deteriorated.

It is an object of the present invention to solve the problems described above and to provide a text mining analysis apparatus, a text mining method, a text mining program, and a recording medium which can flexibly assign a concept and a view in text mining analysis.

### DISCLOSURE OF THE INVENTION

(I) A literature knowledge management apparatus according to one aspect of the present invention includes: a textual document handling unit that breaks up textual documents of literatures into knowledge constructed from a single word or plural words; a textual document operation screen creating unit that displays the textual documents by grouping the textual documents according to the knowledge into which the textual document handling unit has broken the textual documents into, and creates a textual document operation screen that enables a user to select the word or words that constitute the knowledge of the user's choice; a knowledge structure handling unit that is associated with the textual documents, the knowledge structure comprising relation-type knowledge structure elements and related object-type knowledge structure elements; a knowledge structure operation screen creating unit that displays the knowledge structure managed by the knowledge structure handling unit, and creates a knowledge structure operation screen that enables the user to select the relation-type knowledge structure elements and the related object-type knowledge structure elements constituting the knowledge structure of the user's choice; a concept dictionary handling unit that manages a concept dictionary constituting concept entries that hierarchically define concepts of the associated knowledge; and a concept dictionary operation screen creating unit that displays the concept dictionary managed by the concept dictionary handling unit, and enables the user to select the concept entry corresponding to the knowledge of the user's choice.

According to the present apparatus, the literature textual document is broken up into bits of knowledge constructed from a single word or a plurality of words. The textual documents are grouped according to the knowledge categories they are grouped into and displayed. A textual document operation screen is created on which the user can select the word(s) constituting the desired knowledge. A knowledge structure is created from relation-type knowledge structure elements and related object-type knowledge structure elements which are associated with the textual document through links and the created knowledge structure is displayed. A knowledge structure operation screen is created on which the user can select the relation-type knowledge structure elements and the related object-type knowledge structure elements for creating the desired knowledge structure. A concept dictionary is created from concept entries that hierarchically define the concepts of the associated knowledge and the created concept dictionary is displayed so that the user can select the concept entry corresponding the desired knowledge. Thus, it is possible to mechanically appraise the similarity of knowledge structure elements by virtue of the knowledge structure elements of the knowledge structure being associated with the relevant concept entries. Thus, even if a different word is used in the textual document for a particular knowledge structure element, if this word conceptually conveys the same meaning as the knowledge structure element, the computer treats the word as conveying the same meaning as the knowledge structure element. Knowledge and textual document can be easily correlated because of the association of the knowledge structure elements in the knowledge structure with the textual document through links. Further, since links are established from the knowledge structure elements to every concept entry of the hierarchical concept dictionary, every concept entry has an instance of textual document through the knowledge structure element.

A literature knowledge management apparatus according to another aspect of the present invention further includes: a common cursor control unit that displays a common cursor that points to an identical knowledge on the textual document operation screen, the knowledge structure operation screen, as well as the concept dictionary operation screen, and enables the user to select the knowledge of the user's choice by moving the common cursor.

According to the present apparatus, a common cursor that indicates an identical knowledge is displayed on the textual document screen, the knowledge structure operation screen, and the concept dictionary operation screen and the user selects the desired knowledge by moving this common cursor. This feature simplifies the screen operation process, increases the efficiency of operation, and cuts down the possibility of input errors by the user. In other words, typing mistakes while entering text labels of knowledge structure elements, or failure of updation or creation of knowledge structure elements can be brought down and the time taken for the creation of knowledge structure can be reduced to a great extent.

A literature knowledge management apparatus according to still another aspect of the present invention further includes: a screen-specific cursor control unit that displays a screen-specific cursor that points to the knowledge on the textual document operation screen, the knowledge structure operation screen, as well as the concept dictionary operation screen, enables the user to select the knowledge of the user's choice by moving the common cursor on one screen, and manages link information pertaining to the selected knowledge on the other two screens.

According to the present apparatus, a screen-specific cursor that indicates knowledge is displayed on the textual document screen, the knowledge structure operation screen, and the concept dictionary operation screen. When the user selects the desired knowledge by moving this common cursor on one screen, the link information on the other two screens that correspond to the knowledge selected by the user is managed (for instance, in the case of creation, modification, deletion, etc.). This feature simplifies the screen operation process and increases the efficiency of operation. Thus, mistakes related to operation is reduced to a great extent.

A literature knowledge management apparatus according to still another aspect of the present invention further includes: a literature knowledge auto-editing step that, when the knowledge on any one of the literature knowledge operation screen, the knowledge structure operation screen, or the concept dictionary operation screen is modified, deleted, or added, automatically modifies, deletes, or adds the link information corresponding to that knowledge on the other two screens.

According to the present apparatus, when knowledge is modified, deleted, or added on any of the three screens, namely, the textual document operation screen, the knowledge structure operation screen, and the concept dictionary operation screen, all the link information corresponding to the knowledge on the other two screens is automatically modified, deleted, or added, thereby enabling auto-editing. Further, auto-creation of knowledge structure using literature similarity is possible.

A literature knowledge management method according to one aspect of the present invention includes: a textual document handling step that breaks up textual documents of literatures into knowledge constructed from a single word or plural words; a textual document operation screen creating step that displays the textual documents by grouping the textual documents according to the knowledge into which the textual document handling step has broken the textual documents into, and creates a textual document operation screen that enables a user to select the word or words that constitute the knowledge of the user's choice; a knowledge structure handling step that is associated with the textual documents, the knowledge structure comprising relation-type knowledge structure elements and related object-type knowledge structure elements; a knowledge structure operation screen creating step that displays the knowledge structure managed by the knowledge structure handling step, and creates a knowledge structure operation screen that enables the user to select the relation-type knowledge structure elements and the related object-type knowledge structure elements constituting the knowledge structure of the user's choice; a concept dictionary handling step that manages a concept dictionary constituting concept entries that hierarchically define concepts of the associated knowledge; and a concept dictionary operation screen creating step that displays the concept dictionary managed by the concept dictionary handling step, and enables the user to select the concept entry corresponding to the knowledge of the user's choice.

According to the present method, the literature textual document is broken up into bits of knowledge constructed from a single word or a plurality of words. The textual documents are grouped according to the knowledge categories they are grouped into and displayed. A textual document operation screen is created on which the user can select the word(s) constituting the desired knowledge. A knowledge structure is created from relation-type knowledge structure elements and related object-type knowledge structure elements which are associated with the textual document through links and the created knowledge structure is displayed. A knowledge structure operation screen is created on which the user can select the relation-type knowledge structure elements and the related object-type knowledge structure elements for creating the desired knowledge structure. A concept dictionary is created from concept entries that hierarchically define the concepts of the associated knowledge and the created concept dictionary is displayed so that the user can select the concept entry corresponding the desired knowledge. Thus, it is possible to mechanically appraise the similarity of knowledge structure elements by virtue of the knowledge structure elements of the knowledge structure being associated with the relevant concept entries. Thus, even if a different word is used in the textual document for a particular knowledge structure element, if this word conceptually conveys the same meaning as the knowledge structure element, the computer treats the word as conveying the same meaning as the knowledge structure element. Knowledge and textual document can be easily correlated because of the association of the knowledge structure elements in the knowledge structure with the textual document through links. Further, since links are established from the knowledge structure elements to every concept entry of the hierarchical concept dictionary, every concept entry has an instance of textual document through the knowledge structure element.

A literature knowledge management method according to another aspect of the present invention further includes: a common cursor control step that displays a common cursor that points to an identical knowledge on the textual document operation screen, the knowledge structure operation screen, as well as the concept dictionary operation screen, and enables the user to select the knowledge of the user's choice by moving the common cursor.

According to the present method, a common cursor that indicates an identical knowledge is displayed on the textual document screen, the knowledge structure operation screen, and the concept dictionary operation screen and the user selects the desired knowledge by moving this common cursor. This feature simplifies the screen operation process, increases the efficiency of operation, and cuts down the possibility of input errors by the user. In other words, typing mistakes while entering text labels of knowledge structure elements, or failure of updation or creation of knowledge structure elements can be brought down and the time taken for the creation of knowledge structure can be reduced to a great extent.

A literature knowledge management method according to still another aspect of the present invention further includes: a screen-specific cursor control step that displays a screen-specific cursor that points to the knowledge on the textual document operation screen, the knowledge structure operation screen, as well as the concept dictionary operation screen, enables the user to select the knowledge of the user's choice by moving the common cursor on one screen, and manages link information pertaining to the selected knowledge on the other two screens.

According to the present method, a screen-specific cursor that indicates knowledge is displayed on the textual document screen, the knowledge structure operation screen, and the concept dictionary operation screen. When the user selects the desired knowledge by moving this common cursor on one screen, the link information on the other two screens that correspond to the knowledge selected by the user is managed (for instance, in the case of creation, modification, deletion, etc.). This feature simplifies the screen operation process and increases the efficiency of operation. Thus, mistakes related to operation is reduced to a great extent.

A literature knowledge management method according to still another aspect of the present invention further includes: a literature knowledge auto-editing step that, when the knowledge on any one of the literature knowledge operation screen, the knowledge structure operation screen, or the concept dictionary operation screen is modified, deleted, or added, automatically modifies, deletes, or adds the link information corresponding to that knowledge on the other two screens.

According to the present method, when knowledge is modified, deleted, or added on any of the three screens, namely, the textual document operation screen, the knowledge structure operation screen, and the concept dictionary operation screen, all the link information corresponding to the knowledge on the other two screens is automatically modified, deleted, or added, thereby enabling auto-editing. Further, auto-creation of knowledge structure using literature similarity is possible.

A literature knowledge management program according to one aspect of the present invention includes: a textual document handling step that breaks up textual documents of literatures into knowledge constructed from a single word or plural words; a textual document operation screen creating step that displays the textual documents by grouping the textual documents according to the knowledge into which the textual document handling step has broken the textual documents into, and creates a textual document operation screen that enables a user to select the word or words that constitute the knowledge of the user's choice; a knowledge structure handling step that is associated with the textual documents, the knowledge structure comprising relation-type knowledge structure elements and related object-type knowledge structure elements; a knowledge structure operation screen creating step that displays the knowledge structure managed by the knowledge structure handling step, and creates a knowledge structure operation screen that enables the user to select the relation-type knowledge structure elements and the related object-type knowledge structure elements constituting the knowledge structure of the user's choice; a concept dictionary handling step that manages a concept dictionary constituting concept entries that hierarchically define concepts of the associated knowledge; and a concept dictionary operation screen creating step that displays the concept dictionary managed by the concept dictionary handling step, and enables the user to select the concept entry corresponding to the knowledge of the user's choice.

According to the present program, the literature textual document is broken up into bits of knowledge constructed from a single word or a plurality of words. The textual documents are grouped according to the knowledge categories they are grouped into and displayed. A textual document operation screen is created on which the user can select the word(s) constituting the desired knowledge. A knowledge structure is created from relation-type knowledge structure elements and related object-type knowledge structure elements which are associated with the textual document through links and the created knowledge structure is displayed. A knowledge structure operation screen is created on which the user can select the relation-type knowledge structure elements and the related object-type knowledge structure elements for creating the desired knowledge structure. A concept dictionary is created from concept entries that hierarchically define the concepts of the associated knowledge and the created concept dictionary is displayed so that the user can select the concept entry corresponding the desired knowledge. Thus, it is possible to mechanically appraise the similarity of knowledge structure elements by virtue of the knowledge structure elements of the knowledge structure being associated with the relevant concept entries. Thus, even if a different word is used in the textual document for a particular knowledge structure element, if this word conceptually conveys the same meaning as the knowledge structure element, the computer treats the word as conveying the same meaning as the knowledge structure element. Knowledge and textual document can be easily correlated because of the association of the knowledge structure elements in the knowledge structure with the textual document through links. Further, since links are established from the knowledge structure elements to every concept entry of the hierarchical concept dictionary, every concept entry has an instance of textual document through the knowledge structure element.

A literature knowledge management program accordi ng to another aspect of the present invention further includes: a common cursor control step that displays a common cursor that points to an identical knowledge on the textual document operation screen, the knowledge structure operation screen, as well as the concept dictionary operation screen, and enables the user to select the knowledge of the user's choice by moving the common cursor.

According to the present program, a common cursor that indicates an identical knowledge is displayed on the textual document screen, the knowledge structure operation screen, and the concept dictionary operation screen and the user selects the desired knowledge by moving this common cursor. This feature simplifies the screen operation process, increases the efficiency of operation, and cuts down the possibility of input errors by the user. In other words, typing mistakes while entering text labels of knowledge structure elements, or failure of updation or creation of knowledge structure elements can be brought down and the time taken for the creation of knowledge structure can be reduced to a great extent.

A literature knowledge management program according to still another aspect of the present invention further includes: a screen-specific cursor control step that displays a screen-specific cursor that points to the knowledge on the textual document operation screen, the knowledge structure operation screen, as well as the concept dictionary operation screen, enables the user to select the knowledge of the user's choice by moving the common cursor on one screen, and manages link information pertaining to the selected knowledge on the other two screens.

According to the present program, a screen-specific cursor that indicates knowledge is displayed on the textual document screen, the knowledge structure operation screen, and the concept dictionary operation screen. When the user selects the desired knowledge by moving this common cursor on one screen, the link information on the other two screens that correspond to the knowledge selected by the user is managed (for instance, in the case of creation, modification, deletion, etc.). This feature simplifies the screen operation process and increases the efficiency of operation. Thus, mistakes related to operation is reduced to a great extent.

A literature knowledge management program according to still another aspect of the present invention further includes: a literature knowledge auto-editing step that, when the knowledge on any one of the literature knowledge operation screen, the knowledge structure operation screen, or the concept dictionary operation screen is modified, deleted, or added, automatically modifies, deletes, or adds the link information corresponding to that knowledge on the other two screens.

According to the present program, when knowledge is modified, deleted, or added on any of the three screens, namely, the textual document operation screen, the knowledge structure operation screen, and the concept dictionary operation screen, all the link information corresponding to the knowledge on the other two screens is automatically modified, deleted, or added, thereby enabling auto-editing. Further, auto-creation of knowledge structure using literature similarity is possible.

Furthermore, the present invention relates to the recording medium. The recording medium according to the present invention records the program explained above.

According to the present recording medium, the program recorded on the recording medium is computer-readable and executable. Consequently, the same result as for these methods can be obtained.

(II) A literature knowledge management apparatus according to one aspect of the present invention includes: a textual document handling unit that breaks up textual documents of literatures into knowledge constructed from a single word or plural words; a knowledge structure handling unit that is associated with the textual documents, the knowledge structure comprising relation-type knowledge structure elements and related object-type knowledge structure elements; a concept dictionary handling unit that manages a concept dictionary constituting concept entries that hierarchically define concepts of the associated knowledge; and a word matching unit that retrieves from the knowledge structure managed by the knowledge structure handling unit the relation-type knowledge structure elements and/or the related object-type knowledge structure elements that match the words included in a search query that is input.

According to the present apparatus, the literature textual document is broken up into bits of knowledge constructed from a single word or a plurality of words. The textual documents are grouped according to the knowledge categories they are grouped into and displayed. A textual document operation screen is created on which the user can select the word(s) constituting the desired knowledge. A knowledge structure is created from relation-type knowledge structure elements and related object-type knowledge structure elements which are associated with the textual document through links and the created knowledge structure is displayed. A knowledge structure operation screen is created on which the user can select the relation-type knowledge structure elements and the related object-type knowledge structure elements for creating the desired knowledge structure. A concept dictionary is created from concept entries that hierarchically define the concepts of the associated knowledge and the created concept dictionary is displayed so that the user can select the concept entry corresponding the desired knowledge. Thus, it is possible to mechanically appraise the similarity of knowledge structure elements by virtue of the knowledge structure elements of the knowledge structure being associated with the relevant concept entries. Thus, even if a different word is used in the textual document for a particular knowledge structure element, if this word conceptually conveys the same meaning as the knowledge structure element, the computer treats the word as conveying the same meaning as the knowledge structure element. Knowledge and textual document can be easily correlated because of the association of the knowledge structure elements in the knowledge structure with the textual document through links. Further, since links are established from the knowledge structure elements to every concept entry of the hierarchical concept dictionary, every concept entry has an instance of textual document through the knowledge structure element.

According to the present apparatus, it is possible to retrieve relation-type knowledge structure elements and/or a related object-type knowledge structure elements matching the words included in the input search query from the processed knowledge structure. Consequently, extraction of knowledge which is a complete or partial match for the search query is possible. In this way a remarkably faster search is possible as compared to searching textual documents.

A literature knowledge management apparatus according to another aspect of the present invention: wherein the word matching unit retrieves the relation-type knowledge structure elements and/or related object-type knowledge structure elements as a search result, the relation-type knowledge structure elements and/or related object-type knowledge structure elements being at least one of the following: (1) related object-type knowledge structure elements that have a determined synonym relation and that are linked by the relation-type knowledge structure element, (2) the relation-type knowledge structure elements and/or related object-type knowledge structure elements that belong to the same link graph, (3) the relation-type knowledge structure elements and/or related object-type knowledge structure elements that belong to the same link graph, the number of paths between the elements being less than a predetermined value, and (4) the relation-type knowledge structure elements and/or related object-type knowledge structure elements that belong to the same link graph, the elements being of the same type.

This is a more specific explanation of a word matching unit. According to this apparatus, the relation-type knowledge structure elements and/or related object-type knowledge structure elements are retrieved as a search result, the relation-type knowledge structure elements and/or related object-type knowledge structure elements being at least one of the following: (1) related object-type knowledge structure elements that have a predetermined synonym relation and that are linked by the relation-type knowledge structure element, (2) the relation-type knowledge structure elements and/or related object-type knowledge structure elements that belong to the same link graph, (3) the relation-type knowledge structure elements and/or related object-type knowledge structure elements that belong to the same link graph, the number of paths between the elements being less than a predetermined value, and (4) the relation-type knowledge structure elements and/or related object-type knowledge structure elements that belong to the same link graph, the elements being of the same type. Thus synonym search is effectively carried out and the recurrence rate can be vastly improved while maintaining the search precision.

A literature knowledge management apparatus according to still another aspect of the present invention: wherein the word matching unit extracts a corresponding concept entry and/or the concept entries at a higher level and/or lower level than the corresponding concept entry from the concept dictionary managed by the concept dictionary handling unit and extracts the relation-type knowledge structure elements and/or related object-type knowledge structure elements associated with these extracted concept entries as a search result.

This is a more specific explanation of the word matching unit. According to the present apparatus, a corresponding concept entry and/or the concept entries at a level higher and/or lower than the corresponding concept entry is extracted from the concept dictionary managed by the concept dictionary handling unit, and the relation-type knowledge structure element and/or related object-type knowledge structure elements associated with these extracted concept entries are extracted as a search result. Thus the search result can be refined by concept entries and thereby search precision can be vastly improved.

A literature knowledge management apparatus according to still another aspect of the present invention: wherein the word matching unit that retrieves as a search result the relation-type knowledge structure elements and/or related object-type knowledge structure elements that constitute a link graph, the relation-type knowledge structure elements and/or related object-type knowledge structure elements being at least one of the following: (1) the relation-type knowledge structure elements and/or related object-type knowledge structure elements that have the same topology, (2) the relation-type knowledge structure elements and/or related object-type knowledge structure elements that are associated with a corresponding concept entry and/or the concept entries that are at a higher and/or lower level than the corresponding entry extracted from the concept dictionary managed by the concept dictionary handling unit, and (3) the relation-type knowledge structure elements and/or related object-type knowledge structure elements with the number of paths between the elements being less than the predetermined value.

This is a more specific explanation of the word matching unit. According to the present apparatus, the relation-type knowledge structure element and/or related object-type knowledge structure elements that constitute a link graph are retrieved as a search result, the relation-type knowledge structure elements and/or the related object-type knowledge structure elements being at least one of the following: (1) the relation-type knowledge structure elements and/or related object-type knowledge structure elements that have the same topology, (2) the relation-type knowledge structure elements and/or related object-type knowledge structure elements that are associated with a corresponding concept entry and/or the concept entries that are at a higher and/or lower than the corresponding entry extracted from the concept dictionary managed by the concept dictionary handling unit, and (3) the relation-type knowledge structure elements and/or related object type knowledge structure elements with the number of paths between the elements being less than the predetermined value. Thus the search result from among the knowledge structure elements of the same link graph can be refined by concept entries and thereby search precision can be vastly improved.

A literature knowledge management apparatus according to still another aspect of the present invention further includes: a Boolean expression normalization unit that normalizes the search query into a predetermined Boolean expression format.

According to the present apparatus, an input search query is normalized into a predetermined Boolean expression. Thus due to this standardization of the Boolean expression the processes following it can be made efficient.

A literature knowledge management apparatus according to still another aspect of the present invention further includes: a Boolean matching unit that gets a knowledge structure element cluster for each part of the Boolean expression of the search query, and in order to determine the Boolean product of the parts of the Boolean expression, retrieves from each knowledge structure element cluster the knowledge structure that meets at least one of the following conditions: (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with the corresponding concept entry extracted from the concept dictionary processed by the concept dictionary handling unit and/or the concept entry at a higher level/lower level than the corresponding concept entry.

According to the present apparatus, a knowledge structure element cluster for each part of the Boolean expression of the search query is retrieved, and in sequence to determine the Boolean product of the parts of the Boolean expression, the knowledge structure that meets at least one of the following conditions is retrieved: (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with these extracted concept entries as a search result. Hence, when determining the AND part of the Boolean expression, the search result by literatures, graph structures, concept entries, etc. can be refined, thereby vastly improve the search precision.

A literature knowledge management apparatus according to still another aspect of the present invention further includes: a syntax structure creating unit that creates a syntax structure from the search query input in natural language.

According to the present apparatus, syntax structure is created from the search query input in natural language. Hence, search can be carried out even if the query is in natural language.

A literature knowledge management apparatus according to still another aspect of the present invention further includes: a literature knowledge converting unit that creates the knowledge structure from the syntax structure created by the syntax structure creating unit.

According to the present apparatus, similarity between knowledge structures can be searched, as the knowledge structure is created from the syntax structure, and by which a remarkably faster and more thorough search can be carried out as compared to searching words.

A literature knowledge management apparatus according to still another aspect of the present invention further includes: a link graph similarity appraising unit that assesses the similarity between link graphs of the knowledge structure created by the literature knowledge creating unit, and gets the cluster of link graphs that are similar; and a graph combining unit that determines an aggregate of the link graphs retrieved by the link graph similarity appraising unit that are similar, or a Boolean product of the combination of the link graphs that are similar.

According to the present apparatus, the similarity between link graphs of the created knowledge structure is appraised. Graph links that are similar are clustered. The aggregate of link graphs that are similar, or the Boolean product of the combination of link graphs that are similar is obtained. Consequently, a thorough and fast knowledge search result compiling process is realized.

A literature knowledge management apparatus according to still another aspect of the present invention further includes: a result converting unit that creates a search result by converting to a predetermined format at least relation-type knowledge structure elements, or related object-type knowledge structure elements, or literatures, or concept entries retrieved as a result of the search.

According to the present apparatus, the search result is converted to at least one of the following predetermined formats, namely, relation-type knowledge structure element, related object-type knowledge structure element, literature, or concept entry according to the search result obtained. Consequently, a search result that is converted to any suitable format can be output.

A literature knowledge management method according to one aspect of the present invention includes: a textual document handling step that breaks up textual documents of literatures into knowledge constructed from a single word or plural words; a knowledge structure handling step that is associated with the textual documents, the knowledge structure comprising relation-type knowledge structure elements and related object-type knowledge structure elements; a concept dictionary handling step that manages a concept dictionary constituting concept entries that hierarchically define concepts of the associated knowledge; and a word matching step that retrieves from the knowledge structure managed by the knowledge structure handling step the relation-type knowledge structure elements and/or the related object-type knowledge structure elements that match the words included in a search query that is input.

According to the present method, the literature textual document is broken up into bits of knowledge constructed from a single word or a plurality of words. The textual documents are grouped according to the knowledge categories they are grouped into and displayed. A textual document operation screen is created on which the user can select the word(s) constituting the desired knowledge. A knowledge structure is created from relation-type knowledge structure elements and related object-type knowledge structure elements which are associated with the textual document through links and the created knowledge structure is displayed. A knowledge structure operation screen is created on which the user can select the relation-type knowledge structure elements and the related object-type knowledge structure elements for creating the desired knowledge structure. A concept dictionary is created from concept entries that hierarchically define the concepts of the associated knowledge and the created concept dictionary is displayed so that the user can select the concept entry corresponding the desired knowledge. Thus, it is possible to mechanically appraise the similarity of knowledge structure elements by virtue of the knowledge structure elements of the knowledge structure being associated with the relevant concept entries. Thus, even if a different word is used in the textual document for a particular knowledge structure element, if this word conceptually conveys the same meaning as the knowledge structure element, the computer treats the word as conveying the same meaning as the knowledge structure element. Knowledge and textual document can be easily correlated because of the association of the knowledge structure elements in the knowledge structure with the textual document through links. Further, since links are established from the knowledge structure elements to every concept entry of the hierarchical concept dictionary, every concept entry has an instance of textual document through the knowledge structure element.

According to the present method, it is possible to retrieve relation-type knowledge structure elements and/or a related object-type knowledge structure elements matching the words included in the input search query from the processed knowledge structure. Consequently, extraction of knowledge which is a complete or partial match for the search query is possible. In this way a remarkably faster search is possible as compared to searching textual documents.

A literature knowledge management method according to another aspect of the present invention: wherein the word matching step retrieves the relation-type knowledge structure elements and/or related object-type knowledge structure elements as a search result, the relation-type knowledge structure elements and/or related object-type knowledge structure elements being at least one of the following: (1) related object-type knowledge structure elements that have a determined synonym relation and that are linked by the relation-type knowledge structure element, (2) the relation-type knowledge structure elements and/or related object-type knowledge structure elements that belong to the same link graph, (3) the relation-type knowledge structure elements and/or related object-type knowledge structure elements that belong to the same link graph, the number of paths between the elements being less than a predetermined value, and (4) the relation-type knowledge structure elements and/or related object-type knowledge structure elements that belong to the same link graph, the elements being of the same type.

This is a more specific explanation of a word matching step. According to this method, the relation-type knowledge structure elements and/or related object-type knowledge structure elements are retrieved as a search result, the relation-type knowledge structure elements and/or related object-type knowledge structure elements being at least one of the following: (1) related object-type knowledge structure elements that have a predetermined synonym relation and that are linked by the relation-type knowledge structure element, (2) the relation-type knowledge structure elements and/or related object-type knowledge structure elements that belong to the same link graph, (3) the relation-type knowledge structure elements and/or related object-type knowledge structure elements that belong to the same link graph, the number of paths between the elements being less than a predetermined value, and (4) the relation-type knowledge structure elements and/or related object-type knowledge structure elements that belong to the same link graph, the elements being of the same type. Thus synonym search is effectively carried out and the recurrence rate can be vastly improved while maintaining the search precision.

A literature knowledge management method according to still another aspect of the present invention: wherein the word matching step extracts a corresponding concept entry and/or the concept entries at a higher level and/or lower level than the corresponding concept entry from the concept dictionary managed by the concept dictionary handling step and extracts the relation-type knowledge structure elements and/or related object-type knowledge structure elements associated with these extracted concept entries as a search result.

This is a more specific explanation of the word matching step. According to the present method, a corresponding concept entry and/or the concept entries at a level higher and/or lower than the corresponding concept entry is extracted from the concept dictionary managed by the concept dictionary handling step, and the relation-type knowledge structure element and/or related object-type knowledge structure elements associated with these extracted concept entries are extracted as a search result. Thus the search result can be refined by concept entries and thereby search precision can be vastly improved.

A literature knowledge management method according to still another aspect of the present invention: wherein the word matching step that retrieves as a search result the relation-type knowledge structure elements and/or related object-type knowledge structure elements that constitute a link graph, the relation-type knowledge structure elements and/or related object-type knowledge structure elements being at least one of the following: (1) the relation-type knowledge structure elements and/or related object-type knowledge structure elements that have the same topology, (2) the relation-type knowledge structure elements and/or related object-type knowledge structure elements that are associated with a corresponding concept entry and/or the concept entries that are at a higher and/or lower level than the corresponding entry extracted from the concept dictionary managed by the concept dictionary handling step, and (3) the relation-type knowledge structure elements and/or related object-type knowledge structure elements with the number of paths between the elements being less than the predetermined value.

This is a more specific explanation of the word matching step. According to the present method, the relation-type knowledge structure element and/or related object-type knowledge structure elements that constitute a link graph are retrieved as a search result, the relation-type knowledge structure elements and/or the related object-type knowledge structure elements being at least one of the following: (1) the relation-type knowledge structure elements and/or related object-type knowledge structure elements that have the same topology, (2) the relation-type knowledge structure elements and/or related object-type knowledge structure elements that are associated with a corresponding concept entry and/or the concept entries that are at a higher and/or lower than the corresponding entry extracted from the concept dictionary managed by the concept dictionary handling step, and (3) the relation-type knowledge structure elements and/or related object type knowledge structure elements with the number of paths between the elements being less than the predetermined value. Thus the search result from among the knowledge structure elements of the same link graph can be refined by concept entries and thereby search precision can be vastly improved.

A literature knowledge management method according to still another aspect of the present invention further includes: a Boolean expression normalization step that normalizes the search query into a predetermined Boolean expression format.

According to the present method, an input search query is normalized into a predetermined Boolean expression. Thus due to this standardization of the Boolean expression the processes following it can be made efficient.

A literature knowledge management method according to still another aspect of the present invention further includes: a Boolean matching step that gets a knowledge structure element cluster for each part of the Boolean expression of the search query, and in order to determine the Boolean product of the parts of the Boolean expression, retrieves from each knowledge structure element cluster the knowledge structure that meets at least one of the following conditions: (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with the corresponding concept entry extracted from the concept dictionary processed by the concept dictionary handling step and/or the concept entry at a higher level/lower level than the corresponding concept entry.

According to the present method, a knowledge structure element cluster for each part of the Boolean expression of the search query is retrieved, and in sequence to determine the Boolean product of the parts of the Boolean expression, the knowledge structure that meets at least one of the following conditions is retrieved: (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with these extracted concept entries as a search result. Hence, when determining the AND part of the Boolean expression, the search result by literatures, graph structures, concept entries, etc. can be refined, thereby vastly improve the search precision.

A literature knowledge management method according to still another aspect of the present invention further includes: a syntax structure creating step that creates a syntax structure from the search query input in natural language.

According to the present method, syntax structure is created from the search query input in natural language. Hence, search can be carried out even if the query is in natural language.

A literature knowledge management method according to still another aspect of the present invention further includes: a literature knowledge converting step that creates the knowledge structure from the syntax structure created by the syntax structure creating step.

According to the present method, similarity between knowledge structures can be searched, as the knowledge structure is created from the syntax structure, and by which a remarkably faster and more thorough search can be carried out as compared to searching words.

A literature knowledge management method according to still another aspect of the present invention further includes: a link graph similarity appraising step that assesses the similarity between link graphs of the knowledge structure created by the literature knowledge creating step, and gets the cluster of link graphs that are similar; and a graph combining step that determines an aggregate of the link graphs retrieved by the link graph similarity appraising step that are similar, or a Boolean product of the combination of the link graphs that are similar.

According to the present method, the similarity between link graphs of the created knowledge structure is appraised. Graph links that are similar are clustered. The aggregate of link graphs that are similar, or the Boolean product of the combination of link graphs that are similar is obtained. Consequently, a thorough and fast knowledge search result compiling process is realized.

A literature knowledge management method according to still another aspect of the present invention further includes: a result converting step that creates a search result by converting to a predetermined format at least relation-type knowledge structure elements, or related object-type knowledge structure elements, or literatures, or concept entries retrieved as a result of the search.

According to the present method, the search result is converted to at least one of the following predetermined formats, namely, relation-type knowledge structure element, related object-type knowledge structure element, literature, or concept entry according to the search result obtained. Consequently, a search result that is converted to any suitable format can be output.

A literature knowledge management program according to one aspect of the present invention includes: a textual document handling step that breaks up textual documents of literatures into knowledge constructed from a single word or plural words; a knowledge structure handling step that is associated with the textual documents, the knowledge structure comprising relation-type knowledge structure elements and related object-type knowledge structure elements; a concept dictionary handling step that manages a concept dictionary constituting concept entries that hierarchically define concepts of the associated knowledge; and a word matching step that retrieves from the knowledge structure managed by the knowledge structure handling step the relation-type knowledge structure elements and/or the related object-type knowledge structure elements that match the words included in a search query that is input.

According to the present program, the literature textual document is broken up into bits of knowledge constructed from a single word or a plurality of words. The textual documents are grouped according to the knowledge categories they are grouped into and displayed. A textual document operation screen is created on which the user can select the word(s) constituting the desired knowledge. A knowledge structure is created from relation-type knowledge structure elements and related object-type knowledge structure elements which are associated with the textual document through links and the created knowledge structure is displayed. A knowledge structure operation screen is created on which the user can select the relation-type knowledge structure elements and the related object-type knowledge structure elements for creating the desired knowledge structure. A concept dictionary is created from concept entries that hierarchically define the concepts of the associated knowledge and the created concept dictionary is displayed so that the user can select the concept entry corresponding the desired knowledge. Thus, it is possible to mechanically appraise the similarity of knowledge structure elements by virtue of the knowledge structure elements of the knowledge structure being associated with the relevant concept entries. Thus, even if a different word is used in the textual document for a particular knowledge structure element, if this word conceptually conveys the same meaning as the knowledge structure element, the computer treats the word as conveying the same meaning as the knowledge structure element. Knowledge and textual document can be easily correlated because of the association of the knowledge structure elements in the knowledge structure with the textual document through links. Further, since links are established from the knowledge structure elements to every concept entry of the hierarchical concept dictionary, every concept entry has an instance of textual document through the knowledge structure element.

According to the present program, it is possible to retrieve relation-type knowledge structure elements and/or a related object-type knowledge structure elements matching the words included in the input search query from the processed knowledge structure. Consequently, extraction of knowledge which is a complete or partial match for the search query is possible. In this way a remarkably faster search is possible as compared to searching textual documents.

A literature knowledge management program according to another aspect of the present invention: wherein the word matching step retrieves the relation-type knowledge structure elements and/or related object-type knowledge structure elements as a search result, the relation-type knowledge structure elements and/or related object-type knowledge structure elements being at least one of the following: (1) related object-type knowledge structure elements that have a determined synonym relation and that are linked by the relation-type knowledge structure element, (2) the relation-type knowledge structure elements and/or related object-type knowledge structure elements that belong to the same link graph, (3) the relation-type knowledge structure elements and/or related object-type knowledge structure elements that belong to the same link graph, the number of paths between the elements being less than a predetermined value, and (4) the relation-type knowledge structure elements and/or related object-type knowledge structure elements that belong to the same link graph, the elements being of the same type.

This is a more specific explanation of a word matching step. According to this program, the relation-type knowledge structure elements and/or related object-type knowledge structure elements are retrieved as a search result, the relation-type knowledge structure elements and/or related object-type knowledge structure elements being at least one of the following: (1) related object-type knowledge structure elements that have a predetermined synonym relation and that are linked by the relation-type knowledge structure element, (2) the relation-type knowledge structure elements and/or related object-type knowledge structure elements that belong to the same link graph, (3) the relation-type knowledge structure elements and/or related object-type knowledge structure elements that belong to the same link graph, the number of paths between the elements being less than a predetermined value, and (4) the relation-type knowledge structure elements and/or related object-type knowledge structure elements that belong to the same link graph, the elements being of the same type. Thus synonym search is effectively carried out and the recurrence rate can be vastly improved while maintaining the search precision.

A literature knowledge management program according to still another aspect of the present invention: wherein the word matching step extracts a corresponding concept entry and/or the concept entries at a higher level and/or lower level than the corresponding concept entry from the concept dictionary managed by the concept dictionary handling step and extracts the relation-type knowledge structure elements and/or related object-type knowledge structure elements associated with these extracted concept entries as a search result.

This is a more specific explanation of the word matching step. According to the present program, a corresponding concept entry and/or the concept entries at a level higher and/or lower than the corresponding concept entry is extracted from the concept dictionary managed by the concept dictionary handling step, and the relation-type knowledge structure element and/or related object-type knowledge structure elements associated with these extracted concept entries are extracted as a search result. Thus the search result can be refined by concept entries and thereby search precision can be vastly improved.

A literature knowledge management program according to still another aspect of the present invention: wherein the word matching step that retrieves as a search result the relation-type knowledge structure elements and/or related object-type knowledge structure elements that constitute a link graph, the relation-type knowledge structure elements and/or related object-type knowledge structure elements being at least one of the following: (1) the relation-type knowledge structure elements and/or related object-type knowledge structure elements that have the same topology, (2) the relation-type knowledge structure elements and/or related object-type knowledge structure elements that are associated with a corresponding concept entry and/or the concept entries that are at a higher and/or lower level than the corresponding entry extracted from the concept dictionary managed by the concept dictionary handling step, and (3) the relation-type knowledge structure elements and/or related object-type knowledge structure elements with the number of paths between the elements being less than the predetermined value.

This is a more specific explanation of the word matching step. According to the present program, the relation-type knowledge structure element and/or related object-type knowledge structure elements that constitute a link graph are retrieved as a search result, the relation-type knowledge structure elements and/or the related object-type knowledge structure elements being at least one of the following: (1) the relation-type knowledge structure elements and/or related object-type knowledge structure elements that have the same topology, (2) the relation-type knowledge structure elements and/or related object-type knowledge structure elements that are associated with a corresponding concept entry and/or the concept entries that are at a higher and/or lower than the corresponding entry extracted from the concept dictionary managed by the concept dictionary handling step, and (3) the relation-type knowledge structure elements and/or related object type knowledge structure elements with the number of paths between the elements being less than the predetermined value. Thus the search result from among the knowledge structure elements of the same link graph can be refined by concept entries and thereby search precision can be vastly improved.

A literature knowledge management program according to still another aspect of the present invention further includes: a Boolean expression normalization step that normalizes the search query into a predetermined Boolean expression format.

According to the present program, an input search query is normalized into a predetermined Boolean expression. Thus due to this standardization of the Boolean expression the processes following it can be made efficient.

A literature knowledge management program according to still another aspect of the present invention further includes: a Boolean matching step that gets a knowledge structure element cluster for each part of the Boolean expression of the search query, and in order to determine the Boolean product of the parts of the Boolean expression, retrieves from each knowledge structure element cluster the knowledge structure that meets at least one of the following conditions: (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with the corresponding concept entry extracted from the concept dictionary processed by the concept dictionary handling step and/or the concept entry at a higher level/lower level than the corresponding concept entry.

According to the present program, a knowledge structure element cluster for each part of the Boolean expression of the search query is retrieved, and in sequence to determine the Boolean product of the parts of the Boolean expression, the knowledge structure that meets at least one of the following conditions is retrieved: (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with these extracted concept entries as a search result. Hence, when determining the AND part of the Boolean expression, the search result by literatures, graph structures, concept entries, etc. can be refined, thereby vastly improve the search precision.

A literature knowledge management program according to still another aspect of the present invention further includes: a syntax structure creating step that creates a syntax structure from the search query input in natural language.

According to the present program, syntax structure is created from the search query input in natural language. Hence, search can be carried out even if the query is in natural language.

A literature knowledge management program according to still another aspect of the present invention further includes: a literature knowledge converting step that creates the knowledge structure from the syntax structure created by the syntax structure creating step.

According to the present program, similarity between knowledge structures can be searched, as the knowledge structure is created from the syntax structure, and by which a remarkably faster and more thorough search can be carried out as compared to searching words.

A literature knowledge management program according to still another aspect of the present invention further includes: a link graph similarity appraising step that assesses the similarity between link graphs of the knowledge structure created by the literature knowledge creating step, and gets the cluster of link graphs that are similar; and a graph combining step that determines an aggregate of the link graphs retrieved by the link graph similarity appraising step that are similar, or a Boolean product of the combination of the link graphs that are similar.

According to the present program, the similarity between link graphs of the created knowledge structure is appraised. Graph links that are similar are clustered. The aggregate of link graphs that are similar, or the Boolean product of the combination of link graphs that are similar is obtained. Consequently, a thorough and fast knowledge search result compiling process is realized.

A literature knowledge management program according to still another aspect of the present invention further includes: a result converting step that creates a search result by converting to a predetermined format at least relation-type knowledge structure elements, or related object-type knowledge structure elements, or literatures, or concept entries retrieved as a result of the search.

According to the present program, the search result is converted to at least one of the following predetermined formats, namely, relation-type knowledge structure element, related object-type knowledge structure element, literature, or concept entry according to the search result obtained. Consequently, a search result that is converted to any suitable format can be output.

Furthermore, the present invention relates to the recording medium. The recording medium according to the present invention records the program explained above.

According to the present recording medium, the prog ram recorded on the recording medium is computer-readable and executable. Consequently, the same result as for these methods can be obtained.

(III) A dictionary information processing apparatus according to one aspect of the present invention includes: a semantic dictionary creating unit that creates semantic dictionary information that defines a correlation between a canonical form and variant forms of a term; and a dictionary information checking unit that checks the information stored in the semantic dictionary information and/or the category dictionary information.

According to the present apparatus, semantic dictionary information is first created in which correlation between a canonical form and a variant form of a term is defined. Category dictionary information is created which defines the category to which the canonical form belongs. The information stored in the semantic dictionary information and/or the category dictionary information is checked. Consequently, creation and checking of various types of semantic dictionaries and category dictionaries used in database search service are automated. Further, the creation of dictionaries is highly efficient and accurate.

A dictionary information processing apparatus according to another aspect of the present invention: wherein the semantic dictionary creating unit further comprises a field attribute appraising unit that assesses, based on attribute information of each field constituting a pre-existing database, whether each of the fields is to be considered as being a canonical form, a variant form, or a field that is not to be used, and creates the semantic dictionary information from each field of the pre-existing database, based on an appraisal result of the field attribute appraising unit.

This is a more specific explanation of a semantic dictionary creating unit. According to the present apparatus, each of the fields of a pre-existing database is assessed, based on attribute information of fields constituting the pre-existing database, as being a canonical form, a variant form, or a field that is not to be used. Based on the result of this appraisal, the semantic dictionary information is created from the fields of the pre-existing database. Consequently, the semantic dictionary can be efficiently created from the pre-existing database.

A dictionary information processing apparatus according to still another aspect of the present invention: wherein the semantic dictionary creating unit further comprises a dictionary term appraising unit that assesses, based on terms entered in a pre-existing dictionary information, whether each of the terms in the dictionary information is to be considered as a canonical form, variant form, or a term that is not to be used, and creates the semantic dictionary information from each term of the dictionary information, based on an appraisal result of the dictionary term appraising unit.

This is a more specific explanation of the semantic dictionary creating unit. According to the present apparatus, each of the terms (keywords, abbreviations, synonyms, related words, etc. included in the dictionary) entered in the pre-existing dictionary information is assessed, based on the term, as being a canonical form, variant form, or a term not to be used. Based on the result of this appraisal, the semantic dictionary is created from the terms of the dictionary information. Consequently, the semantic dictionary can be efficiently created from the pre-existing dictionary information.

A dictionary information processing apparatus according to still another aspect of the present invention: wherein the semantic dictionary creating unit further comprises a Web term appraising unit that assesses, based on terms entered in a pre-existing dictionary information, whether each of the terms in the Web information is to be considered as a canonical form, variant form, or a term that is not to be used, and creates the semantic dictionary information from each term of the Web information, based on an appraisal result of the Web term appraising unit.

This is a more specific explanation of the semantic dictionary creating unit. According to the present apparatus, each of the terms in pre-existing Web information (including information on pre-existing websites, and information on the websites which allow editing by a participant with an object of adding terms to the dictionary) is assessed, based on the term, as being a canonical form, variant form, or a term that is not to be used. Based on the result of this appraisal, the semantic dictionary is created from the terms of the Web information. Consequently, the semantic dictionary can be efficiently created from the pre-existing Web information.

In this way, the dictionary information of every participant can be made public and shared.

A dictionary information processing apparatus according to still another aspect of the present invention: wherein the category dictionary creating unit further comprises a structured data category structure information creating unit that creates category structure information based on a pre-existing structured data, and creates the category dictionary information based on the category structure information created by the structured data category structure information creating unit.

This is a more specific explanation of a category dictionary creating unit. According to the present apparatus, category structure information is created based on pre-existing structured data. Category dictionary information is created based on this category structure information. Consequently, the category dictionary is efficiently created based on the classification defined by the pre-existing structured data.

A dictionary information processing apparatus according to still another aspect of the present invention: wherein the structured data category structure information creating unit creates, when there exist plural root nodes in the pre-existing structured data, the category structure information, the category structure information by adding a hypothetical root node at a level higher than the existing root nodes.

This is a more specific explanation of the category dictionary creating unit. According to the present apparatus, when there are plural root nodes in the pre-existing structured data, a hypothetical root node is added at a level higher than the root nodes in sequence to create the category structure information. Consequently, the category dictionary is efficiently created based on the classification defined by the pre-existing structured data.

A dictionary information processing apparatus according to still another aspect of the present invention: wherein the structured data category structure information creating unit creates, when there exists merging in the pre-existing structured data, the category structure information of a non-merging simple tree structure by reproducing the corresponding portion on the portion where merging occurs.

This is a more specific explanation of the category dictionary creating unit. According to the present apparatus, if there is merging of the pre-existing structured data, the part that is merging is reproduced in sequence to eliminate the merging and create a simplified tree from category structure information. Consequently, the category dictionary is efficiently created based on the classification defined by the pre-existing structured data.

A dictionary information processing apparatus according to still another aspect of the present invention: wherein the category dictionary creating unit further comprises a cluster category structure information creating unit that creates, based on a pre-existing cluster data, a cluster category structure information comprising a root node and leaf nodes, where a name of the cluster data represents the root node and names of the cluster element represent the leaf nodes, and creates the category dictionary information based on the category structure information created by the cluster category structure information creating unit.

This is a more specific explanation of the category dictionary creating unit. According to the present apparatus, category structure information is created in which the root node is represented by a cluster data name, and the leaf nodes are represented by cluster element names. Category dictionary information is created based on this category structure information. Consequently, the category dictionary is efficiently created based on the information defined by the pre-existing cluster data.

A dictionary information processing apparatus according to still another aspect of the present invention: wherein the category dictionary creating unit further comprises a MeSH term category structure information creating unit that creates, based on MeSH term data, a MeSH term category structure information, and creates the category dictionary information based on the category structure information created by the MeSH term category structure information creating unit.

This is a more specific explanation of the category dictionary creating unit. According to the present apparatus, category structure information is created based on MeSH term data. Category dictionary information is created based on this category structure information. Consequently, the category dictionary is efficiently created based on the medical terms defined by the pre-existing MeSH term data.

A dictionary information processing apparatus according to still another aspect of the present invention: wherein the category dictionary creating unit further comprises a database category structure information creating unit that creates, based on a pre-existing database, a category structure information comprising a root node and leaf nodes, where a name of the pre-existing database or specific field represents the root node and data stored in the pre-existing database or the field represent the leaf nodes, and creates the category dictionary information based on the category structure information created by the database category structure information creating unit.

This is a more specific explanation of the category dictionary creating unit. According to the present apparatus, category structure information is created in which the root node is represented by a name of a pre-existing database or a field name of a specific field, and the leaf nodes are represented by the data stored in the database or the field. Category dictionary information is created based on this category structure information. Consequently, the category dictionary is efficiently created based on the field or stored data defined by the pre-existing database.

A dictionary information processing apparatus according to still another aspect of the present invention: wherein the category dictionary creating unit further comprises an analysis program category structure information creating unit that creates, based on a pre-existing analysis program process result data, a category structure information comprising a root node and leaf nodes, where an analysis program name represents the root node and process result data represent the leaf nodes, and creates the category dictionary information based on the category structure information created by the analysis program category structure information creating unit.

This is a more specific explanation of the category dictionary creating unit. According to the present apparatus, category structure information is created in which the root node is represented by the process program name, and the leaf nodes represented by the process result data. Category dictionary information is created based on this category structure information. Consequently, the category dictionary is efficiently created based on the process result of the analysis data.

A dictionary information processing apparatus according to still another aspect of the present invention: wherein the dictionary information checking unit further comprises entry-wise checking unit that carries out entry-wise checking of the semantic dictionary information and/or category dictionary information, based on at least check term list, or check program, or check pattern.

This is a more specific explanation of a dictionary information checking unit. According to the present apparatus, semantic dictionary information and/or category dictionary information is checked entry-wise based on at least one of the following, namely, check phrase list, check program, and check pattern. Consequently, a highly reliable dictionary information is automatically obtained because of pre-specified check field.

In this way, an inappropriate entry added due to a bug in the program or failure of exceptional entry processing while creating a dictionary can be easily detected.

Further, incorrect entries that get included due to error in the existing data that is made use of can be easily detected.

Further, a dictionary entry that is inappropriate for the purpose of text mining can be easily detected.

A dictionary information processing apparatus according to still another aspect of the present invention: wherein the dictionary information checking unit further comprises a canonical form consistency checking unit that checks whether a variant form entered in the semantic dictionary is stored a different canonical form.

This is a more specific explanation of the dictionary information checking unit. According to the present apparatus, inconsistency of canonical form is eliminated by checking if a variant form appears as a canonical form in semantic dictionary information. Consequently, a highly reliable dictionary information can be automatically obtained.

A dictionary information processing apparatus according to still another aspect of the present invention: wherein the dictionary information checking unit further comprises a statistics checking unit that carries out an entry-related and usage-related statistical processing of the canonical forms, the variant forms, and the categories stored in the semantic dictionary information and/or category dictionary information, and checks whether a result of the statistical processing falls within a predetermined normal range.

This is a more specific explanation of the dictionary information checking unit. According to the present apparatus, statistical processing is carried out pertaining to entry-related status or usage-related status of canonical forms, variant forms, and categories entered in semantic dictionary information and/or category dictionary information. The result of the statistical processing is checked to see if it falls within a predetermined normal range. Consequently, a highly reliable dictionary information can be automatically obtained.

Further, entries with problematic entry-related status (such as an entry which reads '0'), or entries with problematic usage-related status (such as an entry which has an access count of 0, and extraction count of 0) can be easily detected by the statistical processing.

A dictionary information processing apparatus according to still another aspect of the present invention: wherein the dictionary information checking unit further comprises a co-occurrence checking unit that calculates a degree of similarity based on a co-occurrence relation between the canonical forms, the variant forms, and the categories entered in the semantic dictionary information and/or category dictionary information.

This is a more specific explanation of the dictionary information checking unit. According to the present apparatus, degree of similarity between entries is calculated based on co-occurrence relation pertaining to canonical forms, variant forms, or categories entered in semantic dictionary information and/or category information dictionary. Consequently, checking of entry contents or appraisal of merging of two entries by the degree of similarity between the entries can be easily carried out.

A dictionary information processing method according to one aspect of the present invention includes: a semantic dictionary creating step that creates semantic dictionary information that defines a correlation between a canonical form and variant forms of a term; and a dictionary information checking step that checks the information stored in the semantic dictionary information and/or the category dictionary information.

According to the present method, semantic dictionary information is first created in which correlation between a canonical form and a variant form of a term is defined. Category dictionary information is created which defines the category to which the canonical form belongs. The information stored in the semantic dictionary information and/or the category dictionary information is checked. Consequently, creation and checking of various types of semantic dictionaries and category dictionaries used in database search service are automated. Further, the creation of dictionaries is highly efficient and accurate.

A dictionary information processing method according to another aspect of the present invention: wherein the semantic dictionary creating step further comprises a field attribute appraising step that assesses, based on attribute information of each field constituting a pre-existing database, whether each of the fields is to be considered as being a canonical form, a variant form, or a field that is not to be used, and creates the semantic dictionary information from each field of the pre-existing database, based on an appraisal result of the field attribute appraising step.

This is a more specific explanation of a semantic dictionary creating step. According to the present method, each of the fields of a pre-existing database is assessed, based on attribute information of fields constituting the pre-existing database, as being a canonical form, a variant form, or a field that is not to be used. Based on the result of this appraisal, the semantic dictionary information is created from the fields of the pre-existing database. Consequently, the semantic dictionary can be efficiently created from the pre-existing database.

A dictionary information processing method according to still another aspect of the present invention: wherein the semantic dictionary creating step further comprises a dictionary term appraising step that assesses, based on terms entered in a pre-existing dictionary information, whether each of the terms in the dictionary information is to be considered as a canonical form, variant form, or a term that is not to be used, and creates the semantic dictionary information from each term of the dictionary information, based on an appraisal result of the dictionary term appraising step.

This is a more specific explanation of the semantic dictionary creating step. According to the present method, each of the terms (keywords, abbreviations, synonyms, related words, etc. included in the dictionary) entered in the pre-existing dictionary information is assessed, based on the term, as being a canonical form, variant form, or a term not to be used. Based on the result of this appraisal, the semantic dictionary is created from the terms of the dictionary information. Consequently, the semantic dictionary can be efficiently created from the pre-existing dictionary information.

A dictionary information processing method according to still another aspect of the present invention: wherein the semantic dictionary creating step further comprises a Web term appraising step that assesses, based on terms entered in a pre-existing dictionary information, whether each of the terms in the Web information is to be considered as a canonical form, variant form, or a term that is not to be used, and creates the semantic dictionary information from each term of the Web information, based on an appraisal result of the Web term appraising step.

This is a more specific explanation of the semantic dictionary creating step. According to the present method, each of the terms in pre-existing Web information (including information on pre-existing websites, and information on the websites which allow editing by a participant with an object of adding terms to the dictionary) is assessed, based on the term, as being a canonical form, variant form, or a term that is not to be used. Based on the result of this appraisal, the semantic dictionary is created from the terms of the Web information. Consequently, the semantic dictionary can be efficiently created from the pre-existing Web information.

In this way, the dictionary information of every participant can be made public and shared.

A dictionary information processing method according to still another aspect of the present invention: wherein the category dictionary creating step further comprises a structured data category structure information creating step that creates category structure information based on a pre-existing structured data, and creates the category dictionary information based on the category structure information created by the structured data category structure information creating step.

This is a more specific explanation of a category dictionary creating step. According to the present method, category structure information is created based on pre-existing structured data. Category dictionary information is created based on this category structure information. Consequently, the category dictionary is efficiently created based on the classification defined by the pre-existing structured data.

A dictionary information processing method according to still another aspect of the present invention: wherein the structured data category structure information creating step creates, when there exist plural root nodes in the pre-existing structured data, the category structure information, the category structure information by adding a hypothetical root node at a level higher than the existing root nodes.

This is a more specific explanation of the category dictionary creating step. According to the present method, when there are plural root nodes in the pre-existing structured data, a hypothetical root node is added at a level higher than the root nodes in sequence to create the category structure information. Consequently, the category dictionary is efficiently created based on the classification defined by the pre-existing structured data.

A dictionary information processing method according to still another aspect of the present invention: wherein the structured data category structure information creating step creates, when there exists merging in the pre-existing structured data, the category structure information of a non-merging simple tree structure by reproducing the corresponding portion on the portion where merging occurs.

This is a more specific explanation of the category dictionary creating step. According to the present method, if there is merging of the pre-existing structured data, the part that is merging is reproduced in sequence to eliminate the merging and create a simplified tree from category structure information. Consequently, the category dictionary is efficiently created based on the classification defined by the pre-existing structured data.

A dictionary information processing method according to still another aspect of the present invention: wherein the category dictionary creating step further comprises a cluster category structure information creating step that creates, based on a pre-existing cluster data, a cluster category structure information comprising a root node and leaf nodes, where a name of the cluster data represents the root node and names of the cluster element represent the leaf nodes, and creates the category dictionary information based on the category structure information created by the cluster category structure information creating step.

This is a more specific explanation of the category dictionary creating step. According to the present method, category structure information is created in which the root node is represented by a cluster data name, and the leaf nodes are represented by cluster element names. Category dictionary information is created based on this category structure information. Consequently, the category dictionary is efficiently created based on the information defined by the pre-existing cluster data. ,

A dictionary information processing method according to still another aspect of the present invention: wherein the category dictionary creating step further comprises a MeSH term category structure information creating step that creates, based on MeSH term data, a MeSH term category structure information, and creates the category dictionary information based on the category structure information created by the MeSH term category structure information creating step.

This is a more specific explanation of the category dictionary creating step. According to the present method, category structure information is created based on MeSH term data. Category dictionary information is created based on this category structure information. Consequently, the category dictionary is efficiently created based on the medical terms defined by the pre-existing MeSH term data.

A dictionary information processing method according to still another aspect of the present invention: wherein the category dictionary creating step further comprises a database category structure information creating step that creates, based on a pre-existing database, a category structure information comprising a root node and leaf nodes, where a name of the pre-existing database or specific field represents the root node and data stored in the pre-existing database or the field represent the leaf nodes, and creates the category dictionary information based on the category structure information created by the database category structure information creating step.

This is a more specific explanation of the category dictionary creating step. According to the present method, category structure information is created in which the root node is represented by a name of a pre-existing database or a field name of a specific field, and the leaf nodes are represented by the data stored in the database or the field. Category dictionary information is created based on this category structure information. Consequently, the category dictionary is efficiently created based on the field or stored data defined by the pre-existing database.

A dictionary information processing method according to still another aspect of the present invention: wherein the category dictionary creating step further comprises an analysis program category structure information creating step that creates, based on a pre-existing analysis program process result data, a category structure information comprising a root node and leaf nodes, where an analysis program name represents the root node and process result data represent the leaf nodes, and creates the category dictionary information based on the category structure information created by the analysis program category structure information creating step.

This is a more specific explanation of the category dictionary creating step. According to the present method, category structure information is created in which the root node is represented by the process program name, and the leaf nodes represented by the process result data. Category dictionary information is created based on this category structure information. Consequently, the category dictionary is efficiently created based on the process result of the analysis data.

A dictionary information processing method according to still another aspect of the present invention: wherein the dictionary information checking step further comprises entry-wise checking step that carries out entry-wise checking of the semantic dictionary information and/or category dictionary information, based on at least check term list, or check program, or check pattern.

This is a more specific explanation of a dictionary information checking step. According to the present method, semantic dictionary information and/or category dictionary information is checked entry-wise based on at least one of the following, namely, check phrase list, check program, and check pattern. Consequently, a highly reliable dictionary information is automatically obtained because of pre-specified check field.

In this way, an inappropriate entry added due to a bug in the program or failure of exceptional entry processing while creating a dictionary can be easily detected.

Further, incorrect entries that get included due to error in the existing data that is made use of can be easily detected.

Further, a dictionary entry that is inappropriate for the purpose of text mining can be easily detected.

A dictionary information processing method according to still another aspect of the present invention: wherein the dictionary information checking step further comprises a canonical form consistency checking step that checks whether a variant form entered in the semantic dictionary is stored a different canonical form.

This is a more specific explanation of the dictionary information checking step. According to the present method, inconsistency of canonical form is eliminated by checking if a variant form appears as a canonical form in semantic dictionary information. Consequently, a highly reliable dictionary information can be automatically obtained.

A dictionary information processing method according to still another aspect of the present invention: wherein the dictionary information checking step further comprises a statistics checking step that carries out an entry-related and usage-related statistical processing of the canonical forms, the variant forms, and the categories stored in the semantic dictionary information and/or category dictionary information, and checks whether a result of the statistical processing falls within a predetermined normal range.

This is a more specific explanation of the dictionary information checking step. According to the present method, statistical processing is carried out pertaining to entry-related status or usage-related status of canonical forms, variant forms, and categories entered in semantic dictionary information and/or category dictionary information. The result of the statistical processing is checked to see if it falls within a predetermined normal range. Consequently, a highly reliable dictionary information can be automatically obtained.

Further, entries with problematic entry-related status (such as an entry which reads '0'), or entries with problematic usage-related status (such as an entry which has an access count of 0, and extraction count of 0) can be easily detected by the statistical processing.

A dictionary information processing method according to still another aspect of the present invention: wherein the dictionary information checking step further comprises a co-occurrence checking step that calculates a degree of similarity based on a co-occurrence relation between the canonical forms, the variant forms, and the categories entered in the semantic dictionary information and/or category dictionary information.

This is a more specific explanation of the dictionary information checking step. According to the present method, degree of similarity between entries is calculated based on co-occurrence relation pertaining to canonical forms, variant forms, or categories entered in semantic dictionary information and/or category information dictionary. Consequently, checking of entry contents or appraisal of merging of two entries by the degree of similarity between the entries can be easily carried out.

A dictionary information processing program according to one aspect of the present invention includes: a semantic dictionary creating step that creates semantic dictionary information that defines a correlation between a canonical form and variant forms of a term; and a dictionary information checking step that checks the information stored in the semantic dictionary information and/or the category dictionary information.

According to the present program, semantic dictionary information is first created in which correlation between a canonical form and a variant form of a term is defined. Category dictionary information is created which defines the category to which the canonical form belongs. The information stored in the semantic dictionary information and/or the category dictionary information is checked. Consequently, creation and checking of various types of semantic dictionaries and category dictionaries used in database search service are automated. Further, the creation of dictionaries is highly efficient and accurate.

A dictionary information processing program according to another aspect of the present invention: wherein the semantic dictionary creating step further comprises a field attribute appraising step that assesses, based on attribute information of each field constituting a pre-existing database, whether each of the fields is to be considered as being a canonical form, a variant form, or a field that is not to be used, and creates the semantic dictionary information from each field of the pre-existing database, based on an appraisal result of the field attribute appraising step.

This is a more specific explanation of a semantic dictionary creating step. According to the present program, each of the fields of a pre-existing database is assessed, based on attribute information of fields constituting the pre-existing database, as being a canonical form, a variant form, or a field that is not to be used. Based on the result of this appraisal, the semantic dictionary information is created from the fields of the pre-existing database. Consequently, the semantic dictionary can be efficiently created from the pre-existing database.

A dictionary information processing program according to still another aspect of the present invention: wherein the semantic dictionary creating step further comprises a dictionary term appraising step that assesses, based on terms entered in a pre-existing dictionary information, whether each of the terms in the dictionary information is to be considered as a canonical form, variant form, or a term that is not to be used, and creates the semantic dictionary information from each term of the dictionary information, based on an appraisal result of the dictionary term appraising step.

This is a more specific explanation of the semantic dictionary creating step. According to the present program, each of the terms (keywords, abbreviations, synonyms, related words, etc. included in the dictionary) entered in the pre-existing dictionary information is assessed, based on the term, as being a canonical form, variant form, or a term not to be used. Based on the result of this appraisal, the semantic dictionary is created from the terms of the dictionary information. Consequently, the semantic dictionary can be efficiently created from the pre-existing dictionary information.

A dictionary information processing program according to still another aspect of the present invention: wherein the semantic dictionary creating step further comprises a Web term appraising step that assesses, based on terms entered in a pre-existing dictionary information, whether each of the terms in the Web information is to be considered as a canonical form, variant form, or a term that is not to be used, and creates the semantic dictionary information from each term of the Web information, based on an appraisal result of the Web term appraising step.

This is a more specific explanation of the semantic dictionary creating step. According to the present program, each of the terms in pre-existing Web information (including information on pre-existing websites, and information on the websites which allow editing by a participant with an object of adding terms to the dictionary) is assessed, based on the term, as being a canonical form, variant form, or a term that is not to be used. Based on the result of this appraisal, the semantic dictionary is created from the terms of the Web information. Consequently, the semantic dictionary can be efficiently created from the pre-existing Web information.

In this way, the dictionary information of every participant can be made public and shared.

A dictionary information processing program according to still another aspect of the present invention: wherein the category dictionary creating step further comprises a structured data category structure information creating step that creates category structure information based on a pre-existing structured data, and creates the category dictionary information based on the category structure information created by the structured data category structure information creating step.

This is a more specific explanation of a category dictionary creating step. According to the present program, category structure information is created based on pre-existing structured data. Category dictionary information is created based on this category structure information. Consequently, the category dictionary is efficiently created based on the classification defined by the pre-existing structured data.

A dictionary information processing program according to still another aspect of the present invention: wherein the structured data category structure information creating step creates, when there exist plural root nodes in the pre-existing structured data, the category structure information, the category structure information by adding a hypothetical root node at a level higher than the existing root nodes.

This is a more specific explanation of the category dictionary creating step. According to the present program, when there are plural root nodes in the pre-existing structured data, a hypothetical root node is added at a level higher than the root nodes in sequence to create the category structure information. Consequently, the category dictionary is efficiently created based on the classification defined by the pre-existing structured data.

A dictionary information processing program according to still another aspect of the present invention: wherein the structured data category structure information creating step creates, when there exists merging in the pre-existing structured data, the category structure information of a non-merging simple tree structure by reproducing the corresponding portion on the portion where merging occurs.

This is a more specific explanation of the category dictionary creating step. According to the present program, if there is merging of the pre-existing structured data, the part that is merging is reproduced in sequence to eliminate the merging and create a simplified tree from category structure information. Consequently, the category dictionary is efficiently created based on the classification defined by the pre-existing structured data.

A dictionary information processing program according to still another aspect of the present invention: wherein the category dictionary creating step further comprises a cluster category structure information creating step that creates, based on a pre-existing cluster data, a cluster category structure information comprising a root node and leaf nodes, where a name of the cluster data represents the root node and names of the cluster element represent the leaf nodes, and creates the category dictionary information based on the category structure information created by the cluster category structure information creating step.

This is a more specific explanation of the category dictionary creating step. According to the present program, category structure information is created in which the root node is represented by a cluster data name, and the leaf nodes are represented by cluster element names. Category dictionary information is created based on this category structure information. Consequently, the category dictionary is efficiently created based on the information defined by the pre-existing cluster data.

A dictionary information processing program according to still another aspect of the present invention: wherein the category dictionary creating step further comprises a MeSH term category structure information creating step that creates, based on MeSH term data, a MeSH term category structure information, and creates the category dictionary information based on the category structure information created by the MeSH term category structure information creating step.

This is a more specific explanation of the category dictionary creating step. According to the present program, category structure information is created based on MeSH term data. Category dictionary information is created based on this category structure information. Consequently, the category dictionary is efficiently created based on the medical terms defined by the pre-existing MeSH term data.

A dictionary information processing program according to still another aspect of the present invention: wherein the category dictionary creating step further comprises a database category structure information creating step that creates, based on a pre-existing database, a category structure information comprising a root node and leaf nodes, where a name of the pre-existing database or specific field represents the root node and data stored in the pre-existing database or the field represent the leaf nodes, and creates the category dictionary information based on the category structure information created by the database category structure information creating step.

This is a more specific explanation of the category dictionary creating step. According to the present program, category structure information is created in which the root node is represented by a name of a pre-existing database or a field name of a specific field, and the leaf nodes are represented by the data stored in the database or the field. Category dictionary information is created based on this category structure information. Consequently, the category dictionary is efficiently created based on the field or stored data defined by the pre-existing database.

A dictionary information processing program according to still another aspect of the present invention: wherein the category dictionary creating step further comprises an analysis program category structure information creating step that creates, based on a pre-existing analysis program process result data, a category structure information comprising a root node and leaf nodes, where an analysis program name represents the root node and process result data represent the leaf nodes, and creates the category dictionary information based on the category structure information created by the analysis program category structure information creating step.

This is a more specific explanation of the category dictionary creating step. According to the present program, category structure information is created in which the root node is represented by the process program name, and the leaf nodes represented by the process result data. Category dictionary information is created based on this category structure information. Consequently, the category dictionary is efficiently created based on the process result of the analysis data.

A dictionary information processing program according to still another aspect of the present invention: wherein the dictionary information checking step further comprises entry-wise checking step that carries out entry-wise checking of the semantic dictionary information and/or category dictionary information, based on at least check term list, or check program, or check pattern.

This is a more specific explanation of a dictionary information checking step. According to the present program, semantic dictionary information and/or category dictionary information is checked entry-wise based on at least one of the following, namely, check phrase list, check program, and check pattern. Consequently, a highly reliable dictionary information is automatically obtained because of pre-specified check field.

In this way, an inappropriate entry added due to a bug in the program or failure of exceptional entry processing while creating a dictionary can be easily detected.

Further, incorrect entries that get included due to error in the existing data that is made use of can be easily detected.

Further, a dictionary entry that is inappropriate for the purpose of text mining can be easily detected.

A dictionary information processing program according to still another aspect of the present invention: wherein the dictionary information checking step further comprises a canonical form consistency checking step that checks whether a variant form entered in the semantic dictionary is stored a different canonical form.

This is a more specific explanation of the dictionary information checking step. According to the present program, inconsistency of canonical form is eliminated by checking if a variant form appears as a canonical form in semantic dictionary information. Consequently, a highly reliable dictionary information can be automatically obtained.

A dictionary information processing program according to still another aspect of the present invention: wherein the dictionary information checking step further comprises a statistics checking step that carries out an entry-related and usage-related statistical processing of the canonical forms, the variant forms, and the categories stored in the semantic dictionary information and/or category dictionary information, and checks whether a result of the statistical processing falls within a predetermined normal range.

This is a more specific explanation of the dictionary information checking step. According to the present program, statistical processing is carried out pertaining to entry-related status or usage-related status of canonical forms, variant forms, and categories entered in semantic dictionary information and/or category dictionary information. The result of the statistical processing is checked to see if it falls within a predetermined normal range. Consequently, a highly reliable dictionary information can be automatically obtained.

Further, entries with problematic entry-related status (such as an entry which reads '0'), or entries with problematic usage-related status (such as an entry which has an access count of 0, and extraction count of 0) can be easily detected by the statistical processing.

A dictionary information processing program according to still another aspect of the present invention: wherein the dictionary information checking step further comprises a co-occurrence checking step that calculates a degree of similarity based on a co-occurrence relation between the canonical forms, the variant forms, and the categories entered in the semantic dictionary information and/or category dictionary information.

This is a more specific explanation of the dictionary information checking step. According to the present program, degree of similarity between entries is calculated based on co-occurrence relation pertaining to canonical forms, variant forms, or categories entered in semantic dictionary information and/or category information dictionary. Consequently, checking of entry contents or appraisal of merging of two entries by the degree of similarity between the entries can be easily carried out.

Furthermore, the present invention relates to the recording medium. The recording medium according to the present invention records the program explained above.

According to the present recording medium, the program recorded on the recording medium is computer-readable and executable. Consequently, the same result as for these methods can be obtained.

(IV) A document information extraction processing apparatus according to one aspect of the present invention includes: an attribute information registration unit that registers attribute information for a canonical form, a variant form, or a category item of every term defined in semantic dictionary information or a category dictionary, the attribute information being a condition for information extraction; and an attribute decision extraction unit that, when there exist among the textual document information of an analysis object document the canonical form, the variant form or the category item that have a corresponding attribute information registered by the attribute information registration unit, extracts information pertaining to the canonical form, the variant form or the category item.

According to the present invention, the attribute information, which is used as a condition at the time of carrying out information extraction, is registered according to the canonical form and the variant form or the category item of each term defined in the semantic dictionary information or the category dictionary. In case the canonical form, variant form, or category item exists in the textual document information of the analysis object document, the information pertaining to the canonical form, the variant form, or the category item having the corresponding attribute information is extracted. Thus by specifying extraction conditions for every term beforehand the noise at the time of information extraction can be reduced, thereby increasing the accuracy of information extraction, thereby increasing the extraction efficiency.

A document information extraction processing apparatus according to another aspect of the present invention includes: a dictionary entry checking unit that checks for bugs in canonical forms or variant forms of every term defined in semantic dictionary information; and a checked dictionary extraction unit that extracts information pertaining to the canonical forms and variant forms present in textual document information of an analysis object document that have cleared the checking by the dictionary entry checking unit.

According to the present invention, the bugs are checked for the canonical form and the variant form for each term that is defined in the semantic dictionary information. Only canonical forms or variant forms which are bug-free are extracted. Thus by eliminating the bugs in a poor quality dictionary, the accuracy of the extracted information, and hence the efficiency of extraction, can be enhanced.

A document information extraction processing apparatus according to still another aspect of the present invention includes: an extraction object part-of-speech information registration unit that registers extraction object part-of-speech information pertaining to a stipulated part-of-speech, the part-of-speech being a condition for information extraction; a syntax analysis unit that carries out syntax analysis of textual document information of an analysis object document, and establishes the part-of-speech for every word registered in the textual document information; and a morpheme extraction unit that, when a word that exists in the textual document information of the analysis object document is registered as a part-of-speech by the extraction object part-of-speech information registration unit, extracts information pertaining to the word and the part-of-speech.

According to the present invention, syntax analysis is performed on the textual document information of the analysis object document, by registering the part-of-speech information to be extracted which forms a condition for extracting information. The part-of-speech of each word which appears in the textual document information concerned is determined. When a word exists in the textual document information in the analysis object document and is the part-of-speech into which the concerned word was registered, information pertaining to the word and the part-of-speech is extracted. Thus information pertaining to a word of desired meaning can be extracted even if the word appears as different parts of speech having different meanings.

A document information extraction processing method according to one aspect of the present invention includes: an attribute information registration step that registers attribute information for a canonical form, a variant form, or a category item of every term defined in semantic dictionary information or a category dictionary, the attribute information being a condition for information extraction; and an attribute decision extraction step that, when there exist among the textual document information of an analysis object document the canonical form, the variant form or the category item that have a corresponding attribute information registered by the attribute information registration step, extracts information pertaining to the canonical form, the variant form or the category item.

According to the present invention, the attribute information, which is used as a condition at the time of carrying out information extraction, is registered according to the canonical form and the variant form or the category item of each term defined in the semantic dictionary information or the category dictionary. In case the canonical form, variant form, or category item exists in the textual document information of the analysis object document, the information pertaining to the canonical form, the variant form, or the category item having the corresponding attribute information is extracted. Thus by specifying extraction conditions for every term beforehand the noise at the time of information extraction can be reduced, thereby increasing the accuracy of information extraction, thereby increasing the extraction efficiency.

A document information extraction processing method according to another aspect of the present invention includes: a dictionary entry checking step that checks for bugs in canonical forms or variant forms of every term defined in semantic dictionary information; and a checked dictionary extraction step that extracts information pertaining to the canonical forms and variant forms present in textual document information of an analysis object document that have cleared the checking by the dictionary entry checking step.

According to the present invention, the bugs are checked for the canonical form and the variant form for each term that is defined in the semantic dictionary information. Only canonical forms or variant forms which are bug-free are extracted. Thus by eliminating the bugs in a poor quality dictionary, the accuracy of the extracted information, and hence the efficiency of extraction, can be enhanced.

A document information extraction processing method according to still another aspect of the present invention includes: an extraction object part-of-speech information registration step that registers extraction object part-of-speech information pertaining to a stipulated part-of-speech, the part-of-speech being a condition for information extraction; a syntax analysis step that carries out syntax analysis of textual document information of an analysis object document, and establishes the part-of-speech for every word registered in the textual document information; and a morpheme extraction step that, when a word that exists in the textual document information of the analysis object document is registered as a part-of-speech by the extraction object part-of-speech information registration step, extracts information pertaining to the word and the part-of-speech.

According to the present invention, syntax analysis is performed on the textual document information of the analysis object document, by registering the part-of-speech information to be extracted which forms a condition for extracting information. The part-of-speech of each word which appears in the textual document information concerned is determined. When a word exists in the textual document information in the analysis object document and is the part-of-speech into which the concerned word was registered, information pertaining to the word and the part-of-speech is extracted. Thus information pertaining to a word of desired meaning can be extracted even if the word appears as different parts of speech having different meanings.

A document information extraction processing program according to one aspect of the present invention includes: an attribute information registration step that registers attribute information for a canonical form, a variant form, or a category item of every term defined in semantic dictionary information or a category dictionary, the attribute information being a condition for information extraction; and an attribute decision extraction step that, when there exist among the textual document information of an analysis object document the canonical form, the variant form or the category item that have a corresponding attribute information registered by the attribute information registration step, extracts information pertaining to the canonical form, the variant form or the category item.

According to the present invention, the attribute information, which is used as a condition at the time of carrying out information extraction, is registered according to the canonical form and the variant form or the category item of each term defined in the semantic dictionary information or the category dictionary. In case the canonical form, variant form, or category item exists in the textual document information of the analysis object document, the information pertaining to the canonical form, the variant form, or the category item having the corresponding attribute information is extracted. Thus by specifying extraction conditions for every term beforehand the noise at the time of information extraction can be reduced, thereby increasing the accuracy of information extraction, thereby increasing the extraction efficiency.

A document information extraction processing program according to another aspect of the present invention includes: a dictionary entry checking step that checks for bugs in canonical forms or variant forms of every term defined in semantic dictionary information; and a checked dictionary extraction step that extracts information pertaining to the canonical forms and variant forms present in textual document information of an analysis object document that have cleared the checking by the dictionary entry checking step.

According to the present invention, the bugs are checked for the canonical form and the variant form for each term that is defined in the semantic dictionary information. Only canonical forms or variant forms which are bug-free are extracted. Thus by eliminating the bugs in a poor quality dictionary, the accuracy of the extracted information, and hence the efficiency of extraction, can be enhanced.

A document information extraction processing program according to still another aspect of the present invention includes: an extraction object part-of-speech information registration step that registers extraction object part-of-speech information pertaining to a stipulated part-of-speech, the part-of-speech being a condition for information extraction; a syntax analysis step that carries out syntax analysis of textual document information of an analysis object document, and establishes the part-of-speech for every word registered in the textual document information; and a morpheme extraction step that, when a word that exists in the textual document information of the analysis object document is registered as a part-of-speech by the extraction object part-of-speech information registration step, extracts information pertaining to the word and the part-of-speech.

According to the present invention, syntax analysis is performed on the textual document information of the analysis object document, by registering the part-of-speech information to be extracted which forms a condition for extracting information. The part-of-speech of each word which appears in the textual document information concerned is determined. When a word exists in the textual document information in the analysis object document and is the part-of-speech into which the concerned word was registered, information pertaining to the word and the part-of-speech is extracted. Thus information pertaining to a word of desired meaning can be extracted even if the word appears as different parts of speech having different meanings.

Furthermore, the present invention relates to the recording medium. The recording medium according to the present invention records the program explained above.

According to the present recording medium, the program recorded on the recording medium is computer-readable and executable. Consequently, the same result as for these methods can be obtained.

(V) A text mining processing apparatus that totals an appearance frequency of each term appearing in an analysis object document according to one aspect of the present invention includes: a textual document display control unit, wherein the textual document display control unit controls in such a way that: textual document information of the analysis object document, and totaled key list information are output to an output device, the totaled key list information being included in the textual document information and being a list of terms to be totaled, wherein each term has a link button to a type of the term and/or the destination address.

According to the present invention, the textual document display control unit controls in such a way that, the terms that are included in the textual document information, and the total key list information are output to an output unit. The total key list information that is included in the textual information on the document for analysis is listed for totaling. According to the present invention, the total key list information, which matches with each term has a link button for the type of a term, and/or the destination address of a term, are output to an output unit. Consequently, an end user can easily select among a series of analysis operations, the operation to acquire the literature, by displaying the textual document with the list of totaled words as a key. As a result, the operation in which a user with little experience who can also cause a noise is avoided, enabling high accuracy in the analysis operation. The end user can also know correctly the theme of the literature that is acquired, by stretching the link to an external database in the text. Thus, this information leads to the improvement in accuracy of analysis operation, as it is utilized for studying the operation which produces a search noise.

A text mining processing apparatus that totals an appearance frequency of each term appearing in an analysis object document according to another aspect of the present invention includes: a dictionary entry search screen control unit, wherein the dictionary entry search screen control unit controls in such a way that, a search word input by a user, information pertaining to a corresponding canonical form and a emantic dictionary entry of the canonical form searched and extracted based on the search word, from semantic dictionary information, and information pertaining to a corresponding category and a category dictionary entry of the category searched and extracted, based on the search word, from category dictionary information are output to an output device.

According to the present invention, dictionary entry search screen control unit controls in such a way that, a search word inputted by a user, information pertaining to a corresponding canonical form and a semantic dictionary entry of the canonical form searched and extracted based on the search word, from semantic dictionary information, and information pertaining to a corresponding category and a category dictionary entry of the category searched and extracted, based on the search word, from category dictionary information are output to an output device. As a result, by searching the application possibility of the semantic dictionary and the category dictionary of a specific word, a suitable word can be sorted out, although the literature is divided into the target category. By repeating the word search, the lexical file can be sorted out, where the frequently occurring word is deployed by a large number of category groups which were required to be separated originally, thereby enabling the accuracy of these category groups to be guessed. In other words, when you understand the known term by which a certain category is characterized, the frequency of repetition of the category can be guessed by checking the existence of the dictionary entry relating to that word.

A text mining processing apparatus that totals an appearance frequency of each term appearing in an analysis object document according to still another aspect of the present invention includes: a dictionary entry search screen control unit, wherein the dictionary entry search screen control unit controls in such a way that, textual document information of analysis target document, and trace result information that includes at least a search result of a semantic dictionary or part-of-speech information obtained by syntax analysis process, or a search result of a category dictionary, for the terms that are included in the textual document information and that are totaled, are output to an output device.

According to the present invention, the trace result display screen control unit controls, at the output unit, the output of trace result information which includes at least one out of the search result of semantic dictionary, or part-of-speech information by syntax analysis processing, or search result of category dictionary, for the term which is contained in the textual document information and in the document to be analyzed, which is further is totaled.

A text mining processing apparatus that totals an appearance frequency of each term appearing in an analysis object document according to still another aspect of the present invention includes: a syntax structure analyzing unit that carries out, according to a syntax analysis result of textual document information of the analysis object document, a totaling process text mining on the analysis object document, by considering a sequential combination of nouns and verbs included in the textual document information as a single category.

According to the present invention, the totaling process of text mining is performed as a single category, by combining the sequence of n nouns and verbs included in the textual information, according to the syntax analysis result for the textual information of the document to be analyzed. As a result, by making an n clause related pattern applicable to the totaling process, the literature which was unable to be distinguished only by the type of the term was divisible, thereby raising further the analytical accuracy.

A text mining processing apparatus that totals an appearance frequency of each term appearing in an analysis object document according to still another aspect of the present invention includes: a multi-window display unit that controls in such a way that if a finer search is carried out using a search condition in a second search window on a search result of a first search window, the mutually linked search windows and the search result display window are displayed in the form of multi-window display, and if contents of any of these windows change, the change is automatically reflected in the other windows as well.

According to the present invention, when searching by extracting the search conditions by employing another search window, these related search windows and the search result display windows are displayed by creating multiple windows. When the contents of the display of any of the windows are changed, the changed contents are automatically reflected in other windows. Thus the quantity of the information to be memorized for analysis by an end user becomes less by leaving behind the arbitrary work status if needed. Thereby, the efficiency of analytical operations can be increased, and the display domain of the computer terminal equipped with plural screens can be used effectively.

A text mining processing apparatus that totals an appearance frequency of each term appearing in an analysis object document according to still another aspect of the present invention includes: a 2-D map display screen control unit that outputs to an output device a 2-D map window by sorting or clustering category entries corresponding to rows and columns of a 2-D map that displays a text mining result.

According to the present invention, a 2-D map displays the text mining result, where the 2-D map window is output to an output unit by sorting each category item in rows and columns. When the category item which should be observed is fixed at a specific position in the sequence of an original category definition, by sorting in original sequence, these category items can be found easy. When the appearance frequency of the category item to be observed is high, these category items can be easily found out by sorting in sequence of high frequency. When the category item which should be observed starts with a specified name, these category items can be found out easily by sorting in alphabetical order.

According to the present invention, a 2-D map displays the text mining result, where the 2-D map window is output to an outp ut unit by sorting each category item in rows and columns. As a result, by summarizing as a cluster, the group of items having common characteristic pattern, addition of search of the category item becomes easy and the efficiency of analytical operations can be increased.

A text mining processing apparatus that totals an appearance frequency of each term appearing in an analysis object document according to still another aspect of the present invention includes: an operation history collecting unit that collects operation history information pertaining to at least time, or user identification, or operation name, or operation argument, or operation object, or operation result, or user comment pertaining to intention of operation, related to each operation during text mining.

According to the present invention, for each operation at the time of text mining, collects at least one of the operation history information, namely from the operation time, the user identifier, the operation name, the operation argument, the operation target, the operation result and the comment of user on the intention of operation. Thus, based on the operation history, the registration contents of the semantic dictionary or the category dictionary can be checked. By generating specifications (batch script) for automated operation execution processing (batch processing) and using it as a model, complicated analytical process can be batch-processed easily. Even when interactive operations are recorded in the operation history, based on the storage of user comments on his operation intentions, the place where the operation intention of a user is batched as a clue can be quickly looked for, enabling efficiency in generating batch script. The operation that examines the contents of a batch at the time of batch script generation is eased by putting a comment into the place where a user wants to batch later, thereby increasing the efficiency of batch script generation.

A text mining processing apparatus according to still another aspect of the present invention includes: an operation automated execution unit that creates, based on the operation history information collected by the operation history collecting unit, and executes a batch script.

According to the present invention, since the batch script is created and executed based on the collected operation history information, time spent by an end user during tool use can be shortened by repeating the analysis which consists of a series of operations by batch processing and executing it. Analytical processes performed for every fixed period can be performed automatically, and even during idle period of the system, heavy analytical processes can be executed.

A text mining processing apparatus that totals an appearance frequency of each term appearing in an analysis object document according to still another aspect of the present invention includes: a category hierarchy creating unit that outputs to an output device a totalized result of each category registered in category dictionary information used in a text mining process by converting the totalized result into a hierarchied tree structure; and a category selection unit that selects at least a portion of the hierarchied tree structure output by the category hierarchy creating unit.

According to the present invention, the totaled result of each category registered into the category dictionary information by using the text mining process is hierarchized by the tree structure, and is output to an output unit. As a result, by employing the folding or deployment operation hierarchied in a tree structure, the plural conceptual items displayed at once on a screen through a user interactive interface can be controlled, and the search of the targeted conceptual item becomes easier.

According to the present invention, since at least a part is chosen among the output categories which were hierarchized in the tree structure, in case the interactive text mining operation is performed, a user can choose the targeted partial category from the screen which is displayed hierarchied the category in tree structure. A class category is utilizable not only in the final output but also in the middle operation. Interactive text mining analysis operation which demands for specifying a category part can be efficiently carried out when the targeted category structure is large-scale.

A text mining processing apparatus according to still another aspect of the present invention includes: an intermediate node totaling unit that, when an intermediate node of a totalized result of all the categories that are converted to the hierarchied tree structure by the category hierarchy creating unit is treated as a concept entry, treats a totalized result corresponding to all leaf node concept entries which are descendents of the intermediate node as the totalized result of the intermediate node, and/or, when in a semantic dictionary used in the text mining process a canonical form or a variant form is defined for the intermediate node, treats the totalized result of the analysis object document that includes the canonical form or the variant form as the totalized result of the intermediate node.

According to the present invention, when handling a mean node as a conceptual item where the totalized result of each category is hierarchized in the tree structure, the totalized results of mean node is equal to the totalized results of each leaf node which serves as a descendent of the mean node (first totaling method), and/or, when the canonical form and the variant form for mean node is defined in the semantic dictionary employed in the text mining process, the totalized result of mean node equals to the totalized results of the document for analysis containing the canonical form and the variant form (second totaling method). By using the first total method, even if the conceptual category structure does not correspond to a middle node, the totaling process can be completed. The category structure where flexibility is high, such as a large-scale conceptual category structure which is divided into suitable parts, can be designed. By using the second totaling method, when the conceptual category structure has a regular word corresponding to a middle node exists, plurality of documents can be totaled with sufficient accuracy. Many such cases are found in which the conceptual category structure is created using the existing data structure, where the second totaling method can be utilized. Using the first and second totaling methods properly according to the situation, individually or combining them, the cost for creating conceptual category structure can be lowered, and use of a large-scale category concept becomes easy.

A text mining processing method that totals an appearance frequency of each term appearing in an analysis object document according to one aspect of the present invention includes: a textual document display control step, wherein the textual document display control step controls in such a way that: textual document information of the analysis object document, and totaled key list information are output to an output device, the totaled key list information being included in the textual document information and being a list of terms to be totaled, wherein each term has a link button to a type of the term and/or the destination address.

According to the present invention, the textual document display control step controls in such a way that, the terms that are included in the textual document information, and the total key list information are output to an output step. The total key list information that is included in the textual information on the document for analysis is listed for totaling. According to the present invention, the total key list information, which matches with each term has a link button for the type of a term, and/or the destination address of a term, are output to an output step. Consequently, an end user can easily select among a series of analysis operations, the operation to acquire the literature, by displaying the textual document with the list of totaled words as a key. As a result, the operation in which a user with little experience who can also cause a noise is avoided, enabling high accuracy in the analysis operation. The end user can also know correctly the theme of the literature that is acquired, by stretching the link to an external database in the text. Thus, this information leads to the improvement in accuracy of analysis operation, as it is utilized for studying the operation which produces a search noise.

A text mining processing method that totals an appearance frequency of each term appearing in an analysis object document according to another aspect of the present invention includes: a dictionary entry search screen control step, wherein the dictionary entry search screen control step controls in such a way that, a search word input by a user, information pertaining to a corresponding canonical form and a emantic dictionary entry of the canonical form searched and extracted based on the search word, from semantic dictionary information, and information pertaining to a corresponding category and a category dictionary entry of the category searched and extracted, based on the search word, from category dictionary information are output to an output device.

According to the present invention, dictionary entry search screen control step controls in such a way that, a search word inputted by a user, information pertaining to a corresponding canonical form and a semantic dictionary entry of the canonical form searched and extracted based on the search word, from semantic dictionary information, and information pertaining to a corresponding category and a category dictionary entry of the category searched and extracted, based on the search word, from category dictionary information are output to an output device. As a result, by searching the application possibility of the semantic dictionary and the category dictionary of a specific word, a suitable word can be sorted out, although the literature is divided into the target category. By repeating the word search, the lexical file can be sorted out, where the frequently occurring word is deployed by a large number of category groups which were required to be separated originally, thereby enabling the accuracy of these category groups to be guessed. In other words, when you understand the known term by which a certain category is characterized, the frequency of repetition of the category can be guessed by checking the existence of the dictionary entry relating to that word.

A text mining processing method that totals an appearance frequency of each term appearing in an analysis object document according to still another aspect of the present invention includes: a dictionary entry search screen control step, wherein the dictionary entry search screen control step controls in such a way that, textual document information of analysis target document, and trace result information that includes at least a search result of a semantic dictionary or part-of-speech information obtained by syntax analysis process, or a search result of a category dictionary, for the terms that are included in the textual document information and that are totaled, are output to an output device.

According to the present invention, the trace result display screen control step controls, at the output step, the output of trace result information which includes at least one out of the search result of semantic dictionary, or part-of-speech information by syntax analysis processing, or search result of category dictionary, for the term which is contained in the textual document information and in the document to be analyzed, which is further is totaled.

A text mining processing method that totals an appearance frequency of each term appearing in an analysis object document according to still another aspect of the present invention includes: a syntax structure analyzing step that carries out, according to a syntax analysis result of textual document information of the analysis object document, a totaling process text mining on the analysis object document, by considering a sequential combination of nouns and verbs included in the textual document information as a single category.

According to the present invention, the totaling process of text mining is performed as a single category, by combining the sequence of n nouns and verbs included in the textual information, according to the syntax analysis result for the textual information of the document to be analyzed. As a result, by making an n clause related pattern applicable to the totaling process, the literature which was unable to be distinguished only by the type of the term was divisible, thereby raising further the analytical accuracy.

A text mining processing method that totals an appearance frequency of each term appearing in an analysis object document according to still another aspect of the present invention includes: a multi-window display step that controls in such a way that if a finer search is carried out using a search condition in a second search window on a search result of a first search window, the mutually linked search windows and the search result display window are displayed in the form of multi-window display, and if contents of any of these windows change, the change is automatically reflected in the other windows as well.

According to the present invention, when searching by extracting the search conditions by employing another search window, these related search windows and the search result display windows are displayed by creating multiple windows. When the contents of the display of any of the windows are changed, the changed contents are automatically reflected in other windows. Thus the quantity of the information to be memorized for analysis by an end user becomes less by leaving behind the arbitrary work status if needed. Thereby, the efficiency of analytical operations can be increased, and the display domain of the computer terminal equipped with plural screens can be used effectively.

A text mining processing method that totals an appearance frequency of each term appearing in an analysis object document according to still another aspect of the present invention includes: a 2-D map display screen control step that outputs to an output device a 2-D map window by sorting or clustering category entries corresponding to rows and columns of a 2-D map that displays a text mining result.

According to the present invention, a 2-D map displays the text mining result, where the 2-D map window is output to an output step by sorting each category item in rows and columns. When the category item which should be observed is fixed at a specific position in the sequence of an original category definition, by sorting in original sequence, these category items can be found easy. When the appearance frequency of the category item to be observed is high, these category items can be easily found out by sorting in sequence of high frequency. When the category item which should be observed starts with a specified name, these category items can be fou nd out easily by sorting in alphabetical order.

According to the present invention, a 2-D map displays the text mining result, where the 2-D map window is output to an output step by sorting each category item in rows and columns. As a result, by summarizing as a cluster, the group of items having common characteristic pattern, addition of search of the category item becomes easy and the efficiency of analytical operations can be increased.

A text mining processing method that totals an appearance frequency of each term appearing in an analysis object document according to still another aspect of the present invention includes: an operation history collecting step that collects operation history information pertaining to at least time, or user identification, or operation name, or operation argument, or operation object, or operation result, or user comment pertaining to intention of operation, related to each operation during text mining.

According to the present invention, for each operation at the time of text mining, collects at least one of the operation history information, namely from the operation time, the user identifier, the operation name, the operation argument, the operation target, the operation result and the comment of user on the intention of operation. Thus, based on the operation history, the registration contents of the semantic dictionary or the category dictionary can be checked. By generating specifications (batch script) for automated operation execution processing (batch processing) and using it as a model, complicated analytical process can be batch-processed easily. Even when interactive operations are recorded in the operation history, based on the storage of user comments on his operation intentions, the place where the operation intention of a user is batched as a clue can be quickly looked for, enabling efficiency in generating batch script. The operation that examines the contents of a batch at the time of batch script generation is eased by putting a comment into the place where a user wants to batch later, thereby increasing the efficiency of batch script generation.

A text mining processing method according to still another aspect of the present invention includes: an operation automated execution step that creates, based on the operation history information collected by the operation history collecting step, and executes a batch script.

According to the present invention, since the batch script is created and executed based on the collected operation history information, time spent by an end user during tool use can be shortened by repeating the analysis which consists of a series of operations by batch processing and executing it. Analytical processes performed for every fixed period can be performed automatically, and even during idle period of the system, heavy analytical processes can be executed.

A text mining processing method that totals an appearance frequency of each term appearing in an analysis object document according to still another aspect of the present invention includes: a category hierarchy creating step that outputs to an output device a totalized result of each category registered in category dictionary information used in a text mining process by converting the totalized result into a hierarchied tree structure; and a category selection step that selects at least a portion of the hierarchied tree structure output by the category hierarchy creating step.

According to the present invention, the totaled result of each category registered into the category dictionary information by using the text mining process is hierarchized by the tree structure, and is output to an output step. As a result, by employing the folding or deployment operation hierarchied in a tree structure, the plural conceptual items displayed at once on a screen through a user interactive interface can be controlled, and the search of the targeted conceptual item becomes easier.

According to the present invention, since at least a part is chosen among the output categories which were hierarchized in the tree structure, in case the interactive text mining operation is performed, a user can choose the targeted partial category from the screen which is displayed hierarchied the category in tree structure. A class category is utilizable not only in the final output but also in the middle operation. Interactive text mining analysis operation which demands for specifying a category part can be efficiently carried out when the targeted category structure is large-scale.

A text mining processing method according to still another aspect of the present invention includes: an intermediate node totaling step that, when an intermediate node of a totalized result of all the categories that are converted to the hierarchied tree structure by the category hierarchy creating step is treated as a concept entry, treats a totalized result corresponding to all leaf node concept entries which are descendents of the intermediate node as the totalized result of the intermediate node, and/or, when in a semantic dictionary used in the text mining process a canonical form or a variant form is defined for the intermediate node, treats the totalized result of the analysis object document that includes the canonical form or the variant form as the totalized result of the intermediate node.

According to the present invention, when handling a mean node as a conceptual item where the totalized result of each category is hierarchized in the tree structure, the totalized results of mean node is equal to the totalized results of each leaf node which serves as a descendent of the mean node (first totaling method), and/or, when the canonical form and the variant form for mean node is defined in the semantic dictionary employed in the text mining process, the totalized result of mean node equals to the totalized results of the document for analysis containing the canonical form and the variant form (second totaling method). By using the first total method, even if the conceptual category structure does not correspond to a middle node, the totaling process can be completed. The category structure where flexibility is high, such as a large-scale conceptual category structure which is divided into suitable parts, can be designed. By using the second totaling method, when the conceptual category structure has a regular word corresponding to a middle node exists, plurality of documents can be totaled with sufficient accuracy. Many such cases are found in which the conceptual category structure is created using the existing data structure, where the second totaling method can be utilized. Using the first and second totaling methods properly according to the situation, individually or combining them, the cost for creating conceptual category structure can be lowered, and use of a large-scale category concept becomes easy.

A text mining processing program that totals an appearance frequency of each term appearing in an analysis object document according to one aspect of the present invention includes: a textual document display control step, wherein the textual document display control step controls in such a way that: textual document information of the analysis object document, and totaled key list information are output to an output device, the totaled key list information being included in the textual document information and being a list of terms to be totaled, wherein each term has a link button to a type of the term and/or the destination address:

According to the present invention, the textual document display control step controls in such a way that, the terms that are included in the textual document information, and the total key list information are output to an output step. The total key list information that is included in the textual information on the document for analysis is listed for totaling. According to the present invention, the total key list information, which matches with each term has a link button for the type of a term, and/or the destination address of a term, are output to an output step. Consequently, an end user can easily select among a series of analysis operations, the operation to acquire the literature, by displaying the textual document with the list of totaled words as a key. As a result, the operation in which a user with little experience who can also cause a noise is avoided, enabling high accuracy in the analysis operation. The end user can also know correctly the theme of the literature that is acquired, by stretching the link to an external database in the text. Thus, this information leads to the improvement in accuracy of analysis operation, as it is utilized for studying the operation which produces a search noise.

A text mining processing program that totals an appearance frequency of each term appearing in an analysis object document according to another aspect of the present invention includes: a dictionary entry search screen control step, wherein the dictionary entry search screen control step controls in such a way that, a search word input by a user, information pertaining to a corresponding canonical form and a emantic dictionary entry of the canonical form searched and extracted based on the search word, from semantic dictionary information, and information pertaining to a corresponding category and a category dictionary entry of the category searched and extracted, based on the search word, from category dictionary information are output to an output device.

According to the present invention, dictionary entry search screen control step controls in such a way that, a search word inputted by a user, information pertaining to a corresponding canonical form and a semantic dictionary entry of the canonical form searched and extracted based on the search word, from semantic dictionary information, and information pertaining to a corresponding category and a category dictionary entry of the category searched and extracted, based on the search word, from category dictionary information are output to an output device. As a result, by searching the application possibility of the semantic dictionary and the category dictionary of a specific word, a suitable word can be sorted out, although the literature is divided into the target category. By repeating the word search, the lexical file can be sorted out, where the frequently occurring word is deployed by a large number of category groups which were required to be separated originally, thereby enabling the accuracy of these category groups to be guessed. In other words, when you understand the known term by which a certain category is characterized, the frequency of repetition of the category can be guessed by checking the existence of the dictionary entry relating to that word.

A text mining processing program that totals an appearance frequency of each term appearing in an analysis object document according to still another aspect of the present invention includes: a dictionary entry search screen control step, wherein the dictionary entry search screen control step controls in such a way that, textual document information of analysis target document, and trace result information that includes at least a search result of a semantic dictionary or part-of-speech information obtained by syntax analysis process, or a search result of a category dictionary, for the terms that are included in the textual document information and that are totaled, are output to an output device.

According to the present invention, the trace result display screen control step controls, at the output step, the output of trace result information which includes at least one out of the search result of semantic dictionary, or part-of-speech information by syntax analysis processing, or search result of category dictionary, for the term which is contained in the textual document information and in the document to be analyzed, which is further is totaled.

A text mining processing program that totals an appearance frequency of each term appearing in an analysis object document according to still another aspect of the present invention includes: a syntax structure analyzing step that carries out, according to a syntax analysis result of textual document information of the analysis object document, a totaling process text mining on the analysis object document, by considering a sequential combination of nouns and verbs included in the textual document information as a single category.

According to the present invention, the totaling process of text mining is performed as a single category, by combining the sequence of n nouns and verbs included in the textual information, according to the syntax analysis result for the textual information of the document to be analyzed. As a result, by making an n clause related pattern applicable to the totaling process, the literature which was unable to be distinguished only by the type of the term was divisible, thereby raising further the analytical accuracy.

A text mining processing program that totals an appearance frequency of each term appearing in an analysis object document according to still another aspect of the present invention includes: a multi-window display step that controls in such a way that if a finer search is carried out using a search condition in a second search window on a search result of a first search window, the mutually linked search windows and the search result display window are displayed in the form of multi-window display, and if contents of any of these windows change, the change is automatically reflected in the other windows as well.

According to the present invention, when searching by extracting the search conditions by employing another search window, these related search windows and the search result display windows are displayed by creating multiple windows. When the contents of the display of any of the windows are changed, the changed contents are automatically reflected in other windows. Thus the quantity of the information to be memorized for analysis by an end user becomes less by leaving behind the arbitrary work status if needed. Thereby, the efficiency of analytical operations can be increased, and the display domain of the computer terminal equipped with plural screens can be used effectively.

A text mining processing program that totals an appea rance frequency of each term appearing in an analysis object document according to still another aspect of the present invention includes: a 2-D map display screen control step that outputs to an output device a 2-D map window by sorting or clustering category entries corresponding to rows and columns of a 2-D map that displays a text mining result.

According to the present invention, a 2-D map displays the text mining result, where the 2-D map window is output to an output step by sorting each category item in rows and columns. When the category item which should be observed is fixed at a specific position in the sequence of an original category definition, by sorting in original sequence, these category items can be found easy. When the appearance frequency of the category item to be observed is high, these category items can be easily found out by sorting in sequence of high frequency. When the category item which should be observed starts with a specified name, these category items can be found out easily by sorting in alphabetical order.

According to the present invention, a 2-D map displays the text mining result, where the 2-D map window is output to an output step by sorting each category item in rows and columns. As a result, by summarizing as a cluster, the group of items having common characteristic pattern, addition of search of the category item becomes easy and the efficiency of analytical operations can be increased.

A text mining processing program that totals an appearance frequency of each term appearing in an analysis object document according to still another aspect of the present invention includes: an operation history collecting step that collects operation history information pertaining to at least time, or user identification, or operation name, or operation argument, or operation object, or operation result, or user comment pertaining to intention of operation, related to each operation during text mining.

According to the present invention, for each operation at the time of text mining, collects at least one of the operation history information, namely from the operation time, the user identifier, the operation name, the operation argument, the operation target, the operation result and the comment of user on the intention of operation. Thus, based on the operation history, the registration contents of the semantic dictionary or the category dictionary can be checked. By generating specifications (batch script) for automated operation execution processing (batch processing) and using it as a model, complicated analytical process can be batch-processed easily. Even when interactive operations are recorded in the operation history, based on the storage of user comments on his operation intentions, the place where the operation intention of a user is batched as a clue can be quickly looked for, enabling efficiency in generating batch script. The operation that examines the contents of a batch at the time of batch script generation is eased by putting a comment into the place where a user wants to batch later, thereby increasing the efficiency of batch script generation.

A text mining processing program according to still another aspect of the present invention includes: an operation automated execution step that creates, based on the operation history information collected by the operation history collecting step, and executes a batch script.

According to the present invention, since the batch script is created and executed based on the collected operation history information, time spent by an end user during tool use can be shortened by repeating the analysis which consists of a series of operations by batch processing and executing it. Analytical processes performed for every fixed period can be performed automatically, and even during idle period of the system, heavy analytical processes can be executed.

A text mining processing program that totals an appearance frequency of each term appearing in an analysis object document according to still another aspect of the present invention includes: a category hierarchy creating step that outputs to an output device a totalized result of each category registered in category dictionary information used in a text mining process by converting the totalized result into a hierarchied tree structure; and a category selection step that selects at least a portion of the hierarchied tree structure output by the category hierarchy creating step.

According to the present invention, the totaled result of each category registered into the category dictionary information by using the text mining process is hierarchized by the tree structure, and is output to an output step. As a result, by employing the folding or deployment operation hierarchied in a tree structure, the plural conceptual items displayed at once on a screen through a user interactive interface can be controlled, and the search of the targeted conceptual item becomes easier.

According to the present invention, since at least a part is chosen among the output categories which were hierarchized in the tree structure, in case the interactive text mining operation is performed, a user can choose the targeted partial category from the screen which is displayed hierarchied the category in tree structure. A class category is utilizable not only in the final output but also in the middle operation. Interactive text mining analysis operation which demands for specifying a category part can be efficiently carried out when the targeted category structure is large-scale.

A text mining processing program according to still another aspect of the present invention includes: an intermediate node totaling step that, when an intermediate node of a totalized result of all the categories that are converted to the hierarchied tree structure by the category hierarchy creating step is treated as a concept entry, treats a totalized result corresponding to all leaf node concept entries which are descendents of the intermediate node as the totalized result of the intermediate node, and/or, when in a semantic dictionary used in the text mining process a canonical form or a variant form is defined for the intermediate node, treats the totalized result of the analysis object document that includes the canonical form or the variant form as the totalized result of the intermediate node.

According to the present invention, when handling a mean node as a conceptual item where the totalized result of each category is hierarchized in the tree structure, the totalized results of mean node is equal to the totalized results of each leaf node which serves as a descendent of the mean node (first totaling program), and/or, when the canonical form and the variant form for mean node is defined in the semantic dictionary employed in the text mining process, the totalized result of mean node equals to the totalized results of the document for analysis containing the canonical form and the variant form (second totaling program). By using the first total program, even if the conceptual category structure does not correspond to a middle node, the totaling process can be completed. The category structure where flexibility is high, such as a large-scale conceptual category structure which is divided into suitable parts, can be designed. By using the second totaling program, when the conceptual category structure has a regular word corresponding to a middle node exists, plurality of documents can be totaled with sufficient accuracy. Many such cases are found in which the conceptual category structure is created using the existing data structure, where the second totaling program can be utilized. Using the first and second totaling programs properly according to the situation, individually or combining them, the cost for creating conceptual category structure can be lowered, and use of a large-scale category concept becomes easy.

Furthermore, the present invention relates to the recording medium. The recording medium according to the present invention records the program explained above.

According to the present recording medium, the program recorded on the recording medium is computer-readable and executable. Consequently, the same result as for these methods can be obtained.

(VI) A text mining analysis apparatus according to one aspect of the present invention includes: a category changing unit that changes a category structure by the new concept assigned by the concept assigning unit; a view assigning unit that selects a concept to be analyzed by text mining analysis, and assigns a view by setting view cutoff line constituting concepts, from among the concepts below the concept to be analyzed, that form a view cutoff line; and a text mining analysis unit that carries out the text mining analysis using the view assigned by the view assigning unit.

According to the present invention, a new concept is assignable without using the existing category, the structure of a category can be changed by the assigned new concept, the concept for analysis set as the object of text mining analysis is chosen, and a view is assigned by setting up the view cutoff line constituting concepts, from a concept which exists in the lower rank of the concept for analysis in the category structure. Thus, enabling to assign a concept and a view flexibly in the text mining analysis, since the text mining analysis is performed using the assigned view.

According to the present invention, a new concept is assignable without using the existing category, which enables to create the concept corresponding to the new conceptualization which is not defined in this existing synonyms dictionary and an existing category dictionary.

According to the present invention, a concept above the category is assignable according to the usage circumstances.

According to the present invention, the concept for ana lysis that is set as the object of text mining analysis is chosen, and a view is assigned by setting up the view cutoff line constituting concepts, from a concept existing in the lower rank of the concept for analysis in the category structure. Thus enabling to assign a view regardless of the category, and the concept can be specified flexibly which is not a brother relation, and can constitute a view since text mining analysis is performed using the assigned view.

A text mining analysis apparatus according to another aspect of the present invention: wherein the concept assigning unit further includes at least any one of: a first concept assigning unit that specifies a search condition related to a text string or a numerical value, and assigns as the new concept a cluster of documents which contain the text string or the numerical value that satisfy the search condition; a second concept assigning unit that specifies the search condition and a search field, and assigns as the new concept a cluster of documents which contain the text string or the numerical value in the search field that satisfy the search condition; and a third concept assigning unit that assigns as a concept a cluster of documents obtained by carrying out Boolean clustering operation of existing concepts.

This is a more specific explanation of the concept assigning unit. According to the present invention, the concept corresponding to the new concept which is not defined in this existing synonyms dictionary and the existing category dictionary can be created. Since at least one of the following concept assigning methods is employed in the present system. For instance, the first concept assigning unit specifies the search conditions relating to a character string or a numerical value, and assigns, as a new concept, a cluster of the document possessing the character string and a numerical value which satisfies the search conditions in the document. The second concept assigning unut specifies the field to be searched and the search conditions, and then assigns, as a new concept, a cluster of the document possessing the character string and the numerical value which satisfies the search conditions within the field of the document. The third concept assigning unit assigns, as a new concept, a cluster of the document acquired by performing Boolean clustering operation regarding the existing concept.

A text mining analysis apparatus according to still another aspect of the present invention: wherein the category changing unit further includes at least any one of: a first category changing unit that places the new concept below any concept of an existing category; and a second category changing unit that forms a new category from new concepts.

This is a more specific explanation of the category changing unit. According to the present invention, the category changing unit namely, a first category changing unit to arrange a new concept below the arbitrary concepts of the existing category, and a second category changing unit to form a new category from a new concept. Thus, enabling to assign a concept on existing or a new category flexibly according to the usability since it has at least one unit from among the category changing units.

A text mining analysis apparatus according to still another aspect of the present invention: wherein the view assigning unit further includes an attribute setting unit that sets attributes corresponding to the view cutoff line constituting concepts, and the text mining analysis unit carries out the text mining analysis according to the attributes of the view cutoff line constituting concepts set by the attribute setting unit.

This is a more specific explanation of the category changing unit. According to the present invention, a view assigning unit is equipped with an attribute setting unit to set up the attribute corresponding to a composition concept, and a text mining analysis unit which executes the text mining analysis according to the attribute of the set view cutoff line constituting concepts. Thus, enabling to assign a view flexibly by setting up various kinds of attributes (for instance "select" (selected as view cutoff line constituting concepts), "skip" (not selected as view cutoff line constituting concepts), and in addition to this "others" (analyzed by dividing into a group different from other view cutoff line constituting concepts), and the like.

A text mining analysis method according to one aspect of the present invention includes: a category changing step that changes a category structure by the new concept assigned by the concept assigning step; a view assigning step that selects a concept to be analyzed by text mining analysis, and assigns a view by setting view cutoff line constituting concepts, from among the concepts below the concept to be analyzed, that form a view cutoff line; and a text mining analysis step that carries out the text mining analysis using the view assigned by the view assigning step.

According to the present invention, a new concept is assignable without using the existing category, the structure of a category can be changed by the assigned new concept, the concept for analysis set as the object of text mining analysis is chosen, and a view is assigned by setting up the view cutoff line constituting concepts, from a concept which exists in the lower rank of the concept for analysis in the category structure. Thus, enabling to assign a concept and a view flexibly in the text mining analysis, since the text mining analysis is performed using the assigned view.

According to the present invention, a new concept is assignable without using the existing category, which enables to create the concept corresponding to the new conceptualization which is not defined in this existing synonyms dictionary and an existing category dictionary.

According to the present invention, a concept above the category is assignable according to the usage circumstances.

According to the present invention, the concept for analysis that is set as the object of text mining analysis is chosen, and a view is assigned by setting up the view cutoff line constituting concepts, from a concept existing in the lower rank of the concept for analysis in the category structure. Thus enabling to assign a view regardless of the category, and the concept can be specified flexibly which is not a brother relation, and can constitute a view since text mining analysis is performed using the assigned view.

A text mining analysis method according to another aspect of the present invention: wherein the concept assigning step further includes at least any one of: a first concept assigning step that specifies a search condition related to a text string or a numerical value, and assigns as the new concept a cluster of documents which contain the text string or the numerical value that satisfy the search condition; a second concept assigning step that specifies the search condition and a search field, and assigns as the new concept a cluster of documents which contain the text string or the numerical value in the search field that satisfy the search condition; and a third concept assigning step that assigns as a concept a cluster of documents obtained by carrying out Boolean clustering operation of existing concepts.

This is a more specific explanation of the concept assigning step. According to the present invention, the concept corresponding to the new concept which is not defined in this existing synonyms dictionary and the existing category dictionary can be created. Since at least one of the following concept assigning methods is employed in the present system. For instance, the first concept assigning step specifies the search conditions relating to a character string or a numerical value, and assigns, as a new concept, a cluster of the document possessing the character string and a numerical value which satisfies the search conditions in the document. The second concept assigning unut specifies the field to be searched and the search conditions, and then assigns, as a new concept, a cluster of the document possessing the character string and the numerical value which satisfies the search conditions within the field of the document. The third concept assigning step assigns, as a new concept, a cluster of the document acquired by performing Boolean clustering operation regarding the existing concept.

A text mining analysis method according to still another aspect of the present invention: wherein the category changing step further includes at least any one of: a first category changing step that places the new concept below any concept of an existing category; and a second category changing step that forms a new category from new concepts.

This is a more specific explanation of the category changing step. According to the present invention, the category changing step namely, a first category changing step to arrange a new concept below the arbitrary concepts of the existing category, and a second category changing step to form a new category from a new concept. Thus, enabling to assign a concept on existing or a new category flexibly according to the usability since it has at least one step from among the category changing steps.

A text mining analysis method according to still another aspect of the present invention: wherein the view assigning step further includes an attribute setting step that sets attributes corresponding to the view cutoff line constituting concepts, and the text mining analysis step carries out the text mining analysis according to the attributes of the view cutoff line constituting concepts set by the attribute setting step.

This is a more specific explanation of the category changing step. According to the present invention, a view assigning step is equipped with an attribute setting step to set up the attribute corresponding to a composition concept, and a text mining analysis step which executes the text mining analysis according to the attribute of the set view cutoff line constituting concepts. Thus, enabling to assign a view flexibly by setting up various kinds of attributes (for instance "select" (selected as view cutoff line constituting concepts), "skip" (not selected as view cutoff line constituting concepts), and in addition to this "others" (analyzed by dividing into a group different from other view cutoff line constituting concepts), and the like.

A text mining analysis program according to one aspect of the present invention includes: a category changing step that changes a category structure by the new concept assigned by the concept assigning step; a view assigning step that selects a concept to be analyzed by text mining analysis, and assigns a view by setting view cutoff line constituting concepts, from among the concepts below the concept to be analyzed, that form a view cutoff line; and a text mining analysis step that carries out the text mining analysis using the view assigned by the view assigning step.

According to the present invention, a new concept is assignable without using the existing category, the structure of a category can be changed by the assigned new concept, the concept for analysis set as the object of text mining analysis is chosen, and a view is assigned by setting up the view cutoff line constituting concepts, from a concept which exists in the lower rank of the concept for analysis in the category structure. Thus, enabling to assign a concept and a view flexibly in the text mining analysis, since the text mining analysis is performed using the assigned view.

According to the present invention, a new concept is assignable without using the existing category, which enables to create the concept corresponding to the new conceptualization which is not defined in this existing synonyms dictionary and an existing category dictionary.

According to the present invention, a concept above the category is assignable according to the usage circumstances.

According to the present invention, the concept for analysis that is set as the object of text mining analysis is chosen, and a view is assigned by setting up the view cutoff line constituting concepts, from a concept existing in the lower rank of the concept for analysis in the category structure. Thus enabling to assign a view regardless of the category, and the concept can be specified flexibly which is not a brother relation, and can constitute a view since text mining analysis is performed using the assigned view.

A text mining analysis program according to another aspect of the present invention: wherein the concept assigning step further includes at least any one of: a first concept assigning step that specifies a search condition related to a text string or a numerical value, and assigns as the new concept a cluster of documents which contain the text string or the numerical value that satisfy the search condition; a second concept assigning step that specifies the search condition and a search field, and assigns as the new concept a cluster of documents which contain the text string or the numerical value in the search field that satisfy the search condition; and a third concept assigning step that assigns as a concept a cluster of documents obtained by carrying out Boolean clustering operation of existing concepts.

This is a more specific explanation of the concept assigning step. According to the present invention, the concept corresponding to the new concept which is not defined in this existing synonyms dictionary and the existing category dictionary can be created. Since at least one of the following concept assigning programs is employed in the present system. For instance, the first concept assigning step specifies the search conditions relating to a character string or a numerical value, and assigns, as a new concept, a cluster of the document possessing the character string and a numerical value which satisfies the search conditions in the document. The second concept assigning unut specifies the field to be searched and the search conditions, and then assigns, as a new concept, a cluster of the document possessing the character string and the numerical value which satisfies the search conditions within the field of the document. The third concept assigning step assigns, as a new concept, a cluster of the document acquired by performing Boolean clustering operation regarding the existing concept.

A text mining analysis program according to still another aspect of the present invention: wherein the category changing step further includes at least any one of: a first category changing step that places the new concept below any concept of an existing category; and a second category changing step that forms a new category from new concepts.

This is a more specific explanation of the category changing step. According to the present invention, the category changing step namely, a first category changing step to arrange a new concept below the arbitrary concepts of the existing category, and a second category changing step to form a new category from a new concept. Thus, enabling to assign a concept on existing or a new category flexibly according to the usability since it has at least one step from among the category changing steps.

A text mining analysis program according to still another aspect of the present invention: wherein the view assigning step further includes an attribute setting step that sets attributes corresponding to the view cutoff line constituting concepts, and the text mining analysis step carries out the text mining analysis according to the attributes of the view cutoff line constituting concepts set by the attribute setting step.

This is a more specific explanation of the category changing step. According to the present invention, a view assigning step is equipped with an attribute setting step to set up the attribute corresponding to a composition concept, and a text mining analysis step which executes the text mining analysis according to the attribute of the set view cutoff line constituting concepts. Thus, enabling to assign a view flexibly by setting up various kinds of attributes (for instance "select" (selected as view cutoff line constituting concepts), "skip" (not selected as view cutoff line constituting concepts), and in addition to this "others" (analyzed by dividing into a group different from other view cutoff line constituting concepts), and the like.

Furthermore, the present invention relates to the recording medium. The recording medium according to the present invention records the program explained above.

According to the present recording medium, the program recorded on the recording medium is computer-readable and executable. Consequently, the same result as for these methods can be obtained.

### BRIEF DESCRIPTION OF THE DRAWINGS

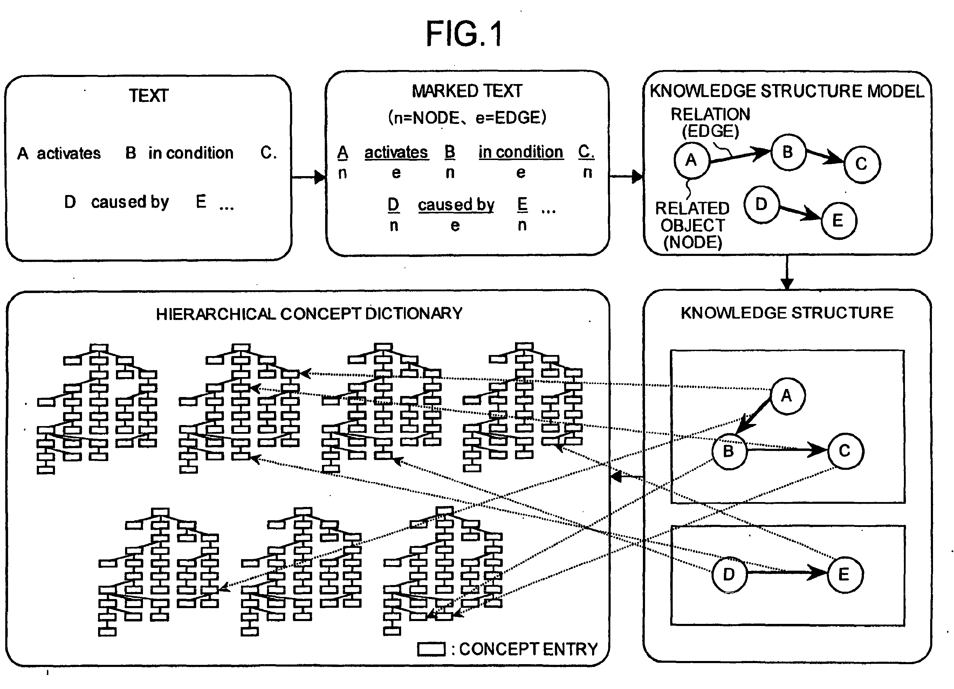

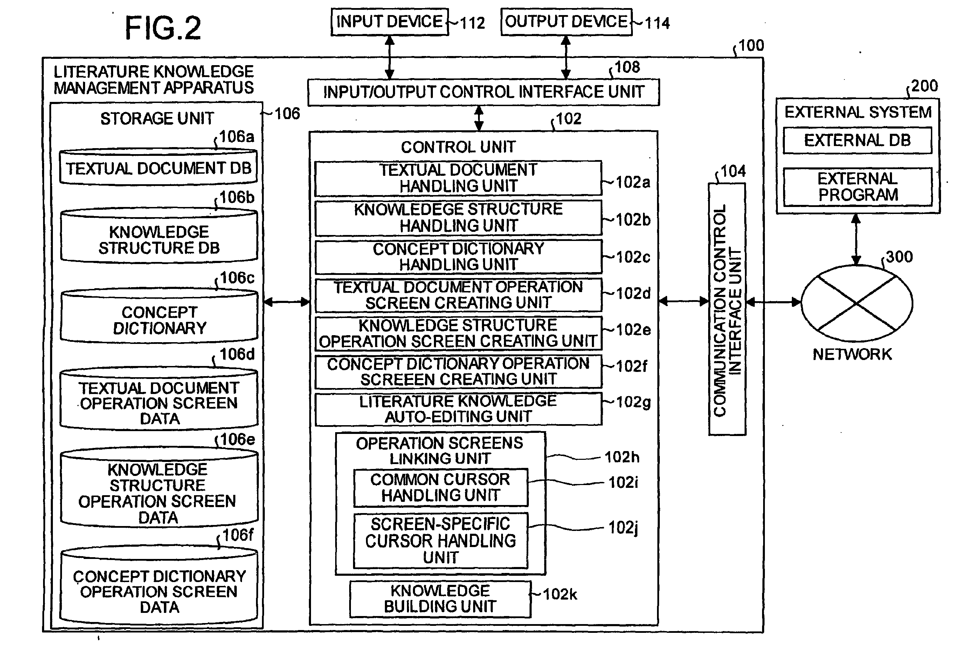

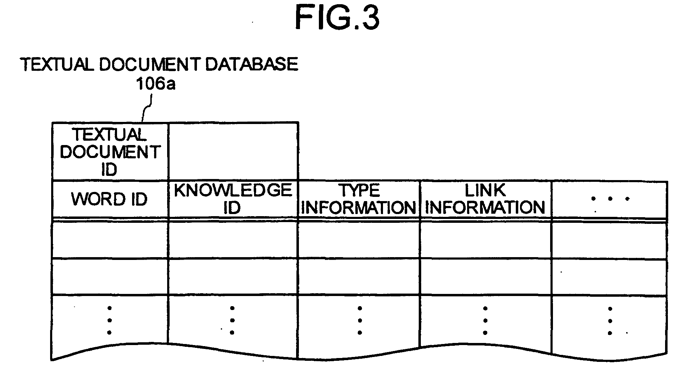

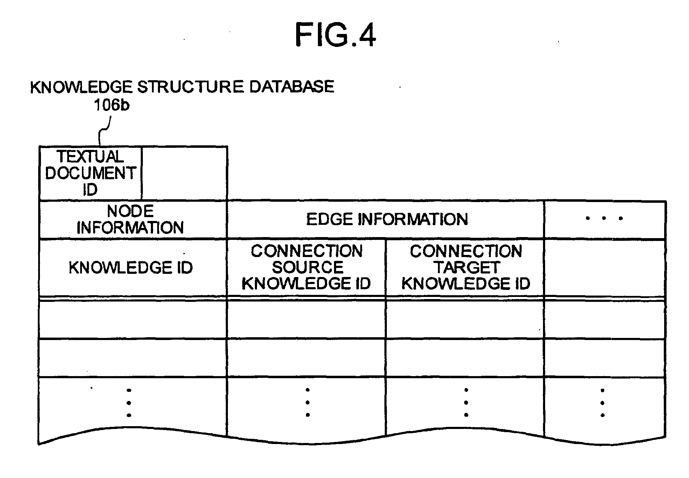

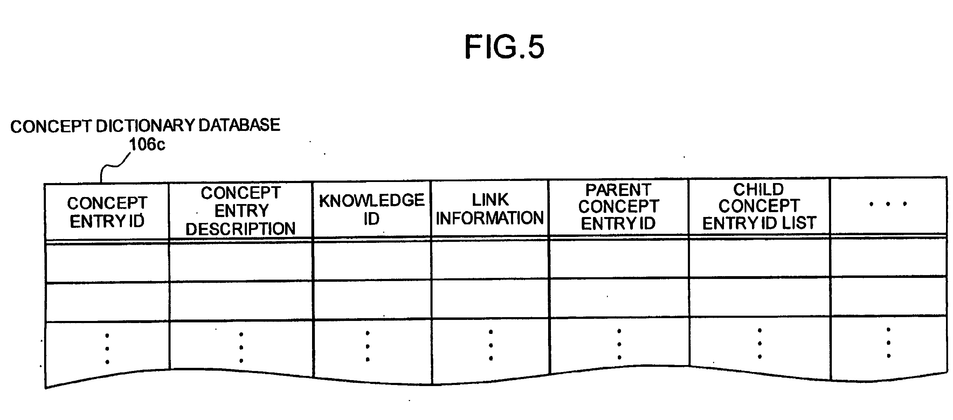

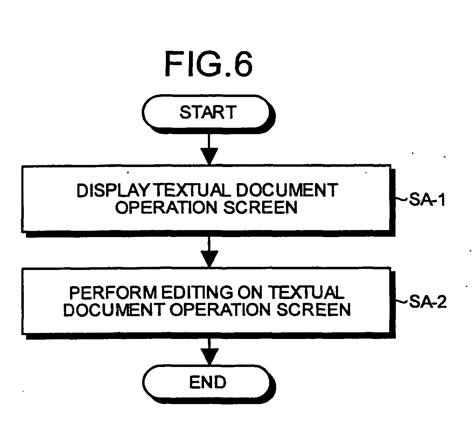

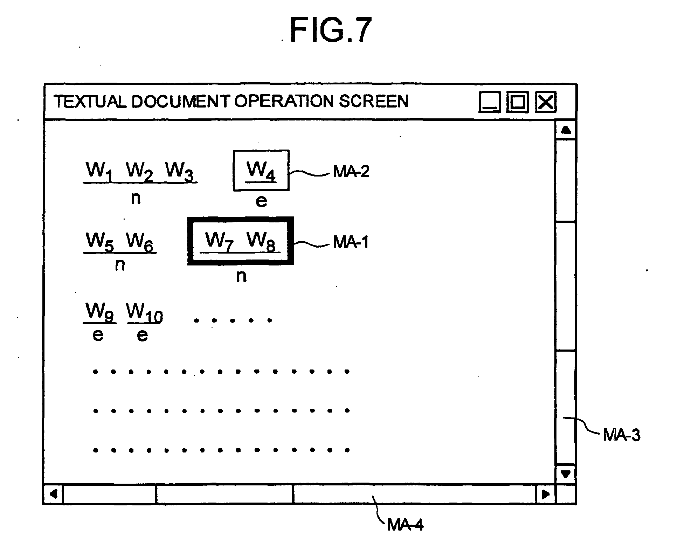

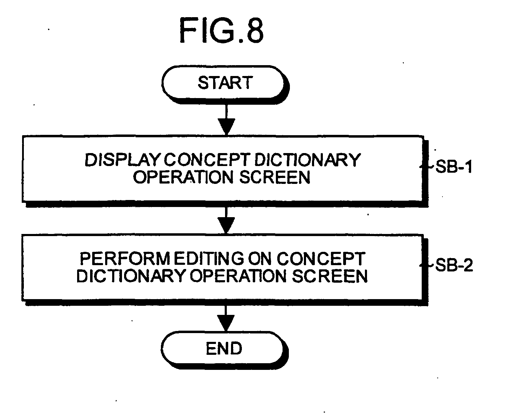

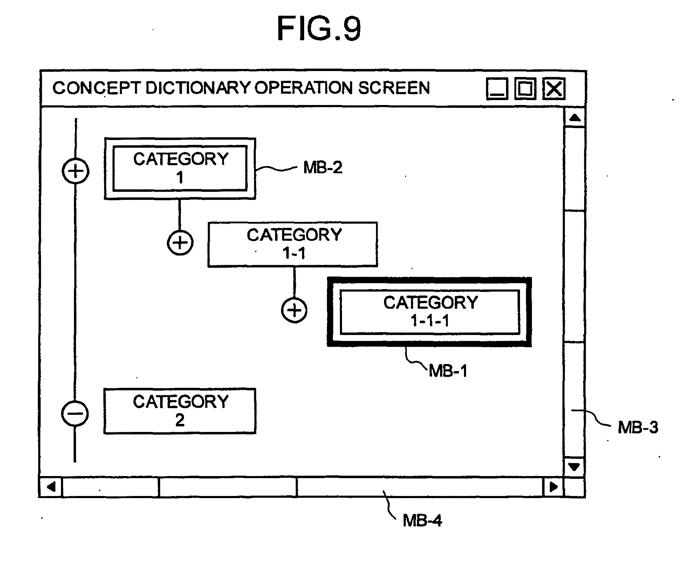

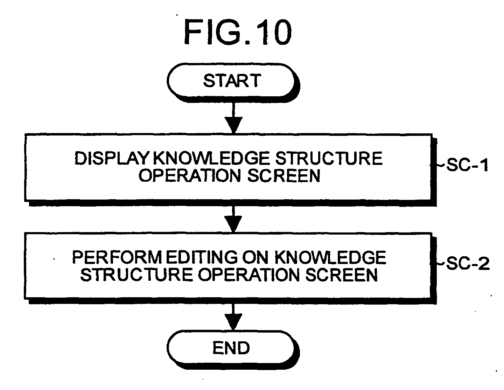

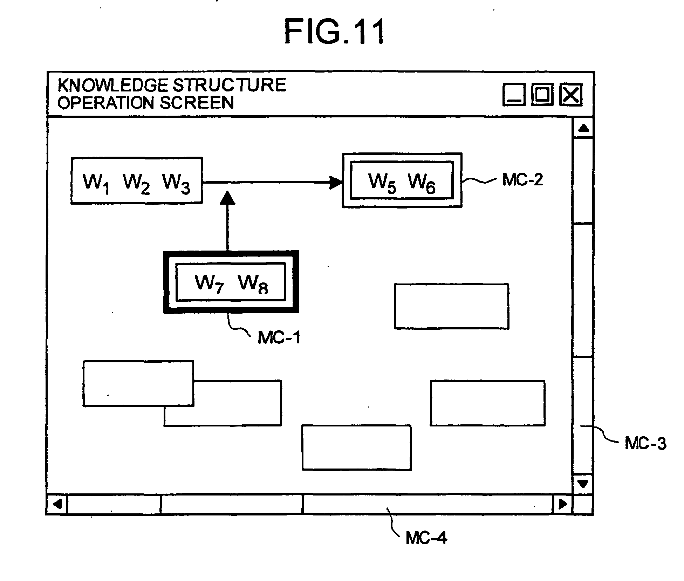

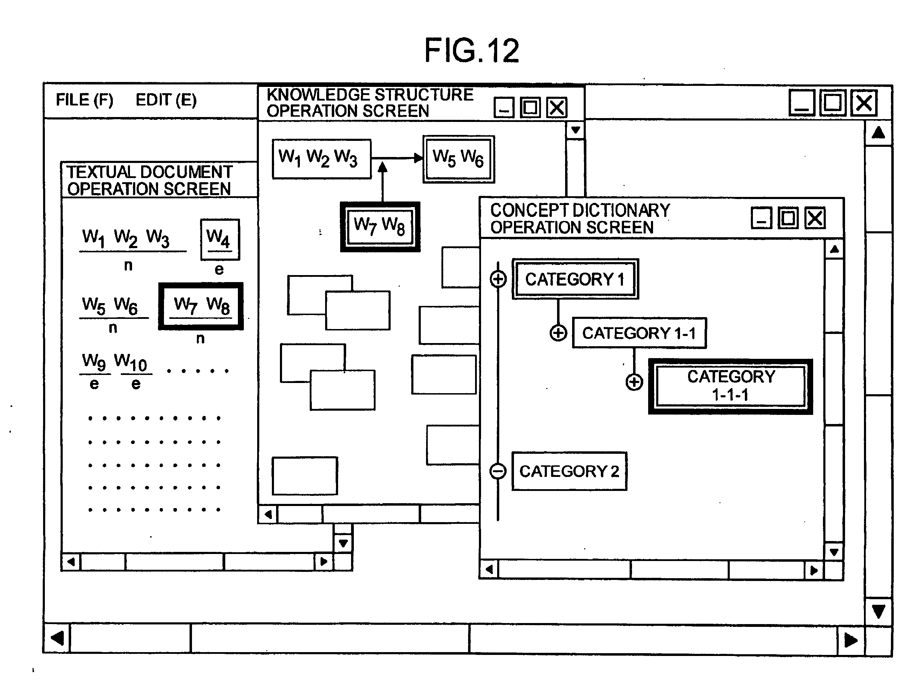

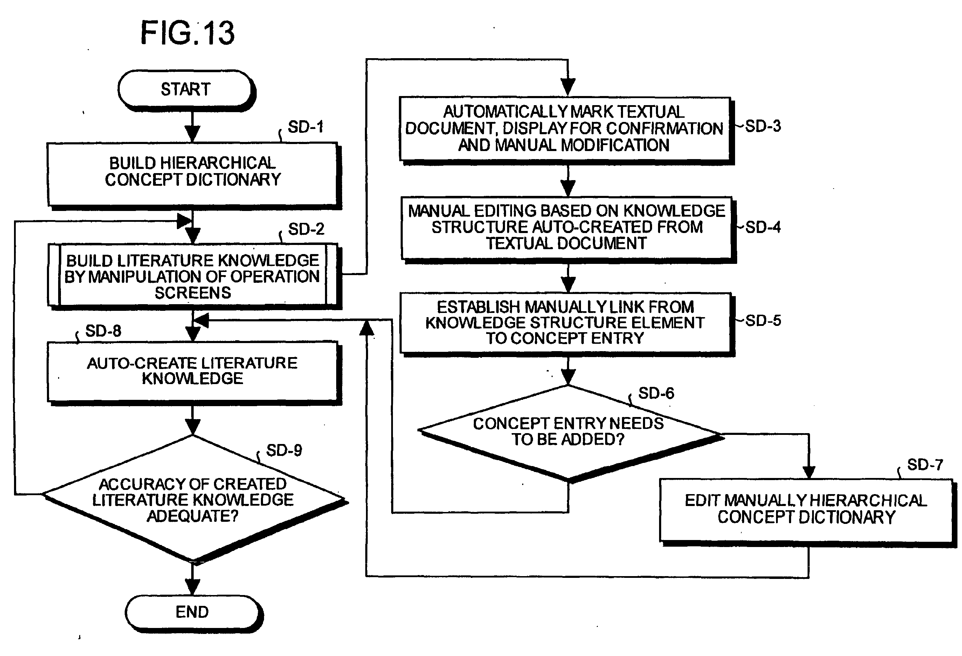

(I) Fig. 1 is a drawing illustrating the fundamental principle of the present invention; Fig. 2 is a block diagram of a system in which the present invention is applied; Fig. 3 is a drawing illustrating a sample of information stored in the textual document database 106a; Fig. 4 is a drawing illustrating a sample of information stored in the knowledge structure database 106b; Fig. 5 is a drawing illustrating a sample of information stored in the concept dictionary database 106c; Fig. 6 is a flow chart showing an example of the textual document management process by the system according to the an embodiment of the present invention; Fig. 7 is a drawing illustrating a sample textual document operation screen displayed on the monitor of the literature knowledge management apparatus 100; Fig. 8 is a flow chart showing an example of the concept dictionary management process by the system according to an embodiment of the present invention; Fig. 9 is a drawing illustrating a sample concept dictionary operation screen displayed on the monitor of the literature knowledge management apparatus 100; Fig. 10 is a flow chart showing an example of the knowledge structure management process by the system according to an embodiment of the present invention; Fig. 11 is a drawing illustrating a sample knowledge structure operation screen displayed on the monitor of the literature knowledge management apparatus 100; Fig. 12 is a drawing illustrating a sample screen simultaneously displaying on the monitor of the literature knowledge management apparatus 100 the textual document operation screen, the knowledge structure operation screen, and the concept dictionary operation screen; and Fig. 13 is a flow chart showing an example of the literature knowledge management process by the system according to an embodiment of the present invention.

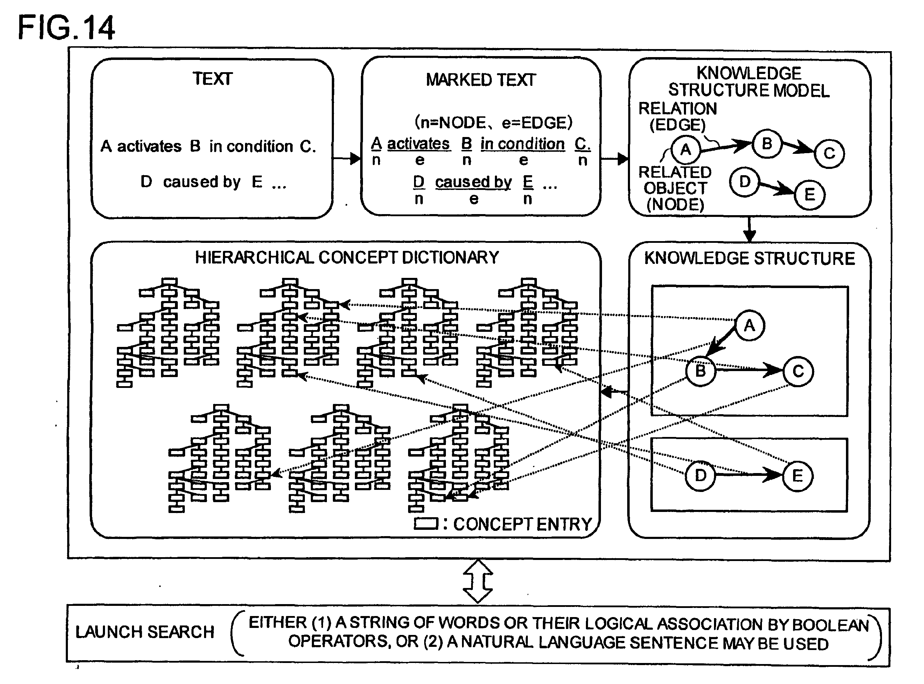

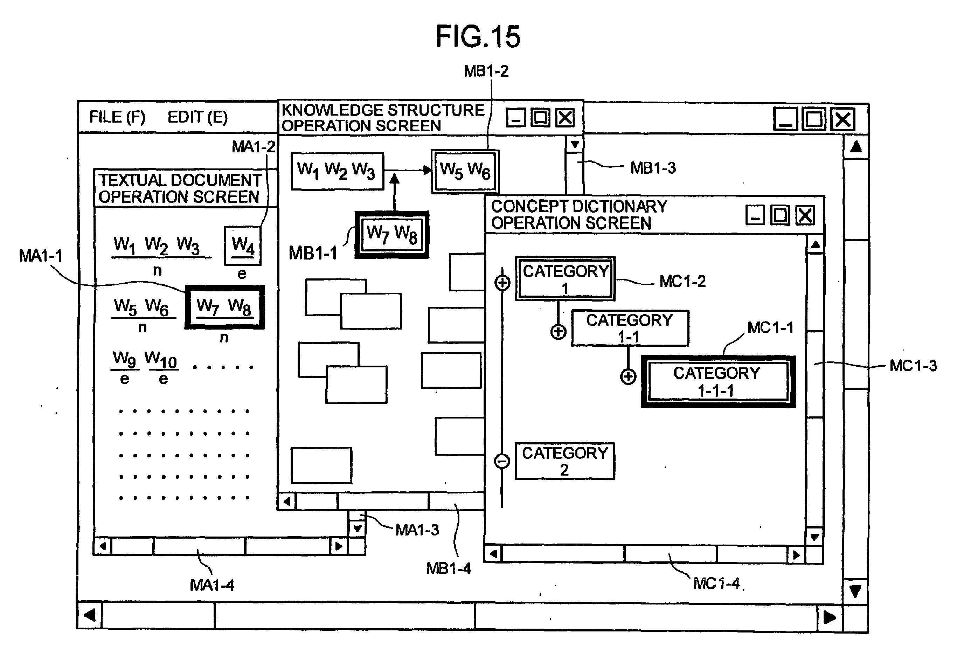

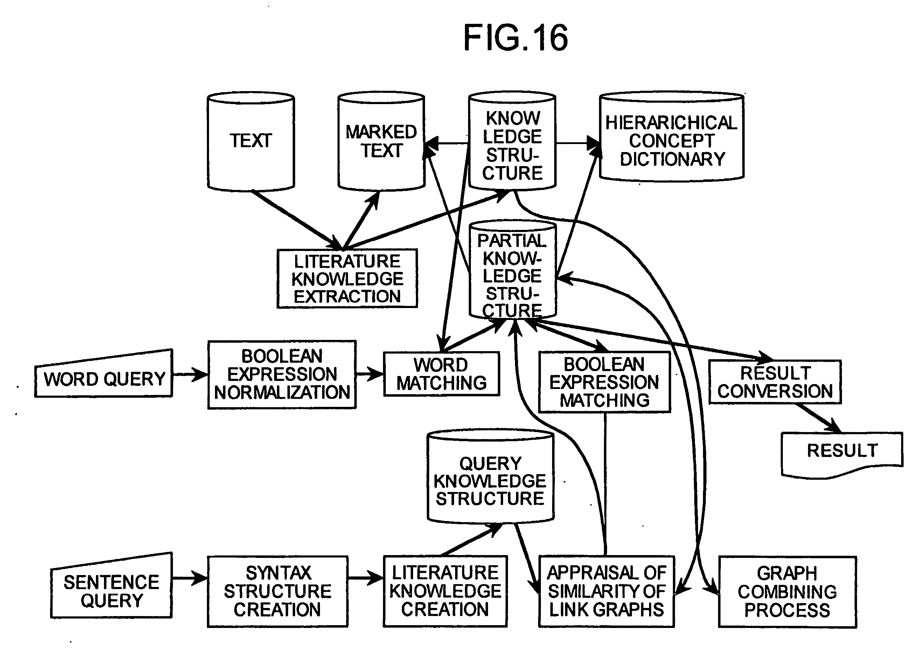

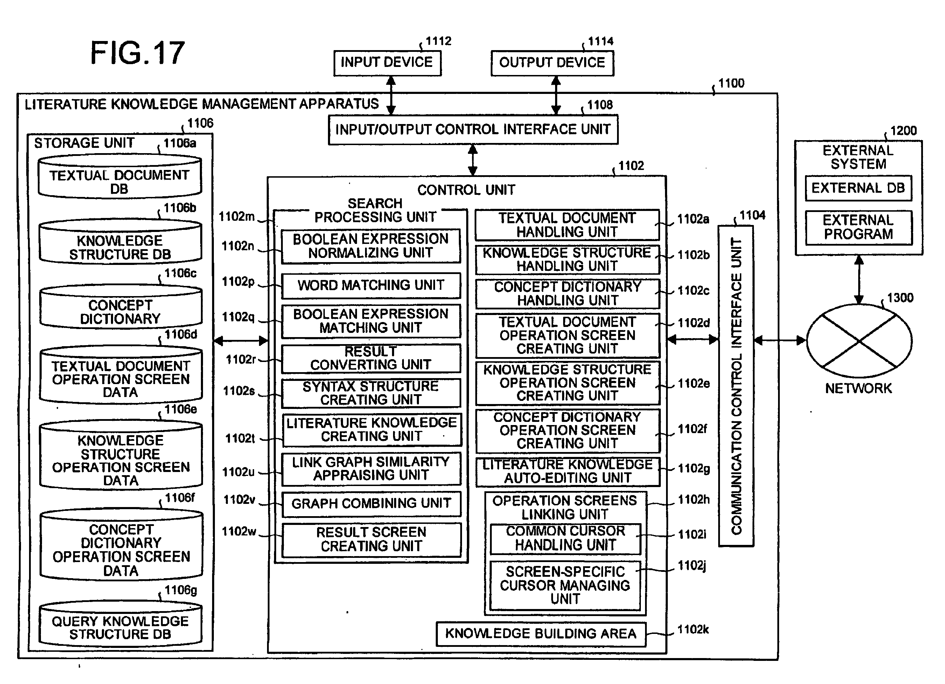

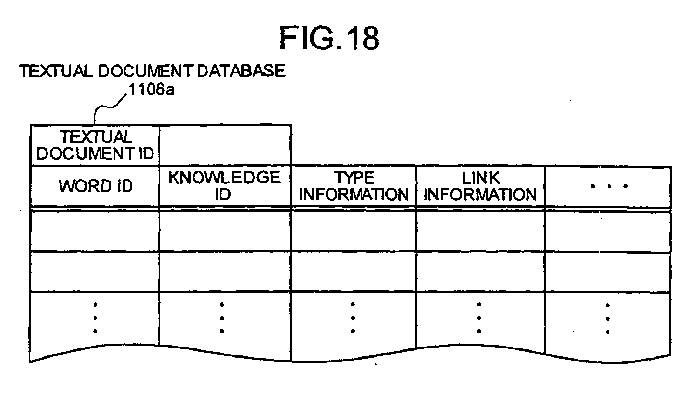

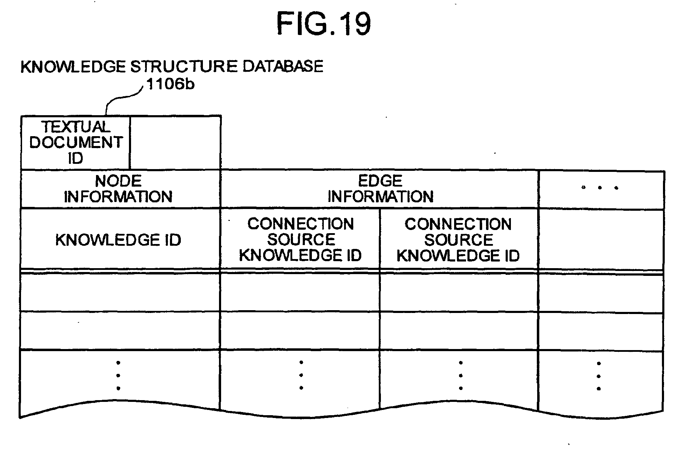

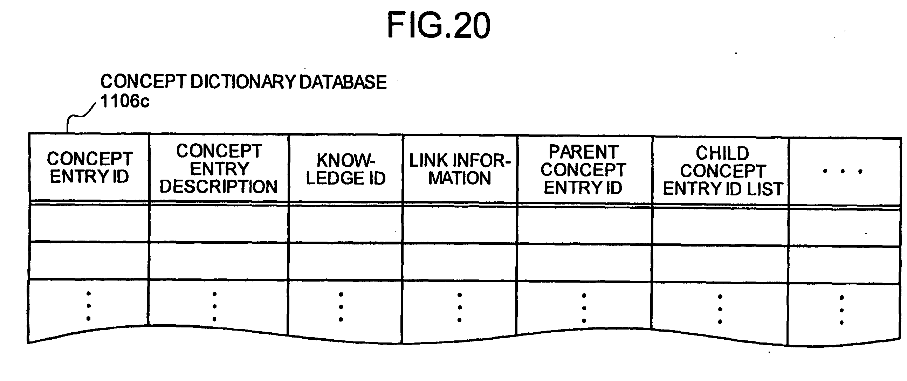

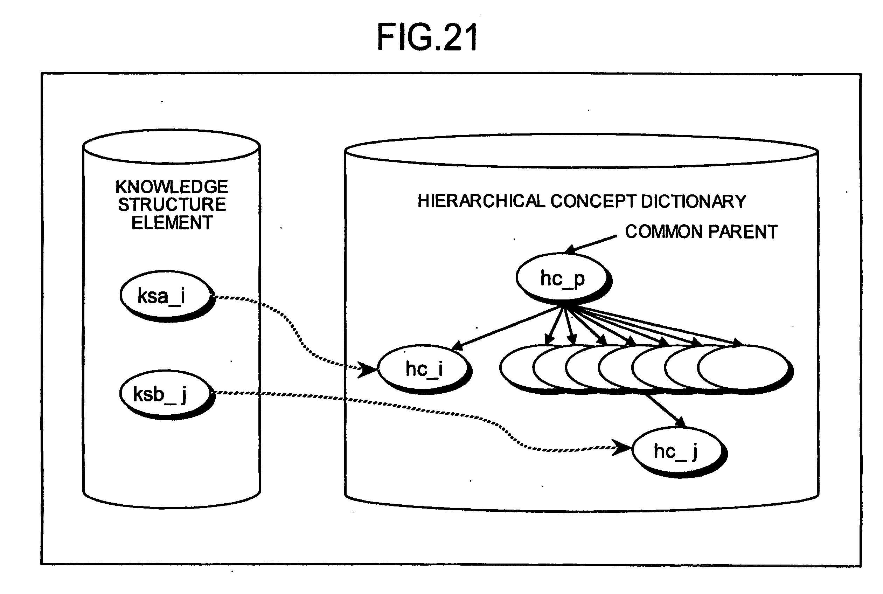

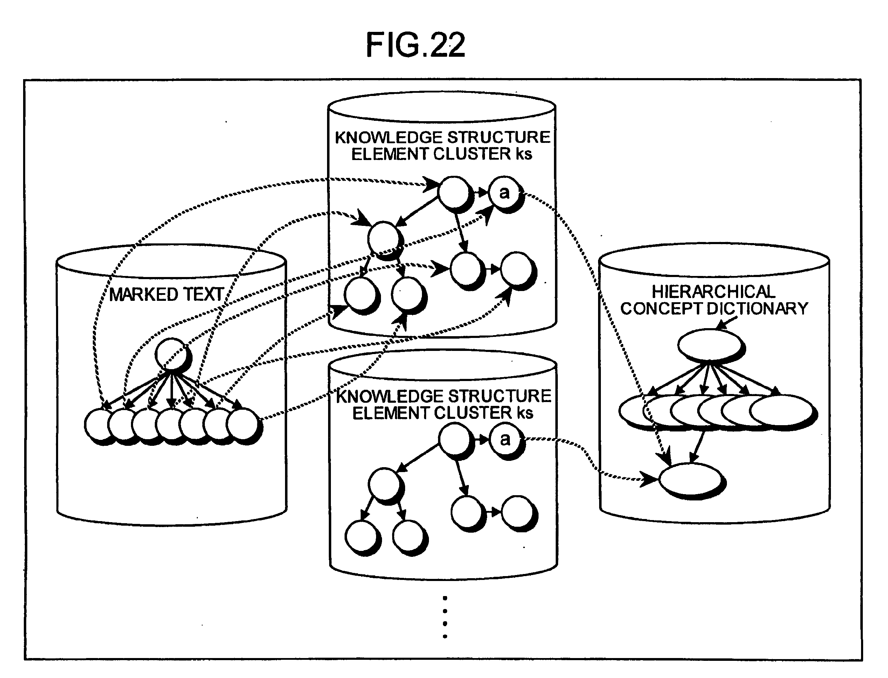

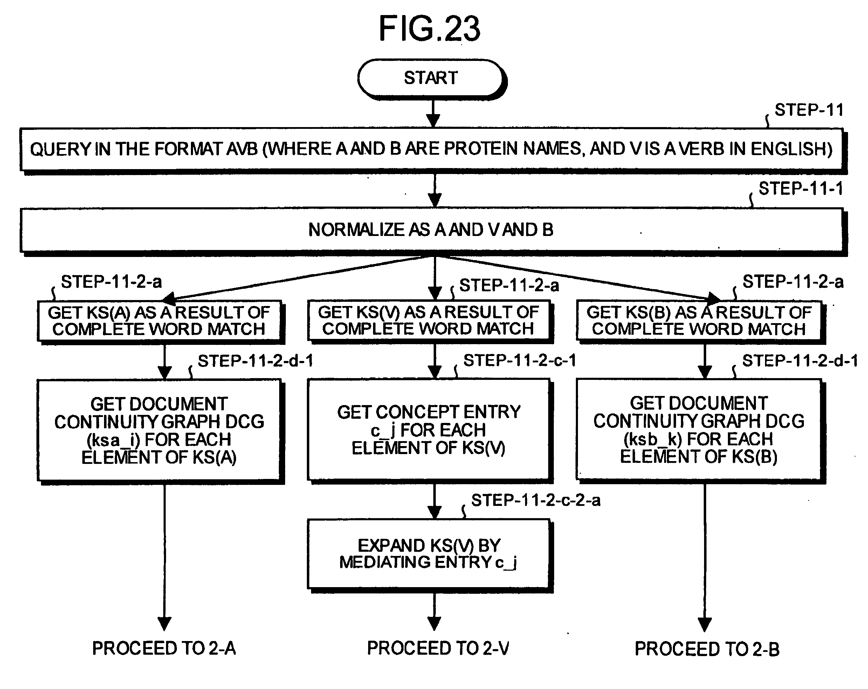

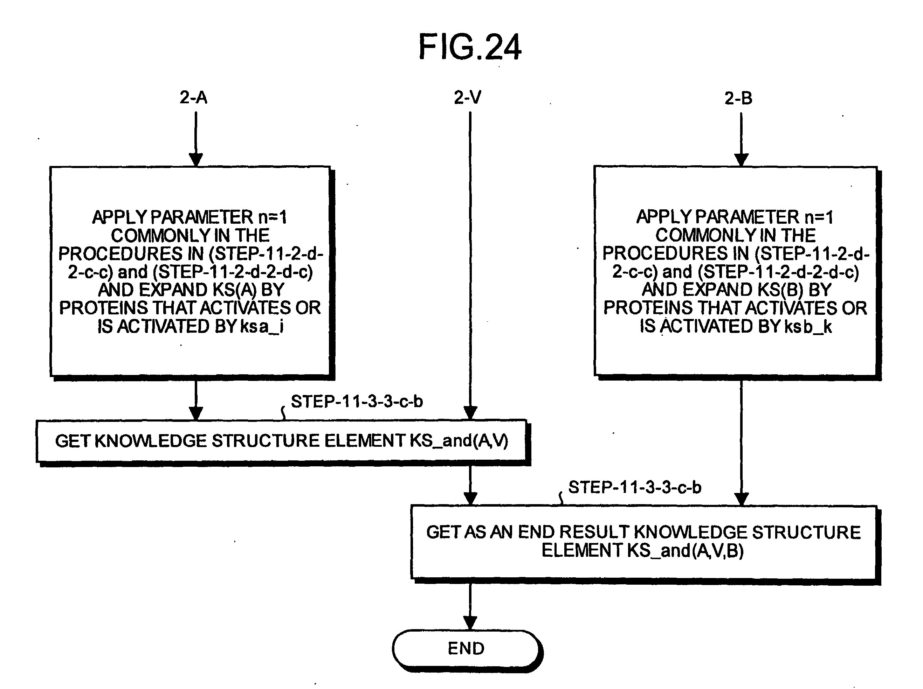

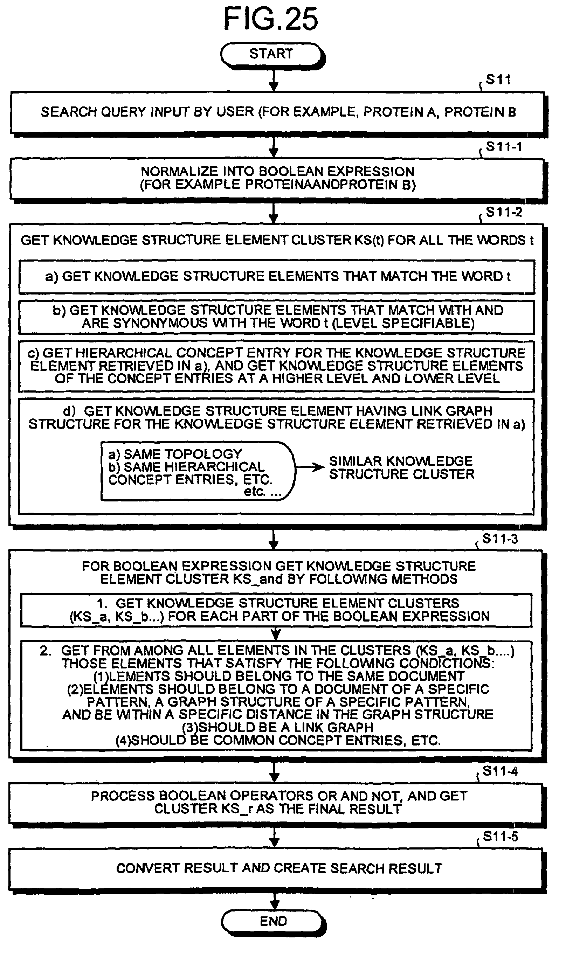

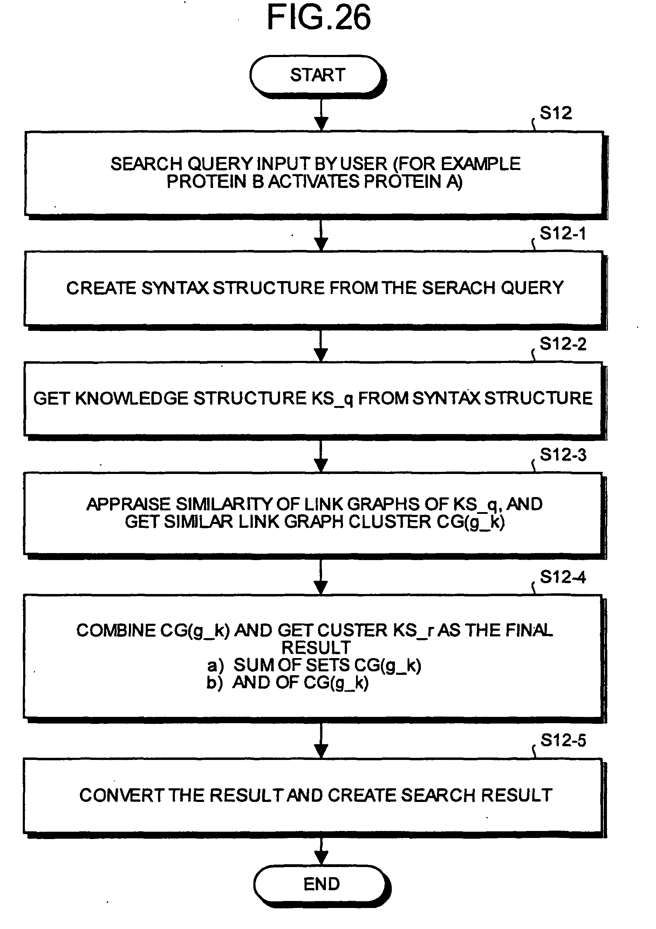

(II) Fig. 14 is a drawing illustrating the fundamental principle of the present invention; Fig. 15 is a drawing illustrating a sample screen simultaneously displaying on the monitor of the literature knowledge management apparatus 1100 a textual document operation screen, a knowledge structure operation screen, and a concept dictionary operation screen; Fig. 16 is a schematic diagram illustrating the processes of the present invention; Fig. 17 is a block diagram of a system on which the present invention is applied; Fig. 18 is a drawing illustrating a sample data stored in the textual document database 1106a; Fig. 19 is a drawing illustrating a sample data stored in the textual document database 1106b; Fig. 20 is a drawing illustrating a sample data stored in the textual document database 1106c; Fig. 21 is a schematic diagram illustrating the process of (Step-11-3-3-c-a); Fig. 22 is a schematic diagram illustrating the process of (Step-11-3-3-c-b); Fig. 23 is a flow chart illustrating an example of the literature knowledge handling process by the system according to an embodiment of the present invention; Fig. 24 is a flow chart illustrating an example of the literature knowledge handling process by the system according to an embodiment of the present invention; Fig. 25 is a flow chart illustrating an example of a search query in the form of a string of words or a string of words connected by Boolean logic in an embodiment of the present invention; and Fig. 26 is a flow chart illustrating an example of a search query in the form of a natural language sentence.
(III) Fig. 27 is a drawing illustrating the fundamental principle of the present invention; Fig. 28 is a block diagram of a system on which the present invention is applied; Fig. 29 is a block diagram of the semantic dictionary creating unit 2102a to which the present invention is applied; Fig. 30 is a block diagram of the category dictionary creating unit 2102b to which the present invention is applied; Fig. 31 is a block diagram of the dictionary information checking unit 2102c to which the present invention is applied; Fig. 32 is a schematic diagram illustrating a process of automatic creation of semantic dictionary information using a pre-existing database in the system according to an embodiment of the present invention; Fig. 33 is a schematic diagram illustrating a process of automatic creation of semantic dictionary information using a pre-existing database in the system according to an embodiment of the present invention; Fig. 34 is a schematic diagram illustrating a process of automatic creation of semantic dictionary information using a pre-existing dictionary information in the system according to an embodiment of the present invention; Fig. 35 is a schematic diagram illustrating a process of automatic creation of semantic dictionary information using a pre-existing Web information in the system according to an embodiment of the present invention; Fig. 36 is a schematic diagram illustrating a process of automatic creation of category dictionary information using a pre-existing structured data in the system according to an embodiment of the present invention; Fig. 37 is a schematic diagram illustrating a process of automatic creation of category dictionary information using a pre-existing structured data in the system according to an embodiment of the present invention; Fig. 38 is a schematic diagram illustrating a process of automatic creation of category dictionary information using a pre-existing structured data; Fig. 39 is a schematic diagram illustrating a process of automatic creation of category dictionary information using a pre-existing cluster data in the system according to an embodiment of the present invention; Fig. 40 is a schematic diagram illustrating a process of automatic creation of category dictionary information using a pre-existing MeSH term data in the system according to an embodiment of the present invention; Fig. 41 is a schematic diagram illustrating a process of automatic creation of category dictionary information using a pre-existing MeSH term data in the system according to an embodiment of the present invention; Fig. 42 is a schematic diagram illustrating a process of automatic creation of category dictionary information using a pre-existing MeSH term data in the system according to an embodiment of the present invention; Fig. 43 is a schematic diagram illustrating a process of automatic creation of category dictionary information using a pre-existing database in the system according to an embodiment of the present invention; Fig. 44 is a schematic diagram illustrating a process of automatic creation of category dictionary information using a pre- existing database in the system according to an embodiment of the present invention; Fig. 45 is a schematic diagram illustrating a process of automatic creation of category dictionary information using a pre-existing process result data of an analysis program in the system according to an embodiment of the present invention; Fig. 46 is a schematic diagram illustrating an entry-wise dictionary information checking process of the system according to an embodiment of the present invention; Fig. 47 is a schematic diagram illustrating an entry-wise dictionary information checking process of the system according to an embodiment of the present invention; Fig. 48 is a schematic diagram illustrating an entry-wise dictionary information checking process of the system according to an embodiment of the present invention; Fig. 49 is a schematic diagram illustrating a canonical form consistency checking process of the system according to an embodiment of the present invention; Fig. 50 is a schematic diagram illustrating a statistics checking process of the system according to an embodiment of the present invention; Fig. 51 is a schematic diagram illustrating a statistics checking process of the system according to an embodiment of the present invention; Fig. 52 is a schematic diagram illustrating a recurrence checking process of the system according to an embodiment of the present invention; Fig. 53 is a schematic diagram illustrating a recurrence checking process of the system according to an embodiment of the present invention; Fig. 54 is a schematic diagram illustrating an identification process that uses a logic of the system according to an embodiment of the present invention; and Fig. 55 is a schematic diagram illustrating a check result output process of the system according to an embodiment of the present invention.

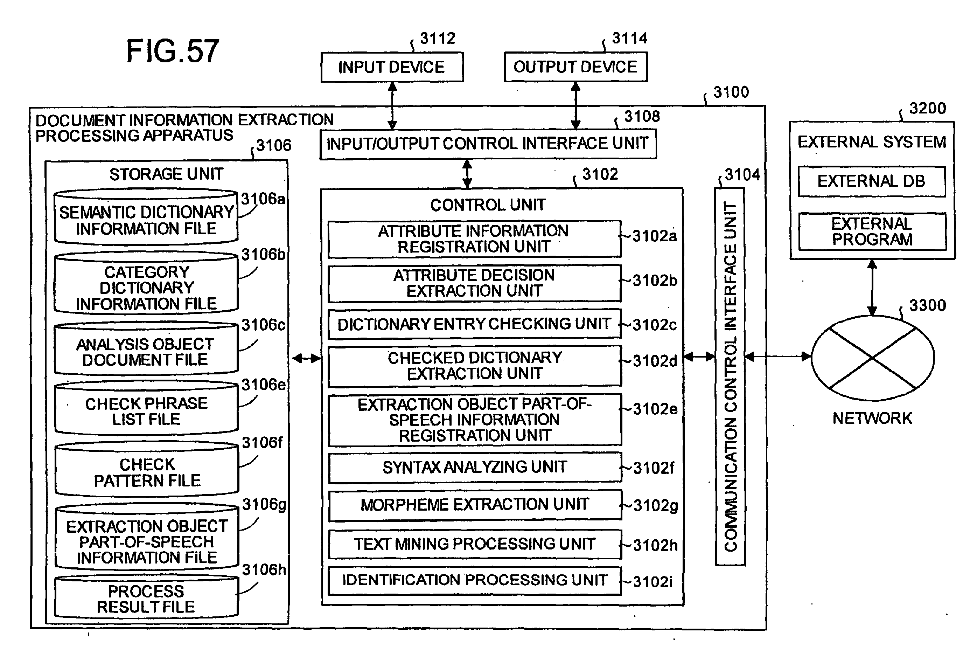

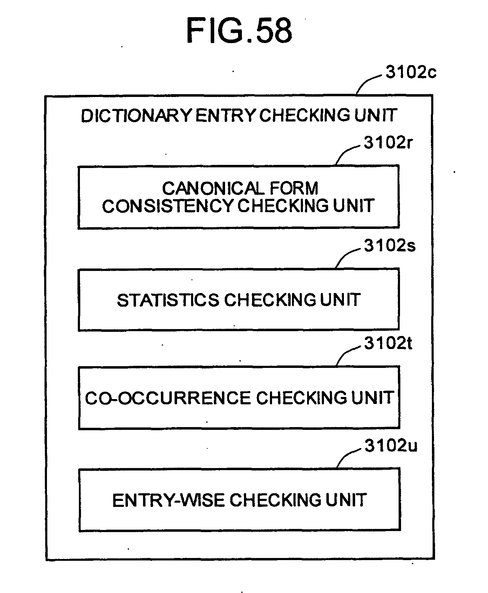

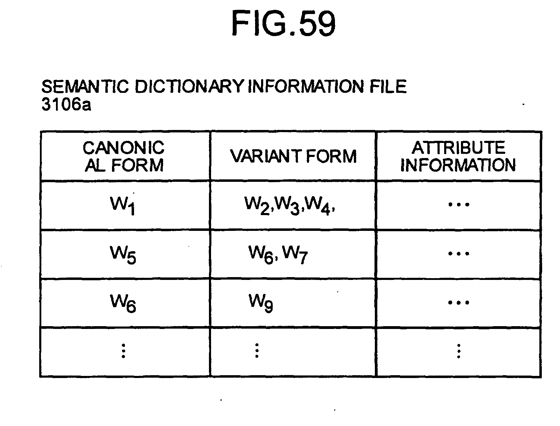

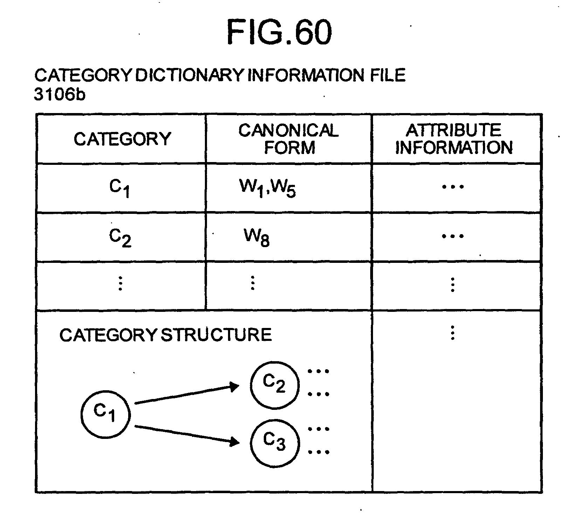

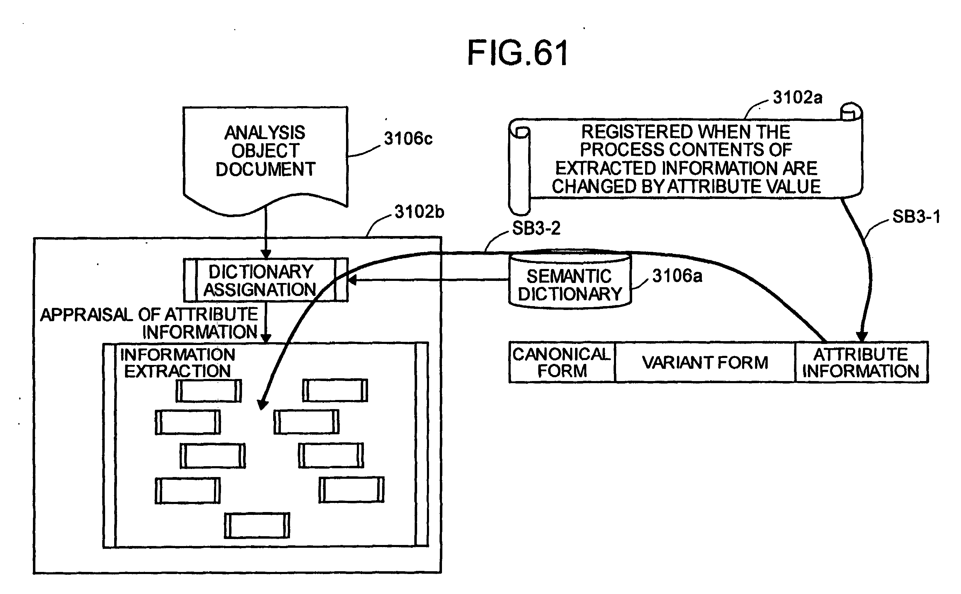

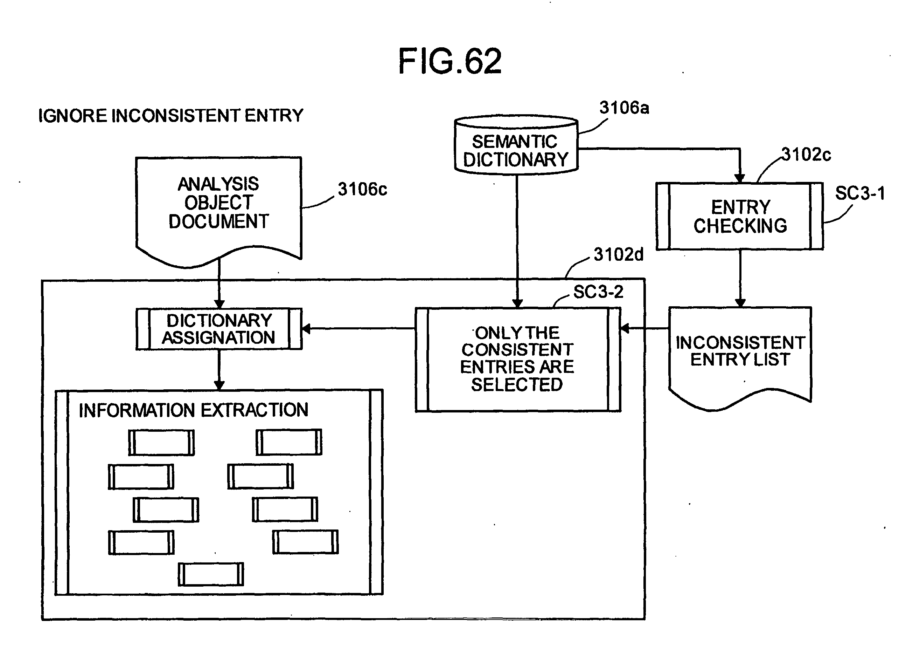

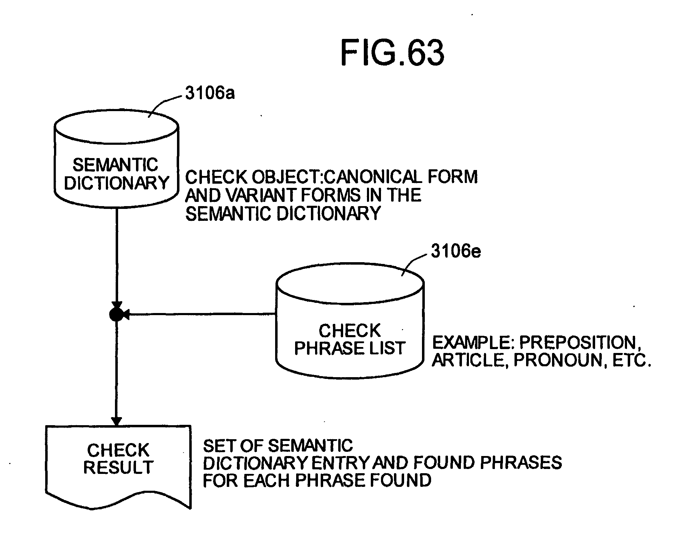

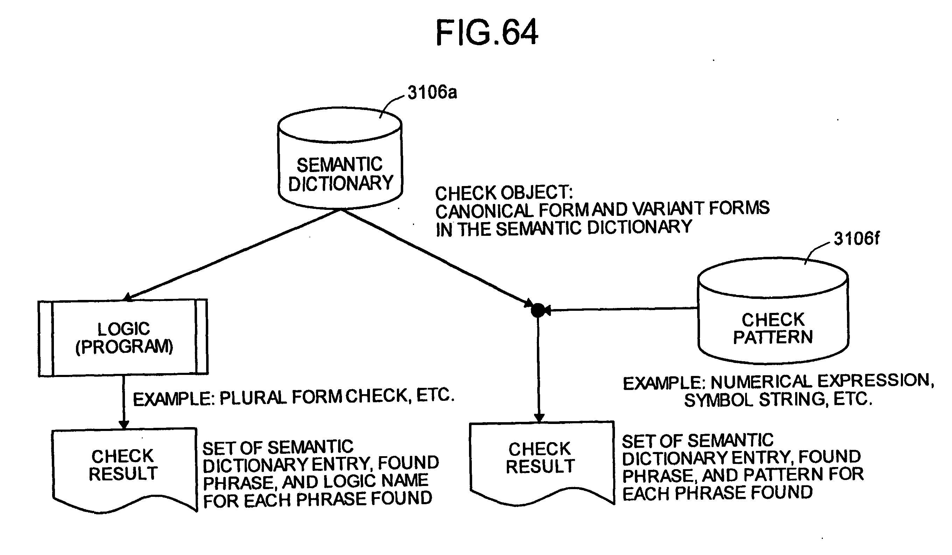

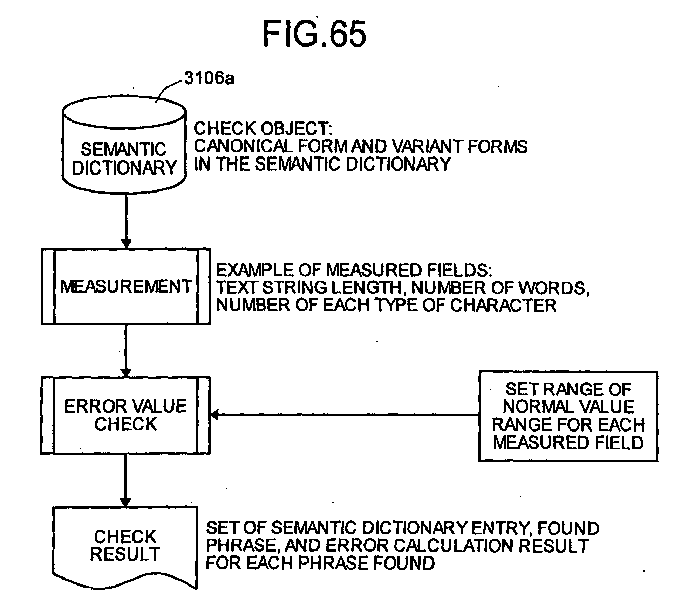

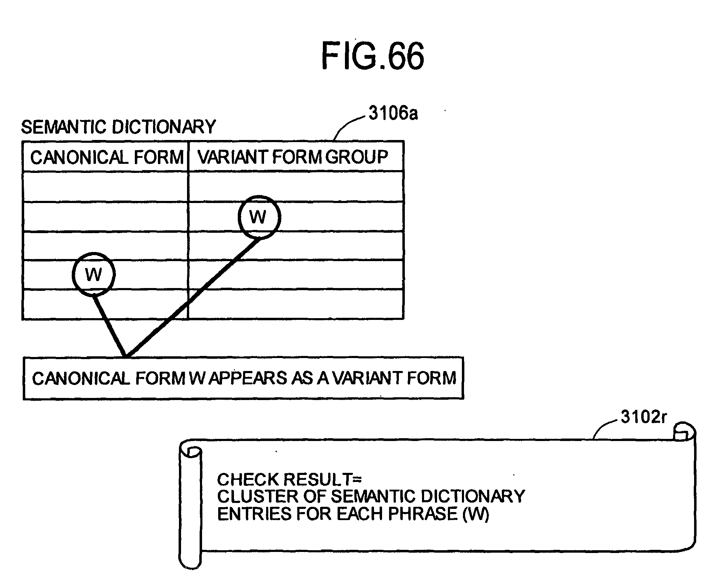

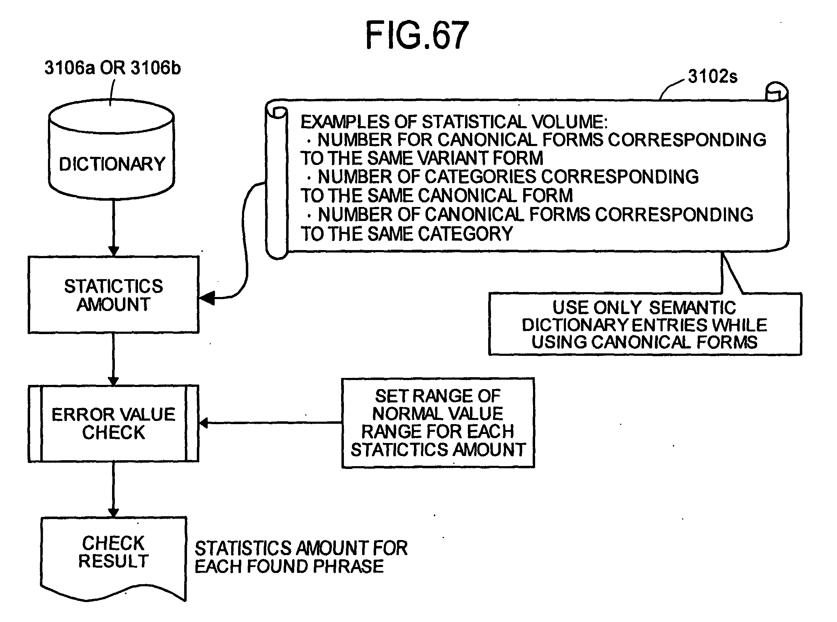

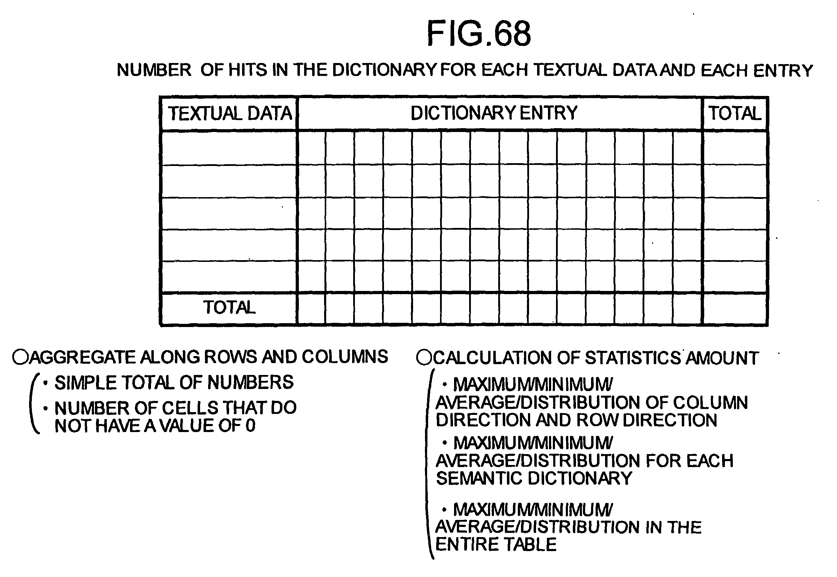

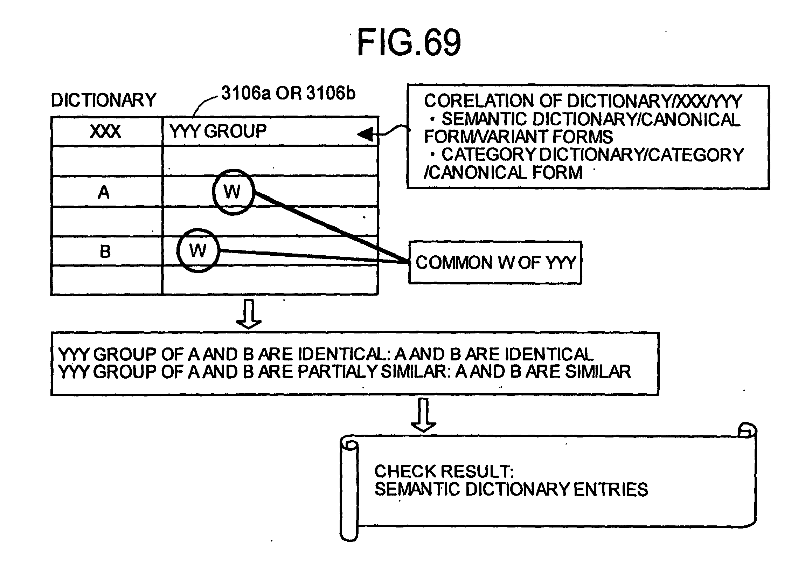

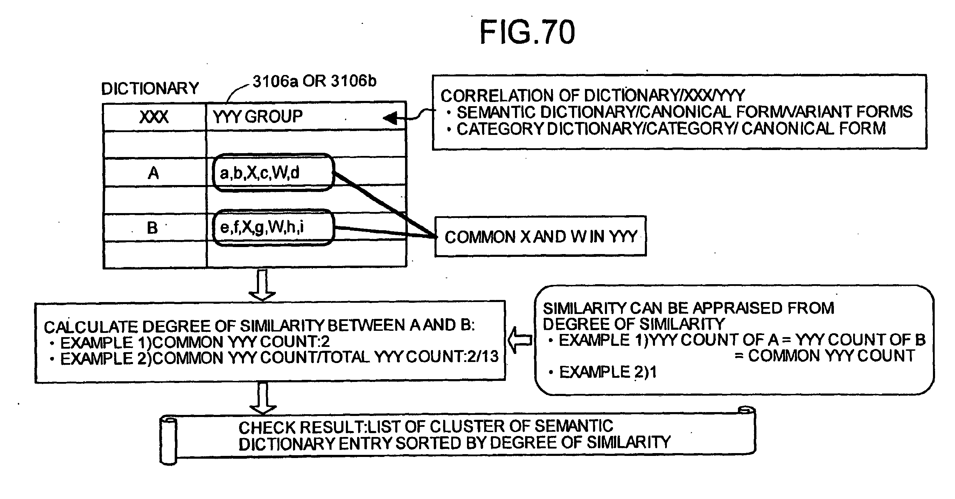

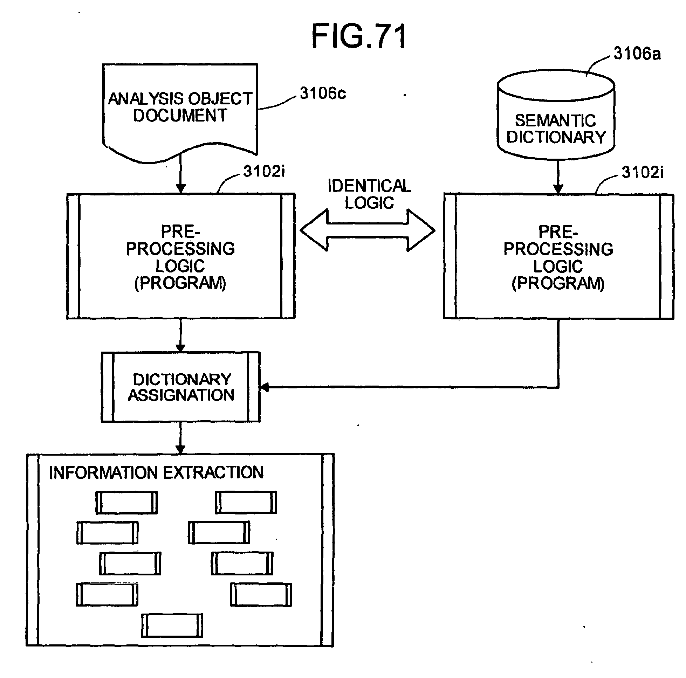

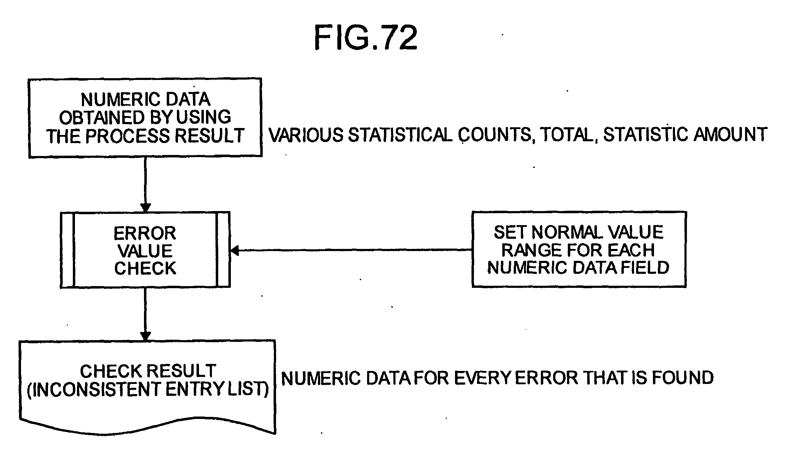

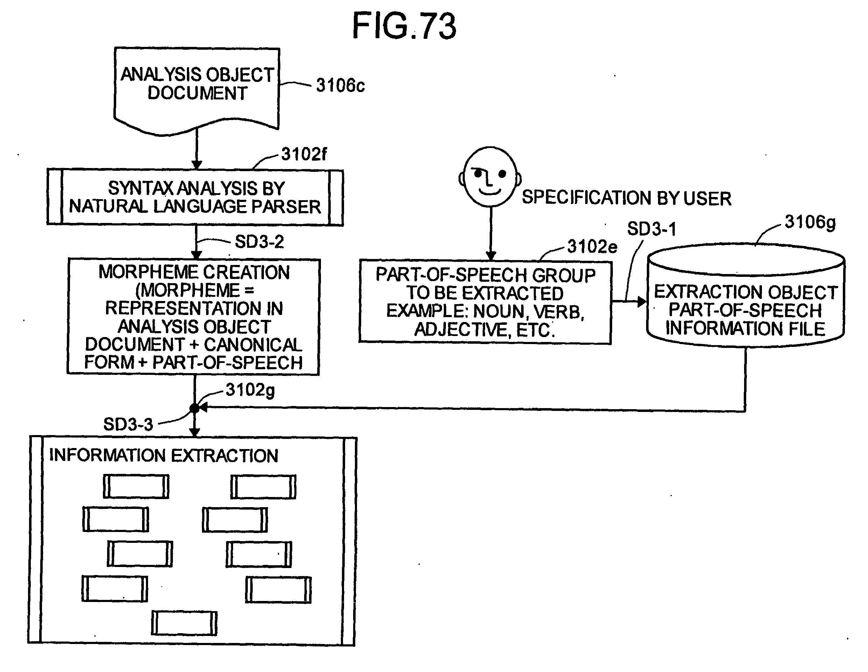

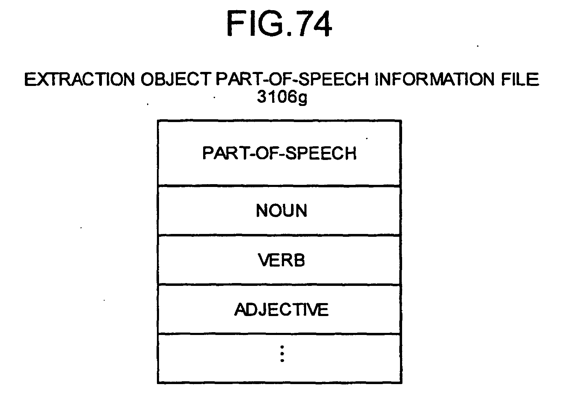

(IV) Fig. 56 is a schematic diagram of a text mining process; Fig. 57 is a block diagram of a system in which the present invention is applied; Fig. 58 is a block diagram of a dictionary entry checking unit 3102c of the system in which the present invention is applied; Fig. 59 is a drawing illustrating semantic dictionary information stored in a semantic dictionary information file 3106a; Fig. 60 is a drawing illustrating category dictionary information stored in a category dictionary information file 3106b; Fig. 61 is a schematic diagram illustrating an information extraction process using attribute information in the system according to an embodiment of the present invention; Fig. 62 is a schematic diagram illustrating an auto-adjustment process of a dictionary entry in the system according to an embodiment of the present invention; Fig. 63 is a schematic diagram illustrating a checking method for bugs in dictionary entries using a check phrase list in the system according to an embodiment of the present invention; Fig. 64 is a schematic diagram illustrating a checking method for bugs in the dictionary entries using a check pattern/logic in the system according to an embodiment of the present invention; Fig. 65 is a schematic diagram illustrating a checking method for bugs in the dictionary entry using a check measurement logic in the system according to an embodiment of the present invention; Fig. 66 is a schematic diagram illustrating a canonical form consistency checking process of the system according to an embodiment of the present invention; Fig. 67 is a schematic diagram illustrating a statistics checking process of the system according to the embodiment of the present invention; Fig. 68 is a schematic diagram illustrating a statistical checking process of the present system according to the embodiment of the present invention; Fig. 69 is a schematic diagram illustrating a co-occurrence checking process of the present system according to an embodiment of the present invention; Fig. 70 is a schematic diagram illustrating a co-occurrence checking process of the system according to an embodiment of the present invention; Fig. 71 is a schematic diagram illustrating an identification process of the system according to an embodiment of the present invention that uses logic; Fig. 72 is a schematic diagram illustrating an output process of a check result in a system according to an embodiment of the present invention; Fig. 73 is a schematic diagram illustrating a morpheme extraction process of a system according to an embodiment of the present invention; and Fig. 74 is a drawing illustrating extraction object part-of-speech information stored in an extraction object part-of-speech information file 3106g.

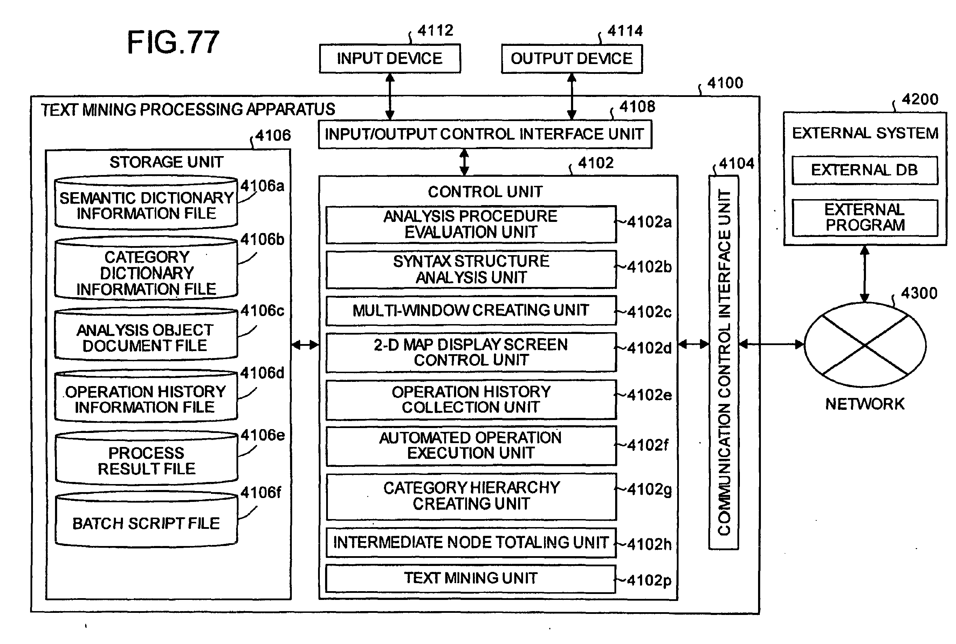

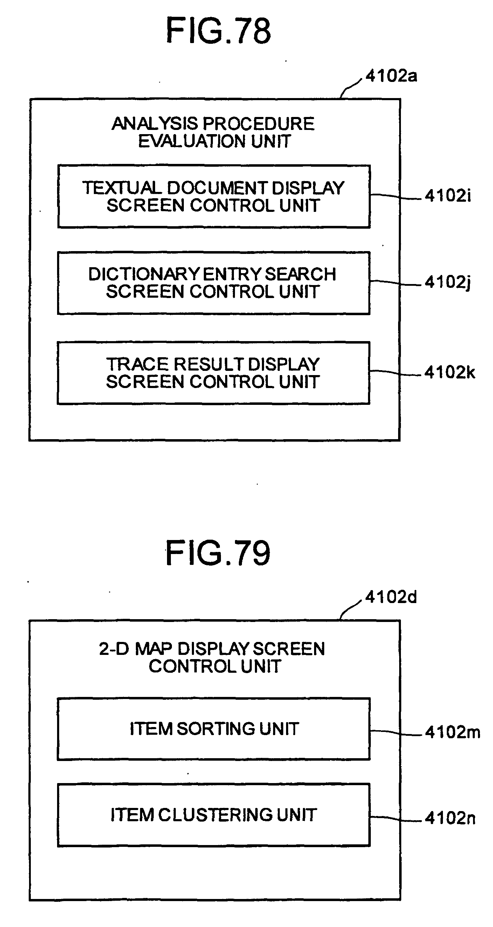

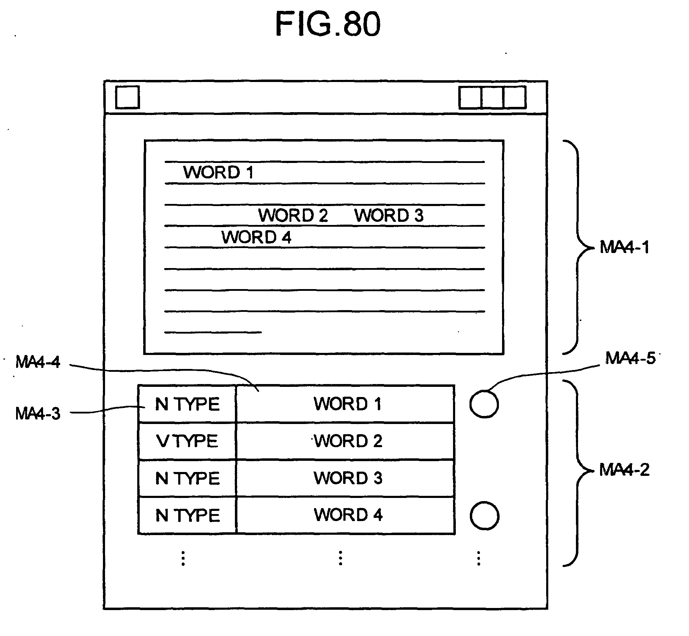

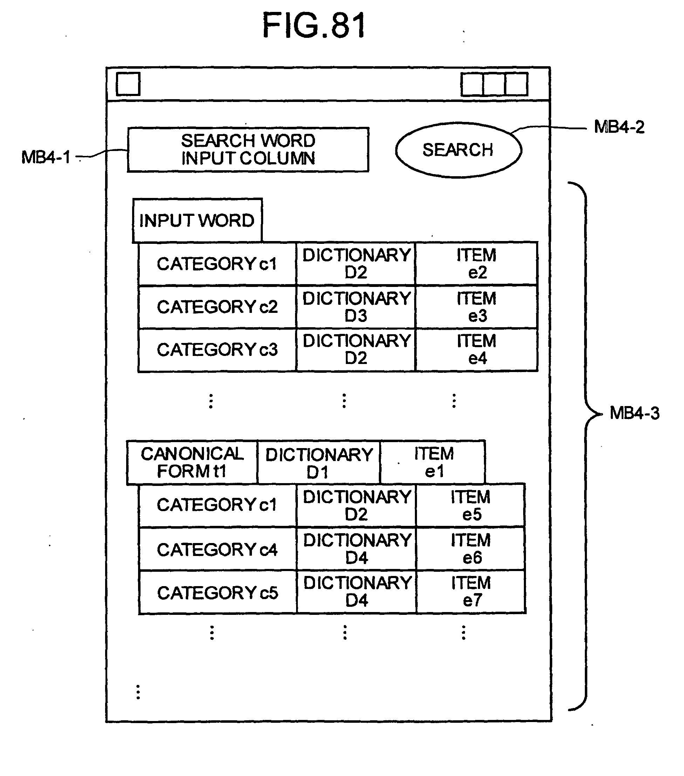

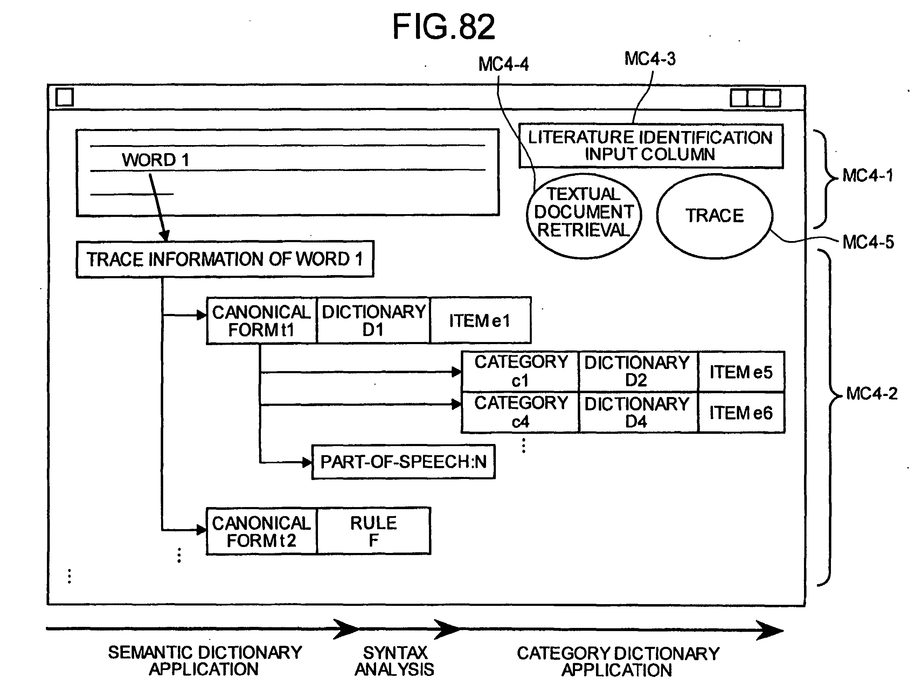

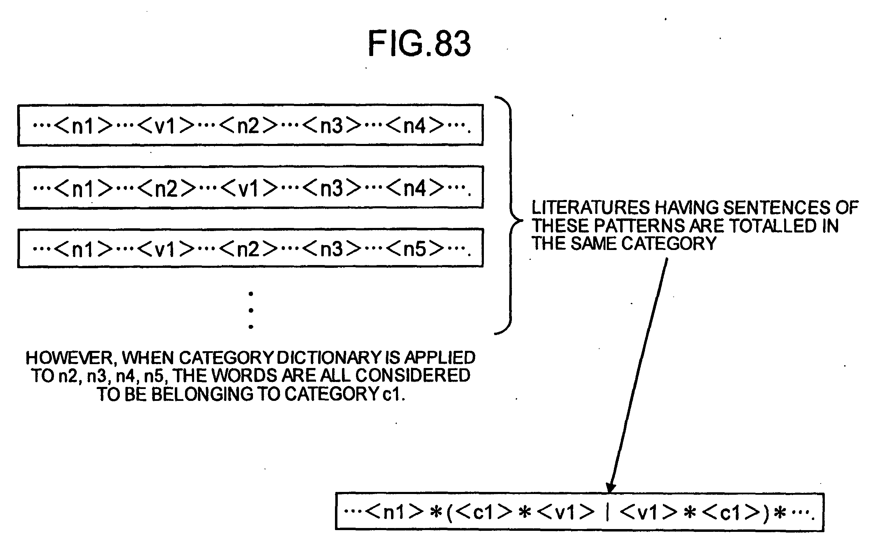

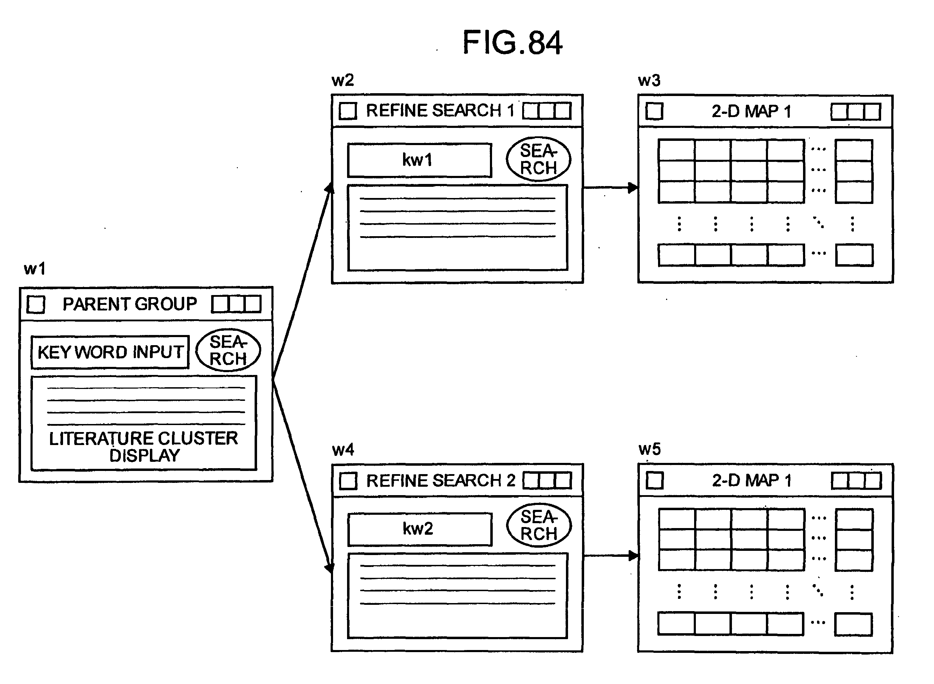

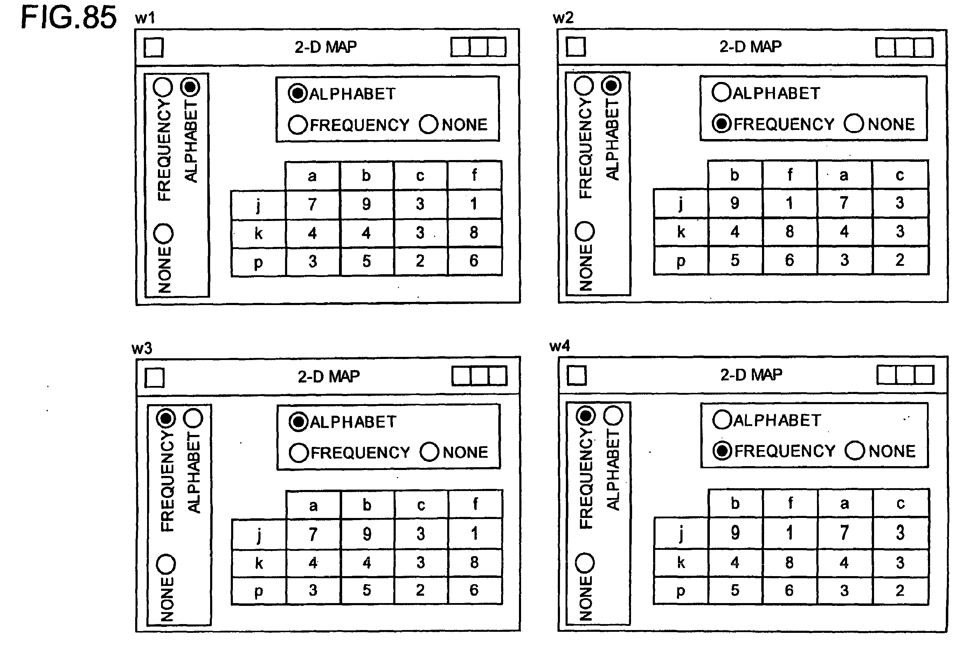

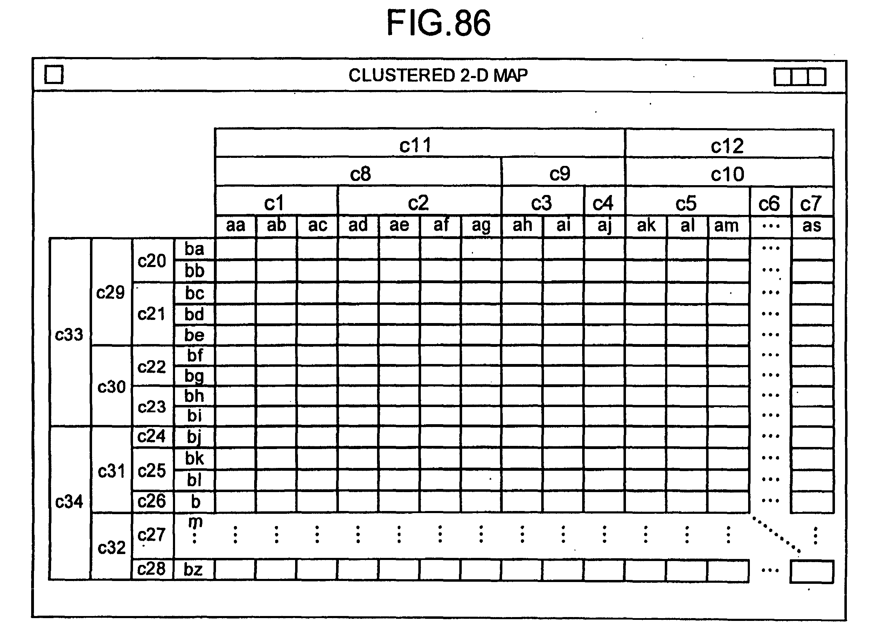

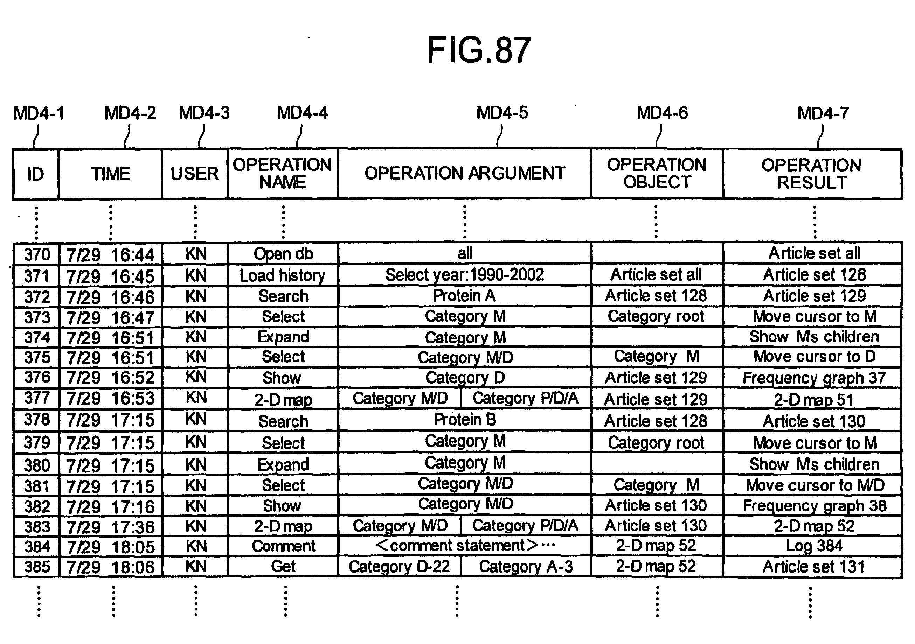

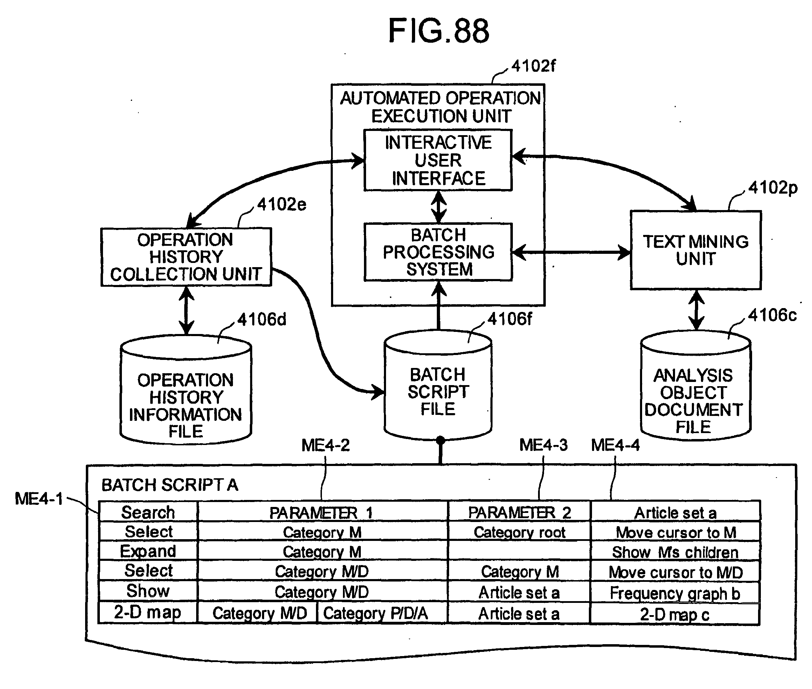

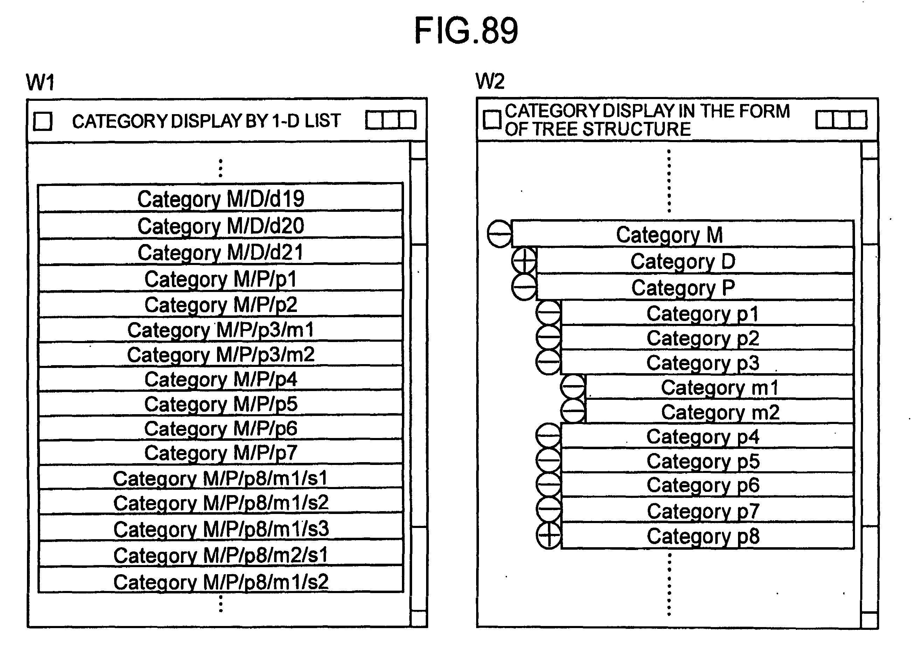

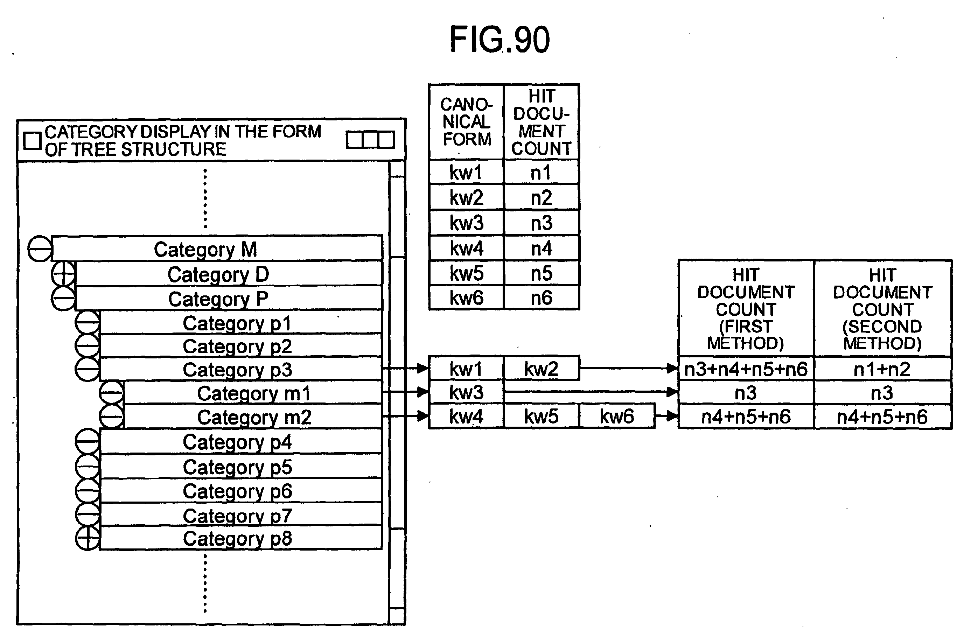

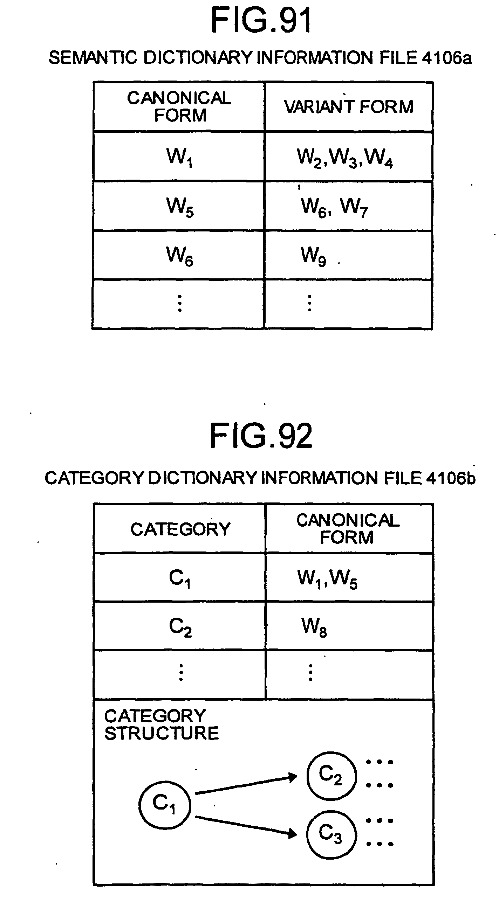

(V) Fig. 75 is a schematic diagram illustrating an overview of a text mining process; Fig. 76 is a schematic diagram illustrating an overview of a 2-D map shown in Step SA4-6 of Fig. 75; Fig. 77 is a block diagram illustrating a system in which the present invention is applied; Fig. 78 is a block diagram illustrating an analysis procedure evaluation unit 4102a in which the present invention is applied; Fig 79 is a block diagram illustrating a 2-D map display screen control unit 4102d in which the present invention is applied; Fig. 80 is a drawing illustrating an example of an original text display screen displayed on an output device 4114; Fig. 81 is a drawing illustrating an example of a dictionary entry search screen displayed on the output device 4114; Fig. 82 is a drawing illustrating an example of a dictionary trace result display screen displayed on the output device 4114; Fig. 83 is a schematic diagram illustrating an example of a syntax structure analysis process according to the present invention; Fig. 84 is a drawing illustrating an example of a multi window display screen displayed on the output device 4114; Fig. 85 is a drawing illustrating an example of a control (sort process) of 2-D map display screen displayed on the output device 4114; Fig. 86 is a drawing illustrating an example of a control (clustering) of 2-D map display screen displayed on the output device 4114; Fig. 87 is a drawing illustrating an example of an operation history collection screen displayed on the output device 4114; Fig. 88 is a schematic diagram illustrating an example of operation auto-execution process; Fig. 89 is a drawing illustrating a category display screen displayed on the output device 4114 in which the categories are arranged hierarchically; Fig. 90 is a schematic diagram illustrating an example of an intermediate node totaling process; Fig. 91 is a drawing illustrating an example of semantic dictionary information which is stored in a semantic dictionary information file 4106a; and Fig. 92 is a drawing illustrating an example of category dictionary information which is stored in a category dictionary information file 4106b.

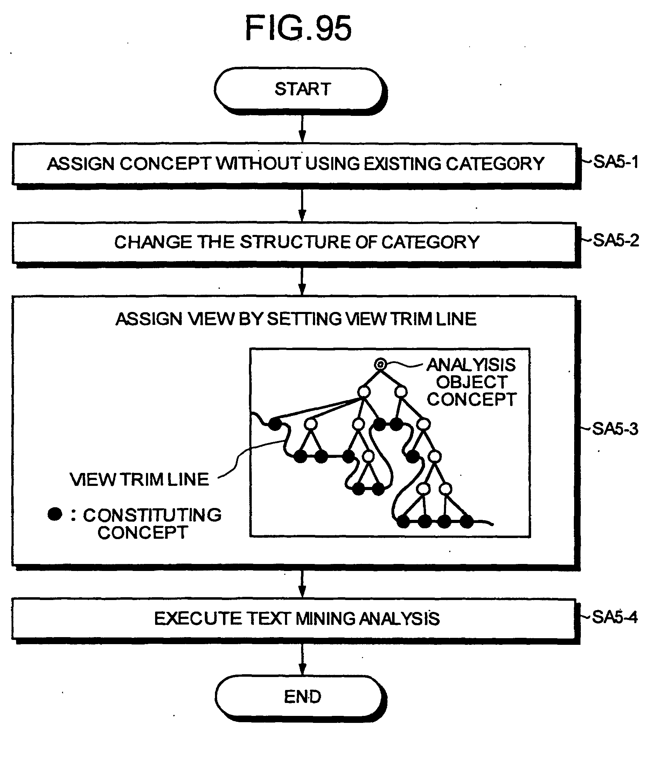

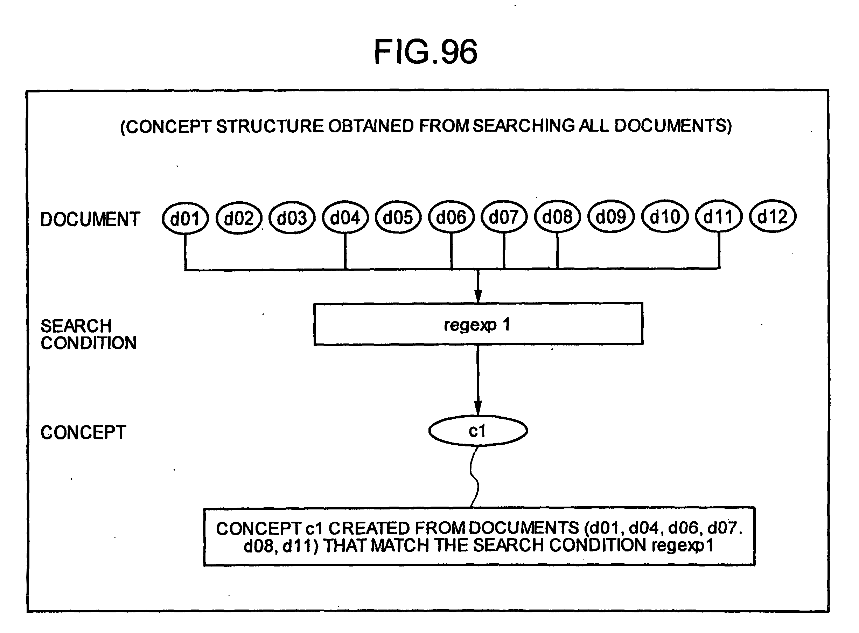

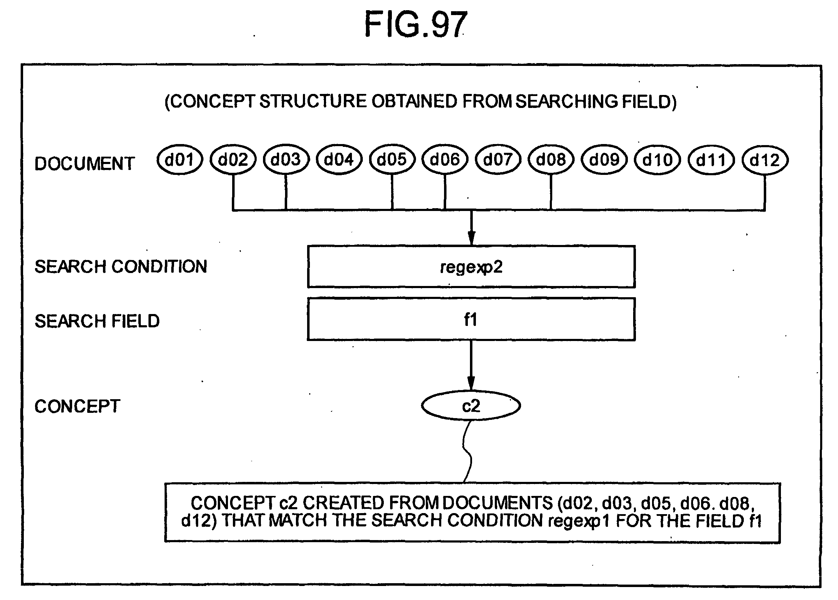

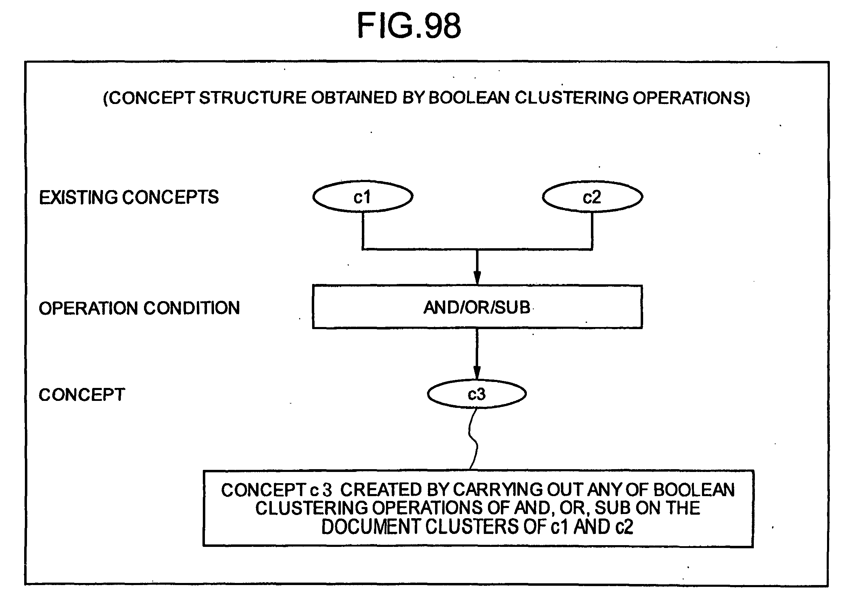

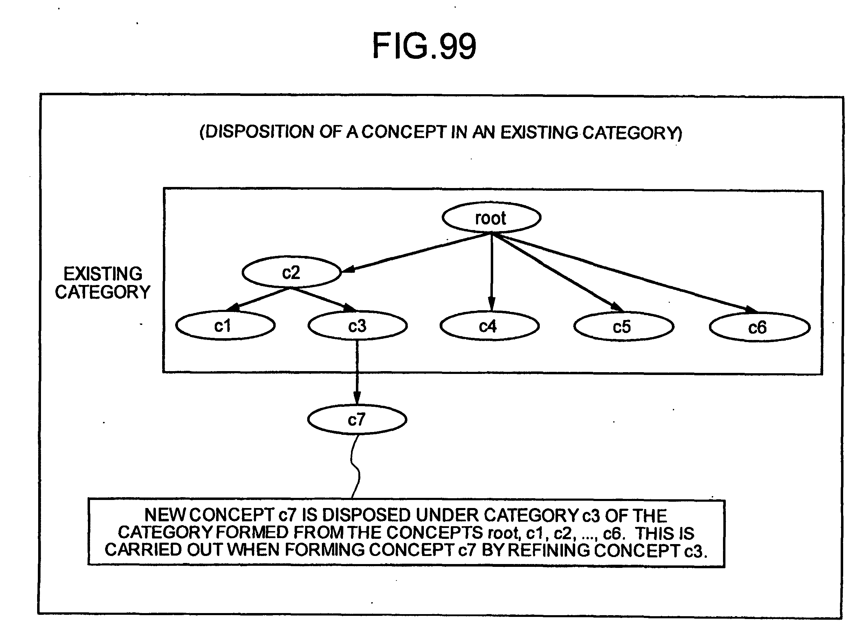

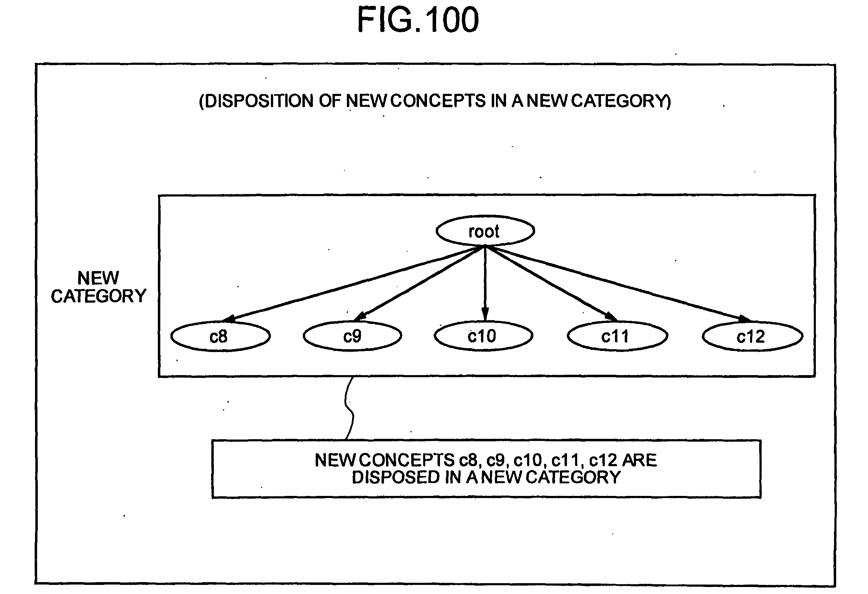

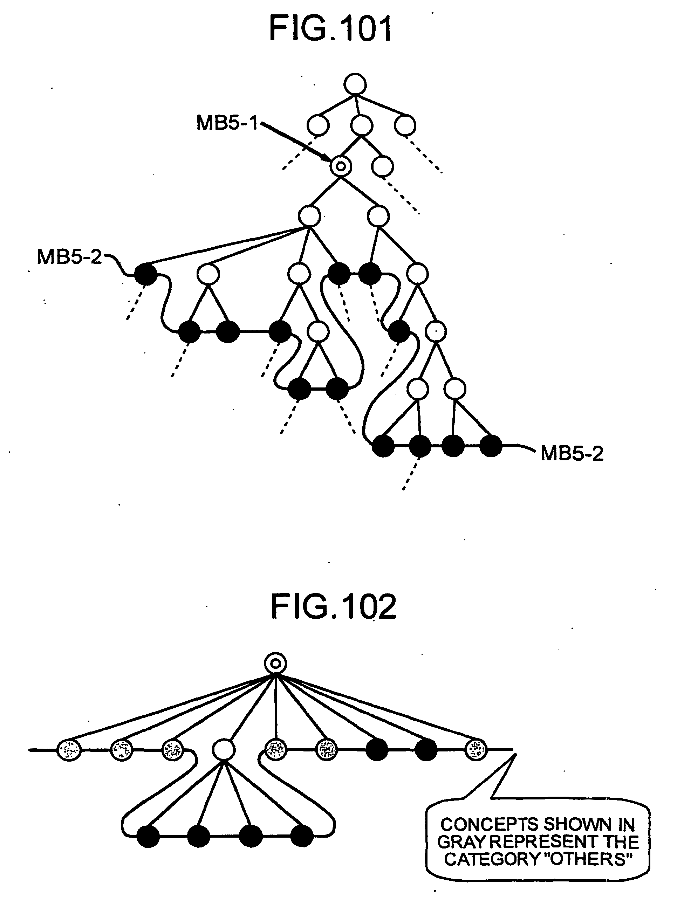

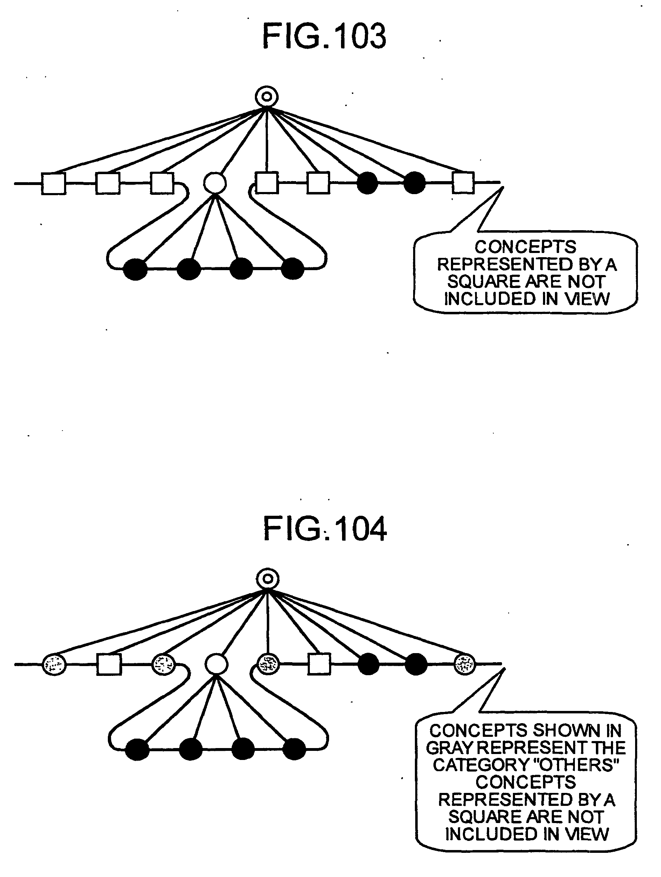

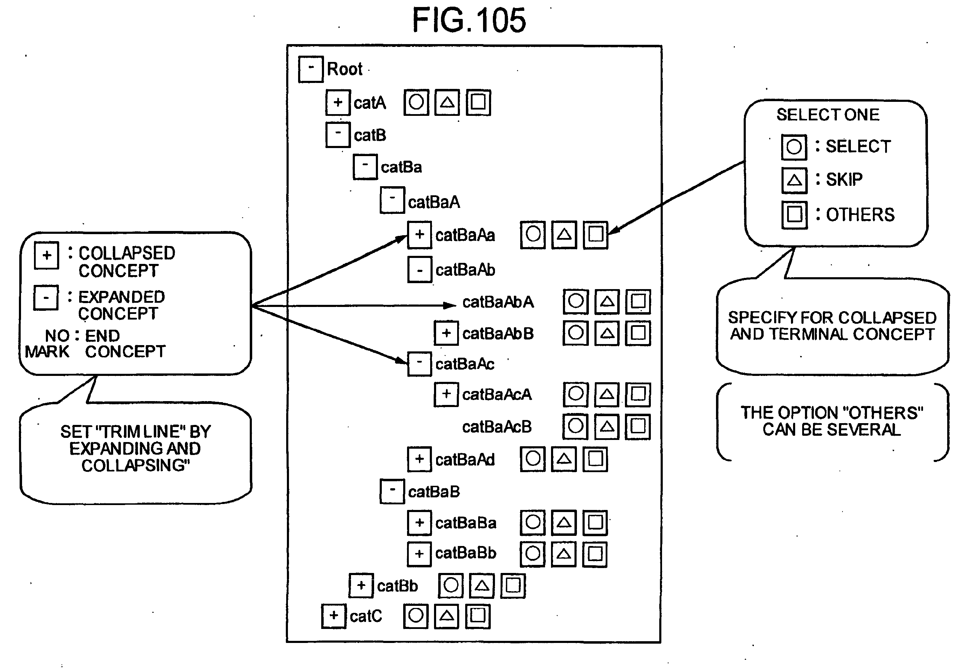

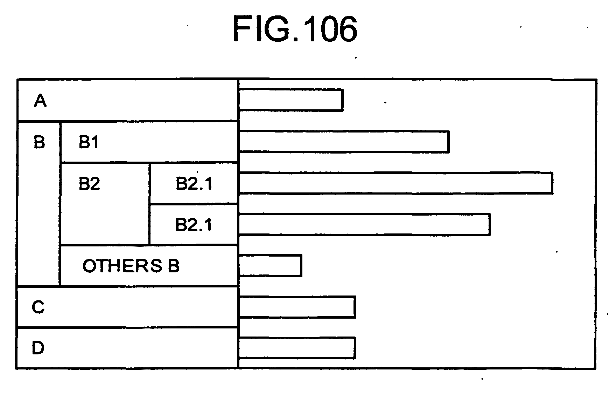

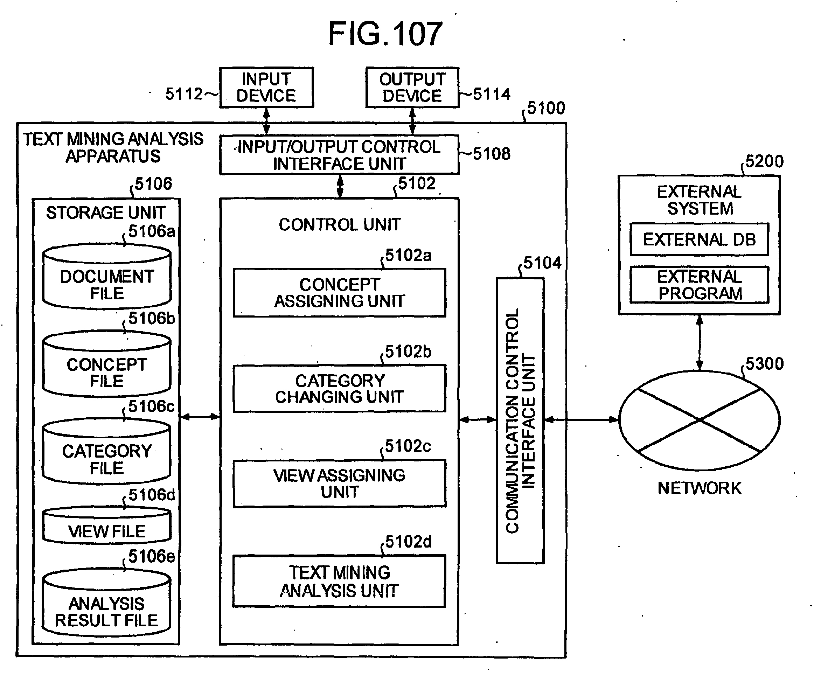

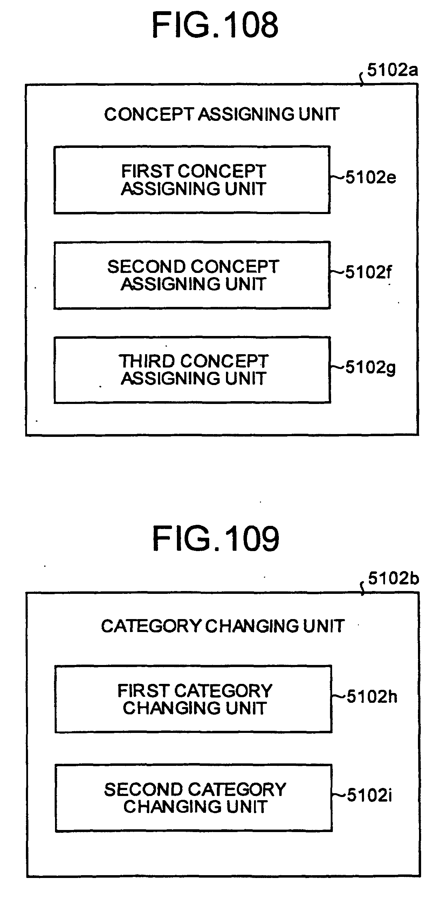

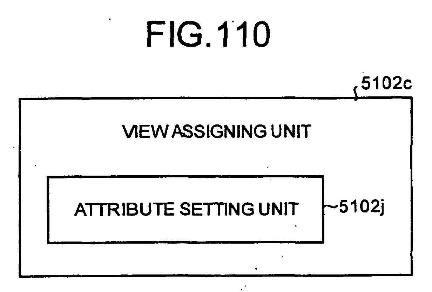

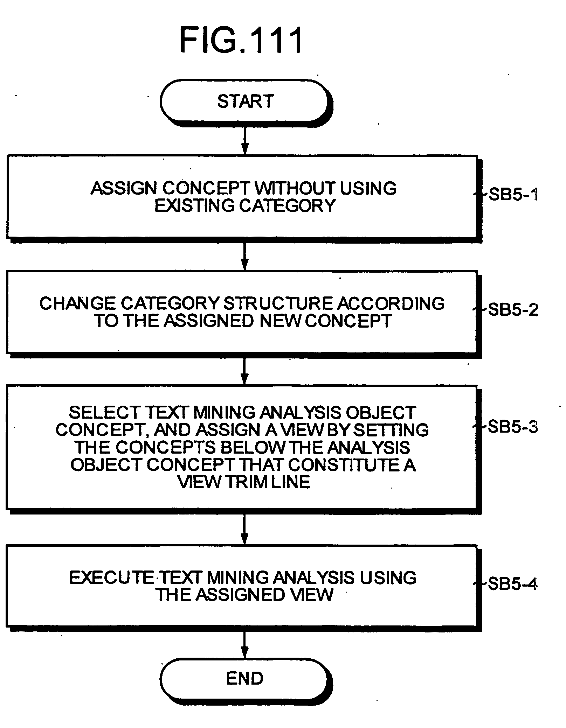

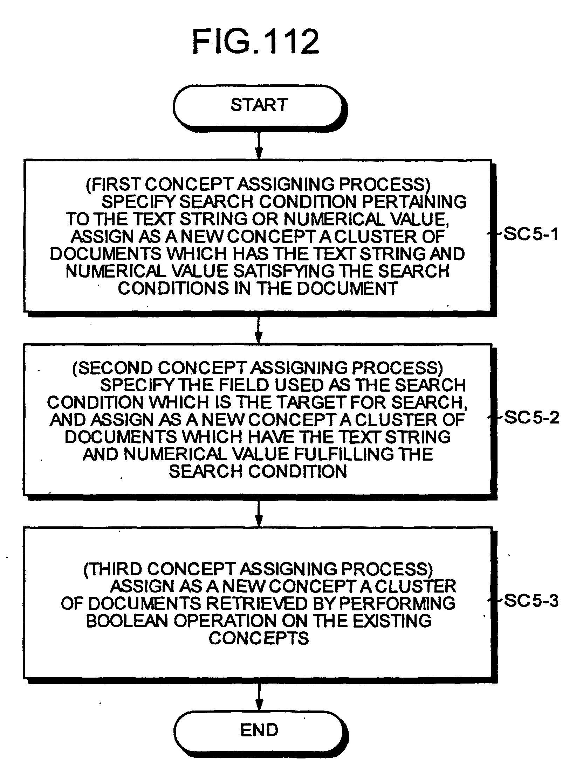

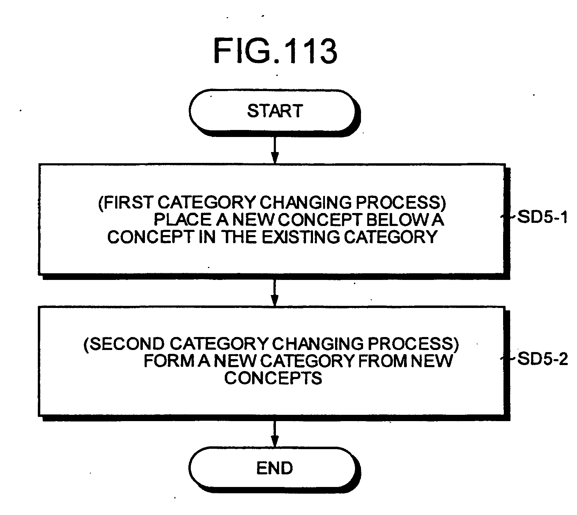

(VI) Fig. 93 is a drawing schematically illustrating documents, concepts, categories, and views which form information used for text mining analysis in a text mining system; Fig. 94 is a schematic diagram that explains the problems faced in the conventional technique; Fig. 95 is a flowchart illustrating the fundamental principle of the present invention; Fig. 96 is a drawing illustrating an example of construction of a concept structure by searching all documents; Fig. 97 is a drawing illustrating an example of construction of a concept structure by a field search; Fig. 98 is a drawing illustrating an example of construction of a concept structure by Boolean clustering operation; Fig. 99 is a drawing illustrating an example of a concept placement in an existing category; Fig. 100 is a drawing illustrating an example of a concept placement in a new category; Fig. 101 is a drawing illustrating an overview of a view assigning method according to the present invention; Fig. 102 is a schematic diagram that explains the setting of an attribute "Others" in view trim line constituting concepts forming a view trim line; Fig. 103 is a schematic diagram that explains the setting of an attribute "Skip" in the view trim line constituting concepts forming the view trim line; Fig. 104 is a schematic diagram that explains the setting of the attributes "Skip" and "Others" in the view trim line constituting concepts forming the view trim line; Fig. 105 is a drawing illustrating a view setting screen which is displayed on an output device 5114 of a text mining analysis apparatus 5100; Fig. 106 is a drawing illustrating an example of a screen which displays the text mining analysis result; Fig. 107 is a block diagram of a system in which the present invention is applied; Fig. 108 is a block diagram of a concept assigning unit 5102a; Fig. 109 is a block diagram of a category changing unit 5102b; Fig. 110 is a block diagram of a view assigning unit 5102c; Fig. 111 is a flowchart explaining an example of the main process of the present system according to an embodiment of the present invention; Fig. 112 is a flowchart explaining an example of a concept assigning process of the present system in the embodiment of the present invention; and Fig. 113 is a flowchart explaining an example of a category changing process according to an embodiment of the present invention.

### BEST MODE FOR CARRYING OUT THE INVENTION

(I) An embodiment of the literature knowledge management apparatus, a literature knowledge management method, a literature knowledge management program, and a recording medium will be explained next with reference to the accompanying drawings. The present invention is in no way confined to this embodiment alone.

### [Overview of the present invention]

First an overview of the present invention will be explained followed by the structure and processes. Fig. 1 is a drawing illustrating the fundamental principle of the present invention.

The present invention has the following basic features. That is, the present invention syntactically analyses a textual document and creates knowledge constructed from a single word or plural words. It then marks the knowledge, from the broken down knowledge (represented by the underscores in Fig. 1) or from the part-of-speech, as a related object (node) or a relation (edge) (represented by 'n' or 'e' shown in Fig. 1). In other words, the present invention treats a textual document as knowledge constructed from a single word or plural words.

The present invention then organizes the knowledge extracted from the textual documents into a knowledge structure (such as a graphical representation constructed from nodes and edges). That is, the present invention defines the knowledge structure in terms of related objects and relations. A knowledge structure is a cluster of plural knowledge structure elements. The knowledge structure elements can either be a relation or a related object. The relation-type knowledge structure element has a link each with a source related object and a target related object; whereas the related object-type knowledge structure element does not have a link. The relation-type knowledge structure element is represented as the edge and the related object-type knowledge structure element is represented as the node.

The present invention allows establishment of at least one link between each of the knowledge structure elements with a portion of the textual document (such as the header of the textual document or the textual portion) from which the knowledge is extracted. The present invention also allows establishment of at least one link between each of the knowledge structure elements and a semantically closest concept entry in a hierarchical concept dictionary.

The present invention includes separate operation screens for display and editing of the textual document, hierarchical concept dictionary, and knowledge structure, and an organizational system by which all the three, namely, the textual document, hierarchical concept dictionary, and knowledge structure, work jointly. These operation screens and the synergetic organizational system will be explained later.

### [System structure]

The structu re of the present system will be explained next. Fig. 2 is a block diagram of a system in which the present invention is applied. Only parts relevant to the present invention are schematically represented in Fig. 2. This system schematically includes a literature knowledge management apparatus 100, an external system 200 that provides external databases pertaining to theses, magazines, newspapers, patent literatures, etc., and external analysis programs for carrying out literature search, etc., and a network 300 that allows communication between the literature knowledge management apparatus 100 and the external system 200.

The network 300 in Fig. 2 that mutually connects the literature knowledge management apparatus 100 and the external system 200 may, for instance, be the Internet.

The external system 200 in Fig. 2 is connected to the literature knowledge management apparatus 100 via the network 300 and provides the user with external databases of literatures pertaining to theses, magazines, newspapers, patents, etc, and websites that execute external analysis programs, etc.

The external system 200 may be a WEB server or an ASP server which may be constructed from commonly available information processing devices such as the workstation, personal computer, etc. and other accessories. The functions of the external system 200 are realized by the hardware such as the CPU, disk device, memory device, input device, output device, communication control device, etc. that constitute the external system 200 and the programs controlling these hardware.

The literature knowledge management apparatus 100 in Fig. 2, schematically includes a control unit 102 such as the CPU which controls the entire literature knowledge management apparatus 100, a communication control interface unit 104 connected to a communication device (not shown) such as a router that is connected to a communication path, and the like, an input/output control interface unit 108 that is connected to an input device 112 and an output device 114, and a storage unit 106 that stores databases, tables, and the like. All the parts mentioned above are connected for mutual communication via one communication path or another. The literature knowledge management apparatus 100 as a whole is connected, via the communication device such as the router or via a wired or wireless communication path such as a dedicated line, to the network 300 enabling communication.

The storage unit 106 that stores the databases and tables (textual document database 1106a through query knowledge structure database 1106g) is a fixed disk device and stores all types of programs, tables, files, databases, web page files, etc. required for various processes.

The textual document database 106a of the storage unit 106 is a database of textual documents of literatures of various kinds. Fig. 3 is a drawing illustrating a sample of information stored in the textual document database 106a.

The information stored in the knowledge structure database 106b, as shown in Fig. 3, includes the following in a mutually associated manner, namely, textual document ID (identifier) that distinguishes every textual document, word ID that distinguishes every word, knowledge ID that distinguishes every bit of knowledge, type information that indicates whether the knowledge ID that distinguishes knowledge, and the knowledge is a relation type or a related object type, link information pertaining to link to the textual document, etc.

The textual document database 106a may be an external database that can be accessed through the Internet or may be an in-house database created by copying external databases and adding one's own information to them, and storing them as original textual documents.

The knowledge structure database 106b stores information, etc. related to the knowledge structure. Fig. 4 is a drawing illustrating a sample of information stored in the knowledge structure database 106b.

The information stored in the knowledge structure database 106b, as shown in Fig. 4, includes the following in a mutually associated manner, namely, textual document ID, knowledge ID that distinguishes node information used for defining nodes, connection source knowledge ID and connection target knowledge ID as edge information used for defining edges, etc.

The concept dictionary database 106c stores information, etc. related to the concept dictionary. Fig. 5 is a drawing illustrating a sample of information stored in the concept dictionary database 106c.

The information stored in the concept dictionary database 106c, as shown in Fig. 5, includes the following in a mutually associated manner, namely, concept entry ID that distinguishes concept entries, concept entry description that describes the content of concept entries, the knowledge ID linked to the concept entry, the link information of the knowledge ID, parent concept entry ID corresponding to the parent level (parent concept), child concept entry ID list which is a list of IDs of child entries corresponding to the child level (child concept), etc.

The textual document operation screen data 106d stores information, etc. related to the textual document operation screen.

The knowledge structure operation screen data 106e stores information, etc. related to the knowledge structure operation screen.

The concept dictionary operation screen data 106f stores information, etc. related to the concept dictionary operation screen.

Returning to Fig. 2, the communication control interface unit 104 controls the communication between the literature knowledge management apparatus 100 and the network 300 (or a communication device such as the router, and the like). In other words, the communication control interface unit 104 carries out communication with another terminal through the communication path.

The input/output control interface unit 108 in Fig. 2 controls the input device 112 and the output device 114. The output device 114 may be a monitor (including television) or speakers (the output device 114 is hereinafter referred to as monitor). The input device 112 may be keyboard, mouse, microphone, etc. The monitor and the mouse together function as a pointing device.

The control unit 102 in Fig. 2 has an internal memory for storing control programs such as the OS (Operating System) and programs and data required for regulating various processes, and using these programs carries out information processing for execution of various processes. The control unit 102 schematically comprises a textual data handling unit 102a, a knowledge structure handling unit 102b, a concept dictionary handling unit 102c, a textual document operation screen creating unit 102d, a knowledge structure operation screen creating unit 102e, a concept dictionary operation screen creating unit 102f, a literature knowledge auto-editing unit 102g, and an operation screens linking unit 102h.

The textual document handling unit 102a handles textual documents by breaking them up into knowledge constructed from a single word or plural words. The knowledge structure handling unit 102b handles the knowledge structure constructed from the relation-type knowledge structure elements and related object-type knowledge structure elements that are linked to the textual documents. The concept dictionary handling unit 102c handles the concept dictionary constructed from the concept entries that hierarchically define the concept of the linked knowledge. The textual document operation screen creating unit 102d displays textual documents by grouping them according to the knowledge categories the textual document handling unit 102a separates the documents into, and creates a screen for the user to select words that constitute the desired knowledge.

The knowledge structure operation screen creating unit 102e displays the knowledge structure handled by the knowledge structure handling unit, and creates a screen for the user to select the desired relation-type knowledge structure elements and the related object-type knowledge structure elements that construct the knowledge structure. The concept dictionary operation screen creating unit 1 02f displays the concept dictionary that is handled by the concept dictionary handling unit and creates a screen for the user to select the concept entry corresponding to the desired knowledge. If the knowledge displayed on the textual document operation screen or the knowledge structure operation screen or the concept dictionary operation screen is modified or deleted or if there is an addition to the knowledge on any of these screens, or if there is a specification by the user for auto-creation, the literature knowledge auto-editing unit 102g, automatically modifies, deletes, or adds link information on all the screens on which the knowledge appears.

An operation screens linking unit 102h links the operations of all the operation screens. A common cursor control unit 102i displays a common cursor that points to identical knowledge in the textual document operation screen, knowledge structure operation screen, or concept dictionary operation screen, and allows the user to select the desired knowledge by moving the common cursor. A screen-specific cursor control unit 102j displays a screen-specific cursor that points to a single bit of knowledge in the textual document operation screen, knowledge structure operation screen, or concept dictionary operation screens, enables the user to select the desired knowledge by moving the screen-specific cursor on one screen, and manages the link information pertaining to the knowledge indicated by the screen-specific cursor on the other two screens.

A knowledge building unit 102k adds the extracted knowledge to the different databases of the storage unit 106. The processes carried out by each of these parts will be explained in detail in a later section.

### [Processes of the system]

An example of the processes of the system according the embodiment constructed in this way will be explained next with reference to Fig. 6 through Fig. 12.

### [Textual document handling process]

A textual document handling process will be explained first with reference to Fig. 6 and Fig. 7. Fig. 6 is a flow chart showing an example of the textual document handling process by the system according to the an embodiment of the present invention.

The textual document handling unit 102a of the literature knowledge management apparatus 100 retrieves from the textual document database 106a the textual document specified by the user. The textual document operation screen creating unit 102d creates the data pertaining to the specified textual document required to be displayed on the textual document operation screen and outputs the created data to the output device 114 via the input/output control interface unit 108 (Step SA-1).

Fig. 7 is a drawing illustrating a sample textual document operation screen displayed on the monitor of the literature knowledge management apparatus 100. The textual document operation screen comprises a common cursor MA-1, a screen-specific cursor MA-2, a vertical scroll bar MA-3, and a horizontal scroll bar MA-4.

The textual document comprises a plurality of words (represented in Fig. 7 by W₁ through W₁₀). The text on the textual document operation screen can be marked as bits of knowledge (represented by underscores) constructed from either a single word or plural words, and these bits of knowledge can be marked either as nodes or as edges. The knowledge, which forms the smallest unit of the textual document, can be expanded or narrowed on the textual document operation screen.

As shown in Fig. 7, both the text and the marks are simultaneously displayed on the textual document operation screen. However, the mode of display may be any of those mentioned below. The type or range of the mark, and the cursor for specifying the modification of the type or range of the mark can have different types of display properties (such as color, underscore, bold, highlight, blinking, font size, font type, shadow, dot, italics, stylized, tag text string of SGMUXML or special symbols) as long as the same display property characterizes a single feature of the text. The only instance when plural display properties can characterize a single feature of the text is when a combination of display properties that can be used simultaneously (such as underscore, dot, stylized text, etc.) is used to characterize a feature of the text. An interface (such as a radio button, pull-down list, tab, etc.) for switching between the series of marks may also be used.

When the display area is changed by the user by manipulating the vertical scroll bar MA-3 and the horizontal scroll bar MA-4, the textual document operation screen creating unit 102d creates a textual document operation screen corresponding to the changed display area and outputs it to the output device 114.

When the desired word or knowledge displayed on the output device 114 is selected using the common cursor MA-1 or the screen-specific cursor MA-2 and modified by the user, the textual document handling unit 102a stores the modified word or knowledge in a predetermined storage area such as the textual document database 106a or the like (Step SA-2). The functions of the common cursor MA-1 and the screen-specific cursor MA-2 will be explained in a later section. The textual document handling process ends here.

### [Concept dictionary handling process]

A concept dictionary handling process will be explained next with reference to Fig. 8 and Fig. 9. Fig. 8 is a flow chart showing an example of the concept dictionary handling process by the system according to an embodiment of the present invention.

The concept dictionary operation screen creating unit 102f of the literature knowledge management apparatus 100 creates, based on the information retrieved by the concept dictionary handling unit 102c from the concept dictionary database 106c, the data required for the concept dictionary operation screen and outputs it to the output device 114 via the input/output control interface unit 108 (Step SB-1).

Fig. 9 is a drawing illustrating a sample concept dictionary operation screen displayed on the monitor of the literature knowledge management apparatus 100. The concept dictionary operation screen comprises a common cursor MB-1, a screen-specific cursor MB-2, a vertical scroll bar MB-3, and a horizontal scroll bar MB-4.

The concept dictionary operation screen displays the abstract/concrete relationship between the concept entries by arranging them in a hierarchy, and allows addition, deletion, or editing of the concept entries. The concept entries may be displayed in any of the following display modes. The first step is to set the direction in which the upper and lower limits of the degree of abstraction are to be expressed - either vertical or horizontal. Then the concept entries and the relationships between them may be displayed as a tree structure with the concept entries representing the vertices and the relationships between them representing the branches or they may be displayed as a network. Alternatively, the concept entries may be mapped on to a tree structure of the outline processor and displayed.

When the display area is changed by the user by manipulating the vertical scroll bar MB-3 and the horizontal scroll bar MB-4, the concept dictionary operation screen creating unit 102f creates a concept dictionary operation screen corresponding to the changed display area and outputs it to the output device 114.

When the desired concept entry displayed on the output device 114 is selected using the common cursor MB-1 or the screen-specific cursor MB-2 and modified by the user, the concept dictionary handling unit 102c stores the modified concept entry in a predetermined storage area such as the concept dictionary database 106c or the like (Step SB-2). The functions of the common cursor MB-1 and the screen-specific cursor MB-2 will be explained in a later section. The concept dictionary handling process ends here.

### [Knowledge structure handling process]

A knowledge structure handling process will be explained next with reference to Fig. 10 and Fig. 11. Fig. 10 is a flow chart showing an example of the knowledge structure handling process by the system according to an embodiment of the present invention.

The knowledge structure handling unit 102b of the literature knowledge management apparatus 100 first creates, based on the information retrieved from the textual document database 106a, a model knowledge structure database 106b. The knowledge structure operation screen creating unit 102e then creates the data required for the knowledge structure operation screen and outputs it to the output device 114 via the input/output control interface unit 108 (Step SC-1).

Fig. 11 is a drawing illustrating a sample knowledge structure operation screen displayed on the literature knowledge management apparatus 100. The knowledge structure operation screen comprises a common cursor MC-1, a screen-specific cursor MC-2, a vertical scroll bar MC-3, and a horizontal scroll bar MC-4.

The knowledge structure operation screen displays related object-type knowledge structure elements (nodes) and the relation-type knowledge structure elements (edges) that can be established between the nodes and allows addition, deletion, and editing of the knowledge structure elements. The knowledge structure elements may be displayed by means of any existing graphical display mode. The text label within the nodes need not necessarily have the same text strings present in the text on the textual document operation screen to which the nodes are linked.

When the display area is changed by the user by man ipulating the vertical scroll bar MC-3 and the horizontal scroll bar MC-4, the knowledge structure operation screen creating unit 102e creates a knowledge structure operation screen corresponding to the changed display area and outputs it to the output device 114.

When the knowledge structure element displayed on the output device 114 is selected using the common cursor MC-1 or the screen-specific cursor MC-2 and modified by the user, the knowledge structure handling unit 102b stores the modified knowledge structure element in a predetermined storage area such as the knowledge structure database 106b or the like (Step SC-2). The functions of the common cursor MC-1 and the screen-specific cursor MC-2 will be explained in a later section. The knowledge structure handling process ends here.

### [Operation screens linking process]

An operation screens linking process will be explained next. The operation screens linking unit 102h links the textual document operation screen, the concept dictionary operation screen, and the knowledge structure operation screen by enabling the operation explained below. Fig. 12 is a drawing illustrating a sample screen simultaneously displaying on the monitor of the literature knowledge management apparatus 100 the textual document operation screen, the knowledge structure operation screen, and the concept dictionary operation screen.

The operation screens linking unit 102h controls the common cursors (MA-1, MB-1, and MC-1) in their respective operation screens by means of the common cursor control unit 102i. The common cursor of each of the operation screens is displayed and functions as described below, quite distinct from the screen-specific cursor of the operation screen.

The common cursor control unit 102i moves the common cursors of the textual document operation screen and the knowledge structure operation screen in conjunction. In other words, when the user moves the common cursor on the textual document operation screen to a position that has a link to a knowledge structure element, the common cursor control unit 102i moves the common cursor on the knowledge structure operation screen to the relevant knowledge structure element. Conversely, when the user moves the common cursor on the knowledge structure operation screen to a knowledge structure element that has a link to a portion of the text, the common cursor control unit 102i moves the common cursor on the textual document operation screen to the relevant portion of the text.

Similarly, the common cursor control unit 102i moves the common cursors of the concept dictionary operation screen and the knowledge structure operation screen in conjunction. In other words, when the user moves the common cursor on the concept dictionary operation screen to a concept dictionary entry that has a link to a knowledge structure element, the common cursor control unit 102i moves the common cursor on the knowledge structure operation screen to the relevant knowledge structure element. Conversely, when the user moves the common cursor on the knowledge structure operation screen to a knowledge structure element that has a link to a concept dictionary entry, the common cursor control unit 102i moves the common cursor on the concept dictionary operation screen to the relevant concept dictionary entry.

The operation screens linking unit 102h, by means of the screen-specific cursor control unit 102j, provides or removes the link from a knowledge structure element at the screen-specific cursor (MC-2) position on the knowledge structure operation screen to the portion of the marked text at the screen-specific cursor (MA-2) position on the textual document operation screen in the following manner.

The screen-specific cursor control unit 102j first provides or removes the link from the knowledge structure element at the screen-specific cursor (MC-2) position on the knowledge structure operation screen to the concept entry at the screen-specific cursor (MB-2) position on the concept dictionary operation screen in the following manner.

When the type or the range of the mark on the textual document operation screen is modified by the user, the screen-specific cursor control unit 102j carries out one of the following processes depending on the type or setting of the mark. 1) Removes the link from the knowledge structure element to the marked portion of the textual document. 2) Removes the link from the knowledge structure element to the marked portion of the textual document, moves the screen-specific cursor to the knowledge structure element whose link has been removed, and prompts for establishment of a link to the textual document. 3) Removes the link or prompts for establishment of a link only when the range of the mark is modified. 4) Shifts the link to the post-modified marked text containing most of the words in the range of mark prior to the modification of the range of mark. 5) Carries out the shift of link described in 4), moves the cursor to the re-linked knowledge structure element, and, according to the setting, prompts for confirmation of re-linking.

When a concept entry is modified or deleted on the concept dictionary operation screen by the user, the operation screens linking unit 102h carries out one of the following processes depending on the setting. 1) Removes the link from the knowledge structure element to the concept entry. 2) Removes the link from the knowledge structure element to the concept entry, moves the cursor to the knowledge structure element whose link has been removed, and prompts for establishment of a link to the concept entry. 3) Re-links to a concept entry which is close to the original concept entry (such as an ancestor, sibling, or descendent). 4) Carries out this re-linking, moves the cursor to the knowledge structure element whose link has been shifted, and, according to the setting, prompts for confirmation of the re-linking.

If the user wants to create a new knowledge structure by specifying two types of marks, the operation screens linking unit 102h indicates the conversion to relation-type knowledge structure element by one type of mark (say A) and to related object-type knowledge structure element by the other type of mark (say B) and goes about creating the knowledge structure in the following way. If the marks are connected in the pattern B-A-B', the operation screens linking unit 102h creates the related object-type knowledge structure elements b1 and b2 and links them respectively to the portion of the text marked B and the portion of the text marked B'. The operation screens linking unit 102h then creates the relation-type knowledge structure element a and links it to the portion of the text marked A. The operation screens linking unit 102h then provides a link to b1 as the connection origin knowledge structure element of the relation-type knowledge structure element a, and to b2 as the connection target knowledge structure element of the relation-type knowledge structure element a. If the mark pattern is A-A', or if a sentence begins with A', or if the sentence ends with A, the operation screens linking unit 102h treats it as the content being absent and the portion of the text marked B being just before the portion of the text marked A' or just after the portion of the text marked A, and applies the first procedure. If the mark pattern is B-B', the operation screens linking unit 1 02h treats it as the content being absent, and the portion of the text marked A being between the portions of the text marked B and B', and applies the first procedure. The operation screens linking unit 102h then leaves a recording of the operation in a predetermined storage area of the storage unit 106. The operation screens linking process ends here.

### [Knowledge building process]

A knowledge building process will be explained next. The procedure of knowledge building using the present system is as follows.

The textual document is first marked. The textual document can be marked according to system standards on the textual document operation screen or syntax tags maybe affixed by using a syntax analysis process system. In the case of the latter, the result of the process may be confirmed on the textual document operation screen and edited as the situation demands.

A model of the knowledge structure is created by the operation screens linking process carried out by the operation screens linking unit 102h. The marks to be converted to the relation-type knowledge structure element and the relation object-type knowledge structure element are determined by any of the following methods. The mark type that is mostly affixed to knowledge structure elements that represent what looks like relationships is considered as marking relation-type knowledge structure elements and the mark type that is mostly affixed to knowledge structure elements that represent what looks like related objects is considered as marking related object-type knowledge structure elements. If marks are affixed using a syntax analysis process system, the mark type that is mainly affixed to verbs are taken to mark relation-type knowledge structure elements and the mark type that is mainly affixed to nouns or noun phrases.

The knowledge building unit 102k carries out confirmation or editing of the knowledge structure elements on the knowledge structure operation screen. The knowledge building unit 102k refers to the textual document operation screen, according to requirement, causes co-movement of the common cursors. The knowledge building unit 102k deletes the knowledge structure elements that are considered not to have a building value, and adds knowledge structure elements that have a building value even though they may not be present in the textual document. If the knowledge structure elements that are added have a close relationship with any portion of the text in the textual document, the knowledge building unit 102k provides a text link to the knowledge structure elements.

The knowledge building unit 102k changes the display properties (such as text labels, size, position, shape, color, etc.) of the knowledge structure elements on the knowledge structure operation screen. By jointly using the knowledge structure operation screen and the concept dictionary operation screen, the knowledge building unit 102k provides for every knowledge structure element a link to a concept entry using the concept entry link operation function.

If no appropriate concept entry is found for any knowledge structure element, the knowledge building unit 102k carries out one of the following functions. The knowledge building unit 102k creates a concept entry suitable for the knowledge structure element on the knowledge structure operation screen, and provides a link to the created concept entry. Alternatively, the knowledge building unit 102k selects from the knowledge structure operation screen a concept entry whose concept is undefined, and provides a link to the selected concept entry. The knowledge building process ends here.

### [Literature knowledge auto-creation process]

A literature knowledge auto-creation process will be explained next. The literature knowledge management apparatus 100 automatically creates literature knowledge in the following manner.

The concept dictionary handling unit 102c first builds a first edition of the hierarchical concept dictionary into a concept dictionary database 106c by the method described above. Ontology-based technology may be used in this process as the situation demands.

The knowledge structure is then built using the method described above. However, when building the knowledge structure, a link to a portion of the text in the textual document by selecting the text is provided for each concept entry in the hierarchical concept dictionary. The text is randomly selected. The method can be either by creating a cluster of concept entries for which no link has been provided and selecting one concept entry from the cluster, or by searching the entire text by a word that represents each concept and selecting the text that matches the word, or by combing the two methods.

The literature knowledge auto-editing unit 102g applies the process described below to the usable text and auto-creates the knowledge structure. The literature knowledge auto-editing unit 102g first marks on the text stored in the textual document database 106a. The syntax analysis process system is used as the situation demands.

Upon creation of the knowledge structure elements by the method described above, the literature knowledge auto-editing unit 102g applies any one of the following processes on each of the created knowledge structure elements. The literature knowledge auto-editing unit 102g provides a link to the concept entry from the knowledge structure element included in the portion of the text matching the concept entry word in the hierarchical concept dictionary stored in the concept entry database 106c. Then using the existing natural language-based technology, the literature knowledge auto-editing unit 102g searches the processed text cluster for the text resembling text A and obtains text B.

The literature knowledge auto-editing unit 102g then refers to the link of text B to the concept entry and provides a link to a concept entry from the knowledge structure element corresponding to each portion of text A. If no appropriate concept entry can be found for a knowledge structure element, the literature knowledge auto-editing unit 102g provides a link to a concept element whose concept is undefined.

The literature knowledge auto-editing unit 102g then carries out confirmation of the knowledge structure created by the process described about and repeats the auto-creation process. The literature knowledge auto-creation process ends here.

### [Working example]

An example of the processes of an embodiment of the present system constructed in this manner will be explained next. Fig. 13 is a flow chart showing an example of the literature knowledge handling process by the system according the present working example.

The literature knowledge management apparatus 100 first builds the hierarchical concept dictionary into the concept dictionary database 106c by the processes of concept dictionary handling unit 102c and the concept dictionary operation screen creating unit 102f (Step SD-1).

Following this the literature knowledge management apparatus 100 builds a literature knowledge by user manipulation of the operation screens (Step SD-2).

In other words, the textual document handling unit 102a automatically marks the textual documents stored in the textual document database 106a using existing natural language analysis methods such as syntax analysis, etc., and the textual document operation screen creating unit 102d displays this information on the textual document operation screen for the user to check/edit it (Step SD-3)

The knowledge structure handling unit 102b auto-creates a knowledge structure based on the information stored in the textual document database 106a. The knowledge structure operation screen creating unit 102e displays the created knowledge structure on the knowledge structure operation screen for the user to check/edit it (Step SD-4).

The concept dictionary handling unit 102c provides, based on the information stored in the knowledge structure handling unit 102b and the concept dictionary handling unit 102c, links from the knowledge structure elements to the concept entries. The concept dictionary operation screen creating unit 102f displays the concept entries on the concept entry operation screen for the user to check/edit them (Step SD-5).

The concept dictionary handling unit 102c appraises the suitability of a concept entry associated with a given knowledge structure element, that is, whether a concept entry needs to be added (Step-SD-6). If a new concept entry is to be added, the concept dictionary handling unit 102c allows user entry of the concept entry and stores it in the concept dictionary handling unit 102c (Step SD-7).

The literature knowledge handling unit 100 then auto-creates literature knowledge by the process of the literature knowledge auto-editing unit 102g (Step SD-8) and assesses if the accuracy of the information in the created literature knowledge is adequate (Step SD-9). If the information is deemed not adequate, the literature knowledge handling unit 100 returns to Step SD-2 and repeats the entire process from re-building of literature knowledge.

### [Other embodiments]

An embodiment of the present invention was explained so far. However, the appended claims are not to be thus limited and are to be construed as embodying all modifications and alternative constructions that may occur to one skilled in the art which fairly fall within the basic teaching herein set forth.

For instance, the literature knowledge management apparatus 100 is shown to perform the processes as a stand-alone system in the embodiment described so far. However, the literature knowledge management apparatus 100 can also be constructed in such a way that it can process a request from a client terminal set up separate from itself and display the process result on the client terminal.

Among the processes explained pertaining to the embodiment described so far, all the automatic processes can be carried out manually entirely or in part, and all the manual processes can be carried out automatically entirely or in part.

The process sequences, control sequences, names, information that include various types of stored data and search condition parameters, sample screens, and database structures appearing in the text and drawings of this literature can be modified unless otherwise specified.

All the constituent elements of the literature knowledge handling unit 100 represented in the drawings are functional concepts and need not necessarily be represented physically.

For example, the process functions of the servers of the literature knowledge management apparatus 100, particularly the process functions carried out by the control unit can be entirely or partially realized by a central processing unit (CPU) or a program executed by the CPU, or by hardware through wired logic. The program is stored in a storage medium, which will be described in a later section, and is loaded mechanically into the literature knowledge management apparatus 100 as and when required. In other words, a computer program recorded on a ROM or an HD, jointly with the operating system (OS), conveys instructions to the CPU to execute various processes. This computer program is loaded on a RAM and forms the control unit jointly with the CPU.

This computer program may also reside on an application program server connected to the external system 200 via the network and may be entirely or partially downloaded as the situation demands. This computer program, entirely or in part, or the each control unit, entirely or in part, can also be realized as hardware through wired logic.

The program according to the present invention can also be stored in a computer-readable recording medium. The 'recording medium' can be of 'portable' type such as a flexible disk, mag neto optic disk, ROM, EPROM, EEPROM, CD-ROM, MO, DVD, etc., a 'fixed' type such as an internal ROM, RAM, HD, etc., or a 'communication' type that can store the program for a short time through a network such as a LAN, WAN, and the Internet.

The 'program' can be written in any language or written using any description method and is insensitive to the type of source codes and binary codes. The 'program' need not necessarily be a single program and may be broken up into a plurality of modules and libraries or it may accomplish the functions by acting jointly with another program such as the OS (Operating System). Known methods can be employed for fabricating the physical structure required for reading the program from the recording medium in each device according to the present invention, the method of reading, and the method of installation following reading of the program.

The various databases etc. (textual document database 106a through concept dictionary operation screen data 106f) stored in the storage unit 106 are stored either in a memory device such as the RAM and ROM, or a fixed disk device such as the hard disk or a storage device such as the flexible disk, optical disk, etc. and store various programs, tables, files or files required for web pages need for various processes and websites.

The literature knowledge management apparatus 100 may be realized by connecting peripheral devices such as the printer, monitor or image scanner to the known information processing terminal such as the personal computer, workstation, etc. and by installing on this information processing apparatus the software (which includes program, data, etc.) that execute the method according to the present invention.

The physical structure of the literature knowledge management apparatus 100 represented in broken down or integrated forms in the drawings is not restricted to those illustrated. The structure can be broken down or assembled functionally and physically as per requirement. For instance, a different database device may be used for each database and process may be partially realized by CGI (Common Gateway Interface).

The network 300 mutually connects the literature knowledge management apparatus 100 and the external system 200. The network 300 may be the Internet, intranet, LAN (both wired and wireless), VAN, personal computer communication network, public telephone network (both analog and digital), leased line network (both analog and digital), CATV network, IMT 2000 method, mobile circuit-switching network/mobile packet switching network such as GSM method or PDC/PDC-P method, wireless calling network, local wireless network such as bluetooth, PHS network, satellite communication network such as CS, BS, ISBD, etc. In other words, the present system can send and receive various data via any network, wireless or otherwise.

To sum up, according to the present invention, the literature textual document is broken up into bits of knowledge constructed from a single word or a plurality of words. The textual documents are grouped according to the knowledge categories they are grouped into and displayed. A textual document operation screen is created on which the user can select the word(s) constituting the desired knowledge. A knowledge structure is created from relation-type knowledge structure elements and related object-type knowledge structure elements which are associated with the textual document through links and the created knowledge structure is displayed. A knowledge structure operation screen is created on which the user can select the relation-type knowledge structure elements and the related object-type knowledge structure elements for creating the desired knowledge structure. A concept dictionary is created from concept entries that hierarchically define the concepts of the associated knowledge and the created concept dictionary is displayed so that the user can select the concept entry corresponding the desired knowledge. Thus, a literature knowledge management apparatus, a literature knowledge management method, a literature knowledge management program, and a recording medium are realized which can mechanically appraise the similarity of knowledge structure elements by virtue of the knowledge structure elements of the knowledge structure being associated with the relevant concept entries.

According to the present invention, a literature'knowledge management apparatus, a literature knowledge management method, a literature knowledge management program, and a recording medium are realized in which even if a different word is used in the textual document for a particular knowledge structure element, if this word conceptually conveys the same meaning as the knowledge structure element, the computer treats the word as conveying the same meaning as the knowledge structure element.

According to the present invention, a literature knowledge management apparatus, a literature knowledge management method, a literature knowledge management program, and a recording medium are realized in which a correlation can be easily established between knowledge and textual document as the knowledge structure elements of the knowledge structure are associated with the relevant parts of the textual document through links.

According to the present invention, a literature knowledge management apparatus, a literature knowledge management method, a literature knowledge management program, and a recording medium are realized in which the concept entries are linked to the relevant parts of the textual document via the knowledge structure elements since the links to all the concept entries of the hierarchical concept dictionary are provided from the knowledge structure elements.

According to the present invention, a common cursor that indicates an identical knowledge is displayed on the textual document screen, knowledge structure operation screen, and the concept dictionary operation screen and the user selects the desired knowledge by moving this common cursor. This feature simplifies the screen operation process, increases the efficiency of operation, and cuts down the possibility of input errors by the user. In other words, a literature knowledge management apparatus, a literature knowledge management method, a literature knowledge management program, and a recording medium are realized in which typing mistakes while entering text labels of knowledge structure elements, or failure of updation or creation of knowledge structure elements can be brought down and the time taken for the creation of knowledge structure reduced to a great extent.

According to the present invention, a screen-specific cursor that indicates knowledge is displayed on the textual document screen, the knowledge structure operation screen, and the concept dictionary operation screen. When the user selects the desired knowledge by moving this common cursor on one screen, the link information on the other two screens that correspond to the knowledge selected by the user is managed. This feature simplifies the screen operation process and increases the efficiency of operation. Thus, a literature knowledge management apparatus, a literature knowledge management method, a literature knowledge management program, and a recording medium are realized in which mistakes related to operation is reduced to a great extent.

According to the present invention, when knowledge is modified, deleted, or added on any of the three screens, namely, the textual document operation screen, the knowledge structure operation screen, and the concept dictionary operation screen, all the link information corresponding to the knowledge on the other two screens is automatically modified, deleted, or added. Thus, a literature knowledge management apparatus, a literature knowledge management method, a literature knowledge management program, and a recording medium are realized in which auto-editing is possible.

According to the present invention, a literature knowledge management apparatus, a literature knowledge management method, a literature knowledge management program, and a recording medium are realized in which auto-creation of knowledge structure using literature similarity.

(II) An embodiment of the literature knowledge management apparatus, a literature knowledge management method, a literature knowledge management program, and a recording medium will be explained next with reference to the accompanying drawings. The present invention is in no way confined to this embodiment alone.

### [Overview of the present invention]

First an overview of the present invention will be explained followed by the structure and processes. Fig. 14 is a drawing illustrating the fundamental principle of the present invention. Fig. 15 is a drawing illustrating a sample screen simultaneously displaying on the monitor of the literature knowledge management apparatus 1100 a textual document operation screen, a knowledge structure operation screen, and a concept dictionary operation screen. Fig. 16 is a schematic diagram illustrating the processes of the present invention.

The present invention has the following basic features. That is, the present invention syntactically analyses a textual document and creates knowledge constructed from a single word or a plurality of words. It then marks the knowledge, from the broken down knowledge (represented by the underscores in Fig. 14) or from the part-of speech, as a related object (node) or a relation (edge) (represented by 'n' or 'e' shown in Fig. 14). In other words, the present invention treats a textual document as knowledge constructed from a single word or a plurality of words.

The present invention then organizes the knowledge extracted from the textual documents into a knowledge structure (such as a graphical representation constructed from nodes and edges). That is, the present invention defines the knowledge structure in terms of related objects and relations. A knowledge structure is a cluster of a plurality of knowledge structure elements. The knowledge structure elements can either be a relation or a related object. The relation-type knowledge structure element has a link each with a source related object and a target related object, whereas the related object-type knowledge structure element does not have a link. The relation-type knowledge structure element is represented as the edge and the related object-type knowledge structure element is represented as the node.

The present invention allows establishment of at least one link between each of the knowledge structure elements with a portion of the textual document (such as the header of the textual document or the textual portion) from which the knowledge is extracted. The present invention also allows establishment of at least one link between each of the knowledge structure elements with a semantically closest concept entry in a hierarchical concept dictionary.

The present invention includes separate operation screens for display and editing of the textual document, hierarchical concept dictionary, and knowledge structure, and an organizational system by which all the three, namely, the textual document, hierarchical concept dictionary, and knowledge structure work jointly.

The present invention normalizes a search query that is input into a pre-determined Boolean expression (that is, executes Boolean expression normalization shown in Fig. 16).

The present invention retrieves from the processed knowledge structure relation-type knowledge structure elements and/or related-object type knowledge structure elements that match the words entered as a search query (that is, carries out word matching shown in Fig. 16). In other words, the present invention extracts, from a knowledge structure database, knowledge that are a complete match or a partial match to the words in the search query.

As an example of word matching, the present invention retrieves synonyms. That is, according to this invention, the relation-type knowledge structure elements and/or related object-type knowledge structure elements can be retrieved as a search result, the relation-type knowledge structure elements and/or related object-type knowledge structure elements being at least one of the following: (1) related object-type knowledge structure elements that have a predetermined synonym relation and that are linked by the relation-type knowledge structure element, (2) the relation-type knowledge structure elements and/or related object-type knowledge structure elements that belong to the same link graph, (3) the relation-type knowledge structure elements and/or related object-type knowledge structure elements that belong to the same link graph, the number of paths between the elements being less than a predetermined value, and (4) the relation-type knowledge structure elements and/or related object-type knowledge structure elements that belong to the same link graph, the elements being of the same type.

A 'link graph' is a graph that represents the linkage between related-object type knowledge structure elements (nodes) and relation-type knowledge structure elements (edges). For example, in the knowledge structure illustrated in Fig. 14, nodes A, B, and C belong to the same link graph, and nodes D and E belong to the same link graph. A 'path count' is the number of edges forming the shortest route between two nodes. The knowledge structure illustrates in Fig. 14, the path count between nodes A and C is 2.

In the present invention a concept search can be carried out using the concept dictionary. That is, according to the present invention, a corresponding concept entry and/or the concept entries at a level higher and/or lower than the corresponding concept entry can be extracted from the concept dictionary managed by the concept dictionary handling unit, and the relation-type knowledge structure element and/or related object-type knowledge structure elements associated with these extracted concept entries are extracted as a search result.

Furthermore, the relation-type knowledge structure element and/or related object-type knowledge structure elements that constitute a link graph can be retrieved as a search result, the relation-type knowledge structure elements and/or the related object-type knowledge structure elements being at least one of the following: (1) the relation-type knowledge structure elements and/or related object-type knowledge structure elements that have the same topology, (2) the relation-type knowledge structure elements and/or related object-type knowledge structure elements that are associated with a corresponding concept entry and/or the concept entries that are at a higher and/or lower than the corresponding entry extracted from the concept dictionary managed by the concept dictionary handling unit, and (3) the relation-type knowledge structure elements and/or related object type knowledge structure elements with the number of paths between the elements being less than the predetermined value.

'Topology' signifies the type of graph form. For example, in Fig. 14 there are two types of topology - the graph form of nodes A, B, and C and the graph form of nodes D and E.

According to the present invention, a knowledge structure element cluster for each part of the Boolean expression of the search query is retrieved, and in sequence to determine the Boolean product of the parts of the Boolean expression, the knowledge structure that meets at least one of the following conditions is retrieved: (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with these extracted concept entries as a search result (that is, executes boolean expression matching illustrated in Fig. 16).

The present invention creates a syntax structure from the search query input in natural language (that is, executes syntax structure creation illustrated in Fig. 16). In other words, the present invention carries out syntax analysis of the parts of speech using the known natural language analysis technology and creates a syntax structure.

The present invention creates a knowledge structure from the created syntax structure (that is, executes literature knowledge creation illustrated in Fig. 16). In other words, the present invention expresses the knowledge structure in the form of nodes (related object-type knowledge structure elements) and edges (relation-type knowledge structure elements).

The present invention appraises similarity between link graphs in the created knowledge structure, gets cluster of link graphs that are similar, and either determines the aggregate of the retrieved link graphs that are similar or determines the Boolean product of the combination of the link graphs that are similar (that is, executes appraisal of similarity of link graphs illustrated in Fig. 16).

The present invention creates a search result by converting the format of the search result in accordance with the search result into at least one of the following predetermined formats, namely, relation-type knowledge structure elements, related object-type knowledge structure elements, literatures, and concept entries.

### [System structure]

The structure of the present system will be explained next. Fig. 17 is a block diagram of a system in which the present invention is applied. Only parts relevant to the present invention are schematically represented in Fig. 17. This system schematically includes a literature knowledge management apparatus 1100, an external system 1200 that provides external databases pertaining to theses, magazines, newspapers, patent literatures, etc. and external analysis programs for carrying out literature search, etc, and a network 1300 that allows communication between the literature knowledge management apparatus 1100 and the external system 1200.

The network 1300 in Fig. 17 that mutually connects the literature knowledge management apparatus 1100 and the external system 1200 may, for instance, be the Internet.

The external system 1200 in Fig. 17 is connected to the literature knowledge management apparatus 1100 via the network 1300 and provides the user with external databases of literatures pertaining to theses, magazines, newspapers, patents, etc, and websites that execute external analysis programs, etc.

The external system 1200 may be a WEB server or an ASP server which may be constructed from commonly available information processing devices such as the workstation, personal computer, etc. and other accessories. The functions of the external system 1200 are realized by the hardware such as the CPU, disk device, memory device, input device, output device, communication control device, etc. that constitute the external system 1200 and the programs controlling these hardware.

The literature knowledge management apparatus 1100 in Fig. 17, schematically includes a control unit 1102 such as the CPU which controls the entire literature knowledge management apparatus 1100, a communication control interface unit 1104 connected to a communication device (not shown) such as a router that is connected to a communication path, and the like, an input/output control interface unit 1108 that is connected to an input device 1112 and an output device 1114, and a storage unit 1106 that stores databases, tables, and the like. All the parts mentioned above are connected for mutual communication via one communication path or another. The literature knowledge management apparatus 1100 as a whole is connected, via the communication device such as the router or via a wired or wireless communication path such as a dedicated line, to the network 1300 enabling communication.

The storage unit 1106 that stores the databases and tables (textual document database 1106a through query knowledge structure database 1106g) is a fixed disk device and stores all types of programs, tables, files, databases, web page files, etc. required for various processes.

The textual document database 1106a of the storage unit 1106 is a database of textual documents of literatures of various kinds. Fig. 18 is a drawing illustrating a sample of information stored in the textual document database 1106a.

The information stored in the textual document database 1106a, as shown in Fig. 18, includes the following in a mutually associated manner, namely, textual document ID (identifier) that distinguishes every textual document, word ID that distinguishes every word, knowledge ID that distinguishes every bit of knowledge, type information that indicates whether the knowledge ID that distinguishes knowledge, and the knowledge is a relation type or a related object type, link information pertaining to link to the textual document, etc.

The textual document database 1106a may be an external database that can be accessed through the internet or may be an in-house database created by copying external databases and adding one's own information to them, and storing them as original textual documents.

The knowledge structure database 1106b stores information, etc. related to the knowledge structure. Fig. 19 is a drawing illustrating a sample of information stored in the knowledge structure database 1106b.

The information stored in the knowledge structure database 1106b, as shown in Fig. 19, includes the following in a mutually associated manner, namely, textual document ID, knowledge ID that distinguishes node information used for defining nodes, connection source knowledge ID and connection target knowledge ID as edge information used for defining edges, etc.

The concept dictionary database 1106c stores information, etc. related to the concept dictionary. Fig. 20 is a drawing illustrating a sample of information stored in the concept dictionary database 1106c.

The information stored in the concept dictionary database 1106c, as shown in Fig. 20, includes the following in a mutually associated manner, namely, concept entry ID that distinguishes concept entries, concept entry description that describes the content of concept entries, the knowledge ID linked to the concept entry, the link information of the knowledge ID, parent concept entry ID corresponding to the parent level (parent concept), child concept entry ID list which is a list of IDs of child entries corresponding to the child level (child concept), etc.

The textual document operation screen data 1106d stores information, etc. related to the textual document operation screen.

The knowledge structure operation screen data 1106e stores information, etc. related to the knowledge structure operation screen.

The concept dictionary operation screen data 1106f stores information, etc. related to the concept dictionary operation screen.

The query knowledge structure database 1106g stores knowledge structure obtained by converting into literature knowledge the syntax structure created from the search query input in natural language. The contents of this database are the same as the contents of the knowledge structure database 1106b illustrated in Fig. 19 (search query replaces textual document).

Returning to Fig. 17, the communication control interface unit 1104 controls the communication between the literature knowledge management apparatus 1100 and the network 1300 (or a communication device such as the router, and the like). In other words, the communication control interface unit 1104 carries out communication with another terminal through the communication path.

The input/output control interface unit 1108 in Fig. 17 controls the input device 1112 and the output device 1114. The output device 1114 may be a monitor (including television) or speakers (the output device 1114 is hereinafter referred to as monitor). The input device 1112 may be keyboard, mouse, microphone, etc. The monitor and the mouse together function as a pointing device.

The control unit 1102 in Fig. 17 has an internal memory for storing control programs such as the OS (Operating System) and programs and data required for regulating various processes, and using these programs carries out information processing for execution of various processes. The control unit 1102 schematically comprises a textual data handling unit 1102a, a knowledge structure handling unit 1102b, a concept dictionary handling unit 1102c, a textual document operation screen creating unit 1102d, a knowledge structure operation screen creating unit 1102e, a concept dictionary operation screen creating unit 1102f, a literature knowledge auto-editing unit 1102g, an operation screens linking unit 1102h, and a search processing unit 1102m.

The textual document handling unit 1102a handles textual documents by separating them into knowledge constructed from one word or a plurality of words. The knowledge structure handling unit 1102b handles the knowledge structure constructed from the relation-type knowledge structure elements and related object-type knowledge structure elements that are linked to the textual documents. The concept dictionary handling unit 1102c handles the concept dictionary constructed from the concept entries that hierarchically define the concept of the linked knowledge. The textual document operation screen creating unit 1102d displays textual documents by grouping them according to the knowledge categories the textual document handling unit 1102a separates the documents into, and creates a screen for the user to select words that constitute the desired knowledge.

The textual document handling unit 1102a handles textual documents by separating them into knowledge constructed from one word or a plurality of words. The knowledge structure handling unit 1102b handles the knowledge structure constructed from the relation-type knowledge structure elements and related object-type knowledge structure elements that are linked to the textual documents. The concept dictionary handling unit 1102c handles the concept dictionary constructed from the concept entries that hierarchically define the concept of the linked knowledge. The textual document operation screen creating unit 1102d displays textual documents by grouping them according to the knowledge categories the textual document handling unit 1102a separates the documents into, and creates a screen for the user to select words that constitute the desired knowledge.

The knowledge structure operation screen creating unit 1102e displays the knowledge structure handled by the knowledge structure handling unit, and creates a screen for the user to select the desired relation-type knowledge structure elements and the related object-type knowledge structure elements that construct the knowledge structure. The concept dictionary operation screen creating unit 1102f displays the concept dictionary that is handled by the concept dictionary handling unit and creates a screen for the user to select the concept entry corresponding to the desired knowledge. If the knowledge displayed on the textual document operation screen or the knowledge structure operation screen or the concept dictionary operation screen is modified or deleted or if there is an addition to the knowledge on any of these screens, or if there is a specification by the user for auto-creation, the literature knowledge auto-editing unit 1102g, automatically modifies, deletes, or adds link information on all the screens on which the knowledge appears.

An operation screens linking unit 1102h links the operations of all the operation screens. A common cursor control unit 1102i displays a common cursor that points to identical knowledge in the textual document operation screen, knowledge structure operation screen, or concept dictionary operation screen, and allows the user to select the desired knowledge by moving the common cursor. A screen-specific cursor control unit 11 02j displays a screen-specific cursor that points to a single bit of knowledge in the textual document operation screen, knowledge structure operation screen, or concept dictionary operation screens, and allows the user to select the desired knowledge by moving the screen-specific cursor and manages the link information pertaining to the knowledge indicated by the screen-specific cursor on a different screen other than the one on which the screen-specific cursor appears. A knowledge building unit 1102k adds the extracted knowledge to the different databases of the storage unit 1106.

A search processing unit 1102m searches the database based on the search query input by the user, and includes a Boolean expression normalizing unit 1102n, a word matching unit 1102p, a Boolean expression matching unit 1102q, a result converting unit 1102r, a syntax structure creating unit 1102s, a literature knowledge creating unit 1102t, a link graph similarity appraising unit 1102u, a graph combining unit 1102v, and a result screen creating unit 1102w.

The Boolean expression normalizing unit 1102n normalizes the search query to a predetermined Boolean expression. The word matching unit 1102p retrieves from the relation-type knowledge structure elements and/or related object-type knowledge structu re elements from the knowledge structure created by the knowledge structure handling unit those that match the words in the search query that is input. The Boolean expression matching unit 1102q obtains knowledge structure element cluster for each part of the Boolean expression of the search query. Then, in order to obtain the product of the parts of the Boolean expression, the Boolean expression matching unit 1102q retrieves from each knowledge structure element cluster the knowledge structure that meets at least one of the following conditions, namely, (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with the corresponding concept entry extracted from the concept dictionary processed by the concept dictionary handling unit and/or the concept entry at a higher level/lower level than the corresponding concept entry.

The result converting unit 1102r creates a search result by converting to a predetermined format at least one of the following retrieved as a result of the search - relation-type knowledge structure elements, related object-type knowledge structure elements, literatures, and concept entries. The syntax structure creating unit 1102s creates a syntax structure from the search query input in natural language. The literature knowledge creating unit 1102t creates a knowledge structure from the syntax structure created by the syntax structure creating unit. The link graph similarity appraising unit 1102u appraises the similarity between the link graphs in the knowledge structure created by the literature knowledge creating unit and retrieves clusters of link graph that are similar. The graph combining unit 1102v determines an aggregate of the link graphs retrieved by the link graph similarity appraising unit 1102u that are similar, or a Boolean product of the combination of the link graphs that are similar. The result screen creating unit 1102w creates a search result display screen. The details of the processes of each of the parts mentioned above will be explained in a later section.

### [Processes of the system]

An example of the processes of the system according to the embodiment constructed in this way will be explained next with reference to the accompanying drawings.

### [Literature knowledge creating process]

A literature knowledge creating process will be explained first with reference to Fig. 15.

The textual document handling unit 1102a of the literature knowledge management apparatus 1100 retrieves from the textual document database 1106a the textual document specified by the user. The textual document operation screen creating unit 1102d creates the data pertaining to the specified textual document required to be displayed on the textual document operation screen and outputs the created data to the output device 1114 via the input/output control interface unit 1108.

The concept dictionary operation screen creating unit 1102f of the literature knowledge management apparatus 1100 creates, based on the information retrieved by the concept dictionary handling unit 1102c from the concept dictionary database 1106c, the data required for the concept dictionary operation screen and outputs it to the output device 1114 via the input/output control interface unit 1108.

The knowledge structure handling unit 1102b of the literature knowledge management apparatus 1100 first creates, based on the information retrieved from the textual document database 1106a, a model knowledge structure database 1106b. The knowledge structure operation screen creating unit 1102e then creates the data required for the knowledge structure operation screen and outputs it to the output device 1114 via the input/output control interface unit 1108.

These operation screens and their interlinking will be explained next with reference to Fig. 15.

Fig. 15 is a drawing illustrating a sample screen simultaneously displaying on the monitor of the literature knowledge management apparatus 1100 the textual document operation screen, the knowledge structure operation screen, and the concept dictionary operation screen. The textual document operation screen, for instance, comprises a common cursor MA1-1, a screen-specific cursor MA2-2, a vertical scroll bar MA1-3, and a horizontal scroll bar MA1-4.

The textual document comprises a plurality of words (represented in Fig. 15 by (W₁ through W₁₀). The text on the textual document operation screen can be marked as bits of knowledge (in Fig. 15 underscored word represents one bit of knowledge) constructed from either a single word or a plurality of words, and these bits of knowledge can be marked either as nodes or as edges. The knowledge, which forms the smallest unit of the textual document, can be expanded or shortened on the textual document operation screen.

As shown in Fig. 15, both the text and the marks are simultaneously displayed on the textual document operation screen. However, the mode of display may be any of those mentioned below. The type or range of the mark, and the cursor for specifying the modification of the type or range of the mark can have different types of display properties (such as color, underscore, bold, highlight, blinking, font size, font type, shadow, dot, italics, stylized, tag text string of SGMUXML or special symbols) as long as the same display property characterizes a single feature of the text. The only instance when plural display properties can characterize a single feature of the text is when a combination of display properties that can be used simultaneously (such as underscore, dot, stylized text, etc.) is used to characterize a feature of the text. An interface (such as a radio button, pull-down list, tab, etc.) for switching between the series of marks may also be used.

When the display area is changed by the user by manipulating the vertical scroll bar MA1-3 and the horizontal scroll bar MA1-4, the textual document operation screen creating unit 1102d creates a textual document operation screen corresponding to the changed display area and outputs it to the output device 1114.

When the desired word or knowledge displayed on the output device 1114 is selected using the common cursor MA1-1 or the screen-specific cursor MA1-2 and modified by the user, the textual document handling unit 1102a stores the modified word or knowledge in a predetermined storage area such as the textual document database 1106a or the like.

The concept dictionary operation screen in Fig. 15 comprises a common cursor MC1-1, a screen-specific cursor MC1-2, a vertical scroll bar MC1-3, and a horizontal scroll bar MC1-4.

The concept dictionary operation screen displays the abstract/concrete relationship between the concept entries by arranging them in a hierarchy, and allows addition, deletion, or editing of the concept entries. The concept entries may be displayed in any of the following display modes. The first step is to set the direction in which the upper and lower limits of the degree of abstraction are to be expressed - either vertical or horizontal. Then the concept entries and the relationships between them may be displayed as a tree structure with the concept entries representing the vertices and the relationships between them representing the branches or they may be displayed as a network. Alternatively, the concept entries may be mapped on to a tree structure of the outline processor and displayed.

When the display area is changed by the user by manipulating the vertical scroll bar MC1-3 and the horizontal scroll bar MC1-4, the concept dictionary operation screen creating unit 1102f creates a concept dictionary operation screen corresponding to the changed display area and outputs it to the output device 1114.

When the desired concept entry displayed on the output device 114 is selected using the common cursor MB-1 or the screen-specific cursor MB-2 and modified by the user, the concept dictionary handling unit 1102c stores the modified concept entry in a predetermined storage area such as the concept dictionary database 1106c or the like.

When the display area is changed by the user by manipulating the vertical scroll bar MC1-3 and the horizontal scroll bar MC1-4, the concept dictionary operation screen creating unit 1102f creates a concept dictionary operation screen corresponding to the changed display area and outputs it to the output device 1114.

When the desired concept entry displayed on the output device 1114 is selected using the common cursor MC1-1 or the screen-specific cursor MC1-2 and modified by the user, the concept dictionary handling unit 1102c stores the modified concept entry in a predetermined storage area such as the concept dictionary database 1106c or the like.

The knowledge structure operation screen in Fig. 15 comprises a common cursor MB1-1, a screen-specific cursor MB1-2, a vertical scroll bar MB1-3, and a horizontal scroll bar MB1-4.

The knowledge structure operation screen displays related object-type knowledge structure elements (nodes) and the relation-type knowledge structure elements (edges) that can be established between the nodes and allows addition, deletion, and editing of the knowledge structure elements. The knowledge structure elements may be displayed by means of any existing graphical display mode. The text label within the nodes need not necessarily have the same text strings present in the text on the textual document operation screen to which the nodes are linked.

When the display area is changed by the user by manipulating the vertical scroll bar MB1-3 and the horizontal scroll bar MB1-4, the knowledge structure operation screen creating unit 1102e creates a knowledge structure operation screen corresponding to the changed display area and outputs it to the output device 1114.

When the knowledge structure element displayed on the output device 1114 is selected using the common cursor MB1-1 or the screen-specific cursor MB1-2 and modified by the user, the knowledge structure handling unit 1102b stores the modified knowledge structure element in a predetermined storage area such as the knowledge structure database 1106b or the like.

### [Operation screens linking process]

An operation screens linking process will be explained next. The operation screens linking unit 1102h links the textual document operation screen, the concept dictionary operation screen, and the knowledge structure operation screen illustrated in Fig. 15 by enabling the operation explained below.

The common cursor control unit 1102i moves the common cursors of the textual document operation screen and the knowledge structure operation screen in conjunction. In other words, when the user moves the common cursor on the textual document operation screen to a position that has a link to a knowledge structure element, the common cursor control unit 1102i moves the common cursor on the knowledge structure operation screen to the relevant knowledge structure element. Conversely, when the user moves the common cursor on the knowledge structure operation screen to a knowledge structure element that has a link to a portion of the text, the common cursor control unit 1102i moves the common cursor on the textual document operation screen to the relevant portion of the text.

Similarly, the common cursor control unit 1102i moves the common cursors of the concept dictionary operation screen and the knowledge structure operation screen in conjunction. In other words, when the user moves the common cursor on the concept dictionary operation screen to a concept dictionary entry that has a link to a knowledge structure element, the common cursor control unit 1102i moves the common cursor on the knowledge structure operation screen to the relevant knowledge structure element. Conversely, when the user moves the common cursor on the knowledge structure operation screen to a knowledge structure element that has a link to a concept dictionary entry, the common cursor control unit 1102i moves the common cursor on the concept dictionary operation screen to the relevant concept dictionary entry.

The operation screens linking unit 1102h, by means of the screen-specific cursor control unit 1102j, provides or removes the link from a knowledge structure element at the screen-specific cursor (MB1-2) position on the knowledge structure operation screen to the portion of the marked text at the screen-specific cursor (MA1-2) position on the textual document operation screen in the following manner.

The screen-specific cursor control unit 1102j first provides or removes the link from the knowledge structure element at the screen-specific cursor (MB1-2) position on the knowledge structure operation screen to the concept entry at the screen-specific cursor (MC1-2) position on the concept dictionary operation screen in the following manner.

When the type or the range of the mark on the textual document operation screen is modified by the user, the screen-specific cursor control unit 1102j carries out one of the following processes depending on the type or setting of the mark. 1) Removes the link from the knowledge structure element to the marked portion of the textual document. 2) Removes the link from the knowledge structure element to the marked portion of the textual document, moves the screen-specific cursor to the knowledge structure element whose link has been removed, and prompts for establishment of a link to the textual document. 3) Removes the link or prompts for establishment of a link only when the range of the mark is modified. 4) Shifts the link to the post-modified marked text containing most of the words in the range of mark prior to the modification of the range of mark. 5) Carries out the shift of link described in 4), moves the cursor to the re-linked knowledge structure element, and, according to the setting, prompts for confirmation of re-linking.

When a concept entry is modified or deleted on the concept dictionary operation screen by the user, the operation screens linking unit 1102h carries out one of the following processes depending on the setting. 1) Removes the link from the knowledge structure element to the concept entry. 2) Removes the link from the knowledge structure element to the concept entry, moves the cursor to the knowledge structure element whose link has been removed, and prompts for establishment of a link to the concept entry. 3) Re-links to a concept entry which is close to the original concept entry (such as an ancestor, sibling, or descendent). 4) Carries out this re-linking, moves the cursor to the knowledge structure element whose link has been shifted, and, according to the setting, prompts for confirmation of the re-linking.

If the user wants to create a new knowledge structure by specifying two types of marks, the operation screens linking unit 1102h indicates the conversion to relation-type knowledge structure element by one type of mark (say A) and to related object-type knowledge structure element by the other type of mark (say B) and goes about creating the knowledge structure in the following way. If the marks are connected in the pattern B-A-B', the operation screens linking unit 1102h creates the related object-type knowledge structure elements b1 and b2 and links them respectively to the portion of the text marked B and the portion of the text marked B'. The operation screens linking unit 1102h then creates the relation-type knowledge structure element a and links it to the portion of the text marked A. The operation screens linking unit 1102h then provides a link to b1 as the connection origin knowledge structure element of the relation-type knowledge structure element a, and to b2 as the connection target knowledge structure element of the relation-type knowledge structure element a. If the mark pattern is A-A', or if a sentence begins with A', or if the sentence ends with A, the operation screens linking unit 11 02h treats it as the content being absent and the portion of the text marked B being just before the portion of the text marked A' or just after the portion of the text marked A, and applies the first procedure. If the mark pattern is B-B', the operation screens linking unit 1102h treats it as the content being absent, and the portion of the text marked A being between the portions of the text marked B and B', and applies the first procedure. The operation screens linking unit 1102h then leaves a recording of the operation in a predetermined storage area of the storage unit 1106. The operation screens linking process ends here.

### [Knowledge building process]

A knowledge building process will be explained next. The procedure of knowledge building using the present system is as follows.

The textual document is first marked. The textual document can be marked according to system standards on the textual document operation screen or syntax tags maybe affixed by using a syntax analysis process system. In the case of the latter, the result of the process may be confirmed on the textual document operation screen and edited as the situation demands.

A model of the knowledge structure is created by the operation screens linking process carried out by the operation screens linking unit 1102h. The marks to be converted to the relation-type knowledge structure element and the relation object-type knowledge structure element are determined by any of the following methods. The mark type that is mostly affixed to knowledge structure elements that represent what looks like relationships is considered as marking relation-type knowledge structure elements and the mark type that is mostly affixed to knowledge structure elements that represent what looks like related objects is considered as marking related object-type knowledge structure elements. If marks are affixed using a syntax analysis process system, the mark type that is mainly affixed to verbs are taken to mark relation-type knowledge structure elements and the mark type that is mainly affixed to nouns or noun phrases.

The knowledge building unit 1102k carries out confirmation or editing of the knowledge structure elements on the knowledge structure operation screen. The knowledge building unit 1102k refers to the textual document operation screen, according to requirement, causes co-movement of the common cursors. The knowledge building unit 1102k deletes the knowledge structure elements that are considered not to have a building value, and adds knowledge structure elements that have a building value even though they may not be present in the textual document. If the knowledge structure elements that are added have a close relationship with any portion of the text in the textual document, the knowledge building unit 1102k provides a text link to the knowledge structure elements.

The knowledge building unit 1102k changes the display properties (such as text labels, size, position, shape, color, etc.) of the knowledge structure elements on the knowledge structure operation screen. By jointly using the knowledge structure operation screen and the concept dictionary operation screen, the knowledge building unit 1102k provides for every knowledge structure element a link to a concept entry using the concept entry link operation function.

If no appropriate concept entry is found for any knowledge structure element, the knowledge building unit 1102k carries out one of the following functions. The knowledge building unit 1102k creates a concept entry suitable for the knowledge structure element on the knowledge structure operation screen, and provides a link to the created concept entry. Alternatively, the knowledge building unit 1102k selects from the knowledge structure operation screen a concept entry whose concept is undefined, and provides a link to the selected concept entry. The knowledge building process ends here.

### [Literature knowledge auto-creation process]

A literature knowledge auto-creation process will be explained next. The literature knowledge management apparatus 1100 automatically creates literature knowledge in the following manner.

The concept dictionary handling unit 1102c first builds a first edition of the hierarchical concept dictionary into a concept dictionary database 1106c by the method described above. Ontology-based technology may be used in this process as the situation demands.

The knowledge structure is then built using the method described above. However, when building the knowledge structure, a link to a portion of the text in the textual document by selecting the text is provided for each concept entry in the hierarchical concept dictionary. The text is randomly selected. The method can be either by creating a cluster of concept entries for which no link has been provided and selecting one concept entry from the cluster, or by searching the entire text by a word that represents each concept and selecting the text that matches the word, or by combing the two methods.

The literature knowledge auto-editing unit 1102g applies the process described below to the usable text and auto-creates the knowledge structure. The literature knowledge auto-editing unit 1102g first marks on the text stored in the textual document database 1106a. The syntax analysis process system is used as the situation demands.

Upon creation of the knowledge structure elements by the method described above, the literature knowledge auto-editing unit 1102g applies any one of the following processes on each of the created knowledge structure elements. The literature knowledge auto-editing unit 1102g provides a link to the concept entry from the knowledge structure element included in the portion of the text matching the concept entry word in the hierarchical concept dictionary stored in the concept entry database 1106c. Then using the existing natural language-based technology, the literature knowledge auto-editing unit 1102g searches the processed text cluster for the text resembling text A and obtains text B.

The literature knowledge auto-editing unit 1102g then refers to the link of text B to the concept entry and provides a link to a concept entry from the knowledge structure element corresponding to each portion of text A. If no appropriate concept entry can be found for a knowledge structure element, the literature knowledge auto-editing unit 1102g provides a link to a concept element whose concept is undefined.

The literature knowledge auto-editing unit 1102g then carries out confirmation of the knowledge structure created by the process described about and repeats the auto-creation process. The literature knowledge auto-creation process ends here.

### [Search process]

A search process will be explained next with reference to Fig. 21, Fig. 22, Fig. 25, and Fig. 26. It is presumed here that the necessary knowledge has been extracted and organized from the literatures/information being searched. There are several steps involved in the method disclosed in the present invention. A pattern of the preconditions is given below since the precondition for each step is different.
(P-1) Knowledge structures corresponding to all the textual documents (for individual literature) are present.
(P-2) Every knowledge structure element is correlated with a hierarchical concept dictionary entry.
(P-3) Both the preconditions (P-1) and (P-2) hold true.

The steps can be of two types in accordance with the type of search query.
(Step-1) Search query is in the form of a string of words or a string of words connected by Boolean logic
(Step-2) Search query is in natural language

The search processes in the case of Step-1 and Step-2 will be explained next.
[Step-1: Process when the search query is in the form of a string of words or a string of words connected by Boolean logic]

Fig. 25 is a flow chart illustrating an example of a search query in the form of a string of words or a string of words connected by Boolean logic in an embodiment of the present invention
(Step-11): The user inputs the search query.
(Step-11-1): The word or words input as the search query is normalized to a Boolean expression. In other words, if the words in the search query are separated by spaces and commas the Boolean expression normalization unit 1102n normalizes the input search query by replacing these punctuations with predetermined Boolean expressions such as Boolean product (AND). For example, if the default connecting Boolean logic is AND, and the search query which is input is w_1, w_2, w_3,...., w_n, the Boolean expressions normalization unit 1102n normalizes the search query to w_1 AND w_2 AND w_3 AND....AND w_n. The default Boolean logic can be AND or OR and either can be selected using a radio button GUI, and the like.
(Step 11-2): Let us suppose that either the precondition (P-1), or the precondition (P-2), or the precondition (P-3) holds true. The word matching unit 1102p processes the word or words t excluding the Boolean operators as per any one of the subsequent steps (Step-11-2-*) or as per any combination thereof in any sequence, and gets the knowledge structure element cluster KS(t) for all the word or words t. The step is either specified by the user or is set by the system.
(Step-11-2-a): The word matching unit 1102p accesses the knowledge structure database 1106b and sets to KS(t) all the knowledge structure elements that are either a complete match or are a partial match (depending on search specification of the user) of the word t.
(Step-11-2-b): It is presupposed that the synonym relation of the knowledge structure elements is defined by any one of the following methods.
- The elements that have the synonym relation are determined from amongst the relation-type elements of the knowledge structure and the elements that are linked by this relation-type element are defined as synonyms. This relation-type element may either be specified by the user or may be part of the hierarchical concept dictionary, or may be set by the system administrator.
- If two knowledge structure elements belong to the same link graph and the number of paths between them is less than n, the knowledge structure elements are defined as synonyms. n here is an integer not less than 1 and may be specified by the user or by the system administrator.
- If two knowledge structure elements belong to the same link graph and are of the same element type (nodes or edges), they are defined as synonyms.

The word matching unit 1102p carries out the processes of (Step-11-2-b-∗) described below. The 'link graph' mentioned above can either be a result obtained by searching the link information from the entire knowledge structure or a result obtained by searching the link information for each literature. This selection can also be a user-specified or system-specified default value. For example, if the knowledge structure includes a structure such as <term_1 >--<is a>--<term_2>, and the search query input is <term_1>, then search is also carried out for <term_2>. This expansion process can be repeated for any number of levels. The number of levels can be set from the search GUI or may be embedded in the search expression on an ad hoc basis. When embedding in the search expression, it is written as "<term>(n)". The word expansion in this case is repeated up to level n.
(Step-11-2-b-1): The word expansion repetition count n (1 or greater) is retrieved from user-specified or system-specified default value. (Step-11-2-b-2): Value {t} is assigned to word cluster T.
(Step-11-2-b-3): The processes of (Step-11-2-b-3-∗) given below are carried out for each element t_i of the cluster T.
(Step-11-2-b-3-1): Knowledge structure element cluster KS_1(t_i) is obtained by carrying out the above (Step-11-2-a). All the elements of the cluster KS_1(t_i) are added to the cluster KS(t).
(Step-11-2-b-3-2): The knowledge structure elements that have synonym relation with each element of the cluster KS_1(t_i) are obtained in cluster KS_2(t_i).
(Step-11-2-b-3-3): All the words of the knowledge structure elements in the cluster KS_(t_i) are added to the cluster T_1).
(Step-11-2-b-3-4): T is taken as T_1, and the word expansion repetition count n is taken as n-1.
(Step-11-2-b-3-5): Process returns to (Step-11-2-b-3) if the repetition count n is greater than 1.
(Step-11-2-c): Let us suppose that the precondition (P-2) holds true. The word matching unit 1102p carries out (Step-11-2-a) on the word t to obtain knowledge structure element cluster KS_3(t). The word matching unit 1102p carries out the following processes of (Step-11-2-c-∗) given below on each element ks_i of the cluster KS_3(t).
(Step-11-2-c-1): Hierarchical concept entry c corresponding to the knowledge structure element ks_i is obtained.
(Step-11-2-c-2): Any one of the processes of (Step-11-2-c-2-∗) is carried out next.
(Step-11-2-c-2-a): Knowledge structure element cluster KS(c) associated with the entry c is obtained and added to KS(t).
(Step-11-2-c-2-b): The process of (Step-11-2-c-2-a) is carried out for all the concept dictionary entries below the level of entry c.
(Step-11-2-c-2-a-c): After climbing up to level n from entry c, the process (Step-11-2-c-2-b) is carried out for the entry at level n.
(Step-11-2-d): Let is assume that the precondition (P-2) holds true. The process of (Step-11-2-a) is carried out for the word t and a knowledge structure element cluster KS_3(t) is obtained. The word matching unit 1102p carries out the processes of (Step-11-2-d-∗) for each element ks_1 of the cluster KS_3(t). For instance, if there is a plurality of ks of the construction <term_x>--<is a>--<term_1 > in the knowledge structure (where <term_x> represents a plurality of words that includes <term_1 >), and the search query input is <term_1 > then search is also carried out for <term_x>. The knowledge structure ks will also be specified by an even more complicated graph pattern and hierarchical concept dictionary.
(Step-11-2-d-1): The knowledge structure cluster KS_4(ks_i), which forms a graph structure that includes the knowledge structure elements ks_i, is obtained. As in the process of (Step-11-2-b), there are two ways of defining links - by taking into account the entire knowledge structure, or by doing it for each literature - and this may be a user-specified or system-specified default value.
(Step-11-2-d-2): The similarity between knowledge structure clusters is defined by any one of the steps of (Step-11-2-d-2-∗) given below.
(Step-11-2-d-2-a): The knowledge structure clusters that have the same cluster KS_4(ks_i) and the same node-edge relation (topology) and in which the pair of elements that correspond to the same hierarchical concept dictionary entry are defined as synonyms.
(Step-11-2-d-2-b): The definition of synonym is as described in step (Step-11-2-d-a). However, when it comes to establishing correlation between a knowledge structure element and the hierarchical concept dictionary entry, there is a choice between establishing correlation to all the concept dictionary entries below the specific concept entry or to all the concept dictionary entries below the node after going up n levels, as in the process of (Step-11-2-c-2). This can be either a user-specified or system-specified default value.
(Step-11-2-d-2-c): The definition of synonym is as in the steps (Step-11-2-d-2-a) and (Step11-2-d-2-b). However, the determination of whether the pair of knowledge structure elements corresponds to the same hierarchical concept dictionary entry is carried out by any one of steps (Step-11-2-d-2-c-∗) given below or a combination thereof.
(Step-11-2-d-2-c-a): The knowledge structure element cluster KS_5 is specified either by the user or by the system administrator, and the correlation of only the knowledge structure elements included in KS_5 is checked.
(Step-11-2-d-2-c-b): The hierarchical concept entry cluster SC_1 is determined either by the user or by the system administrator, and the correlation of only the knowledge structure elements to SC_1 is checked.
(Step-11-2-d-2-c-c): Partial cluster KS_6(ks_i,n) that is in the n neighborhood of the cluster KS_4(ks_i) is obtained, and the correlation of only the knowledge structure elements that are included in KS_6 is checked. n is either a user-specified or system-specified default value.
(Step-11-2-d-2-c-d): The determination method is the same as in step (Step-11-2-d-2-a) or step (Step-11-2-d-2-b). However, the determination of whether the topology of the knowledge structures are similar is carried out by any one of the steps (Step 11-2-d-2-d-∗) given below or a combination thereof.
(Step-11-2-d-2-d-a): The knowledge structure element cluster KS_5 is specified either by the user or by the system, and the topology of only the knowledge structure elements included in KS_5 is checked. (Step-11-2-d-2-d-b): The hierarchical concept entry cluster SC_1 is specified either by the user or by the system, and the topology of only the knowledge structure elements that correspond to SC_1 is checked.
(Step-11-2-d-2-d-c): Partial cluster KS_6(ks_i,n) that is in the n neighborhood of the cluster KS_4(ks_i) is obtained, and the topology of only the knowledge structure elements that are included in KS_6 is checked. n is either a user-specified or system-specified default value.
(Step-11-2-d-2-e): The definition of synonym is as in the step (Step-11-2-d-2-c) or (Step-11-2-d-2-d). However, the proximity setting constant is calculated by any of the methods (Step-11-2-d-2-e.∗) given below.
(Step-11-2-d-2-e-a): If the knowledge structure element ks_i is a related object-type knowledge structure element, n_n is set as n. If the knowledge structure element ks_i is a relation-type knowledge structure element, n_r is set as n. n_n and n_r are either user-specified or system-specified default values.
(Step-11-2-d-2-e-b): According to user specification or system specification, attribute value n_i is assigned to all the hierarchical concept dictionary entries.
(Step-11-2-d-3): Partial knowledge structure clusters that resemble KS_4(ks_i) is retrieved from the knowledge structure, and the knowledge structure elements from each partial knowledge structure that are topologically equivalent to ks_i are added to KS(t).
(Step-11-3): The Boolean expression matching unit 1102q carries out the processes of (Step-11-3-∗) given below for the parts of the normalized Boolean expression that are linked by the Boolean operator AND (for instance A and B are the parts of the normalized Boolean expression A AND B), and obtains the knowledge structure element cluster KS_and as a search result.
(Step-11-3-1): The knowledge structure element cluster that matches the condition of part A of the Boolean expression is taken as KS_a, and the knowledge structure element cluster that matches the condition of part A of the Boolean expression is taken as KS_b.
(Step-11-3-2): The processes of (Step-11-3-2-∗) given below are carried out on the combination of all the elements of cluster KS_a and all the elements of cluster KS_b.
(Step-11-3-2-1): The elements of cluster KS_a are taken as ksa_i, and the elements of cluster KS_b are taken as ksb_j.
(Step-11-3-2-2): If the elements ksa_i and ksb_j belong to the same literature, the elements (ksa_i,ksb_j) are added to an interim result cluser KS_intermim.
(Step-11-3-3): The conditions for all the elements of the interim result cluster KS_interim are refined by any of the steps (Setp-13-3-3-∗) given below or a combination thereof. For example, when processing the Boolean-form search query <a> AND <b>, it can be defined that the knowledge structure elements that match part <a> of the Boolean expression and the knowledge structure element that match part <b> of the Boolean expression are considered to satisfy the conditions only if they satisfy the following conditions.
- They should belong to the same document
- They should belong to a document of a specific pattern
- They should belong to a graph structure of a specific pattern
- They should be within a specific distance in the graph structure (Step-11-3-3-a): Of the elements ksi(ksa_i, ksb_j) of the cluster KS_interim, only those whose knowledge structure elements ksa_i and ksb_j that belong to the same document which satisfies any of the conditions in (Step-11-3-3-a-∗) or a combination thereof are retained in the cluster KS_interim.
(Step-11-3-3-a-a): A document that belongs to a document collection which is either user-specified or system-specified.
(Step-11-3-3-a-b): Of the elements ksi(ksa_i, ksb_j) of the cluster KS_interim, only those whose knowledge structure elements ksa_i and ksb_j that belong to the link graph which satisfies any of the conditions of (Step-11-3-3-b-∗) given below or a combination thereof are retained in the cluster KS_interim.
(Step-11-3-3-b-a): A graph that has links to the entire knowledge structure.
(Step-11-3-3-b-b): A graph that has links within a literature.
(Step-11-3-3-b-c): A graph satisfying the conditions of (Step-11-3-3-b-a) or (Step-11-3-3-b-b) which matches the search expression specified by the user or the system.
(Step-11-3-3-c): Let us suppose that the precondition (P-2) holds true. Of the elements ksi(ksa_i, ksb_j) of the cluster KS_interim, only those whose knowledge structure elements ksa_i and ksb_j satisfy any of the conditions of (Step-11-3-3-c-∗) given below or a combination thereof are retained in the cluster KS_interim.
(Step-11-3-3-c-a): Let us suppose that the hierarchical concept dictionary entry corresponding to the knowledge structure element ksa_i is hc_i and the hierarchical concept dictionary entry corresponding to the knowledge structure element ksb_j is hc_j. The common parent entry of the entries hc_i and hc_j in the hierarchical structure of the hierarchical concept dictionary is taken as hc_p. The condition is considered satisfied if the entry hc_p belongs to the hierarchical concept dictionary entry cluster specified by the user or the system. Fig. 21 is a schematic diagram illustrating the process of (Step-11-3-3-c-a).
(Step-11-3-3-c-b): Same method is applied as in the condition (Step-11-3-3-a) mentioned above. However, instead of ksa_i and ksb_j belonging to a single document, the condition is considered satisfied if both ksa_i and ksb_i belong to either the knowledge structure element cluster group GKS(ksa_i) or the knowledge structure element cluster group GKS(ksb_j). The knowledge structure element cluster group GKS(ks) is created by the processes of (Step-11-3-3-c-b-∗) given below. Fig. 22 is a schematic diagram illustrating the process of (Step-11-3-3-c-b).
(Step-11-3-3-c-b-1): All the knowledge structure elements belonging to the same document as the knowledge structure elements ks are taken as knowledge structure element cluster KS_same, and the knowledge structure element cluster group GKS is taken as being equal to {KS_same}.
(Step-11-3-3-c-b-2): The processes of (Step-11-3-3-c-b-2-∗) are carried out for each element ks_i of the knowledge structure element cluster KS_same.
(Step-11-3-3-c-b-2-1): The hierarchical concept dictionary entry corresponding to the knowledge structure element ks_i is taken as hc_i.
(Step-11-3-3-c-b-2-2): All the knowledge structure elements corresponding to the hierarchical concept dictionary entry hc_i is taken as KS(hc_i).
(Step-11-3-3-c-b-2-3): The processes of (Step-11-3-3-c-b-2-3-∗) are carried out for each element ks_j of the knowledge structure element cluster KS(hc_i).
(Step-11-3-3-c-b-2-3-1): The knowledge structure elements ks_i of the knowledge structure element cluster KS_same are replaced by the knowledge structure elements and this knowledge structure element cluster is named KS_same'.
(Step-11-3-3-c-b-2-3-2): The knowledge structure element cluster KS_same' is added to the knowledge structure element cluster group GKS.
(Step-11-3-3-c-c): The knowledge structure element cluster group is obtained from each link graph (knowledge structure elements) of the process of (Step-11-3-3-b) by the same method as in the process (Step-11-3-3-c-b), and the condition is considered satisfied if both the elements ksa_i and ksb-j belong to either the cluster group GKS(ksa_i) or the cluster group GKS(ksb_j).
(Step-11-3-3-c-d): The knowledge structure element ksa_i or/and ksb_j are substituted in the search expression in either the condition in (Step-11-3-3-c-b) or (Step-11-3-3-c-b), and the distance parameters n_1, n_2, and so on are specified as a reference of the positions of these elements. The condition is appraised by the search expression that determines the parameter value by the correlation with the distance parameter group n_1, n_2, and so on which is determined from the hierarchical concept dictionary entry pair which is a user-specified or system-specified default value.
(Step-11-4): The Boolean expression matching unit 1102b processes the Boolean expressions of OR and NOT by the general information processing method, and obtains the final result cluster KS_r.
(Step-11-5): The result converting unit 1102r converts the knowledge structure cluster into a suitable form as per the requirement and presents it as the search result. If no conversion takes place, the knowledge structure cluster is presented as the search result.
(Step-11-5-a): If either the precondition (P-1) or the precondition (P-3) holds true, the literature or (and) the portions that are hit are presented as the search result.
(Step-11-5-b): If either the precondition (P-2) or the precondition (P-3) holds true, the concept entries are presented as the search result. The result converting unit 1102w creates a result screen and outputs it to the output device 1114. This ends the processes involved for search query presented in the form of a string of words or a string of words connected by Boolean logic.

### [STEP-2; Process when the search query is a sentence in natural language]

Fig. 26 is a flow chart illustrating an example of a sea rch query in the form of a natural language sentence. In the case of a natural language search query, the search process follows the steps (Step-12-∗) given below, as shown in Fig. 26.
(Step-12): The user inputs the search query.
(Step-12-1): The syntax structure creating unit 1102s creates, using a disclosed technology, a syntax structure from the input search query sentence.
(Step-12-2): The literature knowledge creating unit 1102t creates a knowledge structure KS_q from the syntax structure created in (Step-12-1).
(Step-12-3): The link graph similarity appraising unit 1102u appraises, as in the step of (Step-11-2-d-2) described above, the similarity between link graphs among the link graphs g_k in the knowledge structure KS_q and obtains link graph clusters CG(g_k).
(Step-12-4): The graph combining unit 1102v combines, by any of the following steps of (Step-12-4-∗) given below or any combination thereof, each of the clusters CG(g_k), and obtains the knowledge structure element cluster KS_r as the final result.
(Step-12-4-a): Obtains KS_r by adding all the knowledge structure elements of the each knowledge structure element clusters CG(g_k). (Step-12-4-b): Obtains KS_r by performing an AND operation on each of the knowledge structure element clusters CG(g_k). The AND operation is carried out in a manner similar to the one in the step of (Step-11-3) described above.
(Step-12-5): The result converting unit 1102r obtains the appropriate search result. The result screen creating unit 1102w creates a result screen and outputs it to the output device 1114. This ends the search process.

### [Working example]

An example of the processes of an embodiment of the present system constructed in this manner will be explained next with reference to Fig. 23 and Fig. 24. Both Fig. 23 and Fig. 24 are flow charts showing an example of the literature knowledge handling process by the system according to the present working example.

In this working example, the search query is taken to have the form of 'AVB' (where A and B are protein names, and V is a single-word verb in English), and the search processes (from Step-11 to Step11-3-3-c-b described above) of the literature knowledge management apparatus 1100 is explained. The knowledge structure element cluster KS_and(A, V, B) is obtained as a result of these search processes.

### [Other embodiments]

An embodiment of the present invention was explained so far. However, the appended claims are not to be thus limited and are to be construed as embodying all modifications and alternative constructions that may occur to one skilled in the art which fairly fall within the basic teaching herein set forth.

For instance, the literature knowledge management apparatus 1100 is shown to perform the processes as a stand-alone system in the embodiment described so far. However, the literature knowledge management apparatus 1100 can also be constructed in such a way that it can process a request from a client terminal set up separate from itself and display the process result on the client terminal.

Among the processes explained pertaining to the embodiment described so far, all the automatic processes can be carried out manually entirely or in part, and all the manual processes can be carried out automatically entirely or in part.

The process sequences, control sequences, names, information that include various types of stored data and search condition parameters, sample screens, and database structures appearing in the text and drawings of this literature can be modified unless otherwise specified.

All the constituent elements of the literature knowledge handling unit 1100 represented in the drawings are functional concepts and need not necessarily be represented physically.

For example, the process functions of the servers of the literature knowledge management apparatus 1100, particularly, the process functions carried out by the control unit 1102 can be entirely or partially realized by a central processing unit (CPU) or a program executed by the CPU, or by hardware through wired logic. The program is stored in a storage medium, which will be described in a later section, and is loaded mechanically into the literature knowledge management apparatus 1100 as and when required. In other words, a computer program recorded on a ROM or an HD, jointly with the operating system (OS), conveys instructions to the CPU to execute various processes. This computer program is loaded on a RAM and forms the control unit jointly with the CPU.

This computer program may also reside on an application program server connected to the external system 1200 via the network and may be entirely or partially downloaded as the situation demands. This computer program, entirely or in part, or each control unit, entirely or in part, can also be realized as hardware through wired logic.

The program according to the present invention can also be stored in a computer-readable recording medium. The 'recording medium' can be of 'portable' type such as a flexible disk, magneto optic disk, ROM, EPROM, EEPROM, CD-ROM, MO, DVD, etc., a 'fixed' type such as an internal ROM, RAM, HD, etc., or a 'communication' type that can store the program for a short time through a network such as a LAN, WAN, and the Internet.

The 'program' can be written in any language or written using any description method and is insensitive to the type of source codes and binary codes. The 'program' need not necessarily be a single program and may be broken up into a plurality of modules and libraries or it may accomplish the functions by acting jointly with another program such as the OS (Operating System). Known methods can be employed for fabricating the physical structure required for reading the program from the recording medium in each device according to the present invention, the method of reading, and the method of installation following reading of the program.

The various databases etc. (textual document database 1106a through query knowledge structure database 1106g) stored in the storage unit 1106 are stored either in a memory device such as the RAM and ROM, or a fixed disk device such as the hard disk or a storage device such as the flexible disk, optical disk, etc. and store various programs, tables, files or files required for web pages need for various processes and websites.

The literature knowledge management apparatus 1100 may be realized by connecting peripheral devices such as the printer, monitor or image scanner to the known information processing terminal such as the personal computer, workstation, etc. and by installing on this information processing apparatus the software (which includes program, data, etc.) that execute the method according to the present invention.

The physical structure of the literature knowledge management apparatus 1100 represented in broken down or integrated forms in the drawings is not restricted to those illustrated. The structure can be broken down or assembled functionally and physically as per requirement. For instance, a different database device may be used for each database and process may be partially realized by CGI (Common Gateway Interface).

The network 1300 mutually connects the literature knowledge management apparatus 1100 and the external system 1200. The network 1300 may be the Internet, intranet, LAN (both wired and wireless), VAN, personal computer communication network, public telephone network (both analog and digital), leased line network (both analog and digital), CATV network, IMT 2000 method, mobile circuit-switching network/mobile packet switching network such as GSM method or PDC/PDC-P method, wireless calling network, local wireless network such as bluetooth, PHS network, satellite communication network such as CS, BS, ISBD, etc. In other words, the present system can send and receive various data via any network, wireless or otherwise.

To sum up, according to the present invention, the literature textual document is broken down into bits of knowledge constructed from a single word or a plurality of words. The textual documents are grouped according to the knowledge categories they are broken down into and displayed. A textual document operation screen is created on which the user can select the word(s) forming the desired knowledge. A knowledge structure is created from relation-type knowledge structure elements and related object-type knowledge structure elements which are associated with the textual document through links and the created knowledge structure is displayed. A knowledge structure operation screen is created on which the user can select the relation-type knowledge structure elements and the related object-type knowledge structure elements for creating the desired knowledge structure. A concept dictionary is created from concept entries that hierarchically define the concepts of the linked knowledge and the created concept dictionary is displayed so that the user can select the concept entry corresponding to the desired knowledge. Thus, a literature knowledge management apparatus, a literature knowledge management method, a literature knowledge management program, and a recording medium are realized which can mechanically appraise the similarity of knowledge structure elements by virtue of the knowledge structure elements of the knowledge structure being associated with the relevant concept entries through links.

According to the present invention, a literature knowledge management apparatus, a literature knowledge management method, a literature knowledge management program, and a recording medium are realized in which even if a different word is used in the textual document for a particular knowledge structure element, if this word conceptually conveys the same meaning as the knowledge structure element, the computer treats the word as conveying the same meaning as the knowledge structure element.

According to the present invention, a literature knowledge management apparatus, a literature knowledge management method, a literature knowledge management program, and a recording medium are realized in which a correlation can be easily established between knowledge and textual document as the knowledge structure elements of the knowledge structure are associated with the relevant parts of the textual document through links.

According to the present invention, a literature knowledge management apparatus, a literature knowledge management method, a literature knowledge management program, and a recording medium are realized in which the concept entries are linked to the relevant parts of the textual document via the knowledge structure elements since the links to all the concept entries of the hierarchical concept dictionary are provided from the knowledge structure elements.

According to the present invention, it is possible to retrieve relation-type knowledge structure elements and/or a related object-type knowledge structure elements matching the words included in the input search query from the processed knowledge structure. Consequently, a literature knowledge management apparatus, a literature knowledge management method, a literature knowledge management program, and a recording medium are realized which enables extraction of knowledge which is a complete or partial match for the search query.

Thus, a literature knowledge management apparatus, a literature knowledge management method, a literature knowledge management program, and a recording medium are realized that can carry out a remarkably faster search as compared to searching textual documents.

According to this invention, the relation-type knowledge structure elements and/or related object-type knowledge structure elements are retrieved as a search result, the relation-type knowledge structure elements and/or related object-type knowledge structure elements being at least one of the following: (1) related object-type knowledge structure elements that have a predetermined synonym relation and that are linked by the relation-type knowledge structure element, (2) the relation-type knowledge structure elements and/or related object-type knowledge structure elements that belong to the same link graph, (3) the relation-type knowledge structure elements and/or related object-type knowledge structure elements that belong to the same link graph, the number of paths between the elements being less than a predetermined value, and (4) the relation-type knowledge structure elements and/or related object-type knowledge structure elements that belong to the same link graph, the elements being of the same type. Thus, a literature knowledge management apparatus, a literature knowledge management method, a literature knowledge management program, and a recording medium are realized which can effectively search synonym and can vastly improve the recurrence rate while maintaining the search precision.

According to the present invention, a corresponding concept entry and/or the concept entries at a level higher and/or lower than the corresponding concept entry is extracted from the concept dictionary managed by the concept dictionary handling unit, and the relation-type knowledge structure element and/or related object-type knowledge structure elements associated with these extracted concept entries are extracted as a search result. Thus a literature knowledge management apparatus, a literature knowledge management method, a literature knowledge management program, and a recording medium are realized which can refine the search result by concept entries and can vastly improve the search precision.

According to the present invention, the relation-type knowledge structure element and/or related object-type knowledge structure elements that constitute a link graph are retrieved as a search result, the relation-type knowledge structure elements and/or the related object-type knowledge structure elements being at least one of the following: (1) the relation-type knowledge structure elements and/or related object-type knowledge structure elements that have the same topology, (2) the relation-type knowledge structure elements and/or related object-type knowledge structure elements that are associated with a corresponding concept entry and/or the concept entries that are at a higher and/or lower than the corresponding entry extracted from the concept dictionary managed by the concept dictionary handling unit, and (3) the relation-type knowledge structure elements and/or related object type knowledge structure elements with the number of paths between the elements being less than the predetermined value. Consequently, a literature knowledge management apparatus, a literature knowledge management method, a literature knowledge management program, and a recording medium are realized which can refine the search result by concept entries, etc among knowledge structure elements included in the same link graph and can vastly improve the search precision.

According to the present invention, a literature knowledge management apparatus, a literature knowledge management method, a literature knowledge management program, and a recording medium are realized in which the format of the Boolean expression of the input search query can be standardized, as the search query is normalized into a predetermined Boolean format, and due to this standardization of the Boolean expression the processes following it can be made efficient.

According to the present invention, a knowledge structure element cluster for each part of the Boolean expression of the search query is retrieved, and in sequence to determine the Boolean product of the parts of the Boolean expression, the knowledge structure that meets at least one of the following conditions is retrieved: (1) the knowledge structure that is in the same literature, (2) the knowledge structure that is in the text that belongs to a predetermined collection of texts, (3) the knowledge structure that is in the text that matches a predetermined structure search expression, (4) the knowledge structure that is continuous, (5) the knowledge structure that is continuous within a single literature, and (6) the knowledge structure that is associated with these extracted concept entries as a search result. Consequently, a literature knowledge management apparatus, a literature knowledge management method, a literature knowledge management program, and a recording medium are realized which can refine the search result by literatures, graph structures, concept entries, etc. when determining the AND part of the Boolean expression and can vastly improve the search precision.

According to the present invention, a literature knowledge management apparatus, a literature knowledge management method, a literature knowledge management program, and a recording medium are realized which can also be adapted for natural language-based search, as a syntax structure is created from the search query input in natural language.

According to the present invention, a literature knowledge management apparatus, a literature knowledge management method, a literature knowledge management program, and a recording medium are realized by which similarity between knowledge structures can be searched, as the knowledge structure is created from the syntax structure, and by which a remarkably faster and more thorough search can be carried out as compared to searching words.

According to the present invention, the similarity between link graphs of the created knowledge structure is appraised. Graph links that are similar are clustered. The aggregate of link graphs that are similar, or the Boolean product of the combination of link graphs that are similar is obtained. Consequently, a literature knowledge management apparatus, a literature knowledge management method, a literature knowledge management program, and a recording medium are realized by which a thorough and fast knowledge search result compiling process is realized.

According to the present invention, the search result is converted to at least one of the following predetermined formats, namely, relation-type knowledge structure element, related object-type knowledge structure element, literature, or concept entry according to the search result obtained. Consequently, a literature knowledge management apparatus, a literature knowledge management method, a literature knowledge management program, and a recording medium are realized by which a search result that is converted to any suitable format can be output.

(III) An embodiment of the dictionary information processing apparatus, a dictionary information management method, a dictionary information management program, and a recording medium according to the present will be explained next with reference to the accompanying drawings. The present invention is in no way confined to this embodiment alone.

Literature database search system related to natural sciences such as biology, medicine, life sciences has been used in the following explanations. However, the present invention may be applied to search system related to any field.

### [Overview of the present invention]

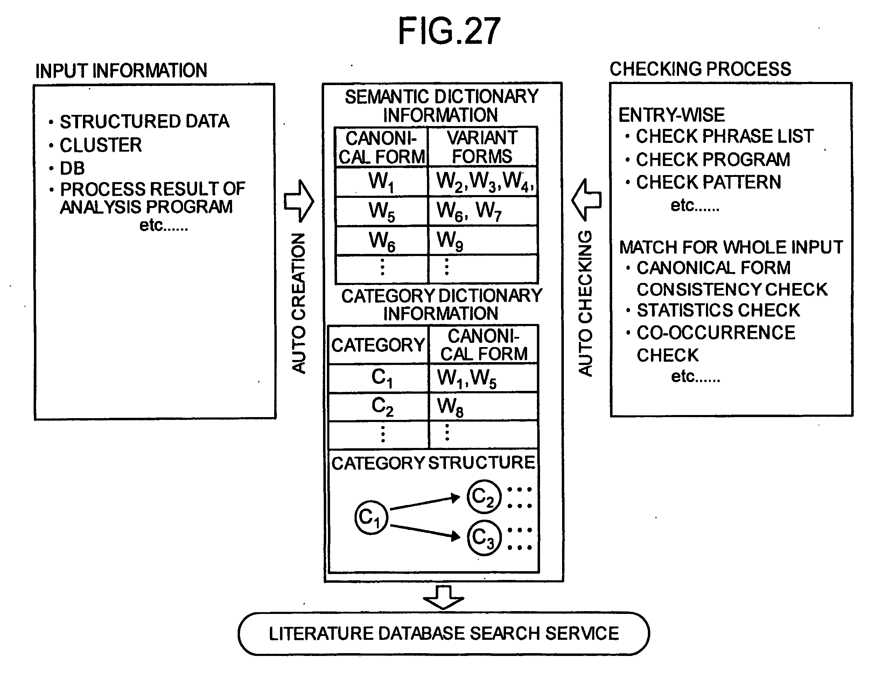

First an overview of the present invention will be explained followed by the structure and processes. Fig. 27 is a drawing illustrating the fundamental principle of the present invention.

The present invention has the following basic features. That is, the present invention creates, based on pre-existing structured data, clusters, databases, and analysis program process result, etc., semantic dictionary information that defines the relation between a canonical form and variant forms of each term, and category dictionary information that defines the category to which the canonical form belongs.

The present invention further checks, automatically or semi-automatically, the semantic dictionary information and/or category dictionary information by means of various checking methods. The checking method may involve checking each entry of the semantic dictionary information and category dictionary information based on phrase list, program, pattern, etc. used for checking. Alternatively, checking for consistency of the canonical form, statistics, co-occurrence, etc. for the entire dictionary information may also be carried out.

The creation and checking of dictionary information will be explained in detail in a later section.

### [System structure]

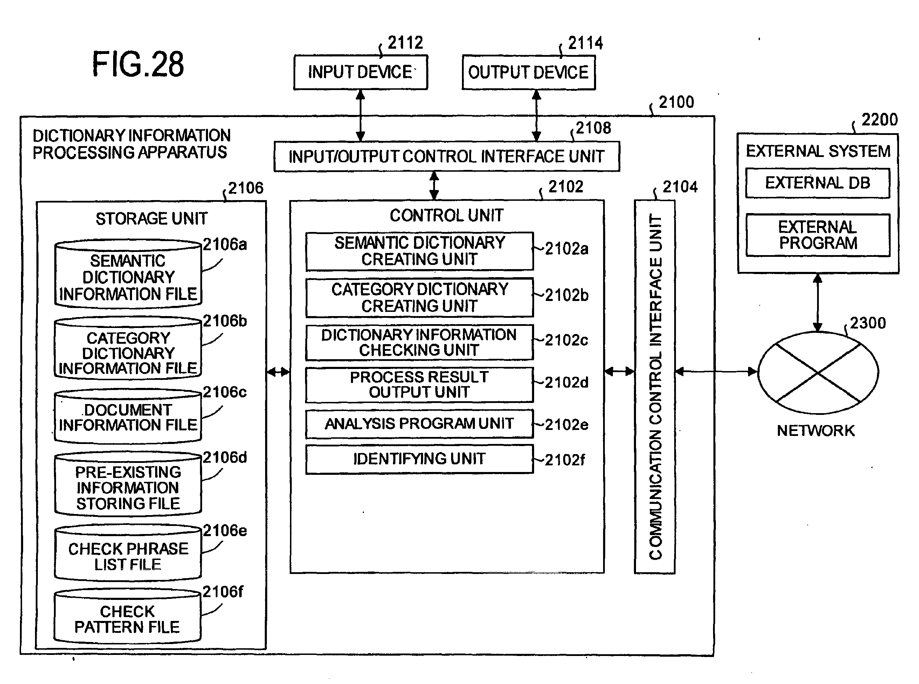

The structure of the present system will be explained next. Fig. 28 is a block diagram of a system in which the present invention is applied. Only parts relevant to the present invention are schematically represented in Fig. 28. This system schematically includes a dictionary information process apparatus 2100, an external system 2200 that provides external databases pertaining to literature information, sequence information, solid structure information, etc., external programs such as search service, etc, and a network 2300 that allows communication between the dictionary information process apparatus 2100 and the external system 2200.

The network 2300 in Fig. 28 that mutually connects the dictionary information processing apparatus 2100 and the external system 2200 may, for instance, be the Internet.

The external system 2200 in Fig. 28 is connected to the dictionary information processing apparatus 2100 via the network 2300 and provides the user with external databases pertaining to sequence information, etc, and websites that execute external programs such as programs that execute homology search, motif search, etc.

The external system 2200 may be a WEB server or an ASP server which may be constructed from commonly available information processing devices such as the workstation, personal computer, etc. and other accessories. The functions of the external system 2200 are realized by the hardware such as the CPU, disk device, memory device, input device, output device, communication control device, etc. that constitute the external system 2200 and the programs controlling these hardware.

The dictionary information processing apparatus 2100 in Fig. 28, schematically includes a control unit 2102 such as the CPU which controls the entire dictionary information processing apparatus 2100, a communication control interface unit 2104 connected to a communication device (not shown) such as a router that is connected to a communication path, and the like, an input/output control interface unit 2108 that is connected to an input device 2112 and an output device 2114, and a storage unit 2106 that stores databases, tables, and the like. All the parts mentioned above are connected for mutual communication via one communication path or another. The dictionary information processing apparatus 2100 as a whole is connected, via the communication device such as the router or via a wired or wireless communication path such as a dedicated line, to the network 2300 enabling communication.

The storage unit 2106 that stores the databases and tables (semantic dictionary information file 2106a through check pattern file 2106f) is a fixed disk device and stores all types of programs, tables, files, databases, web page files, etc. required for various processes.

The semantic dictionary information file 2106a of the storage unit 2106 stores semantic dictionary information that defines the correlation between the canonical form and the variant forms of each term.

The category dictionary information file 2106b stores the category dictionary information that defines the category to which the canonical form belongs.

The document information file 2106c stores information such as document information, etc. which is to be analyzed.

The pre-existing information storing file 2106d stores information pertaining to pre-structured data, cluster, databases, program process result to be analyzed, dictionary, etc.

The check pattern file 2106f stores patterns that are used while checking.

Returning to Fig. 28, the communication control interface unit 2104 controls the communication between the dictionary information processing apparatus 2100 and the network 2300 (or a communication device such as the router, and the like). In other words, the communication control interface unit 2104 carries out communication with another terminal through the communication path.

The input/output control interface unit 2108 in Fig. 28 controls the input device 2112 and the output device 2114. The output device 2114 may be a monitor (including television) or speakers (the output device 2114 is hereinafter referred to as monitor). The input device 2112 may be keyboard, mouse, microphone, etc. The monitor and the mouse together function as a pointing device.

The control unit 2102 in Fig. 28 has an internal memory for storing control programs such as the OS (Operating System) and programs and data required for regulating various processes, and using these programs carries out information processing for execution of various processes. The control unit 2102 schematically comprises a semantic dictionary creating unit 2102a, a category dictionary creating unit 2102b, a dictionary information checking unit 2102c, a process result output unit 2102d, an analysis program unit 2102e, and an identifying unit 2102f.

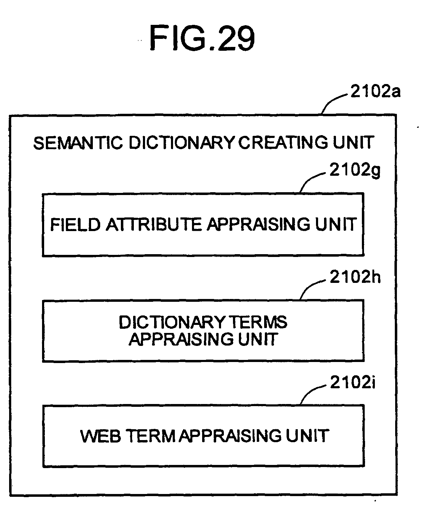

The semantic dictionary creating unit 2102a creates semantic dictionary information that defines the correlation between the canonical form and the variant forms of each term. As shown in Fig. 29, the semantic dictionary creating unit 2102a comprises a field attribute appraising unit 2102g, a dictionary term appraising unit 2102h, and Web term appraising unit 2102i. The field attribute appraising unit 2102g assesses, based on the attribute information of each field constituting the pre-existing database, whether the each of the fields constituting the pre-existing database is to be considered as being a canonical form, a variant form, or a field that is not to be used. The dictionary term appraising unit 2102h assesses, based on the terms (terms such as keywords, abbreviations, synonyms, related words, etc. entered in dictionary information) entered in the pre-existing dictionary information, whether each of the terms is to be considered as being a canonical form, a variant form, or a term that is not to be used. The Web term appraising unit 2102i assesses, based on the terms entered in the pre-existing Web information, whether each of the terms is to be considered as being a canonical form, a variant form, or a term that is not to be used.

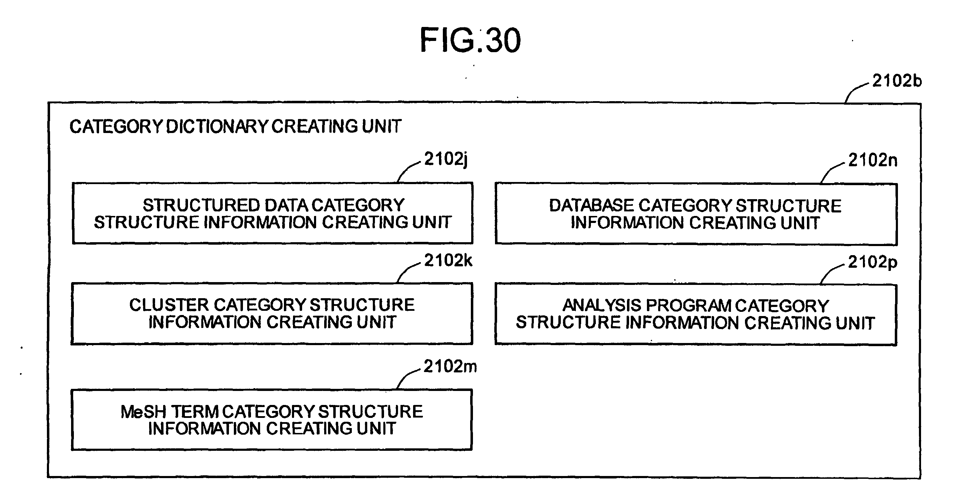

The category dictionary creating unit 2102b creates category dictionary information that defines the category to which the canonical form belongs. As shown in Fig. 30, the category dictionary creating unit 2102b comprises a structured data category structure information creating unit 21 02j, a cluster category structure information creating unit 2102k, a MeSH term category structure information creating unit 2102m, a database category structure information creating unit 2102n, and an analysis program category structure information creating unit 2102p. The structured data category structure information creating unit creates category structure information based on the pre-existing structured data. The cluster category structure information creating unit 2102k creates, based on the pre-existing cluster data, category structure information in which the root node represents the cluster data name and the leaf nodes represent the cluster element names. The MeSH term category structure information creating unit 2102m creates category structure information based on the MeSH term data. The database category structure information creating unit 2102n creates, based on the pre-existing database, category structure information in which the root node represents the pre-existing database or the field name of specific field, and the leaf nodes represent the data that is stored in the database or in the field. The analysis program category structure information creating unit 2102p creates, based on the process result data of the pre-existing analysis program, category structure information in which the root node represents the pre-existing process program name and the leaf nodes represent the process resu It data.

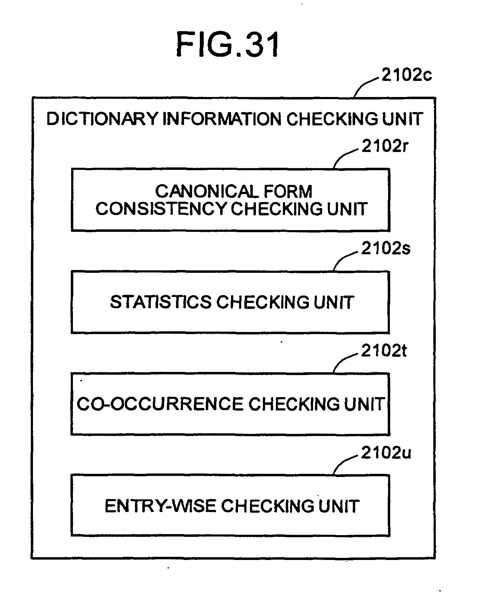

The dictionary information checking unit 2102c checks the information stored in the semantic dictionary information and/or category dictionary information. As shown in Fig. 31, the dictionary information checking unit 2102c comprises a canonical form consistency checking unit 2102r, a statistics checking unit 2102s, a co-occurrence checking unit 2102t, and an entry-wise checking unit 2102u. The canonical form consistency checking unit 2102r checks whether the variant form entered in the semantic dictionary is entered as a different canonical form. The statistics checking unit 21 02s carries out entry-related and usage-related statistical processing of canonical forms, variant forms, categories stored in the semantic dictionary information and/or category dictionary information. The co-occurrence checking unit 2102t carries out co-occurrence checking which involves calculating the degree of similarity based on the co-occurrence relation pertaining to canonical forms, variant forms, and categories. The entry-wise checking unit 2102u checks, based on check phrase list or check program or check pattern, each entry of the semantic dictionary information and/or category dictionary information.

The process result output unit 2102d outputs the process result to the output device 2114.

The analysis program unit 2102e carries out execution of various types of analysis programs.

The identifying unit 2102f identifies a term, its lower case form and plural form as representing one and the same canonical form.

The processes carried out by each of these parts will be explained in detail in a later section.

### [Processes of the system]

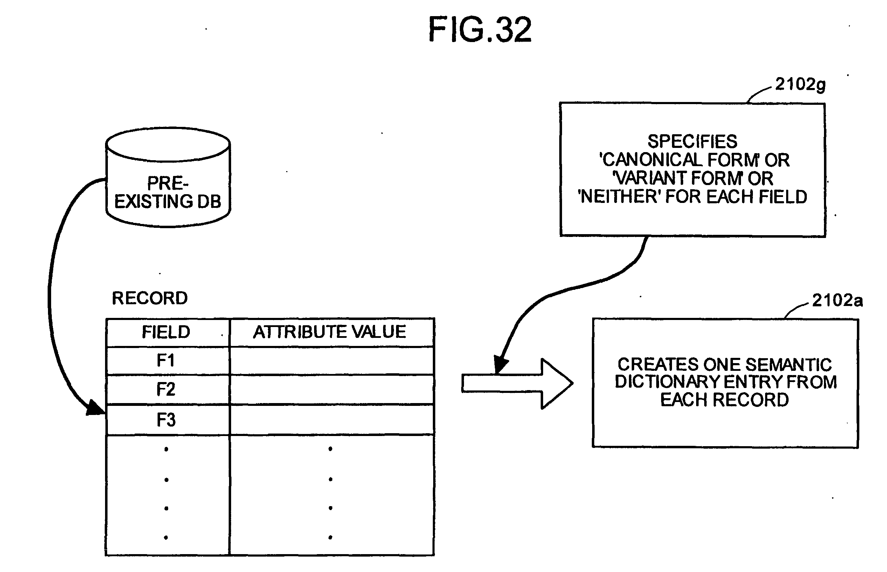

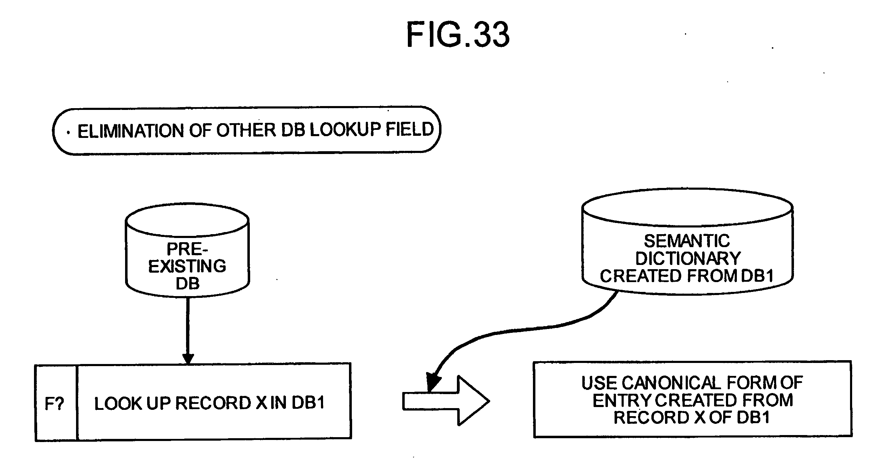

A process of automatic creation of semantic dictionary information using the pre-existing database will be explained next with reference to Fig. 32 and Fig. 33, which are schematic diagrams illustrating the process of automatic creation of semantic dictionary information using the pre-existing database in the system according to an embodiment of the present invention.

As shown in Fig. 32, the field attribute appraising unit 2102g of the dictionary information processing apparatus 2100 assesses, based on the attribute information of each field constituting the pre-existing database stored in the pre-existing information storing file 2106d, etc. or in the external database etc. of the external system 2200, whether each of the fields is to be considered as being a canonical form, a variant form, or a field that is not to be used.

The semantic dictionary creating unit 2102a of the dictionary information processing apparatus 2100 stores, based on the appraisal result, creates the semantic dictionary information from each field constituting the pre-existing database, and stores the semantic dictionary information in the semantic dictionary information file 2106a. If the pre-existing database pertains to genome information database, semantic dictionary information may be created in which the fields, such as record ID, that are clearly correlated with a record, or Accession No., that are clearly correlated with a gene, may be considered as variant forms of the record and gene which are considered to be the canonical forms.

As shown in Fig. 33, if the record stored in the pre-existing database refers to a record (record X in the example shown in Fig. 33) of another database (Database 1 in the example shown in Fig. 33), the semantic dictionary information created based on the record being referred (record X of database 1 in the example in Fig. 33) is referred. Thus, the pre-existing semantic dictionary information is effectively used.

The process of automatic creation of semantic dictionary information using pre-existing database ends here.

### [Automatic creation of semantic dictionary information using the pre-existing dictionary information]

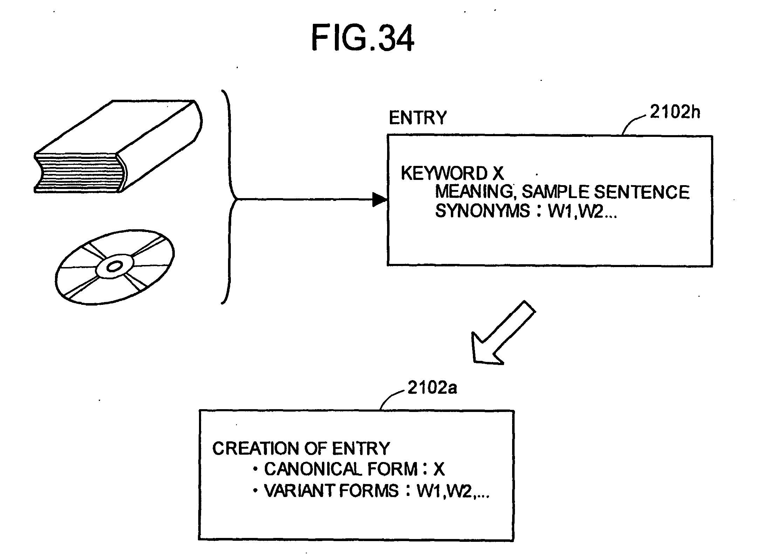

A process of automatic creation of semantic dictionary information using the pre-existing dictionary information is explained next with reference to Fig. 34, which is a schematic diagram illustrating the process of automatic creation of semantic dictionary information using the pre-existing dictionary information in the system according to an embodiment of the present invention.

The dictionary term appraising unit 2102h of the dictionary information processing apparatus 2100 assesses, based on the terms (keywords, abbreviations, synonyms, related words, etc. included in the dictionary) entered in the pre-existing dictionary information stored in the pre-existing dictionary information storing file 2106d, whether each of the terms is to be considered as being a canonical form, a variant form, or a term that is not to be used. For instance, the keyword in the dictionary information is considered by the dictionary term appraising unit 2102h as being a 'canonical form', the synonyms, etc. are considered as being a 'variant form', and meaning, sample sentences, etc. as 'not to be used'.

The semantic dictionary creating unit 2102a of the dictionary information processing apparatus 2100 creates, based on the result of the appraisal, semantic dictionary information from the terms of the pre-existing dictionary information, and stores the semantic dictionary information in the semantic dictionary information file 2106a. The source of the dictionary information may be an electronic dictionary or a regular dictionary which has been converted to an electronic one using a conventional text conversion tool (OCR) by means of the input device 2112 such as a scanner.

The process of automatic creation of semantic dictionary information using the pre-existing dictionary information ends here.

### [Process of automatic creation of semantic dictionary information using the pre-existing Web information]

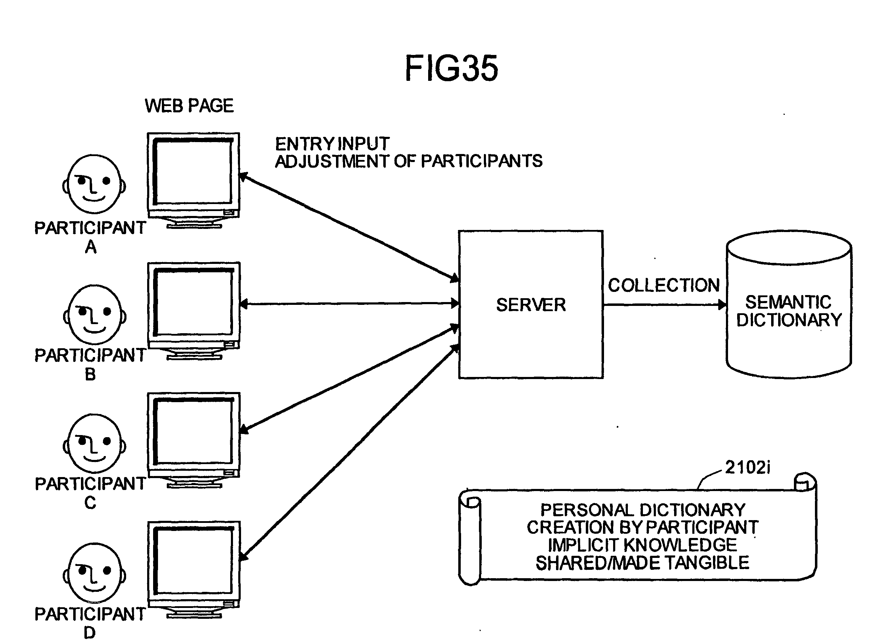

A process of automatic creation of semantic dictionary information using the pre-existing Web information will be explained next with reference to Fig. 35, which is a schematic diagram illustrating the process of automatic creation of semantic dictionary information using the pre-existing Web information in the system according to an embodiment of the present invention.

The Web term appraising unit 2102i of the dictionary information processing apparatus 2100 assesses, based on the pre-existing Web information (including information on pre-existing websites, and information on the websites which allow editing by a participant with an object of adding terms to the dictionary) stored in the pre-existing information storing file 2106d, etc., whether each of the terms is to considered as being a canonical form, a variant form, or a term that is not to be used. The Web term appraising unit 2102i provides functions such as display function by which the editable website is displayed on the participant's terminal, editing function by which the participant can edit the website, collecting function by which the information entered by the participant is collected, etc. These functions of the Web term appraising unit 2102i are realized by means of conventional website management technique.

The semantic dictionary creating unit 2102a of the dictionary information process apparatus 2100 creates, based on the result of the appraisal, from the terms of the pre-existing Web information the semantic dictionary information, and stores the semantic dictionary information in the semantic dictionary information file 2106a. For instance, a semantic dictionary may also be created by combining all the personal dictionaries created by each webpage creator who participates in using this service. In other words, each term of the personal dictionary is assessed as being a canonical form, a variant form, or a term that is not to be used, and semantic dictionary information is created based on this appraisal of the terms. Consequently, the dictionary information of every participant can be made public and shared.

The process of automatic creation of semantic dictionary information using the pre-existing Web information ends here.

### [Process of automatic category dictionary information using the pre-existing structured data]

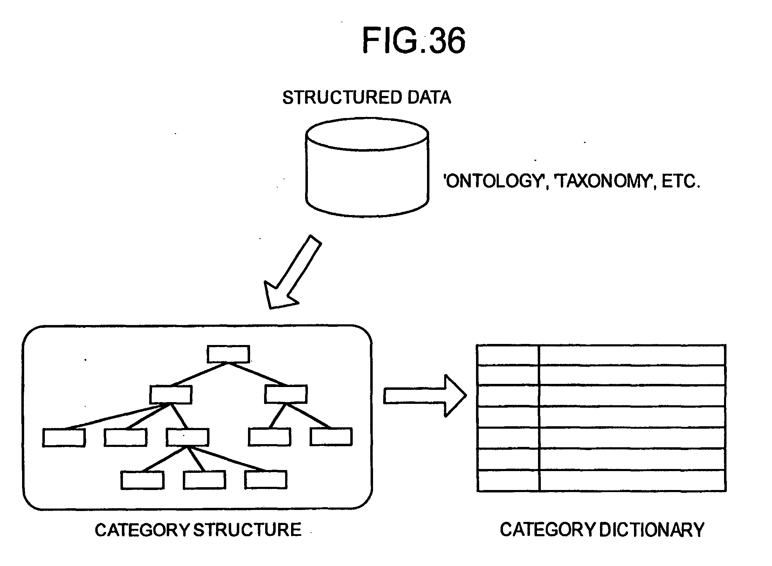

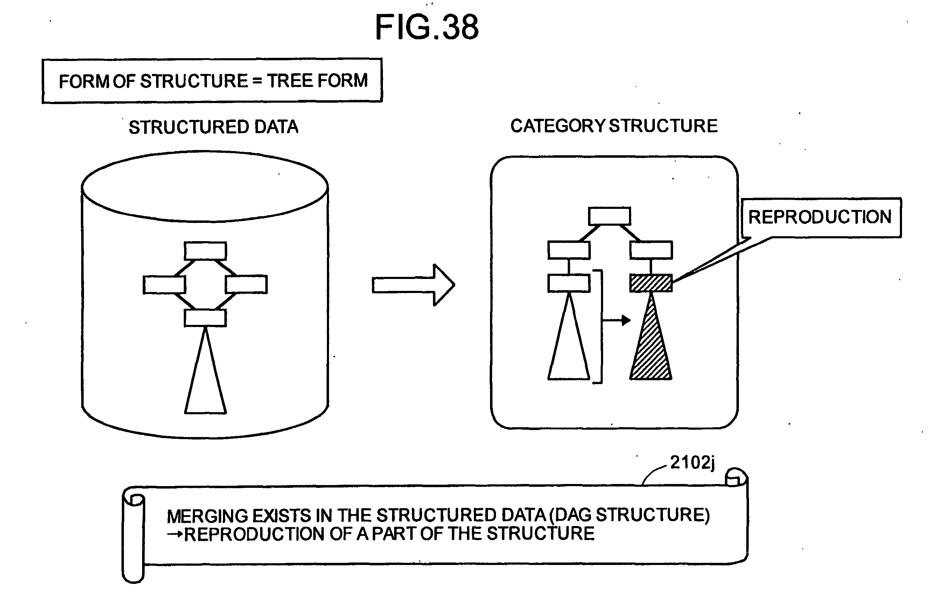

A process of automatic category dictionary information using the pre-existing structured data will be explained next with reference to Fig. 36 through Fig. 38, which are schematic diagrams illustrating the process of automatic creation of category dictionary information using the pre-existing structured data in the system according to an embodiment of the present invention.

As shown in Fig. 36, the structured data category structure information creating unit 21 02j of the dictionary information processing apparatus 2100 creates, based on the pre-existing structured data stored in the pre-existing information storing file 2106d etc., category structure information. In Fig. 36, the category dictionary is created after the creation of the category structure. However, as far as dependency relation of data (What does the data depend on when the data create) is concerned, both the category structure and the category dictionary are created based on the pre-existing structured data.

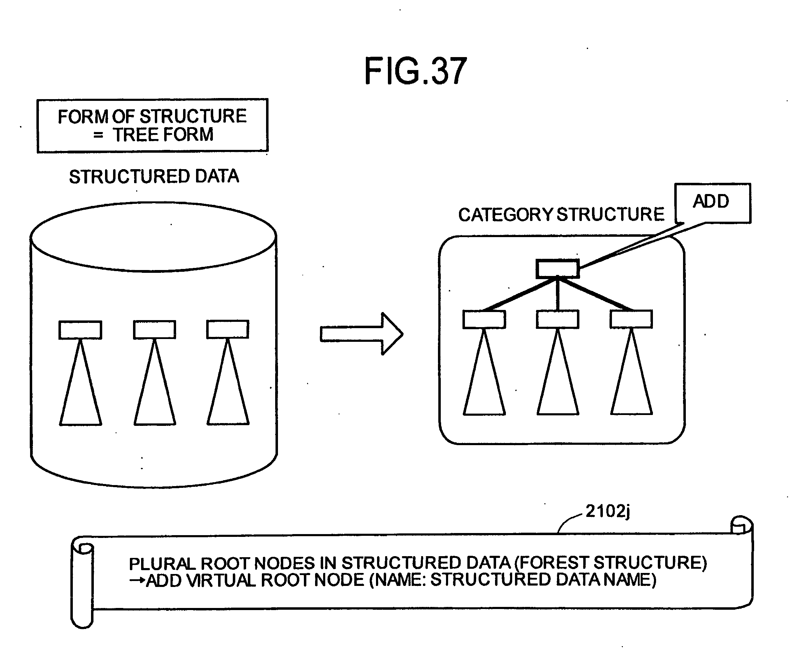

When there are plural root nodes (such a structure is also called a forest structure) in the pre-existing structured data, as shown in Fig. 37, the structured data category structure information creating unit 2102j adds the category structure information by adding a hypothetical root node at a level higher than the existing root nodes. In this way, the category structure is always maintained as a simple tree structure and the search algorithm can also be simplified.

If there is merging of the pre-existing structured data (such a structure is called a DAG (Directed Acyclic Graph) structure), the structured data category structure information creating unit 2102j reproduces the corresponding portion on the portion that is merging and creates a simple tree form category structure information by converting the DAG structure to a tree structure. In this way, the category structure is always maintained as a simple tree structure and the search algorithm can also be simplified.

The process of automatic creation of category dictionary information using the pre-existing structured data ends here.

### [Process of automatic creation of category dictionary information using the pre-existing cluster data]

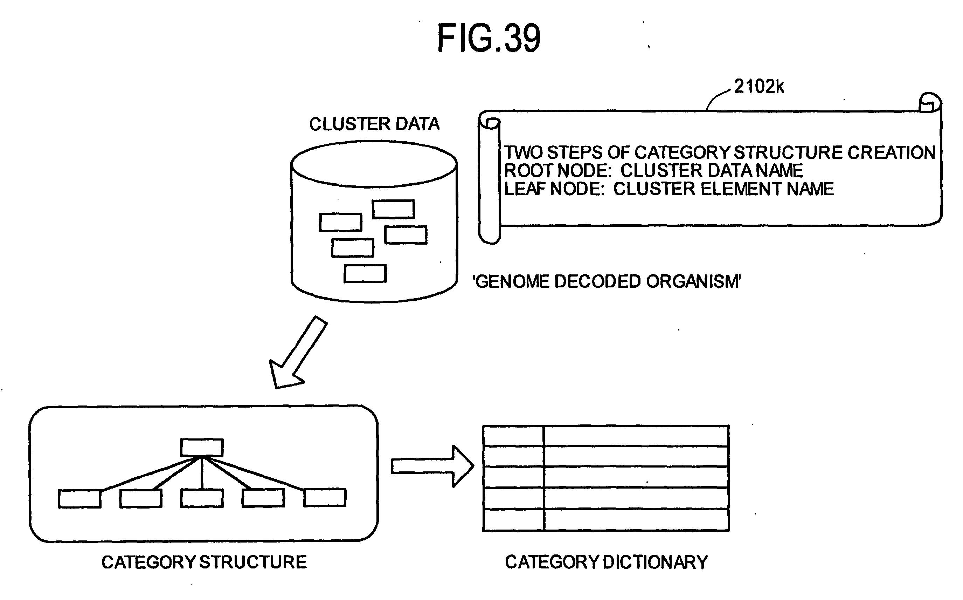

A process of automatic creation of category dictionary information using the pre-existing cluster data will be explained next with reference to Fig. 39, which is a schematic diagram illustrating the process of creation of category dictionary information using the pre-existing cluster data in the system according to an embodiment of the present invention.

The cluster category structure information creating unit 2102k of the dictionary information processing apparatus 2100 creates, based on the pre-existing cluster data stored in the pre-existing information storing file 2106d, category structure information in which the root node is represented by the cluster data name, and the leaf nodes are represented by the cluster element names. The category dictionary creating unit 2102b creates category dictionary information based on the category structure information and stores the category dictionary information in the category dictionary information file 2106b. In Fig. 39, the category dictionary is created after the creation of the category structure. However, as far as dependency relation of data (What does the date depend on when the data create) is concerned, both the category structure and the category dictionary are created based on the pre-existing cluster data.

For instance, in the case of a pre-existing cluster called "genome read organism" if there exist the cluster elements {nematode, human, E.coli bacillus}, the cluster category structure information creating unit 2102k creates the category structure information in which the root node is represented by "genome read organism" and the leaf node is represented by "nematode, human, E.coli bacillus", and creates category dictionary information based on the category structure information.

The process of automatic creation of category dictionary information using the pre-existing cluster data ends here.

### [Process of automatic creation of category dictionary information using pre-existing MeSH term data]

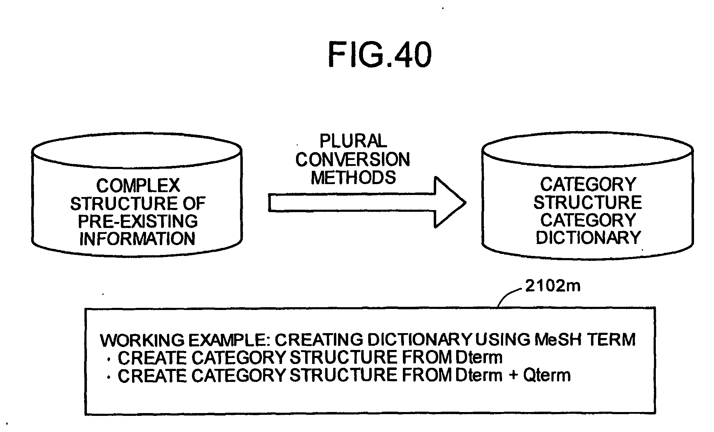

A process of automatic creation of category dictionary information using MeSH term data will be explained with reference to Fig. 40 through Fig. 42, which are schematic diagrams illustrating the process of automatic creation of category dictionary information using MeSH term data in the system according to an embodiment of the present invention.

As shown in Fig. 40, the MeSH term category structure information creating unit 21 02m of the dictionary information processing apparatus 2100 creates category structure information based on the data having a complex data structure such as the pre-existing MeSH term data, etc. stored in the pre-existing information storing file 2106d.

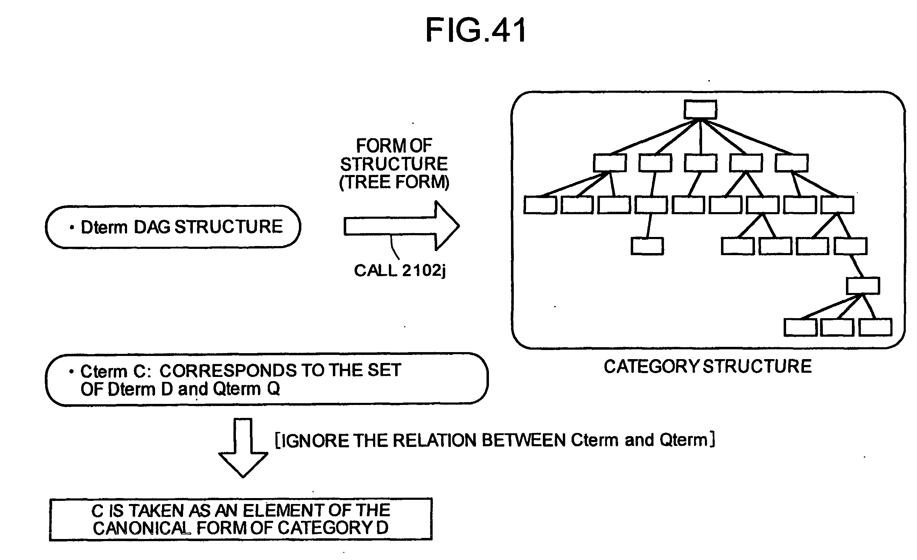

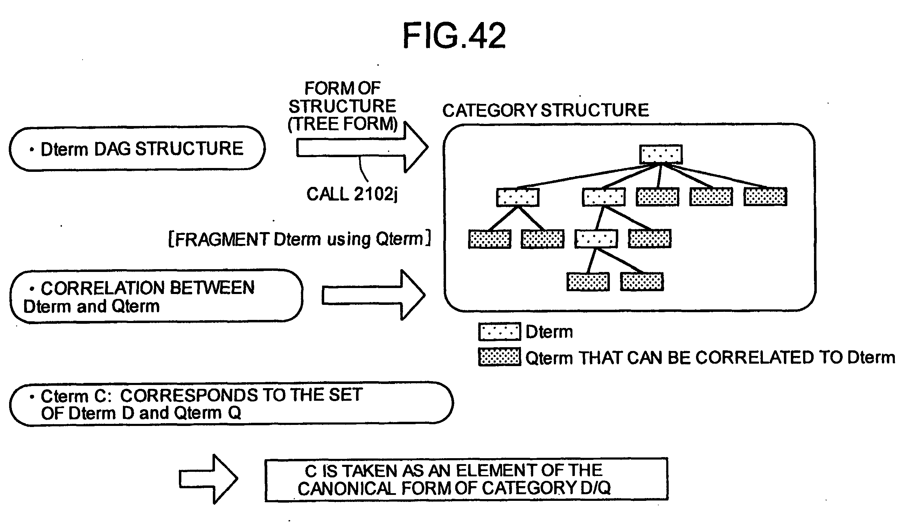

The principal structure of the MeSH terms is indicated by a Dterm DAG structure. As shown in Fig. 41, such a Dterm DAG structure can be converted to a category structure by applying the method described above for conversion to a simple tree structure. An addable Qterm is provided for each Dterm, and the correlation between Dterm and Qterm is defined. A method exists where the relation between Cterm and Qterm is simply ignored and the category dictionary information is created and stored in the category dictionary information file 2106b. As shown in Fig. 42, the correlation between Dterm and Qterm can also be similarly converted to a category structure. Cterm is a phrase having a canonical form that is correlated with a Dterm-Qterm pair (may be a single pair or plural pairs). In this way, the MeSH term category structure information creating unit 2102m creates category structure information from Dterm, Qterm, and Cterm. The category dictionary creating unit 2102b creates the category dictionary information based on the category structure information, and stores the category dictionary information in the category dictionary information file 2106b.

The process of automatic creation of category dictionary information using the pre-existing MeSH term data ends here.

### [Process of automatic creation of category dictionary information using pre-existing database]

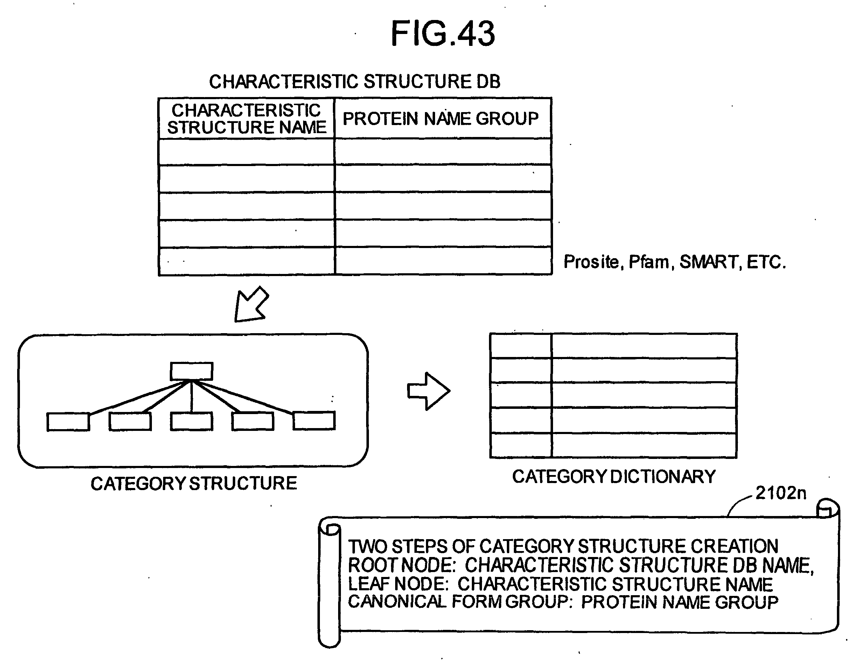

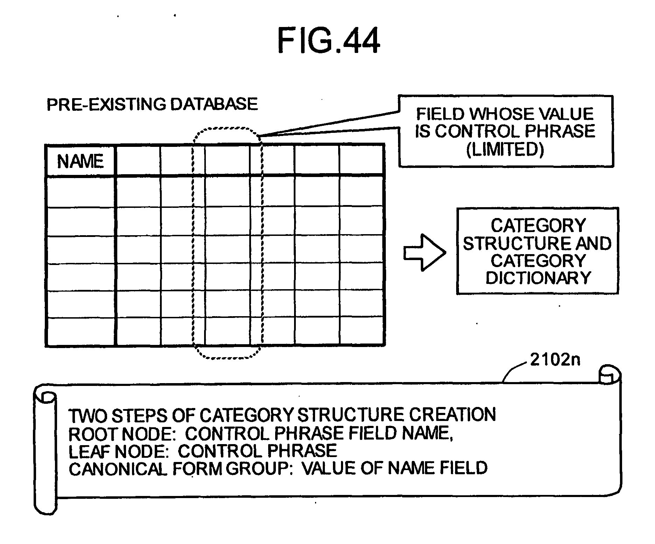

A process of automatic creation of category dictionary information using the pre-existing database will be explained next with reference to Fig. 43 and Fig. 44, which are schematic diagrams illustrating the process of automatic creation of category dictionary information using the pre-existing database in the system according to an embodiment of the present invention.

As shown in Fig. 43, the database category structure information creating unit 2102n creates, based on the pre-existing database stored in the pre-existing information storing file 2106d or an external database stored in the external system 2200, category structure information in which the root node is represented by the name of the pre-existing database or the field name of a specific field, and the leaf nodes are represented by the data stored in the database or the field. In Fig. 43, the category dictionary is created after the creation of the category structure. However, as far as dependency relation of data (What does the date depend on when the data create) is concerned, both the category structure and the category dictionary are created based on the pre-existing database.

The pre-existing database, for instance, may be a motif database that stores motifs of proteins such as Prosite, Pfam, SMART.

If the fields contain finite control phrases such as literature name, region where found, etc. as shown in Fig. 44, category structure information may be created by taking the control phrase field name as representing the root node, the control phrases as representing the leaf nodes, and value of the title field as the canonical form. The category dictionary creating unit 2102b creates category dictionary information based on the category structure information, and stores the category dictionary information in the category dictionary information file 2106b,

The process of automatic creation of category dictionary information using the pre-existing database ends here.

### [Process of automatic creation of category dictionary information using process result data of pre-existing analysis program]

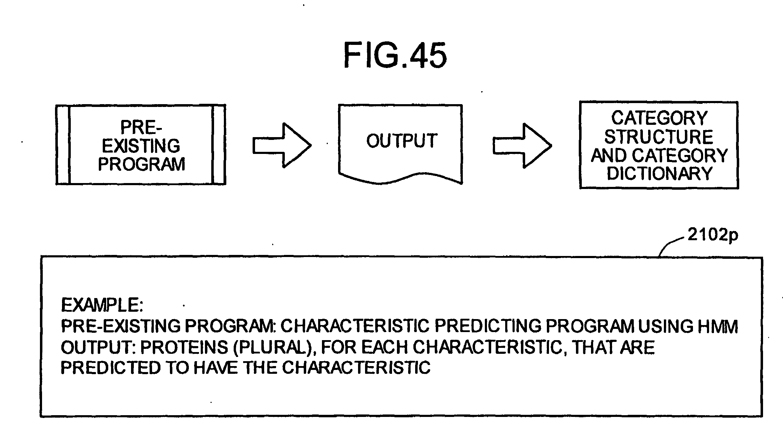

A process of automatic creation of category dictionary information using the process result data of the pre-existing analysis program will be explained next with reference to Fig. 45, which is a schematic diagram illustrating the process of automatic creation of category dictionary information using the process result data of the pre-existing analysis program in the system according to an embodiment of the present invention.

As shown in Fig. 45, the analysis program category structure information creating unit 2102p of the dictionary information processing apparatus 2100 creates, based on the process result of the pre-existing analysis program executed by the analysis program unit 2102e, category structure information in which the root node is represented by the process program name, and the leaf nodes are represented by the process result data. The category dictionary creating unit 2102b creates category dictionary information based on the category structure information and stores the category dictionary information in the category dictionary information file 2106b.

The process of automatic creation of category dictionary information using the process result data of the pre-existing analysis program ends here.

### [Process of entry-wise dictionary information checking]

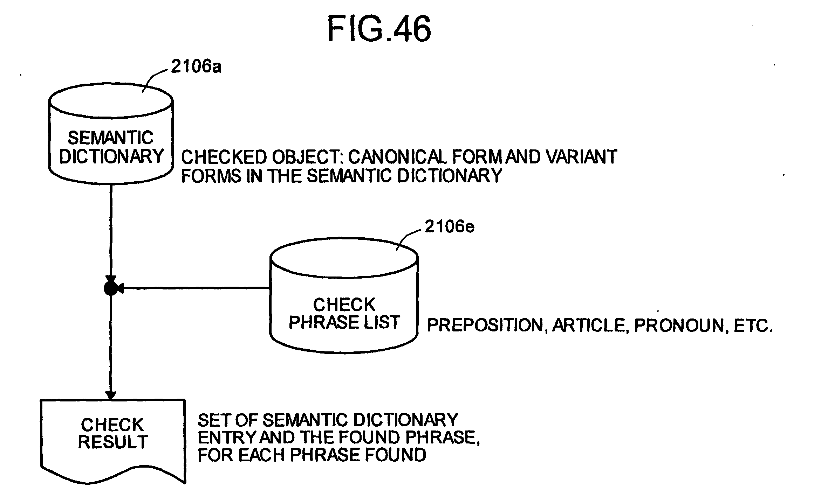

A process of entry-wise dictionary information checking will be explained next with reference to Fig. 46 through Fig. 48, which are schematic diagrams illustrating the entry-wise dictionary information checking process of the system according to the present invention.

As shown in Fig. 46, the entry-wise checking unit 2102u dictionary information processing apparatus 2100 carries out, based on the check phrase list stored in the check phrase list file 2106e, an entry-wise checking of the semantic dictionary information stored in the semantic dictionary information file 2106a and/or the category dictionary information stored in the category dictionary information file 2106b. The check phrase list includes a list of terms such as prepositions, articles, pronouns, etc. that can neither be entered as a canonical form, nor as a variant form.

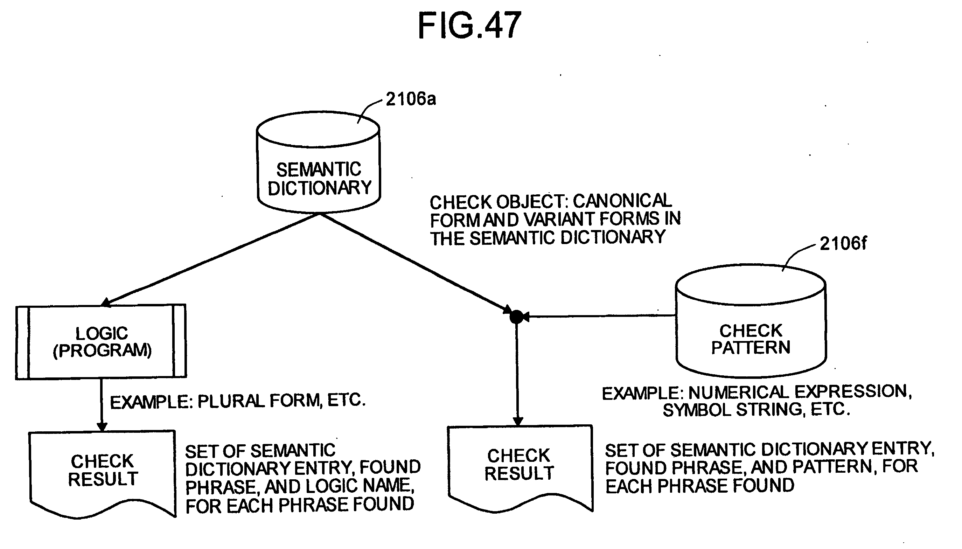

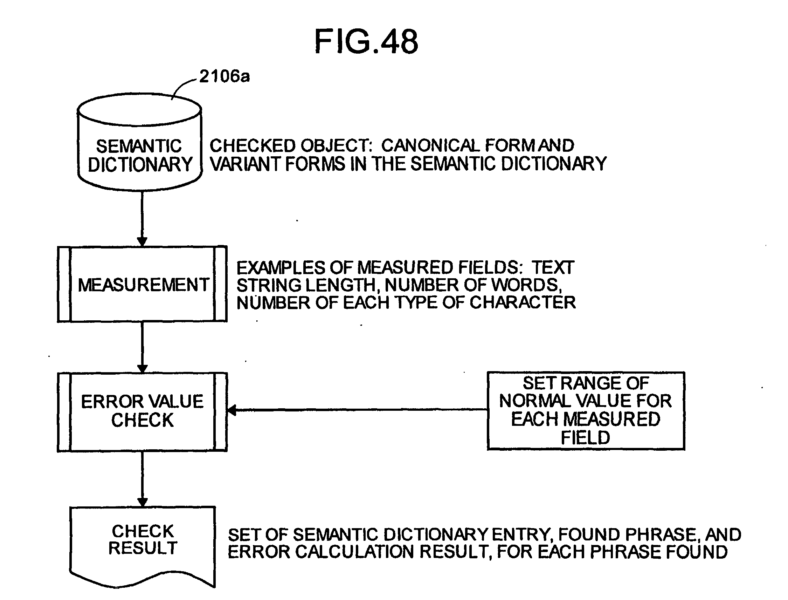

As shown in Fig. 47, the entry-wise checking unit 2102u dictionary information processing apparatus 2100 carries out, based on the check pattern stored in the check pattern file 2106f and check program, an entry-wise checking of the semantic dictionary information stored in the semantic dictionary information file 2106a and/or the category dictionary information stored in the category dictionary information file 2106b. The check patterns include unacceptable patterns like numerical expressions, symbol string expressions etc. (which are written using regular expressions). The check program checks whether the plural form of a word is entered as a variant form. The check program may also calculate, as shown in Fig. 48, the length of the text string of each canonical form and variant form, the number of words, number of characters for each character type, check if each entry falls within a predetermined normal range, and output those that fail to fall within the normal range.

The process of entry-wise dictionary information checking ends here.

### [Canonical form consistency checking process]

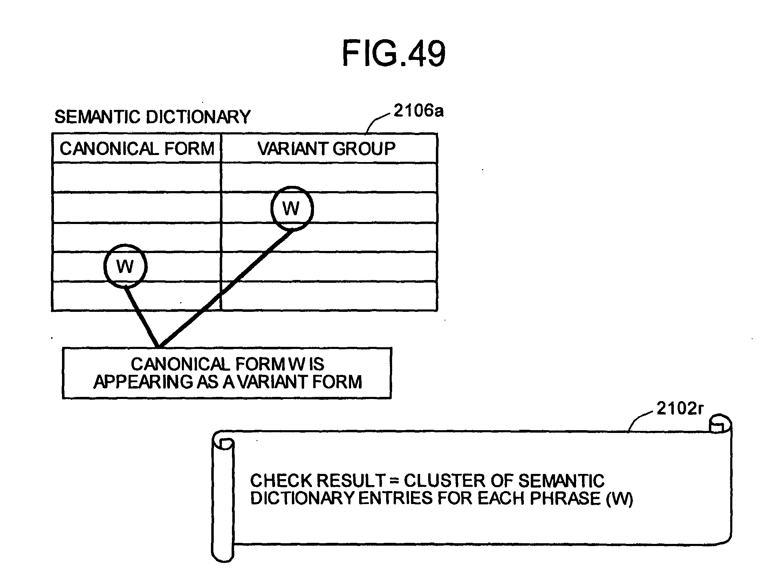

A canonical form consistency checking process will be explained next with reference to Fig. 49, which is a schematic diagram illustrating the consistency checking process of the system according to an embodiment of the present invention.

As shown in Fig. 49, the canonical form consistency checking unit 21 02r of the dictionary information processing apparatus 2100 checks whether any variant form entered in the semantic dictionary information stored in the semantic dictionary information file 2106a is entered as a different canonical form. In this way, duplication of a canonical form appearing as a variant of another canonical form can be checked.

The canonical form consistency checking process ends here.

### [Statistics checking process]

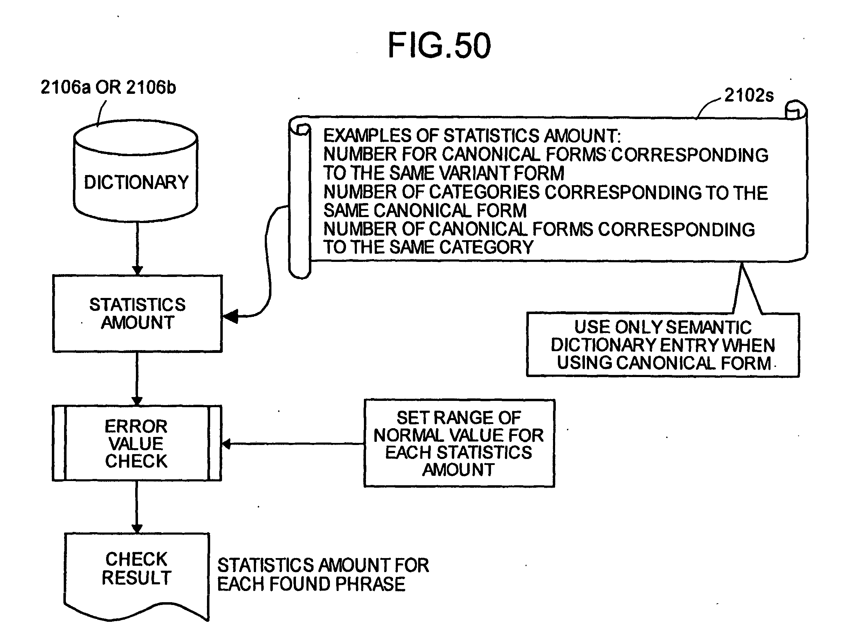

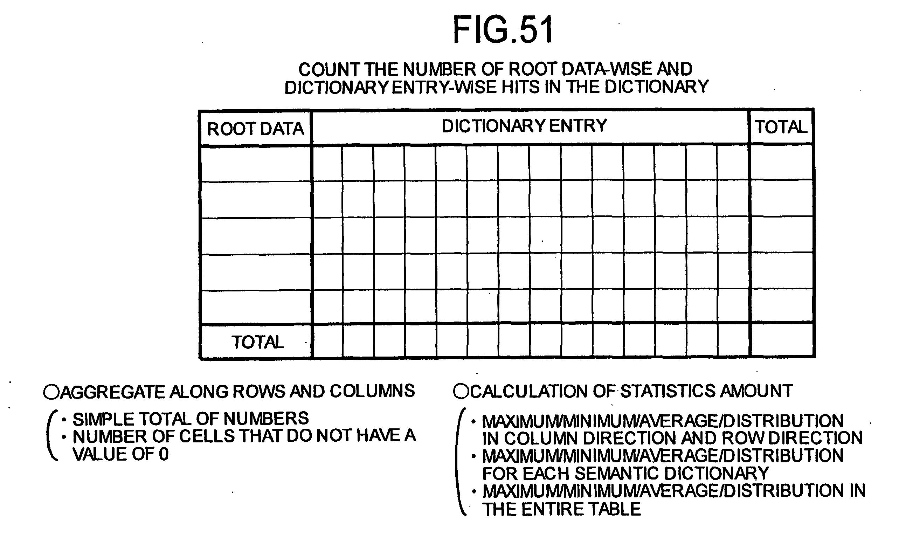

A process of statistics checking will be explained next with reference to Fig. 50 and Fig. 51, which are schematic diagrams illustrating the statistics checking process of the system according to an embodiment of the present invention.

The statistics checking unit 2102s of the dictionary information processing apparatus 2100 carries out a statistical processing involving determination of statistics amount of semantic dictionary information stored in the semantic dictionary information file 2106a and/or entry-related status and usage-related status pertaining to canonical forms, or variant forms, or categories entered in the category dictionary information stored in the category dictionary information file 2106b, and checks whether the result of the statistical processing is within the predetermined normal range.

The statistical processing pertaining to entry-related status may include, as shown in Fig. 50, computing statistical information such as the number of canonical forms corresponding to the same variant form, the number of categories corresponding to the same canonical form, the number of canonical forms corresponding to the same category, and the like.

As shown in Fig. 51, the statistics checking unit 2102s carries out the statistical processing pertaining to usage-related status by creating a matrix by counting the number of hits for each root data of the document information stored in the document information file 2106c and for each dictionary entry, and determining the total count or distribution along each row and each column. When computing the total along each column and each row, the statistics checking unit 2102s may either total up all the numbers in the column or the row or count the number of cells that do not have a value of 0. The statistics checking unit 2102s may compute for each type of information (such as information pertaining to canonical form, semantic dictionary name, information extracted by a parser, n-nary relation, etc.), the total, or count the number of cells that do not have a value of 0. When computing the statistics amount, the statistics checking unit 2102s may compute for each column or row a maximum value, a minimum value, an average value, or distribution, etc., or may compute for each type of information or for the entire table, a maximum value, a minimum value, an average value, or distribution.

For the statistical processing related to the category dictionary, the statistics checking unit 2102s may count the number of extractions for each root data of the document information stored in the document information file 2106c, and for each node of the category dictionary. The statistics checking unit 2102s may create a matrix, and determine the total count or distribution along each row and each column. When computing the total along each column and each row, the statistics checking unit 2102s may either total up all the numbers in the column or the row or count the number of cells that do not have a value of 0. When computing the statistics amount, the statistics checking unit 2102s may compute for each column or row a maximum value, a minimum value, an average value, or distribution; etc., or may compute for each type of information or for the entire table, a maximum value, a minimum value, an average value, or distribution.

The statistics checking unit 2102s may also count for each root data or m pairs of information, the number of extractions from the portion of associated text. In this way, it can be checked whether the term pairs are correctly entered with a meaningful sequence.

The statistics checking unit 2102s may also carry out statistical processing for each root data by counting the number of portions that are not hit during the dictionary search, or the number words in the portions from where information is extracted. Alternatively, the statistics checking unit 2102s may count the number of canonical forms for which no category has been assigned, or which are not converted to elements having an n-nary relation.

The statistics checking process ends here.

### [Co-occurrence checking process]

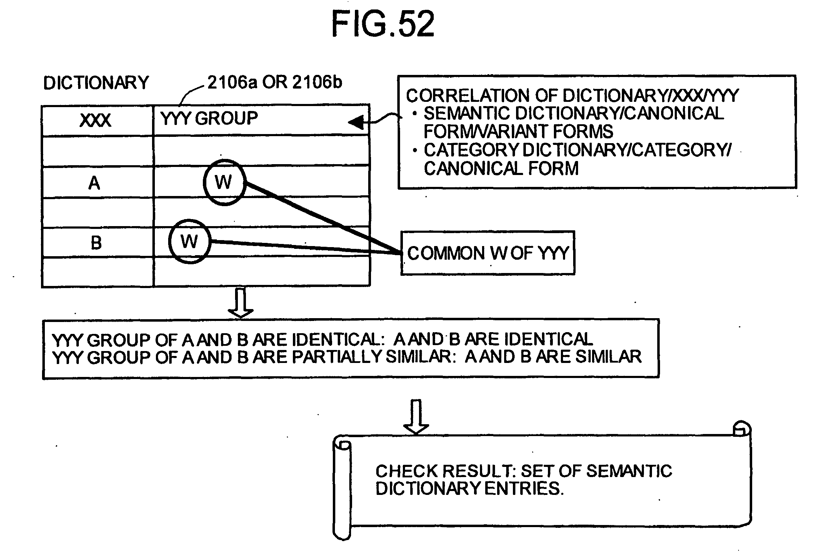

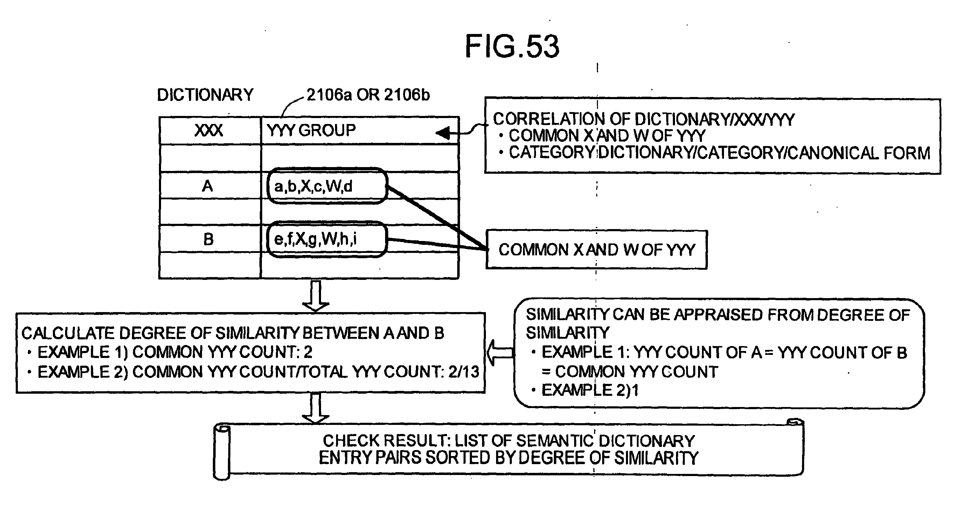

A process of co-occurrence checking will be explained next with reference to Fig. 52 and Fig. 53, which are schematic diagrams illustrating the co-occurrence checking process of the system according to an embodiment of the present invention.

As shown in Fig. 52, the co-occurrence checking unit 2102t of the dictionary information processing apparatus 2100 computes similarity between terms based on semantic dictionary entries that have the same variant form, or categories having the same canonical form. For example, applying it to the semantic dictionary (in which XXX represents the canonical form and YYY group represents the variant form) in the example shown in Fig. 52, both the canonical forms A and B have the same variant form W in the semantic dictionary and hence have a co-occurrence relation between them. If all the variant forms of the canonical forms A and B are the same, then the canonical forms A and B are considered to be one and the same. If some of the variant forms of the canonical forms A and B are different, the canonical forms A and B they are considered to be similar. Applying it to the category dictionary (in which XXX represents the category, and YYY group represents the canonical form) in the example shown in Fig. 52, both the categories A and B have the same canonical form W in the category dictionary and hence have a co-occurrence relation between them. If all the canonical forms of the categories A and B are the same, then the categories A and B are considered to be one and the same. If some of the canonical forms of the categories A and B are different, the categories A and B are considered to be similar.

The degree of similarity may be calculated, as shown in Fig. 52, by means of the number of matches (in Example 1 of Fig 53, X and W are matching and hence the degree of similarity is 2) or by means of match ratio (in Example 2 of Fig. 53, two matches are found among the entire group of 13 elements, hence 2/13).

The process of co-occurrence checking ends here.

### [Identification process using logic]

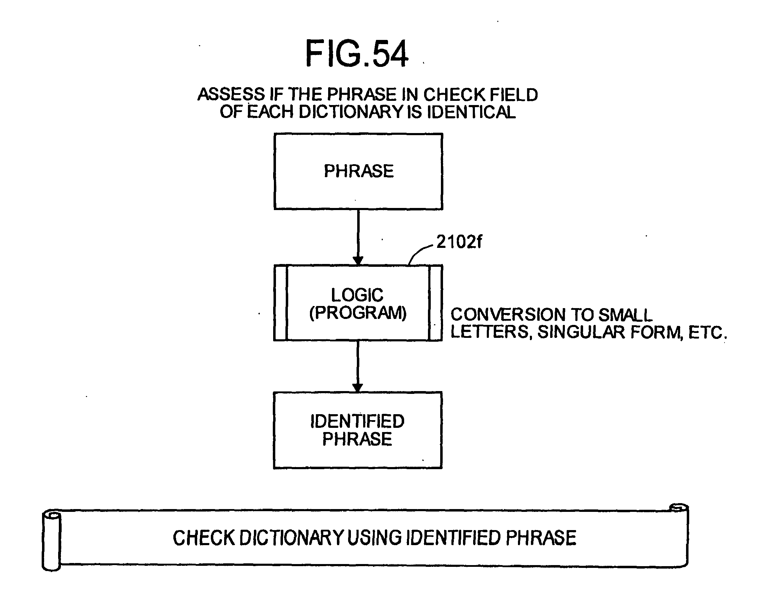

A process of identification using logic will be explained next with reference to Fig. 54, which is a schematic diagram illustrating the name identification process that uses a logic of the system according to an embodiment of the present invention.

As shown in Fig. 54, the identifying unit 2102f of the dictionary information processing apparatus 2100 appraises the identity of the phrase in every dictionary check field and converts the phrase into lower case, singular form, etc. and thereby enhances the accuracy of the checking process.

The identification process ends here.

### [Process of check result output]

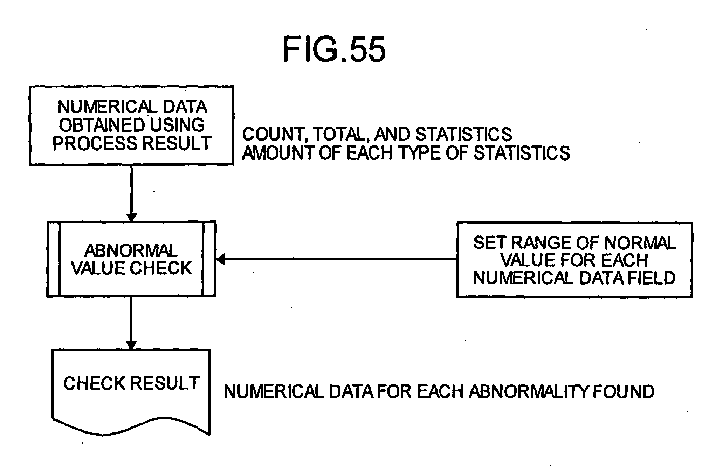

A process of check result output will be explained next with reference to Fig. 55, which is a schematic diagram illustrating the process of check result output of the system according to an embodiment of the present invention.

As shown in Fig. 55, the process result output unit 2102d of the dictionary information processing apparatus 2100, outputs on the output device 2114 the check result of the dictionary information checking unit 2102c if the check result exceeds a predetermined normal value range.

The check result output process ends here.

### [Other embodiments]

An embodiment of the present invention was explained so far. However, the appended claims are not to be thus limited and are to be construed as embodying all modifications and alternative constructions that may occur to one skilled in the art which fairly fall within the basic teaching herein set forth.

For instance, the dictionary information processing apparatus 2100 is shown to perform the processes as a stand-alone system in the embodiment described so far. However, the dictionary information processing apparatus 2100 can also be constructed in such a way that it can process a request from a client terminal set up separate from itself and display the process result on the client terminal.

Among the processes explained pertaining to the embodiment described so far, all the automatic processes can be carried out manually entirely or in part, and all the manual processes can be carried out automatically entirely or in part.

The process sequences, control sequences, names, information that include various types of stored data and search condition parameters, sample screens, and database structures appearing in the text and drawings of this literature can be modified unless otherwise specified.

All the constituent elements of the dictionary information processing apparatus 2100 represented in the drawings are functional concepts and need not necessarily be represented physically.

For example, the process functions of the servers of the dictionary information processing apparatus 2100, particularly, the process functions carried out by the control unit 2102 can be entirely or partially realized by a central processing unit (CPU) or a program executed by the CPU, or by hardware through wired logic. The program is stored in a storage medium, which will be described in a later section, and is loaded mechanically into the dictionary information processing apparatus 2100 as and when required.

In other words, a computer program recorded on the recording medium 2106 such as a ROM or HD, jointly with the operating system (OS), conveys instructions to the CPU to execute various processes. This computer program is loaded on a RAM and forms the control unit 2102 jointly with the CPU. This computer program may also reside on an application program server connected to the external system 2200 via the network 2300 and may be entirely or partially downloaded as the situation demands.

The program according to the present invention can also be stored in a computer-readable recording medium. The 'recording medium' can be of 'portable' type such as a flexible disk, magneto optic disk, ROM, EPROM, EEPROM, CD-ROM, MO, DVD, etc., a 'fixed' type such as an internal ROM, RAM, HD, etc., or a 'communication' type that can store the program for a short time through a network such as a LAN, WAN, and the Internet.

The 'program' can be written in any language or written using any description method and is insensitive to the type of source codes and binary codes. The 'program' need not necessarily be a single program and may be broken up into a plurality of modules and libraries or it may accomplish the functions by acting jointly with another program such as the OS (Operating System). Known methods can be employed for fabricating the physical structure required for reading the program from the recording medium in each device according to the present invention, the method of reading, and the method of installation following reading of the program.

The various databases etc. (semantic dictionary information file 2106a through check pattern file 2106h) stored in the storage unit 2106 are stored either in a memory device such as the RAM and ROM, or a fixed disk device such as the hard disk or a storage device such as the flexible disk, optical disk, etc. and store various programs, tables, files or files required for web pages need for various processes and websites.

The dictionary information processing apparatus 2100 may be realized by connecting peripheral devices such as the printer, monitor or image scanner to the known information processing terminal such as the personal computer, workstation, etc. and by installing on this information processing apparatus the software (which includes program, data, etc.) that execute the method according to the present invention.

The physical structure of the dictionary information processing apparatus 2100 represented in broken down or integrated forms in the drawings is not restricted to those illustrated. The structure can be broken down or assembled functionally and physically as per requirement. For instance, a different database device may be used for each database and process may be partially realized by CGI (Common Gateway Interface).

The network 2300 mutually connects the dictionary information processing apparatus 2100 and the external system 2200. The network 2300 may be the Internet, intranet, LAN (both wired and wireless), VAN, personal computer communication network, public telephone network (both analog and digital), leased line network (both analog and digital), CATV network, IMT 2000 method, mobile circuit-switching network/mobile packet switching network such as GSM method or PDC/PDC-P method, wireless calling network, local wireless network such as bluetooth, PHS network, satellite communication network such as CS, BS, ISBD, etc. In other words, the present system can send and receive various data via any network, wireless or otherwise.

To sum up, according to the present invention, semantic dictionary information is first created in which correlation between a canonical form and a variant form of a term is defined. Category dictionary information is created which defines the category to which the canonical form belongs. The information stored in the semantic dictionary information and/or the category dictionary information is checked. Consequently, a dictionary information processing apparatus, a dictionary information management method, a dictionary information management program, a recording medium are realized in which various types of semantic dictionaries and category dictionaries used in a literature database search service are created and automatically checked.

Further, a dictionary information processing apparatus, a dictionary information management method, a dictionary information management program, and a recording medium are realized in which creation of dictionaries is highly efficient and accurate.

According to the present invention, each of the fields of a pre-existing database is assessed, based on attribute information of fields constituting the pre-existing database, as being a canonical form, a variant form, or a field that is not to be used. Based on the result of this appraisal, the semantic dictionary information is created from the fields of the pre-existing database. Consequently, a dictionary information processing apparatus, a dictionary information management method, a dictionary information management program, and a recording medium are realized by which the semantic dictionary can be efficiently created from the pre-existing database.

According to the present invention, each of the terms (keywords, abbreviations, synonyms, related words, etc. included in the dictionary) entered in the pre-existing dictionary information is assessed, based on the term, as being a canonical form, variant form, or a term not to be used. Based on the result of this appraisal, the semantic dictionary is created from the terms of the dictionary information. Consequently, a dictionary information processing apparatus, a dictionary information management method, a dictionary information management program, and a recording medium are realized by which the semantic dictionary can be efficiency created from the pre-existing dictionary information.

According to the present invention, each of the terms in pre-existing Web information (including information on pre-existing websites, and information on the websites which allow editing by a participant with an object of adding terms to the dictionary) is assessed, based on the term, as being a canonical form, variant form, or a term that is not to be used. Based on the result of this appraisal, the semantic dictionary is created from the terms of the Web information. Consequently, a dictionary information processing apparatus, a dictionary information management method, a dictionary information management program, and a recording medium are realized by which the semantic dictionary can be efficiently created from the pre-existing Web information.

According to the present invention, a dictionary information processing apparatus, a dictionary information management method, a dictionary information management program, and a recording medium can are realized by which the dictionary information of every participant can be made public and shared.

According to the present invention, category structure information is created based on pre-existing structured data. Category dictionary information is created based on this category structure information. Consequently, a dictionary information processing apparatus, a dictionary information management method, a dictionary information management program, and a recording medium are realized in which the category dictionary is efficiently created based on the classification defined by the pre-existing structured data.

According to the present invention, when there are plural root nodes in the pre-existing structured data, a hypothetical root node is added at a level higher than the root nodes in order to create the category structure information. Consequently, a dictionary information processing apparatus, a dictionary information management method, a dictionary information management program, and a recording medium are realized in which the category dictionary is efficiency created based on the classification defined by the pre-existing structured data.

According to the present invention, if there is merging of the pre-existing structured data, the part that is merging is reproduced in order to eliminate the merging and create a simplified tree from category structure information. Consequently, a dictionary information processing apparatus, a dictionary information management method, a dictionary information management program, and a recording medium are realized in which the category dictionary is efficiently created based on the classification defined by the pre-existing structured data.

According to the present invention, category structure information is created in which the root node is represented by a cluster data name, and the leaf nodes are represented by cluster element names. Category dictionary information is created based on this category structure information. Consequently, a dictionary information processing apparatus, a dictionary information management method, a dictionary information management program, and a recording medium are realized in which the category dictionary is efficiency created based on the information defined by the pre-existing cluster data.

According to the present invention, category structure information is created based on MeSH term data. Category dictionary information is created based on this category structure information. Consequently, a dictionary information processing apparatus, a dictionary information management method, a dictionary information management program, and a recording medium are realized in which the category dictionary is efficiently created based on the medical terms defined by the pre-existing MeSH term data.

According to the present invention, category structure information is created in which the root node is represented by a name of a pre-existing database or a field name of a specific field, and the leaf nodes are represented by the data stored in the database or the field. Category dictionary information is created based on this category structure information. Consequently, a dictionary information processing apparatus, a dictionary information management method, a dictionary information management program, and a recording medium are realized in which the category dictionary is efficiently created based on the field or stored data defined by the pre-existing database.

According to the present invention, category structure information is created in which the root node is represented by the process program name, and the leaf nodes re represented by the process result data. Category dictionary information is created based on this category structure information. Consequently, a dictionary information processing apparatus, a dictionary information management method, a dictionary information management program, and a recording medium are realized in which the category dictionary is efficiently created based on the process result of the analysis data.

According to the present invention, semantic dictionary information and/or category dictionary information is checked entry-wise based on at least one of the following, namely, check phrase list, check program, and check pattern. Consequently, a dictionary information processing apparatus, a dictionary information management method, a dictionary information management program, and a recording medium are realized in which a highly reliable dictionary information is automatically obtained because of pre-specified check field.

According to the present invention, a dictionary information processing apparatus, a dictionary information management method, a dictionary information management program, and a recording medium are realized which can easily detect an inappropriate entry added due to a bug in the program or failure of exceptional entry processing while creating a dictionary.

According to the present invention, a dictionary information processing apparatus, a dictionary information management method, a dictionary information management program, and a recording medium are realized which can easily detect an inappropriate entry resulting from an error in the pre-existing data used.

According to the present invention, a dictionary information processing apparatus, a dictionary information management method, a dictionary information management program, and a recording medium are realized which can easily detect a dictionary entry inappropriate for the purpose of text mining.

According to the present invention, inconsistency of canonical form is eliminated by checking if a variant form appears as a canonical form in semantic dictionary information. Consequently, a dictionary information processing apparatus, a dictionary information ma nagement method, a dictionary information management program, and a recording medium are realized by which a highly reliable dictionary information can be automatically obtained.

According to the present invention, statistical processi ng is carried out pertaining to entry-related status or usage-related status of canonical forms, variant forms, and categories entered in semantic dictionary information and/or category dictionary information. The result of the statistical processing is checked to see if it falls within a predetermined normal range. Consequently, a dictionary information processing apparatus, a dictionary information management method, a dictionary information management program, and a recording medium are realized by which a highly reliable dictionary information can be automatically obtained.

According to the present invention, a dictionary information processing apparatus, a dictionary information management method, a dictionary information management program, and a recording medium are realized in which entries with problematic entry-related status (such as an entry which reads '0'), or entries with problematic usage-related status (such as an entry which has an access count of 0, and extraction count of 0) can be easily detected by the statistical processing.

According to the present invention, degree of similarity between entries is calculated based on co-occurrence relation pertaining to canonical forms, variant forms, or categories entered in semantic dictionary information and/or category information dictionary. Consequently, a dictionary information processing apparatus, a dictionary information management method, a dictionary information management program, and a recording medium are realized in which checking of entry contents or appraisal of merging of two entries by the degree of similarity between the entries can be easily carried out.

(IV) An embodiment of a document information extraction processing apparatus, a document information extraction processing method, a document information extraction processing program and a recording medium will be explained next with reference to the accompanying drawings. The present invention is in no way confined to this embodiment.

The conventional technology explained so far and the issues the present invention proposes to address encompass literature data pertaining to all domains and not just natural science such as life science, medicine or technology.

### [Overview of the present invention]

First an overview of the present invention will be explained followed by the structure and processes.

The present invention has the following basic features. The present invention attempts to enhance the precision/effectiveness of the information extraction when the collective result in the text mining process is processed for statistics/analysis, as shown in Fig. 56. In other words, the attribute information that is treated as a condition for extracting information that relates to a canonical form, a variant form, or a category of each term which is defined in the semantic dictionary information or the category dictionary information, is registered. If the canonical form, the variant form, or the category items exist in the textual document of document to be analyzed, the pertaining canonical forms, variant forms, or category items possessing the correlating attribute information is extracted.

In the present invention, a bug checking is also executed for each term that is defined in the semantic dictionary information. If there exist canonical forms or variant forms which are not checked for faults, and if the quality of the dictionary information is bad, the faults are eliminated since the information relating to the corresponding canonical form or variant form is extracted.

According to the present invention, syntax analysis is performed on the textual document information of the document to be analyzed, by registering the part-of-speech information to be extracted which is decided by the part-of-speech that forms a condition while extracting information. The part-of-speech of each word which appears into the text information concerned is determined. When a word exists in the textual document information in the analysis object document and is the part-of-speech into which the concerned word was registered, information of the word and the part-of-speech is extracted.

### [System structure]

The structure of the present system will be explained next. Fig. 57 is a block diagram of a system in which the present invention is applied. Only portions relevant to the present invention are schematically represented in Fig. 57. This system schematically includes a document information extraction processing apparatus 3100, an external system 3200 that provides external databases, external analysis programs, etc., and a network 3300 that allows communication between the document information extraction processing apparatus 3100 and the external system 3200.

The network 3300 in Fig.57 mutually connects the document information extraction processing apparatus 3100 and the external system 3200 arid may, for instance, be the Internet.

The external system 3200 in Fig. 57 is connected to the document information extraction processing apparatus 3100 via the network 3300 and provides the user with external databases of literatures pertaining to theses, magazines, etc, and websites that execute external analysis programs, etc.

The external system 3200 may be a WEB server or an ASP server which may be constructed from commonly available information processing devices such as the workstation, personal computer, etc. and other accessories. The functions of the external system 3200 are realized by the hardware such as the CPU, disk device, memory device, input device, output device, communication control device, etc. that constitute the external system 3200 and the programs controlling these hardware.

The document information extraction processing apparatus 3100 in Fig. 57, schematically includes a control unit 3102 such as the CPU which controls the entire document information extraction processing apparatus 3100, a communication control interface unit 3104 that is connected to a communication device (not shown) such as a router that is connected to a communication path, and the like, an input/output control interface unit 3108 that is connected to an input device 3112 and an output device 3114, and a storage unit 3106 that stores databases, tables, and the like. All the parts mentioned above are connected for mutual communication via one communication path or another. The document information extraction processing apparatus 3100 as a whole is connected, via the communication device such as the router or via a wired or wireless communication path such as a dedicated line, to the network 3300 enabling communication.

The storage unit 3106 that stores the databases and tables (semantic dictionary information file 3106a through process result file 3106h) is a fixed disk device and stores all types of programs, tables, files, databases, webpage files, etc. required for various processes.

Of these constituent elements of the storage unit 3106, the semantic dictionary information file 3106a is a semantic dictionary information storage device storing the semantic dictionary information defining the concept relation of canonical form and variant form of each word. Fig. 59 is a drawing illustrating a sample of information stored in the semantic dictionary information file 3106a. The semantic dictionary information stored in the semantic dictionary file 31 06a defines the concept relation between the canonical form and variant form and the attribute information that is treated as a condition while handling information pertaining to the canonical forms and variant forms.

Category dictionary information of semantic dictionary information file 3106b defines the categories belonging to the canonical form. Fig. 60 is a drawing illustrating a sample of information stored in the category dictionary information file 3106b. The category dictionary information, as shown in Fig. 60, defines concept relation of category and canonical form, category structure (Fig. 60 is a conceptual drawing of category structure. The actual file comprises information regarding parent node and child node of each node (category).), and the attribute information which is the basis for extracting information pertaining to category field of each word.

An analysis object document file 3106c is a document information storing means which stores address information, such as the textual document of the document to be analyzed, the URL of the link set in its textual document, and the like. As long as the address information has a portion in the textual document that can be interpreted partially as an identifier of the external database, the analysis object document file 3106c may store the hyperlink (WWW link) information on the external database.

Check phrases list file 3106e stores a list of phrases used for checking.

Pattern file for checking 3106f stores the list of patterns for checking.

An extraction object part-of-speech information file 31 06g stores the part-of-speech information to be extracted which is decided by the part-of-speech that forms a condition while extracting information. Fig. 74 is a drawing illustrating a sample of extraction object part-of-speech information stored in extraction object part-of-speech information file 3106g. As shown in Fig. 74, the extraction object part-of-speech information stores the part-of-speech that are treated as a condition for extracting the information.

A process result file 3106h stores the work files such as a process result, a mean result, etc. of each process by the control unit.

The structure of various dictionaries stored in semantic dictionary information file 3106a, category dictionary information file 3106b, and dictionary information file 3106d used for syntax analysis, and the like, can be changed for editing by the user and for computing process. In other words, for editing by the user, dictionary structure with easy attachment and detachment of an attribute, and an easily changeable attribute value is desired, for instance, dictionary constructed by employing XML. Thus, attachment and detachment of an attribute is realized by changing DTD, and changes in an attribute value is realized by editing a text document with a tag, and the like.

Since the desired object for computer processing is easy high-speed processing, dictionary construction using the Comma Separated Value CSV etc. may be performed. Since the document information extraction processing apparatus 3100 is equipped with the automatic conversion function from the dictionary for user editing to the dictionary for computer processing, auto generation is possible.

Returning to Fig. 57, the communication control interface 3104 controls the communication between the document information extraction processing apparatus 3100 and the network 3300 (or a communication device such as the router, and the like). In other words, the communication control interface 3104 carries out communication with another terminal through the communication path

The input/output control interface unit 3108 in Fig. 57 controls the input device 3112 and the output device 3114. The output device 3114 may be a monitor (including television) or speakers (the output device 3114 is hereinafter referred to as monitor). The input device 3112 may be keyboard, mouse, microphone, etc. The monitor and the mouse together function as a pointing device.

The control unit 3102 in Fig. 57 has an internal memory for storing control programs such as the OS (Operating System) and programs and data required for regulating various processes, and using these programs carries out information processing for execution of various processes. The control unit 3102 schematically comprises a attribute information registration unit 3102a, attribute decision extraction unit 3102b, a dictionary entry checking unit 3102c, a checked dictionary extraction unit 3102d, extraction object part-of-speech information registration unit 3102e, syntax analyzing unit 3102f, morpheme extraction unit 3102g, text mining processing unit 3102h, and an identification processing unit 3102i.

The attribute information registration unit 3102a registers the attribute information of the canonical form, the variant form, or the category field of each phrase that is defined in the semantic dictionary or the category dictionary.

When the canonical form and the variant form or the category item exists in the textual document information in the analysis object document, the attribute decision extraction unit 3102b extracts information of the canonical form, the variant form and the category item, when it possesses the corresponding attribute information into which the canonical form and the variant form or the category item was registered by the attribute information registration method.

The dictionary entry checking unit 3102c checks the information stored in the semantic dictionary information and/or category dictionary information. As shown in Fig. 58, the dictionary entry checking unit 3102c comprises a canonical form consistency checking unit 3102r, a statistics checking unit 3102s, a co-occurrence checking unit 3102t, and an entry-wise checking unit 3102u. The canonical form consistency checking unit 3102r checks whether the variant form entered in the semantic dictionary is entered as a different canonical form. The statistics checking unit 3102s carries out entry-related and usage-related statistical processing of canonical forms, variant forms, categories stored in the semantic dictionary information and/or category dictionary information. The co-occurrence checking unit 3102t carries out co-occurrence checking which involves calculating the degree of similarity based on the co-occurrence relation pertaining to canonical forms, variant forms, and categories. The entry-wise checking unit 3102u checks, based on check phrase list or check program or check pattern, each entry of the semantic dictionary information and/or category dictionary information.

The checked dictionary extraction unit 3102d carries out the information extraction of the canonical form or the variant form, when the canonical form or the variant form is unable to detect the bug in the textual document information in the analysis object document by the dictionary entry checking method.

The extraction object part-of-speech information registration unit 3102e registers the part-of-speech information for extraction that the established part-of-speech uses as a condition at the time of carrying out information extraction.

The syntax analyzing unit 3102f performs the syntax analysis for the textual document information in the analysis object document, and determines the part-of-speech of each word that appears in the textual document information.

When the above-mentioned word exists in the above-mentioned textual document information in the analysis object document and when a word is registered as the part-of-speech by the part-of-speech information registration method for extraction, the morpheme extraction unit 3102g carries out the information extraction of the words and the parts-of-speech.

The text mining unit 3102h, executes the statistical/analytical process for the information extraction result by the text mining process shown in Fig. 56.

The identification processing unit 3102i identifies the name of the similar terms by changing the each term registered in the textual document information or dictionary information of each type, to small case or making it singular.

The processes carried out by each of these parts will be explained in detail in a later section.

### [Processes of the system]

An example of the processes of the system according the embodiment constructed in this way will be explained next with reference to Fig. 61 through Fig. 73.

### [Information extraction process by attribute information]

An information extraction process by attribute information will be explained first with reference to Fig. 61. Fig. 61 is a schematic diagram showing an example of the extraction process by attribute information by the system according to an embodiment of the present invention.

The attribute information registration unit 3102a of the document information extraction processing apparatus 3100, registers the attribute information which forms the condition during information extraction for the canonical form and the variant form of each term that is defined in the semantic dictionary pre-stored in the semantic dictionary file 3106a (Step SB3-1). The attribute information registration unit displays the registered attribute information on the screen for attribute information registration at the output device 3114. A user is made to input the attribute information corresponding to the canonical form and the variant form of each term through input device 3112, the input information may be registered by storing this input information in the semantic dictionary information file 3106a.

The statistical/analytical process is carried out for appearance frequency from the extractions obtained by extracting the canonical form and the variant form by referring the semantic dictionary from the textual document information of analysis object document which is stored in the analysis object document file 3106c. Based on the statistical/analytical process by the document information extraction processing apparatus 3100, the attribute decision extraction unit 3102b, as a result of applying semantic dictionary information file 3106a, when a canonical form or the variant form exists in the analysis object document, and when it has the attribute information corresponding to respective canonical form or the variant form which is registered by attribute information registration unit 3102a, information of the canonical form and variant form or the category item is extracted (Step SB3-2).

Although in Fig. 61 an example of the information extraction process using the attribute information which receives the canonical form defined as semantic dictionary information using the semantic dictionary information stored in semantic dictionary information file 3106a, the document information extraction processing apparatus 3100 can similarly perform information extraction process using the attribute information over the canonical form and the category item which were defined as category dictionary information using the category dictionary information stored in category dictionary information file 3106b.

The information extraction process by attribute information ends here.

### [Auto-adjustment process of dictionary entry]

The auto-adjustment process of dictionary entry will be explained next with reference to Fig. 62 through Fig. 72. Fig. 62 is a schematic diagram explaining an example of the auto-adjustment process of dictionary entry.

The dictionary entry checking unit 3102c of the document information extraction processing apparatus 3100, executes the checking of the faults according to the canonical form and the variant form of each term which is defined in the semantic dictionary information stored in the analysis object document file 3106c, when a bug is detected, the entry is registered into an incorrect entry list, and is stored in the process result file 3106h (Step SC3-1).

The document information extraction processing apparatus 3100, refers the semantic dictionary from the textual document information in the analysis object document which is stored in the analysis object document file 3106c, and statistical/analytical process of appearance frequency is performed from the number of extractions of a semantic form and variant form. At the dictionary entry checking unit 3102c when no bug was detected in the canonical form or the variant form existing in the textual document information in the analysis object document by processing of the checked dictionary extraction unit 3102d, information extraction of the canonical form or the variant form is carried out (Step SC3-2).

The bug checking technique of the dictionary entry by dictionary entry checking unit 3102c is illustrated below.

### (1) The bug checking technique of the dictionary entry using the check term phrase list

Fig. 63 is a schematic diagram illustrating an example of the bug checking technique of the dictionary entry using the check term phrase list of the present system according to the present embodiment. As shown in Fig. 63, the an entry-wise checking unit of the document information extraction processing apparatus 3100, checks each unit entry of the semantic dictionary information stored in the semantic dictionary information file 3106a and/or category dictionary information stored in the category dictionary information file 3106b, based on the check term phrase list stored in check phrase list file 3106e. A check term phrase list saves as a list the terms which must not be registered as canonical forms or variant forms, such as a preposition, an article, a pronoun, and the like.

### (2) The bug checking technique of the dictionary entry using the pattern or logic

Fig. 64 is a schematic diagram illustrating an example of the bug checking technique of the dictionary entry using the pattern or logic for a checking of the present system according to the present embodiment. As shown in Fig. 64, the an entry-wise checking unit of the document information extraction processing apparatus 3100, checks each unit entry of the semantic dictionary information stored in the semantic dictionary information file 3106a and/or category dictionary information stored in the category dictionary information file 3106b, based on the checking pattern stored in a pattern file 3106f or a program for a checking. The pattern for checking registers patterns (for instance, patterns described by the canonical expression etc.) which must not be used, such as numerical expressions and sign array expressions. The program for checking is a program which checks the registration of plural forms of a canonical form which are registered as another canonical forms. The program for checking, as shown in Fig. 65, measures the text string length, the number of words, the number of characters for each character kind, and the like for each canonical form or variant form, checks whether the all measured items are in the predefined normal range. This program may also be a measurement program for outputting an unusual check result.

### (3) The bug checking technique of the dictionary entry using the canonical form consistency check

The canonical form consistency check process will be explained next with reference to Fig. 66. Fig. 66 is a schematic diagram illustrating an example of the canonical form consistency checking process.

As shown in Fig. 66, the canonical form consistency checking unit 3102r of the document information extraction processing apparatus 3100, checks whether the variant form, which is registered in the semantic dictionary information stored in the semantic dictionary information file 3106a, is registered as another canonical form. As a result, the duplication registration on the semantic dictionary can be checked since the canonical form is registered as the variant form of another canonical form.

As an example of automatic adjustment of the canonical form and variant form by canonical form consistency checking unit 3102r, the following techniques may be used.

First, the canonical form consistency checking unit 31 02r reproduces a semantic dictionary, and creates a copy dictionary. The canonical form consistency checking unit 3102r repeats and executes the following processes until changes are lost in the group (E1, E2) for all the entries of this copy dictionary. The variant form of E1 is changed to W1 first, and then the canonical form of E2 is cha nged to C2 and variant form of E2 is changed to W2. If W1 contains C2, C2 and W2 will be added to the variant form of E1. Thus, by assigning a dictionary using the created copy dictionary, the variant form can be expanded by employing the entry which has the variant form as a canonical form, and the accuracy and efficiency of information extraction can be improved.

### (4) The bug checking technique of the dictionary entry using the statistical check

The statistical check process will be explained next with reference to Fig. 67 and Fig. 68. Fig. 67 and Fig. 68 are schematic diagrams illustrating an example of the statistical check process according to the present system of the present embodiment.

As shown in Fig. 67, the statistics checking unit 3102s of the document information extraction processing apparatus 3100, carries out a statistical processing involving determination of statistics amount of semantic dictionary information stored in the semantic dictionary information file 3106a and/or entry-related status and usage-related status pertaining to canonical forms, or variant forms, or categories entered in the category dictionary information stored in the category dictionary information file 3106b, and checks whether the result of the statistical processing is within the predetermined normal range.

The statistical processing pertaining to entry-related status may include, as shown in Fig. 67, calculating statistical information such as the number of canonical forms corresponding to the same variant form, the number of categories corresponding to the same canonical form, the number of canonical forms corresponding to the same category, and the like.

As shown in Fig. 68, the statistics checking unit 3102s carries out the statistical processing pertaining to usage-related status by creating a matrix by counting the number of hits for each root data of the document information stored in the analysis object document file 3106c and for each dictionary entry, and determining the total count or distribution along each row and each column. When calculating the total along each column and each row, the statistics checking unit 3102s may either total up all the numbers in the column or the row or count the number of cells that do not have a value of 0. The statistics checking unit 3102s may calculate for each type of information (such as information pertaining to canonical form, semantic dictionary name, information extracted by a parser, n-nary relation, etc.), the total, or count the number of cells that do not have a value of 0. When calculating the statistics amount, the statistics checking unit 3102s may calculate for each column or row a maximum value, a minimum value, an average value, or distribution, etc., or may calculate for each type of information or for the entire table, a maximum value, a minimum value, an average value, or distribution.

For the statistical processing related to the category dictionary, the statistics checking unit 3102s may count the number of extractions for each root data of the document information stored in the analysis object document file 3106c, and for each node of the category dictionary. The statistics checking unit 3102s may create a matrix, and determine the total count or distribution along each row and each column. When calculating the total along each column and each row, the statistics checking unit 3102s may either total up all the numbers in the column or the row or count the number of cells that do not have a value of 0. When calculating the statistics amount, the statistics checking unit 3102s may calculate for each column or row a maximum value, a minimum value, an average value, or distribution, etc., or may calculate for each type of information or for the entire table, a maximum value, a minimum value, an average value, or distribution.

The statistics checking unit 3102s may also count for each root data or m pairs of information, the number of extractions from the portion of associated text. In this way, it can be checked whether the term pairs are correctly entered with a meaningful sequence.

The statistics checking unit 3102s may also carry out statistical processing for each root data by counting the number of portions that are not hit during the dictionary search, or the number words in the portions from where information is extracted. Alternatively, the statistics checking unit 3102s may count the number of canonical forms for which no category has been assigned, or which are not converted to elements having an n-nary relation.

### (5) The bug checking technique of the dictionary entry using the co-occurrence check

A process of co-occurrence checking will be explained next with reference to Fig. 69 and Fig. 70, which are schematic diagrams illustrating the co-occurrence checking process of the system according to an embodiment of the present invention.

As shown in Fig. 69, the co-occurrence checking unit 3102t of the document information extraction processing apparatus 3100 calculates similarity between terms based on semantic dictionary entries that have the same variant form, or categories having the same canonical form. For example, applying it to the semantic dictionary (in which XXX represents the canonical form and YYY group represents the variant form) in the example shown in Fig. 69, both the canonical forms A and B have the same variant form W in the semantic dictionary and hence have a co-occurrence relation between them. If all the variant forms of the canonical forms A and B are the same, then the canonical forms A and B are considered to be one and the same. If some of the variant forms of the canonical forms A and B are different, the canonical forms A and B they are considered to be similar. Applying it to the category dictionary (in which XXX represents the category, and YYY group represents the canonical form) in the example shown in Fig. 69, both the categories A and B have the same canonical form W in the category dictionary and hence have a co-occurrence relation between them. If all the canonical forms of the categories A and B are the same, then the categories A and B are considered to be one and the same. If some of the canonical forms of the categories A and B are different, the categories A and B are considered to be similar.

The degree of similarity may be calculated, as shown in Fig. 69, by means of the number of matches (in Example 1 of Fig 70, X and W are matching and hence the degree of similarity is 2) or by means of match ratio (in Example 2 of Fig. 70, two matches are found among the entire group of 13 elements, hence 2/13).

### (6) Output process of check results

An output process of check result will be explained next with reference to Fig. 72, which is a schematic diagram illustrating the output process of the system according to an embodiment of the present invention.

The dictionary entry checking unit 3102c of the document information extraction processing apparatus 3100, in case of exceeding the normal range of the check result, the check result (incorrect entry list) is output to the output device 3114.

The automatic adjustment process of the dictionary entry ends here.

### [Identification process using logic]

A process of identification using logic will be explained next with reference to Fig. 71, which is a schematic diagram illustrating the name identification process that uses a logic of the system according to an embodiment of the present invention.

As shown in Fig. 71, the identification processing unit 3102i of the dictionary information extraction processing apparatus 3100 appraises the identity of the phrase in every dictionary check field or textual document information of analysis object document, and converts the phrase into lower case, singular form, etc. and thereby enhances the accuracy of the checking process. The identification processing unit 3102i can execute the name identification process any time and in any process, by individually calling any unit within the control unit 3102 (for instance, checked dictionary extraction unit 3102d, and the like). As a result the accuracy and efficiency in the analysis can be increased by conducting the name identification employing similar logic in every dictionary check item or textual document of analysis object document.

The identification process ends here.

### [Morpheme extraction process]

A process of morpheme extraction process will be explained next with reference to Fig. 73, which is a schematic diagram illustrating the morpheme extraction process of the system according to an embodiment of the present invention.

The extraction object part-of-speech information registration unit 3102e of the document information extraction processing apparatus 3100, registers the extraction object part-of-speech information into the extraction object part-of-speech information file 3106g which is predefined as a condition at the time of carrying out information extraction (Step SD3-1). The extraction object part-of-speech information registration unit 3102e displays the screen for the registration of the extraction object part-of-speech information on an output device 3114. Thus a user may be made to enter the part-of-speech information for extraction through input device 3112, and thereby registering input information by storing the input information in the extraction object part-of-speech information file 3106g.

The syntax analyzing unit 3102f of the document information extraction processing apparatus 3100, conducts the textual analysis by employing the functions such as well known natural language parser for the textual document information of the analysis object document which is stored in the analysis object document file 3106c, and then determines the part-of-speech of each term which appears into the textual document information. Further, the morpheme extraction unit 3102g creates morphemes, which contains namely, the representation in the analysis object document, the canonical form corresponding to it, and the part-of-speech by syntax analysis relating to each word that appears into the text information on the analysis object document (Step SD3-2).

When the term exists in the textual document information of the analysis object document, the morpheme extraction unit 3102g of the document information extraction processing apparatus 3100, carries out information extraction of the terms and the parts-of-speech, when the term of a morpheme is the part-of-speech registered by extraction object part-of-speech information registration part 3102e (Step SD3-3).

The morpheme extraction process ends here.

### [Other embodiments]

An embodiment of the present invention was explained so far. However, the appended claims are not to be thus limited and are to be construed as embodying all modifications and alternative constructions that may occur to one skilled in the art which fairly fall within the basic teaching herein set forth.

For instance, the document information extraction processing apparatus 3100 is shown to perform the processes as a stand-alone system in the embodiment described so far. However, the document information extraction processing apparatus 3100 can also be constructed in such a way that it can process a request from a client terminal set up separate from itself and display the process result on the client terminal.

Among the processes explained pertaining to the embodiment described so far, all the automatic processes can be carried out manually entirely or in part, and all the manual processes can be carried out automatically entirely or in part.

The process sequences, control sequences, names, information that include various types of stored data and search condition parameters, sample screens, and database structures appearing in the text and drawings of this literature can be modified unless otherwise specified.

All the constituent elements of the document information extraction processing apparatus 3100 represented in the drawings are functional concepts and need not necessarily be represented physically.

For example, the process functions of the servers of the document information extraction processing apparatus 3100, particularly, the process functions carried out by the control unit 3102 can be entirely or partially realized by a central processing unit (CPU) or a program executed by the CPU, or by hardware through wired logic. The program is stored in a storage medium, which will be described in a later section, and is loaded mechanically into the document information extraction processing apparatus 3100 as and when required.

In other words, a computer program recorded on the recording medium 3106 such as a ROM or HD, jointly with the operating system (OS), conveys instructions to the CPU to execute various processes. This computer program is loaded on a RAM and forms the control unit 3102 jointly with the CPU. This computer program may also reside on an application program server connected to the external system 3200 via the network 3300 and may be entirely or partially downloaded as the situation demands.

The program according to the present invention can also be stored in a computer-readable recording medium. The 'recording medium' can be of 'portable' type such as a flexible disk, magneto optic disk, ROM, EPROM, EEPROM, CD-ROM, MO, DVD, etc., a 'fixed' type such as an internal ROM, RAM, HD, etc., or a 'communication' type that can store the program for a short time through a network such as a LAN, WAN, and the Internet.

The 'program' can be written in any language or written using any description method and is insensitive to the type of source codes and binary codes. The 'program' need not necessarily be a single program and may be broken up into a plurality of modules and libraries or it may accomplish the functions by acting jointly with another program such as the OS (Operating System). Known methods can be employed for fabricating the physical structure required for reading the program from the recording medium in each device according to the present invention, the method of reading, and the method of installation following reading of the program.

The various databases etc. (semantic dictionary information file 3106a through process result file 3106h) stored in the storage unit 3106 are stored either in a memory device such as the RAM and ROM, or a fixed disk device such as the hard disk or a storage device such as the flexible disk, optical disk, etc. and store various programs, tables, files or files required for web pages need for various processes and websites.

The document information extraction processing apparatus 3100 may be realized by connecting peripheral devices such as the printer, monitor or image scanner to the known information processing terminal such as the personal computer, workstation, etc. and by installing on this information processing apparatus the software (which includes program, data, etc.) that execute the method according to the present invention.

The physical structure of the document information extraction processing apparatus 3100 represented in broken down or integrated forms in the drawings is not restricted to those illustrated. The structure can be broken down or assembled functionally and physically as per requirement. For instance, a different database device may be used for each database and process may be partially realized by CGI (Common Gateway Interface).

The network 3300 mutually connects the document information extraction processing apparatus 3100 and the external system 3200. The network 3300 may be the Internet, intranet, LAN (both wired and wireless), VAN, personal computer communication network, public telephone network (both analog and digital), leased line network (both analog and digital), CATV network, IMT 2000 method, mobile circuit-switching network/mobile packet switching network such as GSM method or PDC/PDC-P method, wireless calling network, local wireless network such as bluetooth, PHS network, satellite communication network such as CS, BS, ISBD, etc. In other words, the present system can send and receive various data via any network, wireless or otherwise.

To sum up, according to the present invention, the attribute information, which is used as the condition at the time of carrying out information extraction, is registered according to the canonical form and the variant form or the category item of each term defined in the semantic dictionary information or the category dictionary. In case the canonical form, variant form, or category item exists in the textual document information of the document to be analyzed, the information pertaining.to the canonical form, the variant form, or the category item possessing the correlating attribute information is extracted. Thus by specifying extraction conditions for every term beforehand the noise at the time of information extraction can be reduced, thereby increasing the accuracy of information extraction. Thus, a document information extraction processing apparatus, a document information extraction processing method, a document information extraction processing program, and a recording medium are realized which can deliver increased extraction efficiency.

According to the present invention, the bugs are checked for the canonical form and the variant form for each term that is defined in the semantic dictionary information. If there exist canonical forms or variant forms which are not checked for bugs, and if the quality of the dictionary information is bad, the faults are eliminated since the information related to the canonical form or the variant form is extracted. Thus, a document information extraction processing apparatus, a document information extraction processing method, a document information extraction processing program, and a recording medium are realized which can deliver increased extraction efficiency.

According to the present invention, syntax analysis is performed on the textual document information of the analysis object document, by registering the part-of-speech information to be extracted which forms a condition for extracting information. The part-of-speech of each word which appears in the textual document information concerned is determined. When a word exists in the textual document information in the analysis object document and is the part-of-speech into which the concerned word was registered, information pertaining to the word and the part-of-speech is extracted. Thus, a document information extraction processing apparatus, a document information extraction processing method, a document information extraction processing program, and a recording medium are realized which can extract information pertaining to a word of desired meaning even if the word appears as different parts of speech having different meanings.

(V) An embodiment of a text mining processing apparatus, a text mining processing method, a text mining processing program, and a recording medium will be explained next with reference to the accompanying drawings. The present invention is no way confined to this embodiment alone.

More specifically, the present embodiment discussed next is not to be limited to document database search system for the documents of natural sciences namely living things, medical science, or chemistry, but can be considered in similar ways for all the systems, with which the document information which relates to all fields can be searched.

### [Overview of the present invention]

First an overview of the present invention will be explained followed by the structure and processes.

The present invention has the following basic features. That is, the present invention considers high precision/efficiency/automation of total result of analysis in the text mining process illustrated in Fig. 75. The present invention puts forth a high precision text mining analysis in the text mining process by offering the techniques of evaluating an analysis procedure (a textual display, dictionary entry search, trace result display, etc.), and the tools of analysis using syntax structure. The present invention also offers the efficiency increasing techniques of totaled results (listing methods of an analysis screen (multi-window display, etc.), sorting/clustering of category items of 2-D map shown in Fig. 76, etc.). In addition, the present invention offers the analysis automation techniques (operation history collection, automated operation execution, etc.) and the large scale concept management techniques (tree structure hierarchying, intermediate node total, etc.). All these techniques will be explained next.

### [System Structure]

The system will be explained next. Fig. 77 is a block diagram of a system in which the present invention is applied. Only portions relevant to the present invention are schematically represented in Fig. 77. This system schematically includes a text mining processing apparatus 4100, an external system 4200 that provides external databases, external analysis programs, etc., and a network 4300 that allows communication between the text mining processing apparatus 4100 and the external system 4200. The external databases may be literature information, array information, and the like.

The network 4300 in Fig. 77 mutually connects the text mining processing apparatus 4100 and the external system 4200 and may, for instance, be the Internet.

The external system 4200 in Fig. 77 is connected to the text mining processing apparatus 4100 via the network 4300 and provides the user with external databases of literatures pertaining to literature information, array information, etc, and websites that execute external programs, etc.

The external system 4200 may be a WEB server or an ASP server which may be constructed from commonly available information processing devices such as the workstation, personal computer, etc. and other accessories. The functions of the external system 4200 are realized by the hardware such as the CPU, disk device, memory device, input device, output device, communication control device, etc. that constitute the external system 4200 and the programs controlling these hardware.

The text mining processing apparatus 4100 in Fig. 77, schematically includes a control unit 4102 such as the CPU which controls the entire text mining processing apparatus 4100, a communication control interface unit 4104 that is connected to a communication device (not shown) such as a router that is connected to a communication path, and the like, an input/output control interface unit 4108 that is connected to an input device 4112 and an output device 4114, and a storage unit 4106 that stores databases, tables, and the like. All the parts mentioned above are connected for mutual communication via one communication path or another. The text mining processing apparatus 4100 as a whole is connected, via the communication device such as the router or via a wired or wireless communication path such as a dedicated line, to the network 4300 enabling communication.

The storage unit 4106 that stores the databases and tables (a semantic dictionary information file 4106a through a batch script file 4106f) is a fixed disk device and stores all types of programs, tables, files, databases, web page files, etc. required for various processes.

Of these constituent elements of the storage unit 4106, the semantic dictionary information file 4106a is a semantic dictionary information storing means which stores the semantic dictionary information that is defined by matching the variant form of a term with its canonical form. Fig. 91 is a drawing illustrating a sample of semantic dictionary information stored in the semantic dictionary information file 4106a. As shown in Fig. 91, the matching between the variant form and the canonical form is defined.

The category dictionary information file 4106b is a category dictionary information storing method which stores the category dictionary information that defines the category which belongs to the canonical form. Fig. 92 is a drawing illustrating a sample of the category dictionary information stored in the category dictionary information file 4106b. As shown in Fig. 92, the category dictionary information stored in the category dictionary information file 4106b defines the relation between the category and its canonical form, and the category structure (Fig. 92 shows the conceptualization of the category structure, and defines the information of a parent node and a child node of each node (category) in the actual file.).

An analysis object document file 4106c is a document information storing method which stores address information, such as the textual document of the document to be analyzed, the URL of the link set in its textual document, and the like. As long as the address information has a portion in the textual document that can be interpreted partially as an identifier of the external database, the analysis object document file 4106c may store the hyperlink (WWW link) information on the external database.

An operation history information file 4106d is an operation history information storing method which stores the operation history information about the comment of the user pertaining the operation time, the user identifier, an operation name, an operation argument, an operation result, an operation result, and an operation intention for each operation at the time of text mining.

A process result file 4106e is a processing result storing method which stores the work files such as a process result, a mean result, etc. of each process by the control unit.

A batch script file 4106f is a batch script information storing method which stores the information about a batch script, and the like.

Returning to Fig. 77, the communication control interface 4104 controls the communication between the text mining processing apparatus 4100 and the network 4300 (or a communication device such as the router, and the like). In other words, the communication control interface 4104 carries out the communication with another terminal through the communication path.

The input/output control interface unit 4108 in Fig. 77 controls the input device 4112 and the output device 4114. The output device 4114 may be a monitor (including television) or speakers (the output device 4114 is hereinafter referred to as monitor). The input device 4112 may be keyboard, mouse, microphone, etc. The monitor and the mouse together function as a pointing device.

The control unit 4102 in Fig. 77 has an internal memory for storing control programs such as the OS (Operating System) and programs and. data required for regulating various processes, and using these programs carries out information processing for execution of various processes. The control unit 4102 schematically comprises an analysis procedure evaluation unit 4102a, a syntax structure analysis unit 4102b, a multi-window display unit 4102c, a 2-D map display screen control unit 4102d, an operation history collecting unit 4102e, an automated operation execution unit 4102f, a category hierarchy creating unit 4102g, an intermediate node totaling unit 4102h, and a text mining unit 4102p.

The analysis procedure evaluation unit 4102a is an analysis procedure evaluation method which evaluates the analysis procedure of the text mining process by the text mining unit 4102p. As shown in Fig. 78, the analysis procedure evaluation unit 4102a comprises of a text display screen control unit 4102i, a dictionary entry search screen control unit 4102j, and a trace result display screen control unit 4102k. The text display screen control unit 4102i is a list of terms that are contained in the textual document information of the document to be analyzed and its text information. The text display screen control unit 4102i, for every term, controls, at the output device, the output of the total key list information which matches the type of term and/or the link button which is placed at the stored address of the term. The dictionary entry search screen control unit 4102j controls, at the output device, the output namely, the searched term input by the user, the information relating to the canonical form extracted by searching the semantic dictionary information based on the searched word and its semantic dictionary, and the information relating to the category extracted by searching the category dictionary information based on searched term and its category entry dictionary. The trace result display screen control unit 4102k controls, at the output device, the output of trace result information which includes at least one out of the search result of semantic dictionary, or part-of-speech information by syntax analysis processing, or search result of category dictionary, for the term which is contained in the textual document information and in the textual document information in the document to be analyzed, and is object totaling.

The syntax structure analysis unit 4102b performs totaling process of text mining as a single category, by sequential combination of "n" nouns and verbs included in the textual document information, corresponding to the result of syntax analysis for the textual document information of the document to be analyzed.

When the multi-window display unit 4102c searches by carrying out finer search by using a search condition in a second search window on a search result of a first search window for text mining, the multi-window display unit 4102c displays the mutually linked search windows and the search result display window in the form of multi-window display. When the display contents of any of these windows change, the multi-window display unit 4102c reflects the changed contents automatically in the other windows as well.

The 2-D map display screen control unit 4102d, outputs to an output device, a 2-D map window by sorting or clustering each category entries corresponding to the rows and columns of the 2-D map that displays the text mining result. The 2-D map display screen control unit 4102d, as shown in Fig. 79, comprises an item sorting unit 4102m and an item clustering unit 4102n. The item sorting unit 4102m, outputs to an output device 2-D map window by sorting the rows and columns of every category item to display the text mining result in the 2-D map. The item clustering unit 4102n, outputs to an output device, a 2-D map window by clustering the rows and columns of every category item to display text mining result in the 2-D map.

The operation history collecting unit 4102e, for each operation at the time of text mining, collects at least one of the operation history information, namely from the operation time, the user identifier, the operation name, the operation argument, the operation object, the operation result and the comment of user on the intention of operation.

Based on the operation history information collected by the operation history collection method, the automated process execution unit 41 02f creates a batch script, and then executes it.

The category hierarchy creating unit 4102g, sets hierarchy in the tree model, and outputs to an output device, the totalized result of each category which is recorded in the category dictionary information employed in the text mining process.

When handling a intermediate node as a concept item where the totalized result of each category is hierarchied in the tree structure by the category hierarchy creating unit, the intermediate node totaling unit 4102h creates the totalized result when the totalized result of each leaf node serves as a descendent of the intermediate node, and/or, creates the totalized result when the intermediate node of the totalized result of the analysis object document contains the canonical form and the variant form, when the canonical form and the variant form for intermediate node is defined in the semantic dictionary employed in the text mining process.

Text mining unit 4102p executes statistical/analytical process for information extraction result by text mining process shown in Fig. 75.

The processes carried out by each of these parts will be explained in detail in a later section.

### [Processes of the system]

An example of the processes of the system according the embodiment constructed in this way will be explained next with reference to Fig. 77 through Fig. 90.

### [Textual document display screen controlling process]

A textual document display screen controlling process will be explained first with reference to Fig. 80.

According to the text display screen control unit 4102i, the text mining processing apparatus 4100 displays the textual document information stored in the analysis object document file 4106c on an output device 4114 with the list of terms (keys) to be totalized. For instance, when totaling process is performed for the appearance frequency namely, of the canonical form corresponding to the category registered in the category dictionary information file 4106b, and the variant form corresponding to this canonical form registered in the semantic dictionary information file 4106a, this canonical form and the variant form serve as the term (key) for processing. If there is a part which the key in the textual document can interpret as an identifier of the external database, an hyperlink (WWW link) will be tiled with the textual document information discussed previously.

Fig. 80 is a drawing illustrating a sample textual document screen displayed on the output device 4114. As shown in Fig. 80, the window for one textual document display screen is prepared for every literature. Each window consists of a textual document information display area MA4-1, a total key list information display area MA4-2, and the like. The total key list information display area MA4-2 is formed from namely, a display area MA4-3 for the type of term (special field of study to which a part-of-speech and a term belong), a display area MA4-4 of the term which appears in the textual document, and a hyperlink button MA4-5 at the external database (if required). The items of the total key list may be retrieved beforehand from an intermediate produced item as an intermediate product of the text mining process (previous process).

The textual document display screen controlling process ends here.

### [Dictionary entry search screen controlling process]

A dictionary entry search screen controlling process will be explained next with reference to Fig. 81. The dictionary entry search screen control unit 4102j of the text mining processing apparatus 4100, inputs a word or a string of words specified by the user, searches for the category dictionary stored in the category dictionary information file 4106b or the semantic dictionary stored in the semantic dictionary information file 4106a, and by extracting the matching dictionary entry, outputs it to the output device 4114.

The dictionary entry search screen control unit 4102j searches the semantic dictionary with the input search word, and the cluster of the canonical forms which matches is retrieved. Next, using the entered search word and each element of the canonical form the category dictionary is searched, and the category cluster which matches is retrieved.

As a search result, the input word, its canonical form, the category to which it belongs, file/database in which the dictionary entry used for conversion is included, and the identifier/position in the file/database of the dictionary entry are output to the output device 4114.

Fig. 81 is a drawing illustrating a sample of dictionary entry search screen displayed at the output device 4114. As shown in Fig. 81, the dictionary entry search screen is formed namely by a search word input column MB4-1, a search button MB4-2, and a result display area MB4-3.

After the user has input a desired word or a string of words into the search word input column MB4-1, by clicking on the search button MB4-2 using the input device 4112 such as a mouse, the search results are displayed in the result display area MB4-3 by the process of the dictionary entry search screen control unit 4102j of the text mining processing apparatus 4100. According to the present example, the searched result of the input word at the semantic dictionary is displayed when it respectively matches the canonical forms t1, t2, t3, ... (matches with the canonical forms after t2 are omitted in Fig. 81). The searched result of the input word at the category dictionary is displayed when it respectively matches the categories c1, c2, c3, ... When the input word matches with the category c1, it displays dictionary items such as identifier e2 of the category dictionary having dictionary file name D2. The same can be said of the categories c2 and c3. The categories c1 and c3 are the dictionary entries belonging to the same dictionary (D2). When the input word matches with the canonical form t1, it displays dictionary entries such as identifier e1 of the semantic dictionary having dictionary file name D1. The figure further displays the case when the canonical form t1 matches the categories c1, c4, and c5. As a result it can be concluded that the literature containing the input word at least belongs to the categories c1, c2, c3, c4, c5.

The dictionary entry search screen controlling process ends here.

### [Trace result display screen controlling process]

A trace result display screen controlling process will be explained next with reference to Fig. 82. The trace result display screen control unit 4102k of the text mining processing apparatus 4100, inputs the textual document information such as English as a natural language specified arbitrarily by the user. Trace application of a series of preprocesses of the text mining are carried out at the textual document information, and the trace result display screen control unit 4102k displays the trace information which clarifies how each element in the input textual document information is recognized by the text mining system.

The trace result display screen control unit 4102k matches the semantic dictionary stored in the semantic dictionary information file 4106a with the input textual document information, and takes the entire string of words as an element structure. The trace result display screen control unit 4102k applies the technical word (technical term) distinction rule to the above-mentioned result, and takes the entire string of words as an element structure. The trace result display screen control unit 4102k applies a known syntax analysis processing system to the above-mentioned result, and provides the part-of-speech information to the element structure. The trace result display screen control unit 4102k matches the category dictionary with the above-mentioned result, and provides category information to the element structure.

The trace result display screen control unit 4102k displays the input-output item of each processing as trace result information. The trace result display screen control unit 4102k may display trace information, such as the fife/database name contained in the dictionary entry used for the semantic dictionary and the category dictionary, and an identifier/position within the fife/database of this dictionary entry.

Fig. 82 is a drawing illustrating a sample of the trace result display screen displayed at the output device 4114.

As shown in Fig. 82 the trace result display screen is formed by textual input column MC4-1 and result display area MC 4-2. In the textual input column MC4-1, the text may be typed for direct processing, and the textual document information to be processed may also be retrieved from the analysis object document file 4106c by clicking the textual retrieval button MC4-4 by entering the literature identifier in the literature identification input column MC4-3. If the user selects the trace button MC4-5, the trace result information is displayed on the trace result display area MC4-2.

The trace result display area MC4-2 repeatedly displays the following information for each element structure (word) of the textual document. In the example shown in Fig. 82, word 1 is converted to canonical form t1, canonical form t2, and so on. In Fig. 82, the entry e1 of the semantic dictionary D1 is converted into the canonical form t1 and part-of-speech N pertaining to word 1. Further, the technical term classification rule F is applied to the canonical form t2. The conversion into part-of-speech is not assigned to word 1 for t2. The canonical form t1 belongs to the categories c1, c4. The entry e5 of the category dictionary D2 applies to the category c1, while the entry e6 of the category dictionary D4 applies to the category c4.

The trace result display screen controlling process ends here.

### [Syntax structural analysis process]

Syntax structural analysis process will be explained next with reference to Fig. 83. The syntax structural analysis unit 4102b of the text mining processing apparatus 4100, based on the result of the syntax analysis for the textual document information in the document to be analyzed which is stored in the analysis object document file 4106c, performs the totaling process of text mining for the document to be analyzed as one category, by combining the sequence of n nouns and n verbs included in the textual document information. In other words, as a result of the syntax analysis performed by the text mining unit 4102p, the syntax structural analysis unit 4102b performs the totaling process of the text mining for the document to be analyzed by creating a category by combining the sequence of n items of nouns and verbs, which appear in a single sentence, and then uses this category in analysis such as a 2-D map.

When the totaling/analysis process is done, it is considered that two or more patterns among the sequentially combined patterns belong to the same category. The methods of considering the identical category are explained next. The two methods can be performed by using either of them or by combining them. In the first method, when combined patterns have a random sequence of "n" nouns and verbs they are considered as identical category. In the second method, when only the word belonging to the same category differs, the difference in any combined patterns is considered as falling under the same category.

Fig. 83 is a schematic diagram illustrating an example of the syntax analysis process according to the present invention. As shown in Fig. 83, the text mining analysis is performed noting that a specific word that appears in a specific sequence belongs to the literature containing the sentence as the same category. In the example illustrated in Fig. 83, the literature with a sentence pattern in which a noun n1 is the first word, followed by the verb v1 and the other nouns belonging to the category c1 appearing in any sequence are totaled in the same category. In the pattern shown in Fig. 83, any word element can appear at the place indicating "*", and any word out of word 1 or word 2 can be used when the representation indicates "(word 1 | word 2)", thereby illustrating the sequence of words.

The syntax structural analysis process ends here.

### [Multi-window creating process]

A multi-window creating process will be explained next with reference to Fig. 84. When search for text mining is done by narrowing down the search conditions from the search results of one search window by further employing another search window. The multi-window display unit 4102c of the text mining processing apparatus 4100, displays these multiple correlated search windows and search result display windows. When the display contents of any one window are changed, the multi-window display unit 4102c controls so that the changed contents are automatically reflected in other windows. In other words, multi-window display unit 4102c, uses a search window, a frequency graph window, a 2-D map window, a time series window, etc. respectively as an independent window which is output at the output device 4114 by text mining unit 4102p, and the like, and enables to correlate with the respective information having plural entities.

Fig. 84 is a sample screen which is displayed at the output device 4114 by creating multi-windows. Fig. 84 illustrates an example which indicates all windows simultaneously with three search windows (w1, w2, and w4) and two 2-D map (w3 and w5). A search window (w1) retains the literature cluster as a mother group. A search window (w2) retains the literature cluster where the cluster of the search window (w1) has further narrowed down by the keyword kw1. A 2-D map window (w3) displays the 2-D map analysis result for the literature cluster from the search window (w2). A search window (w4) retains the literature cluster where the cluster of the search window (w1) has further narrowed down by the keyword kw2. A 2-D map window (w5) displays the 2-D map analysis result for the literature cluster from the search window (w4).

The multi window creating process ends here.

### [2-D map display screen controlling process]

A 2-D map display screen controlling process will be explained next with reference to Fig. 85, Fig. 86, and the like.

A 2-D map display screen control unit 4102d of the text mining processing apparatus 4100, sorts or clusters each category item into rows and columns, and outputs a 2-D map window to an output device 4114, in order to display the 2-D map for the text mining result from the text mining unit 4102p.

For instance, an item sorting unit 4102m of the 2-D map display screen control unit 4102d, displays a 2-D map by sorting each category corresponding to rows and columns in an original mode, a sequence mode of frequency, an alphabet order mode, and the like. In case of the original mode, a category item rearranges its sequence as defined (stored) in the category dictionary that is stored in the category dictionary information file 4106b. In the case of the sequence mode of frequency, frequency value of the category item is the total sum of the of the row or column belonging to the category item, and then category item is rearranged in ascending or descending order based on its frequency value. In the case of alphabetical order mode, the string of name character sequence of a category item is rearranged such that they are placed according to the sequence of alphabets in a dictionary.

Fig. 85 illustrates an example of the control (sorting process) of the 2-D map display screen displayed on an output device 4114. As shown in Fig. 85, a 2-D map window (w1) expresses the state where an item name is sorted vertically/horizontally in the alphabetical order. A 2-D map window (w2) expresses the state where an item name is sorted vertically in alphabetical order, and horizontally in the order of frequency. The sum total values of the frequency of the sequence of the 2-D map items a, b, c, and f are 14, 18, 8, and 15, respectively, are displayed vertically. The 2-D map window (w2) is sorted such that the item with minimum sum c is placed at the rightmost position and the one with maximum sum b is placed at the leftmost position. A 2-D map window (w3) expresses the state where an item name is sorted, vertically in the order of frequency and horizontal in alphabetical order. In the 2-D map window (w3), since the horizontal sum total values of the frequency of the rows of the 2-D map items j, k, and p are 20, 19, and 16, respectively, even after sorting, the rows are not exchanged. A 2-D map window (w4) expresses the state where an item is sorted vertically as well as horizontally, in the order of frequency.

An item clustering unit 4102n of the 2-D map display screen control unit 4102d, clusters the category item of a row and column of the 2-D map, by characterizing other axial items in vectors used as an element. The item clustering unit 4102n may define the degree of similarity of the category items by the scalar product of a vector, and the like. Moreover, by employing the existing technique of clustering algorithm, the item clustering unit 4102n may display the category item of a row and a column by setting a hierarchy.

The item clustering unit 4102n arranges the category items such that they fit in the hierarchy. The item clustering unit 4102n may arrange the category items by any one of the methods discussed next or by combining them. In the first method, plural category items to be observed are specified, and the cluster in which many specified category items are included are clustered at the start (upper left), and then a cluster and a category element are rearranged so that the specified categories may approach the starting point in a possible range. In the second method the cluster is rearranged such that the cluster containing many category elements may approach the starting point (upper left).

Fig. 86 illustrates an example of the control (sorting process) of the 2-D map display screen displayed on an output device 4114. Fig. 85 illustrates a 2-D map which is clustered with respect to the rows and columns. As shown in Fig. 86, category items aa, ab, and ac are contained in a cluster c1, ad, ae, at, and ag in c2, ah and ai in c3, am in c5, and as in c7 as indicated in rows. Further, cluster c1 and c2 are contained in cluster c8, c3 and c4 in c9, and c5, c6, c7, and c7 in c10, while clusters c8 and c9 are contained in c11, and c10 in c12. Moreover, category items ba, and bb are contained in a cluster c20, bc, bd, and be in c21, bf and bg in c22, bh and bi in c23, bj in c24, bk and bl in c25, b in c26, and bz in c28 as indicated in columns. Further, cluster c20 and c21 are contained in cluster c29, c22 and c23 in c30, c24, c25 and c26 in c31, and c27 and c28 in c32, while clusters c29 and c30 are contained in c33, and c31 and c32 are contained in c34. As shown in Fig. 86, the category items are rearranged such that the tree structure of a cluster can be expressed in a plane.

The item clustering unit 4102n may also cluster each.item by the following procedure.

### (1) The item clustering unit 4102n clusters the category items (aa through as) indicated by rows in the following method.

### (1-1) Defining feature vector in each category item:

The item clustering unit 4102n takes as a feature vector of a row category items the vector with elements of co-occurrence frequency with column category items. For instance, the item clustering unit 4102n defines ((aa, ba), (aa, bb), (aa, bc),..., (aa, bz)) as the feature vector of the row category item aa. (aa, ba) indicates the co-occurrence frequency (appearance frequency of documents that include both the category items) of row category item aa with the column category item ba.

### (1-2) Clustering based on the degree of similarity between the category items and displayed by rearranging

The degree of similarity between any two row category items are defined as a scalar product of the feature vector defined as mentioned above, and totaled by the item clustering unit 4102n. General clustering algorithm is applied so that row category items with the high degree of similar may gather.

### (2) The item clustering unit 4102n clusters the category items indicated in columns (ba through bz) by altering the row and column as described in the method (1).

The 2-D map display screen controlling process ends here.

### [Operation history collection process]

An operation history collecting unit 4102e of the text mining processing apparatus 4100, automatically records in the operation history information file 4106d, the operation history information which includes, operation time, user identifier, operation name, operation argument, operation object, operation result, and the like which relates to the interactively performed text mining operation. In addition to the recorded items, the operation history collecting unit 4102e may also record the comment of a user which relates to an operation intention. The comment of a user about an operation intention is a comment input by a user, by specifying the comment entered operation in the analysis tool. A comment may be in the form of a text data, a voice data, a still picture data, or a video data, or its combination. With suitable reference to the operation history information operation collected by the operation history information file 4106d, the operation history collecting unit 4102e can create an operation history collection screen, and can display it on the output device 4114.

Fig. 87 illustrates an example of the operation history collection screen which is displayed on an output device 4114. As shown in Fig. 86, the work history information backed up automatically is output to an operation history collection screen. As shown in the Fig. 87, one column expresses one history item, and each column consists of seven sequences, namely, a display area MD4-1 for the identification number (history item number) for the reference of a history item, a display area MD4-2 for the time when operation was performed, a display area MD4-3 for the ID of the user who operated it, a display area MD4-4 for the name or the kind of operation, a display area MD4-5 for the parameter/argument of operation, a display area MD4-6 for the data/files (identifier, and the like) to be operated, and a display area MD4-7 for the data (identifier, and the like) of the operation result. The identification number (history item number) for reference of the item of operation history information is employed in order to manage a history item in the present system.

In the example shown in this figure, the operation history information is displayed in an ascending order.

Hereafter, the meaning of a history item will be explained in an ascending order.

First, at 16:44 hours (history item number 370), the user KN performs "Open db" operation by making into an argument all (all data that a text mining system handles), and enables it to use all data as "Article set all" in the analysis operation.

At 16:45 hours (history item number 371), the history of search operation data carried out from 1990 to 2002 is loaded, and "Article set 128 (128 is the identification number when the document cluster is handled by the text mining system.)" is generated as a result.

At 16:46 hours (history item number 372), user has searched for "Protein A" in the document cluster 128, and "Article set 129" is generated as a result.

At 16:47 hours (history item number 373), "Category M" which is directly below (root) a category tree in the frequency graph window was selected, and cursor was moved to M.

At 16:51 hours (history item number 374), in the frequency graph window, expansion operation was performed for "Category M", and the child category items directly below M in the tree structure was displayed.

At 16:51 hours (history item number 375), in the frequency graph window, "Category M/D" which is a child of M, was selected, and the cursor was moved to D.

At 16:52 hours (history item number 376), for the article set 129 in the frequency graph window a frequency graph (Frequency graph 37) was generated which related to category D and its child, and displayed.

At 16:53 hours (history item number 377), in the 2-D map window, a 2-D map (2-D map 51) having a vertical axis represented by the child of category D and a horizontal axis represented by the child of category "P/D/A (category A is a child of D, and D is a child of P which differs from M/D)" is generated, with literature cluster 129 as the argument. Reference numeral 51 is an identification number used when the text mining system is handling a 2-D map.

From 17:15 hours (history item number 378) till 17:36 (history item number 383), work similar to the above-mentioned history item number 372 through 377 was done. However, in the search operation of the history item number 378, "Protein B (and not A)" was used as the search key.

At 18:05 hours (history item number 384), the user KN chose the comment input operation by text data in the 2-D map window which shows "2-D map 52". As a result, an analysis intention, a conclusion, etc. of a user regarding "2-D map 52" were recorded as an operation argument of the history item.

At 18:06 hours (history item number 385), in the 2-D map window displaying "2-D map 52", the cell with the 22nd category item of Category D and the 3rd category item of Category A intersect is selected, and a set of article is created which collocates the category items within the article set 130, as an "Article set 131".

The operation history collection process ends here.

### [Automated operation execution process]

An automated operation execution process will be explained next with reference to Fig. 88. Fig. 88 is a schematic diagram illustrating an example of the automated operation execution process.

The automated operation execution unit 4102f of the text mining processing apparatus 4100, based on the operation history information collected in the operation history information file 4106d, creates a batch script, and executes the batch script. In other words, the text mining processing apparatus 4100, carries out the batch execution of the continuation of any interactive operation of the text mining tool by any of the following three methods, or by a combination thereof.

In the first method each function of the text mining system is called as a library of the existing programming language, and by employing the programming language, the batch processing is executed (may be executed by a stored procedure such as Java).

The second method considers a text mining system as a design which is separated into the total processing server and the interactive operation client, and the batch processing is executed by the module which performs prescribed communication protocol instead of the client.

The 3rd method interprets the system of the script language in the text mining system for the exclusive use of batch, and then the script language executes the batch processing.

Fig. 88 illustrates an example of the present embodiment. According to the present diagram, other than the automated operation execution unit 4102f which includes an interactive user interface and batch processing system, the text mining system also comprises namely, the operation history collecting unit 4102e, the text mining unit 41 02p, the analysis object document file 4106c, the operation history information file 4106d, and the batch script file 4106f. The operation history collecting unit 4102e, in the operation history information file 4106d, automatically accumulates the history of the operation performed by text mining part 4102p by the above-mentioned method "automatic backup of an operation history with a comment", and the like. The interactive user interface of the automated operation execution unit 4102f correlates with the operation history collecting unit 4102e if required, and offers the function which searches a partial history from the operation history in the operation history information file 4106d.

The interactive user interface of the automated operation execution unit 41 02f correlates with the operation history collecting unit 4102e if required, creates the batch script by referring the new or partial history, and offers a function which registers the batch script in the batch script file 4106f. The batch processing system of the operation automated execution unit 4102f, receives the identifier of the batch script and the movable range of a parameter from the user interface, and offers a function which retrieves the batch script from the batch script file 4106f and executes it.

An example of a batch script is shown in the lower part of Fig. 88. In this figure, the batch script A is created with reference to the history item numbers 372 through 377 in the history example shown in Fig. 87. The history item number 372 through 377 began from the operation history information accumulated at operation history collecting unit 4102e, through the interactive user interface. The argument (search keyword) and object (Article set to be searched) of the "Search" operation were changed into the script parameters namely, a "PARAMETER 1" and a "PARAMETER 2". The result of the "Search" operation was changed into a script variable "Article set a". As a result, the "Show" operation and the "2-D map" to be operated was changed into the variable "Article set a". The result of the "Show" operation was changed to a variable "Frequency graph b" and the result of the "2-D map" operation was changed into a variable "2-D map c".

The batch script A, for instance, is executed as follows. A user specifies the movable ranges of "PARAMETER 1" (kw1, kw2, ..., kwn), and "PARAMETER 2" (Article set100, Article set101, ..., Article set199), and thereby specifying the execution of the batch script A. A batch processing system executes the batch script A by considering all the combinations (100xn kinds) of the two parameters. At the time of execution, the part of the parameter of a script is transposed to the actual data, and is performed in the order of a script. The variable of script, creates new data type which is appropriate when starting, and then replaces by a data, the part which is currently referred to with the script. For instance, when executing the "Search" operation, if "Article set" was created till 172, in order to accumulate the result, a new "Article set 173" (=a) will be created and "Article set a" of the "Show" operation and the object "2-D map" will be transposed to 173.

The automated operation execution process ends here.

### [Category hierarchy creating process]

A category hierarchy creating process will be described next with reference to Fig. 89.

The category hierarchy creating unit 4102g of the text mining processing apparatus, sets in a tree model the hierarchy of the totalized result of each category that is registered into the category dictionary information and is stored in the category dictionary information file 4106b employed for text mining process, and outputs at the output device 4114 this set hierarchy. In other words, the text mining processing apparatus 4100 handles a large-scale (several thousands and tens of thousands) conceptual set by setting a tree structure to it. A tree structure may be generated from the existing data structure, or may also be generated newly. The tree structure may be generated from the conventional techniques. The category hierarchy creating unit 4102g may have interactive interface functions to handle a concept, and the node selection, collapsing, expansion, etc. of the tree may be executed by the concerned interactive interface function. Moreover, analysis operation is performed for the concept item and node which are the direct child of the selected conceptual node.

Fig. 89 illustrates a sample of the category display screen which is hierarchied by the category tree structure. The window on the left-hand side of Fig. 89 (w1) illustrates an example in which conceptual category item is not hierarchied but is displayed with a 1-dimensional list. All the concept items which are handled are displayed in the vertical list. In order to search for an item in the window (w1), a scroll bar on the right-hand side is employed. The window on the right-hand side (w2) of Fig. 89 illustrates an example by hierarchying the conceptual category item using the tree structure, and displayed in the style of an outline processor. To the left of each item is a button marked "+" or "-". The "-" button represents an expanded node. The "+" button represents a collapsed node. Clicking the If "-" button of the expanded node (for instance "Category p3") will collapse the nodes below it (m1 and m2), and change the button to "+". Conversely, clicking the "+" button of collapsed node will expand the child below change the button to "-". A scroll bar appears and may be used for adjusting the display area when expanded items do not fit in the window.

The category hierarchy creating process ends here.

### [Intermediate node totaling process)

An intermediate node totaling process will be described next with reference to Fig. 90. Fig. 90 is a schematic diagram illustrating an example of the intermediate node totaling process.

When handling the intermediate node as a conceptual item where the totalized result of each category is hierarchied in the tree structure by the category hierarchy creating unit 4102g, the intermediate node totaling unit 4102h of the text mining processing apparatus 4100, creates the totalized result when the totalized result of each leaf node serves as a descendent of the intermediate node, and/or, creates the totalized result when the intermediate node of the totalized result of the analysis object document contains the canonical form and the variant form, when the canonical form and the variant form for intermediate node is defined in the semantic dictionary employed in the text mining process. In other words, when treating the intermediate node in the hierarchied concept tree structure as a conceptual item (for instance, the user specified category which is to be totaled), the intermediate node totaling unit 4102h matches with the document by either of the,following two methods, or by combining both the methods.

The first method creates a totalized result corresponding to the intermediate node which corresponds to each leaf node concept item which serves as the descendent of the intermediate node. When the number of documents etc. is totaled, there are methods of totaling by the stated number and, the method of totaling by removing the duplication of a document, and the like.

The second method creates the total results which correspond to the total results of the document containing the words, when the canonical form or the variant form is defined as the intermediate node itself.

As shown in Fig. 90, the canonical forms kw1 and kw2 correspond to the middle node concept item p3, the canonical form kw3 corresponds to the leaf node concept item m1 of the child of p3, and the canonical forms kw4, kw5, and kw6 correspond to the leaf node concept item m2 of the child of p3. The documents hit to the canonical forms kw1, kw2, ..., kw6 are respectively n1, n2, ..., n6 in the article set for operation. When counting the documents hit by the stated numbers as a policy, the hit document count is n3 for the conceptual item m1, and the hit document count is n4+n5+n6 for the conceptual item m2. The number of hit documents of the intermediate node concept item p3 is explained next. When employing the first method for the totaling the summation is n3+n4+n5+n6 of the number of child documents hit. When employing second method, the summation is n1+n2 of the number of hit documents of corresponding to its canonical form.

The intermediate node totaling process ends here.

### [Other embodiments]

An embodiment of the present invention was explained so far. However, the appended claims are not to be thus limited and are to be construed as embodying all modifications and alternative constructions that may occur to one skilled in the art which fairly fall within the basic teaching herein set forth.

For instance, the text mining processing apparatus 4100 is shown to perform the processes as a stand-alone system in the embodiment described so far. However, the text mining processing apparatus 4100 can also be constructed in such a way that it can process a request from a client terminal set up separate from itself and display the process result on the client terminal.

Among the processes explained pertaining to the embodiment described so far, all the automatic processes can be carried out manually entirely or in part, and all the manual processes can be carried out automatically entirely or in part.

The process sequences, control sequences, names, information that include various types of stored data and search condition parameters, sample screens, and database structures appearing in the text and drawings of this literature can be modified unless otherwise specified.

All the constituent elements of the text mining processing apparatus 4100 represented in the drawings are functional concepts and need not necessarily be represented physically.

For example, the process functions of each units and each devices of the text mining processing apparatus 4100, particularly the process functions carried out by the control unit 4102 can be entirely or partially realized by a central processing unit (CPU) or a program executed by the CPU, or by hardware through wired logic. The program is stored in a storage medium, which will be described in a later section, and is loaded mechanically into the text mining processing apparatus 4100 as and when required.

In other words, a computer program recorded on the storage unit 4106 such as a ROM or an HD, jointly with the operating system (OS), conveys instructions to the CPU to execute various processes. This computer program is loaded on a RAM and forms the control unit 4102 jointly with the CPU. This computer program may also reside on an application program server connected to the external system 4200 via the network 4300 and may be entirely or partially downloaded as the situation demands.

The program according to the present invention can also be stored in a computer-readable recording medium. The 'recording medium' can be of 'portable' type such as a flexible disk, magneto optic disk, ROM, EPROM, EEPROM, CD-ROM, MO, DVD, etc., a 'fixed' type such as an internal ROM, RAM, HD, etc., or a 'communication' type that can store the program for a short time through a network such as a LAN, WAN, and the Internet.

The 'program' can be written in any language or written using any description method and is insensitive to the type of source codes and binary codes. The 'program' need not necessarily be a single program and may be broken up into a plurality of modules and libraries or it may accomplish the functions by acting jointly with another program such as the OS (Operating System). Known methods can be employed for fabricating the physical structure required for reading the program from the recording medium in each device according to the present invention, the method of reading, and the method of installation following reading of the program.

The various databases etc. (semantic dictionary information file 4106a through batch script file 4106f) stored in the storage unit 4106 are stored either in a memory device such as the RAM and ROM, or a fixed disk device such as the hard disk or a storage device such as the flexible disk, optical disk, etc. and store various programs, tables, files or files required for webpages need for various processes and websites.

The text mining processing apparatus 4100 may be realized by connecting peripheral devices such as the printer, monitor or image scanner to the known information processing terminal such as the personal computer, workstation, etc. and by installing on this information processing apparatus the software (which includes program, data, etc.) that execute the method according to the present invention.

The physical structure of the text mining processing apparatus 4100 represented in broken down or integrated forms in the drawings is not restricted to those illustrated. The structure can be broken down or assembled functionally and physically as per requirement. For instance, a different database device may be used for each database and process may be partially realized by CGI (Common Gateway Interface).

The network 4300 mutually connects the text mining processing apparatus 4100 and the external system 4200. The network 4300 may be the Internet, intranet, LAN (both wired and wireless), VAN, personal computer communication network, public telephone network (both analog and digital), leased line network (both analog and digital), CATV network, IMT 2000 method, mobile circuit-switching network/mobile packet switching network such as GSM method or PDC/PDC-P method, wireless calling network, local wireless network such as Bluetooth, PHS network, satellite communication network such as CS, BS, ISBD, etc. In other words, the present system can send and receive various data via any network, wireless or otherwise.

To sum up, according to the present invention, the terms that are included in the textual document information, and in the textual document information on the analysis object document are listed for totaling. According to the present invention, for every term, the total key list information, which matches with the terminological model and/or with the link button at the destination address of a term, is output to an output device. Consequently, an end user can easily select among a series of analysis operations, the operation to retrieve the literature, by displaying the textual document with the list of totaled words as a key. As a result, the operation in which a user with little experience who can also cause a noise is avoided, enabling high accuracy in the analysis operation. The end user can also know correctly the theme of the literature that is retrieved, by stretching the link to an external database in the text. Thus, this information leads to the improvement in accuracy of analysis operation, as it is utilized for studying the operation which produces a search noise.

According to the present invention, controls, at the output device, the output namely, the searched term input by the user, the information corresponding canonical form which is extracted by searching the semantic dictionary information based on the searched word, and its semantic dictionary entry, and to the information of the corresponding category which is searched and then extracted from the category information based on the search word, and its category dictionary entry. As a result, by searching the application possibility of the semantic dictionary and the category dictionary of a specific word, a suitable word can be sorted out, although the literature is divided into the object category. By repeating the word search, the dictionary file can be sorted out, where the frequently occurring word is deployed by a large number of category groups which were required to be separated originally, thereby enabling the accuracy of these category groups to be guessed. In other words, when you understand the known term by which a certain category is characterized, the frequency of repetition of the category can be guessed by checking the existence of the dictionary entry relating to that word.

According to the present invention, the trace result display screen control unit controls, at the output device, the output of trace result information which includes at least one out of the search result of semantic dictionary, or part-of-speech information by syntax analysis processing, or search result of category dictionary, for the term which is contained in the textual document information and in the textual document information in the document to be analyzed, and is object totaling.

According to the present invention, the totaling process of text mining is performed as a single category, by combining the sequence of n nouns and verbs included in the textual document information, according to the syntax analysis result for the textual document information of the document to be analyzed. As a result, by making an n clause related pattern applicable to the totaling process, the literature which was unable to be distinguished only by the type of the term was divisible, thereby raising further the analytical accuracy.

According to the present invention, when searching by extracting the search conditions by employing another search window, these related search windows and the search result display windows are displayed by creating multiple windows. When the contents of the display of any of the windows are changed, the changed contents are automatically reflected in other windows. By saving the required operation status as per the requirement, the quantity of the analysis object information to be memorized by an end user can be reduced. Thereby, the efficiency of analytical operations can be increased, and the display area of the computer terminal equipped with multiple screens can be used effectively.

According to the present invention, a 2-D map displays the text mining result, where the 2-D map window is output to an output device by sorting each category item in rows and columns. When the category item which should be observed is fixed at a specific position in the order of an original category definition, by sorting in original order, these category items can be found easy. When the appearance frequency of the category item to be observed is high, these category items can be easily found out by sorting in order of high frequency. When the category item which should be observed starts with a specified name, these category items can be found out easily by sorting in alphabetical order.

According to the present invention, a 2-D map displays the text mining result, where the 2-D map window is output to an output device by sorting each category item in rows and columns. As a result, by summarizing as a cluster, the group of items having common characteristic pattern, addition of search of the category item becomes easy and the efficiency of analytical operations can be increased.

According to the present invention, for each operation at the time of text mining, collects at least one of the operation history information, namely from the operation time, the user identifier, the operation name, the operation argument, the operation object, the operation result and the comment of user on the intention of operation. Thus, based on the operation history, the registration contents of the semantic dictionary or the category dictionary can be checked. By generating specifications (batch script) for automated operation execution processing (batch processing) and using it as a model, complicated analytical process can be batch-processed easily. Even when interactive operations are recorded in the operation history, based on the storage of user comments on his operation intentions, the place where the operation intention of a user is batched as a clue can be quickly looked for, enabling efficiency in generating batch script. The operation that examines the contents of a batch at the time of batch script generation is eased by putting a comment into the place where a user wants to batch later, thereby increasing the efficiency of batch script generation.

According to the present invention, since the batch script is created and executed based on the collected operation history information, time spent by an end user during tool use can be shortened by repeating the analysis which consists of a series of operations by batch processing and executing it. Analytical processes performed for every fixed period can be performed automatically, and even during slack period of the system, heavy analytical processes can be executed.

According to the present invention, the totaled result of each category registered into the category dictionary information by using the text mining process is hierarchied into a tree structure, and is output to an output device. As a result, plural concept items displayed at once on a screen through an interactive user interface can be controlled by collapsing and expanding the nodes of a hierarchied a tree structure, and the search of the object concept item becomes easier.

According to the present invention, since at least a part is selected among the output categories which were hierarchied in the tree structure, in case the interactive text mining operation is performed, a user can select the object partial category from the screen which is displayed by hierarchizing the category in tree structure. A class category is utilizable not only in the final output but also in the middle operation. Interactive text mining analysis operation which demands for specifying a category part can be efficiently carried out when the object category structure is large-scale.

According to the present invention, when handling the intermediate node as a concept item where the totalized result of each category is hierarchied in the tree structure, the totalized result of intermediate node is equal to the totalized result of each leaf node which serves as a descendent of the intermediate node (first totaling method), and/or, when the canonical form and the variant form for intermediate node is defined in the semantic dictionary employed in the text mining process, the totalized result of intermediate node equals to the totalized result of the analysis object document containing the canonical form and the variant form (second totaling method). By using the 1 st total method, even if the conceptual category structure does not correspond to a middle node, the totaling process can be completed. The category structure where flexibility is high, such as a large-scale conceptual category structure which is divided into suitable parts, can be designed. By using the second totaling method, when the conceptual category structure has a regular word corresponding to a middle node exists, plurality of documents can be totaled with sufficient accuracy. Many such cases are found in which the conceptual category structure is created using the existing data structure, where the second totaling method can be utilized. Using the first and second totaling methods properly according to the situation, individually or combining them, the cost for creating conceptual category structure can be lowered, and use of a large-scale category concept becomes easy.

(VI) An embodiment of a text mining analysis apparatus, a text mining analysis method, a text mining analysis program, and a recording medium will be explained next with reference to the accompanying drawings. The present invention is in no way confined to this embodiment.

### [Overview of the present invention]

First an overview of the present invention will be explained followed by the structure and processes. Fig. 95 is a flow chart which explains the basic principle of this invention.

According to the present invention, a new concept is executed without using the existing category (Step SA5-1). The detailed process of Step SA5-1 will be explained with reference to Fig. 96 through Fig. 98.

Fig. 96 illustrates an example of concept structuring by full text. As shown in Fig. 96, the search conditions (the search condition depending on the canonical expression expressed by the text string "regexp1" in Fig. 96, for instance, when search condition is "^[Bb]rain.∗", then "Brain...", "brain...", "brain-ischema...", etc. are hit in the document) relating to a text string or a numerical value are specified first, then the document is searched, which has the text string or the numerical value which satisfies the search conditions in a document (d01 through d12, in Fig. 96), and a cluster of the corresponding documents (d01, d04,d06, d07, d08, and d11 in Fig.96) is assigned as a new concept (c1 in Fig. 96).

Fig. 97 illustrates an example of concept structuring concerning a field search. As shown in Fig. 97, the search conditions (the search condition depending on the canonical expression expressed by the text string "regexp2" in Fig. 97) relating to a text string or a numerical value, and a field (field f1 in Fig. 97) to be searched, are specified first, then the document is searched, which has the text string or the numerical value which satisfies the search conditions in a document (d01 through d12, in Fig. 97), and a cluster of the corresponding document (d02, d02, d05, d06, d08, and d12 in Fig.97) is assigned as a new concept (c2 in Fig. 96).

Fig. 98 illustrates an example of concept structuring concerning logical clustering operation. As shown in Fig. 98, a cluster of the document retrieved by performing logical clustering operations (for example, AND, OR, SUB, etc.) relating to the existing concept (c1, and c2 in the example of Fig. 98) is assigned as a new concept (c3 in the example of Fig. 98).

Returning to Fig. 95, according to the present invention, the structure of a category changes by the assigned new concept (Step SA5-2). The details of processing of the Step SA5-2 will be explained using Fig. 99 and Fig. 100.

Fig. 99 illustrates an example of concept positioning at the existing category. As shown in Fig. 99, a new concept (c7 in the example of Fig. 99) is positioned under any concept (c3 in the example of Fig. 99) of the existing category.

Fig. 100 illustrates an example of concept positioning at a new category. As shown in Fig. 100, a new category (a category which has flat weighted structure in the example of Fig. 100) which consists of a new concept (c8, c9, c10, c11, and c12 in the example of Fig. 100) is formed.

Returning to Fig. 95, according to the present invention, the text mining analysis object concept is selected, and a view is assigned by setting up the view trim line constituting concepts which constitutes a view trim line from a concept which exists in the lower rank in the concept to be analyzed corresponding to the structure of the category (Step SA5-3). The details of processing of Step SA5-3 will be explained by using the Fig. 101 through Fig. 104.

Fig. 101 illustrates an outline of the assigning technique of a view according to the present invention. As shown in Fig. 101, first a text mining analysis object concept (the concept shown with double circle in Fig. 101), is selected (MB 5-1), and a view is assigned by setting up the view trim line constituting concepts (the concepts shown with black circles in Fig. 101) which constitutes a view trim line (thick solid line shown in Fig. 101) from a concept which exists in the lower rank in the concept to be analyzed corresponding to the structure of the category (MB 5-2).

For instance, when extracting the document relevant to a company X, "illness" is selected as an analysis object concept (MB5-1), further relating to the concept of a lower rank of "illness", the partial characteristic of the company X is drilled down till the concept of the lowest rank and is then set as a view trim line constituting concept. The portion of the concept that is almost unrelated to the company X can set up only for a concept of higher rank as a view trim line constituting concept.

According to the present invention, Fig. 102 through Fig. 104 illustrates the outline of an additional function which uses an attribute in the assigning technique of the view.

Fig. 102 is a schematic diagram explaining the case where the "other" attribute is set into the view trim line constituting concepts which constitutes a view trim line. Fig. 102 shows the view trim line constituting concepts (concept shown by a gray circle in Fig. 102) by which sets up "other" as an attribute within the view trim line constituting concepts which constitutes a view trim line. In the text mining analysis, the view trim line constituting concepts which sets the attribute "others" is classified into a group which is different from the usual view trim line constituting concepts without the attribute of "other". Thus, multiple kinds of "other" attributes can be set up.

Fig. 103 is a schematic diagram explaining the case where the "skip" attribute is set in the view trim line constituting concepts which constitutes a view trim line. Fig. 103 shows the view trim line constituting concepts (concept shown in squares in Fig. 103) by which "skip" is set as an attribute in the view trim line constituting concepts which constitutes a view trim line. The view trim line constituting concepts, to which the "skip" attribute is set, is not applicable for text mining analysis.

Fig. 104 is a schematic diagram explaining the case where the "skip" attributes and "other" attributes are mixed together, and are set in the view trim line constituting concepts which constitutes a view trim line. Thus, by making the analysis object concept as a root, all the views can be set by setting the "other" attributes and "skip" attribute suitably for all concepts.

Returning to Fig. 95, according to the present invention, the text mining analysis is executed by employing an assigned view (Step SA5-4). The target for analysis is the view trim line constituting concepts which form a view trim line, but when attribute is set for every view trim line constituting concept, the analysis is done according to this attribute.

### [System Structure]

The system structure of the present system will be explained next. Fig. 107 is a block diagram of a system in which the present invention is applied. Only parts relevant to the present invention are schematically represented in Fig. 107. This system schematically includes a text mining analysis apparatus 5100, an external system 5200 that provides an external program which executes analysis/search services of all types or external databases pertaining to literature database which accumulates various kinds of technical documents such as a theses, etc., and a network 5300 that allows communication between the text mining analysis apparatus 5100 and the external system 5200.

The network 5300 in Fig. 107 that mutually connects the text mining analysis apparatus 5100 and the external system 5200 may, for instance, be the Internet.

The external system 5200 in Fig. 107 is connected to the text mining analysis apparatus 5100 via the network 5300 and provides the user with services pertaining to external databases, analysis/search of various documents such as literature databases, etc, and websites that execute external analysis programs, etc.

The external system 5200 may be a WEB server or an ASP server which may be constructed from commonly available information processing devices such as the workstation, personal computer, etc. and other accessories. The functions of the external system 200 are realized by the hardware such as the CPU, disk device, memory device, input device, output device, communication control device, etc. that constitute the external system 5200 and the programs controlling these hardware.

The text mining analysis apparatus 5100 in Fig. 107, schematically includes a control unit 5102 such as the CPU which controls the entire text mining analysis apparatus 5100, a communication control interface unit 5104 connected to a communication device (not shown) such as a router that is connected to a communication circuit, and the like, an input/output control interface unit 5108 that is connected to an input device 5112 and an output device 5114, and a storage unit 5106 that stores databases, tables, and the like. All the parts mentioned above are connected for mutual communication via one communication circuit or another. The text mining analysis apparatus 5100 as a whole is connected, via the communication device such as the router or via a wired or wireless communication circuit, to the network 5300 enabling communication.

The storage unit 5106 that stores the databases and tables (document file 5106a through analysis result file 5106e) is a fixed disk device and stores all types of programs, tables, files, databases, web-page files, etc. required for various processes.

The document file 5106a of the storage unit 5106 is a document information storing method which stores the information (for instance, document ID, field ID, text data, image data, etc.) pertaining to the document such as a technical literature of various types such as a thesis.

Each document data stored in the document file 5106a may be divided into the respective fields.

A concept file 51 06b is a concept information storing method to store the information (for instance, concept ID, conceptualization which has this concept, search conditions and Boolean clustering operation of a document included in the concept) pertaining to the concept. The concept file 5106b may store the document ID contained in the concept concerned.

A category file 5106c is a category information storing method to store the information (for instance, category ID, structured data relating to a node (category) and a edge (relation between categories) which are contained the category), etc.) pertaining to a category.

A view file 5106d is a view information storing method to store the information (for instance, view ID, concept ID of the view trim line constituting concepts which forms the view trim line, attribute of the concerned view trim line constituting concepts, etc.) pertaining to a view.

An analysis result file 5106e is an analysis result storing method to store the information pertaining to the analysis result of the text mining analysis, and the like.

Returning to Fig. 107, the communication control interface unit 5104 controls the communication between the text mining analysis apparatus 5100 and the network 5300 (or a communication device such as the router, and the like). In other words, the communication control interface unit 5104 carries out communication with another terminal through the communication circuit.

The input/output control interface unit 5108 in Fig. 107 controls the input device 5112 and the output device 5114. The output device 5114 may be a monitor (including television) or speakers (the output device 5114 is hereinafter referred to as monitor). The input device 5112 may be keyboard, mouse, microphone, etc. The monitor and the mouse together function as a pointing device.

The control unit 5102 in Fig. 107 has an internal memory for storing control programs such as the OS (Operating System) and programs and data required for regulating various processes, and using these programs carries out information processing for execution of various processes. The control unit 5102 schematically comprises a concept assigning unit 5102a, a category changing unit 5102b, a view assigning unit 5102c, a text mining analysis unit 5102d, a first concept assigning unit 5102e, a second concept assigning unit 5102f, a third concept assigning unit 5102g, a first category changing unit 5102h, a second category changing unit 5102i, and an attribute setting unit 5102j.

The concept assigning unit 5102a executes the assignment of a new concept, without using the existing category. Fig. 108 is a block diagram illustrating an example of the concept assigning unit 5102a. As shown in Fig. 108, the concept assigning unit 5102a comprises a first concept assigning unit 5102e, a second concept assigning unit 5102f, and a third concept assigning unit 5102g.

The first concept assigning unit 5102e specifies a search condition relating to a text string or a numerical value, and assigns, as a new concept, a cluster of the document possessing the text string and a numerical value which satisfies the search conditions in the document.

The second concept assigning unit 5102f specifies search conditions and the search field, and then assigns, as a new concept, a cluster of the document possessing the text string and the numerical value which satisfies the search conditions within the field of the document.

The third concept assigning unit 5102g assigns, as a new concept, a cluster of the document obtained by carrying out Boolean clustering operation of the existing concepts.

Returning to Fig. 107, the category changing unit 5102b changes the structure of the category by a new concept assigned by concept assigning method. Fig. 109 is a block diagram illustrating an structural example of the category changing unit 5102b. 'In Fig. 109, the category changing unit 5102b comprises a first category changing unit 5102h and a second category changing unit 5102i.

The first category changing unit 5102h places a new concept below any concept of an existing category.

The second category changing unit 5102i forms a new category from a new concept.

Returning to Fig. 107, the view assigning unit 5102c, selects the text mining analysis object concept, and assigns a view by setting the view trim line constituting concepts, which constitutes a view trim line, from an existing concept in the lower position of the analysis object concept in the category structure. Fig. 110 is a block diagram illustrating a structural example of the view assigning unit 5102c. In Fig. 110, view assigning unit 5102c comprises an attribute setting unit 5102j.

The attribute setting unit 5102j sets the attribute corresponding to a view trim line constituting concepts.

Returning to Fig.107, the text mining analysis unit 5102d executes the text mining analysis by employing the view which is assigned in the view assigning method. The text mining analysis unit 5102d has a function to execute the text mining analysis, according to the attribute of the view trim line constituting concepts which is set by the attribute setting method (attribute setting unit 5102j).

The processes carried out by each of these parts will be explained in detail in a later section.

### [Processes of the system]

An example of the processes of the system according the embodiment constructed in this way will be explained next with reference to Fig. 111 through Fig. 113.

### [Main Process]

According to the present invention, the details of the main processing performed by the text mining analysis apparatus 5100 will be explained next with reference to Fig. 111. Fig. 111 is a flowchart which illustrates an example of the main process of the present system in the present embodiment.

The concept assigning unit 5102a of the text mining analysis apparatus 5100, performs the concept assignment processing in which a new concept is assigned without using the existing category (Step SB5-1).

The concept assignment processing performed by the concept assigning unit 5102a is explained below with reference to Fig. 112.

### [Concept assigning process]

Fig. 112 is a flowchart illustrating an example of concept assigning process of the present system according to the present embodiment.

The concept assigning process will be discussed next in greater details. The concept assigning process can be executed independently or by combining the three processes, namely, first concept assigning process, second concept assigning process, and third concept assigning process.

### (First concept assigning process)

The concept assigning unit 5102a , by the first concept assigning process with reference to Fig. 96, specifies the search conditions relating to the text string or the numerical value, and as a new concept, assigns a cluster of the document which has the text string and the numerical value fulfilling the search conditions in the document (Step SC5-1).

### (Second concept assigning process)

The concept assigning unit 5102a, by the second concept assigning process with reference to Fig. 97, specifies the field used as the search condition, and which is the target for search, and as a new concept, assigns a cluster of the document which has the text string and the numerical value fulfilling the search conditions in the field of the document (Step SC5-2).

### (Third concept assigning process)

The concept assigning unit 5102a, by the second concept assigning process with reference to Fig. 98, and as a new concept, assigns a cluster of the document which is retrieved by performing Boolean clustering operation on the existing concept (Step SC5-3).

The concept assigning process ends here.

Returning to Fig. 111, the text mining analysis apparatus 5100, according to the category changing unit 5102b, executes the category changing process by changing the category structure formed by assigning a new concept (Step SB5-2).

The category changing process performed by the category changing unit 5102b is explained below with reference to Fig. 113.

### [Category changing process]

The category changing process will be discussed next with reference to Fig.113. Fig. 113 is a flowchart illustrating an example of category changing process of the present system according to the present embodiment.

The category changing process can be performed either independently or by combining among the first category changing process and the second category changing process, which is explained in detail below.

### (First category changing process)

The category changing unit 5102b, according to the first category changing process with reference to Fig. 99, a new concept is placed below any concept in the existing category (Step SD5-1).

### (Second category changing process)

The category changing unit 5102b, according to the second category changing process with reference to Fig. 100, forms a new category which is formed from a new concept (Step SD5-2).

The category changing process ends here.

Returning to Fig. 111, the text mining analysis apparatus 5100, according to the view assigning unit 5102c, selects the text mining analysis object concept, and assigns a view by setting the view trim line constituting concepts, from an existing concept in the lower position of the analysis object concept in the category structure (Step SB5-3).

In other words, the view assigning unit 5102c, as shown in Fig. 105, outputs at the output device 5114 the view setting screen, thereby allowing the user to set the analysis object concept, and the view trim line constituting concepts.

Fig. 105 is a drawing illustrating an example of the view setting screen displayed in the output device 5114 of the text mining analysis apparatus 5100. In Fig. 105, three child concepts (having concept ID catA, catB, and catC) are linked to the root, and the each child was further linked to plural child concepts, thereby forming an example of tree category structure.

As shown in Fig. 105, a mark for distinguishing between a collapsed concept (displayed by "+"), an expanded concept (represented by "-"), and a terminal concept (represented by no mark) is displayed to the left of the concept ID. When a.user specifies a collapsed concept using the input device 5112 such as by clicking on "+" with a mouse, the concept expands to show the child concepts and the mark of the concept changes to ("-"). In other words, when a user opens or closes a child concept by clicking on the mark, any concept can be specified one of the view trim line constituting concepts.

The selection area for setting up an attribute is displayed on the right-hand side of the concept ID of the collapsed concept and the terminal concept. Using the input device 5112, when the user specifies any one desired attribute from "select (select as view trim line constituting concept)", "skip (do not select as view trim line constituting concept)", and "others (grouped into other groups different from view trim line constituting concepts)", the attribute setting unit 5102j stores the attribute value of the specified view trim line constituting concepts in a predetermined memory area of the view file 5106d.

Returning to Fig. 111, the text mining analysis apparatus 5100, according to the text mining analysis unit 5102d, executes the text mining analysis by using the assigned view (Step SB5-4).

Fig. 106 is a drawing illustrating an example of the screen which displays the text mining analysis result. Fig. 106 explains the case where the number of documents is displayed for every concept specified in the view.

As shown in Fig. 106, the documents that belong to every view trim line constituting concepts are displayed. The concept B shown is divided in concept having an "other" attributes.

The main process ends here.

### [Other embodiments]

An embodiment of the present invention was explained so far. However, the appended claims are not to be thus limited and are to be construed as embodying all modifications and alternative constructions that may occur to one skilled in the art which fairly fall within the basic teaching herein set forth.

For instance, the text mining analysis apparatus 5100 is shown to perform the processes as a stand-alone system in the embodiment described so far. However, the text mining analysis apparatus 5100 can also be constructed in such a way that it can process a request from a client terminal set up separate from itself and display the process result on the client terminal.

Among the processes explained pertaining to the embodiment described so far, all the automatic processes can be carried out manually entirely or in part, and all the manual processes can be carried out automatically entirely or in part.

The process sequences, control sequences, names, information that include various types of stored data and search condition parameters, sample screens, and database structures appearing in the text and drawings of this literature can be modified unless otherwise specified.

All the constituent elements of the text mining analysis apparatus 5100 represented in the drawings are functional concepts and need not necessarily be represented physically.

For example, the process functions of the servers of the text mining analysis apparatus 5100, particularly the process functions carried out by the control unit 5102 can be entirely or partially realized by a central processing unit (CPU) or a program executed by the CPU, or by hardware through wired logic. The program is stored in a storage medium, which will be described in a later section, and is loaded mechanically into the text mining analysis apparatus 5100 as and when required.

In other words, a computer program recorded on a storage unit 5106 such as a ROM or a HD, jointly with the operating system (OS), conveys instructions to the CPU to execute various processes. This computer program is loaded on a RAM and forms the control unit 5102 jointly with the CPU. This computer program may also reside on an application program server connected to the external system 5200 via the network 5300 and may be entirely or partially downloaded as the situation demands.

The program according to the present invention can also be stored in a computer-readable recording medium. The 'recording medium' can be of 'portable' type such as a flexible disk, magneto optic disk, ROM, EPROM, EEPROM, CD-ROM, MO, DVD, etc., a 'fixed' type such as an internal ROM, RAM, HD, etc., or a 'communication' type that can store the program for a short time through a network such as a LAN, WAN, and the Internet.

The 'program' can be written in any language or written using any description method and is insensitive to the type of source codes and binary codes. The 'program' need not necessarily be a single program and may be broken up into a plurality of modules and libraries or it may accomplish the functions by acting jointly with another program such as the OS (Operating System). Known methods can be employed for fabricating the physical structure required for reading the program from the recording medium in each device according to the present invention, the method of reading, and the method of installation following reading of the program.

The text mining analysis apparatus 5100, comprises, an input device 5112 which consists of various pointing devices and keyboards, such as a mouse, an image scanner, a digitizer, etc., a display unit used for monitoring the input data, a time generating unit which generates a system clock, and an output device such as a printer which outputs various processing results and other data. The input device 5112, the display, and the output device may be connected to the control unit 5102 through an input-output interface.

The text mining analysis apparatus 5100 may be realized by connecting peripheral devices such as the printer, monitor or image scanner to the known information processing terminal such as the personal computer, workstation, etc. and by installing on this information processing apparatus the software (which includes program, data, etc.) that execute the method according to the present invention.

The physical structure of the text mining analysis apparatus 5100 represented in broken down or integrated forms in the drawings is not restricted to those illustrated. The structure can be broken down or assembled functionally and physically as per requirement (for instance, grid computing, and the like). For instance, a different database device may be used for each database and process may be partially realized by CGI (Common Gateway Interface).

The network 5300 mutually connects the text mining analysis apparatus 5100 and the external system 5200. The network 5300 may be the Internet, intranet, LAN (both wired and wireless), VAN, personal computer communication network, public telephone network (both analog and digital), leased line network (both analog and digital), CATV network, IMT 2000 method, mobile circuit-switching network/mobile packet switching network such as GSM method or PDC/PDC-P method, wireless-calling network, local wireless network such as Bluetooth, PHS network, satellite communication network such as CS, BS, ISBD, etc. In other words, the present system can send and receive various data via any network, wireless or otherwise.

To sum up, according to the present invention, a new concept is assignable without using the existing category, the structure of a category is changed by the assigned new concept, the text mining analysis object concept is selected, and a view is assigned by setting up the view trim line constituting concepts, from a concept which exists in the lower rank of the analysis object concept in the category structure. Thus, a text mining analysis apparatus, a text mining analysis method, a text mining analysis program, and a recording medium are realized which enable to assign a concept and a view flexibly in the text mining analysis, since the text mining analysis is performed using the assigned view.

According to the present invention, a new concept is assignable without using the existing category, thus the text mining analysis apparatus, a text mining analysis method, a text mining analysis program, and a recording medium are realized which enable to create the concept corresponding to the new conceptualization which is not defined in this existing synonyms dictionary and an existing category dictionary.

According to the present invention, a text mining analysis apparatus, a text mining analysis method, a text mining analysis program, and a recording medium are realized which enable to assign a concept above the category according to the usage circumstances.

According to the present invention, the text mining analysis object concept is selected, and a view is assigned by setting up the view trim line constituting concepts, from a concept which exists in the lower rank of the analysis object concept in the category structure. Thus a text mining analysis apparatus, a text mining analysis method, a text mining analysis program, and a recording medium are realized which enable to assign a view regardless of the category, can specify flexibly the concept which is not a brother relation, and can constitute a view since text mining analysis is performed using the assigned view.

According to the present invention, a text mining analysis apparatus, a text mining analysis method, a text mining analysis program, and a recording medium are realized which enable to create the concept corresponding to the new concept which is not defined in this existing synonyms dictionary and the existing category dictionary, since at least one of the following concept assigning methods is employed in the present system. For instance, the first concept assigning method (or it is same as a "concept assigning step") specifies the search conditions relating to a text string or a numerical value, and assigns, as a new concept, a cluster of the document possessing the text string and a numerical value which satisfies the search conditions in the document. The second concept assigning method specifies the field to be searched and the search conditions, and then assigns, as a new concept, a cluster of the document possessing the text string and the numerical value which satisfies the search conditions within the field of the document. The third concept assigning method assigns, as a new concept, a cluster of the document retrieved by performing Boolean clustering operation regarding the existing concept.

According to the present invention, the category changing method is namely, a first category changing method to arrange a new concept below any concepts of the existing category, and a second category changing method to form a new category from a new concept. Thus, a text mining analysis apparatus, a text mining analysis method, a text mining analysis program, and a recording medium are realized which enable to assign a concept on existing or a new category flexibly according to the usability since it has at least one methods from among the category changing methods.

According to the present invention, a view assigning method (same as a "view assigning step") is equipped with an attribute setting method to set up the attribute corresponding to a composition concept, and a text mining analysis method which executes the text mining analysis according to the attribute of the set view trim line constituting concepts. Thus a text mining analysis apparatus, a text mining analysis method, a text mining analysis program, and a recording medium are realized which enable to assign a view flexibly by setting up various kinds of attributes (for instance "select" (selected as view trim line constituting concepts), "skip" (not selected as view trim line constituting concepts), and in addition to this "others" (analyzed by dividing into a group different from other view trim line constituting concepts), and the like.

### INDUSTRIAL APPLICABILITY

The literature knowledge management processing apparatus, the literature knowledge management processing method, the literature knowledge management processing method, and the recording medium according to the present invention can be used in the information processing involved in bioinformatics analysis, text mining, network analysis, etc. and in pharmaceutical industry that uses the analysis result.

The dictionary information processing apparatus, the dictionary information processing method, the dictionary information processing method, and the recording medium according to the present invention can be used for creating various kinds of semantic dictionaries and category dictionaries used in literature database search service etc., for checking the created dictionaries, as well as in pharmaceutical industry that uses analysis result, and the like.

The document information extraction processing apparatus, the document information extraction processing method, the document information extraction processing program and the recording medium according to the present invention can be employed for creating various kinds of semantic dictionaries and category dictionaries used in the literature document database search service etc., for checking of the created dictionaries, as well as in pharmaceutical industry that uses analysis result, and the like.

The text mining processing apparatus, the text mining processing method, the text mining processing program, and the recording medium according to the present invention can be used for creating various kinds of semantic dictionaries and category dictionaries used in the literature document database search service, text mining process service etc., for checking of the created dictionaries, as well as in pharmaceutical industry that uses analysis result.

The text mining analysis apparatus, the text mining analysis method, the text mining analysis program, and the recording medium according to the present invention can be used for assigning a concept and a view that are used in the literature document database search service, text mining process service, etc., for creation of various kinds of semantic dictionaries and a category dictionaries, for checking of the created dictionary, as well as in pharmaceutical industry that uses the analysis result.

## Claims

1. A literature knowledge management apparatus, comprising:
a textual document handling unit that breaks up textual documents of literatures into knowledge constructed from a single word or plural words;
a textual document operation screen creating unit that displays the textual documents by grouping the textual documents according to the knowledge into which the textual document handling unit has broken the textual documents into, and creates a textual document operation screen that enables a user to select the word or words that constitute the knowledge of the user's choice;
a knowledge structure handling unit that is associated with the textual documents, the knowledge structure comprising relation-type knowledge structure elements and related object-type knowledge structure elements;
a knowledge structure operation screen creating unit that displays the knowledge structure managed by the knowledge structure handling unit, and creates a knowledge structure operation screen that enables the user to select the relation-type knowledge structure elements and the related object-type knowledge structure elements constituting the knowledge structure of the user's choice;
a concept dictionary handling unit that manages a concept dictionary constituting concept entries that hierarchically define concepts of the associated knowledge; and
a concept dictionary operation screen creating unit that displays the concept dictionary managed by the concept dictionary handling unit, and enables the user to select the concept entry corresponding to the knowledge of the user's choice.

2. The literature knowledge management apparatus according to claim 1, further comprising a common cursor control unit that displays a common cursor that points to an identical knowledge on the textual document operation screen, the knowledge structure operatio n screen, as well as the concept dictionary operation screen, and enables the user to select the knowledge of the user's choice by moving the common cursor.

3. The literature knowledge management apparatus according to claim 1, further comprising a screen-specific cursor control unit that displays a screen-specific cursor that points to the knowledge on the textual document operation screen, the knowledge structure operation screen, as well as the concept dictionary operation screen, enables the user to select the knowledge of the user's choice by moving the common cursor on one screen, and manages link information pertaining to the selected knowledge on the other two screens.

4. The literature knowledge management method according to claim 1, further comprising a literature knowledge auto-editing step that, when the knowledge on any one of the literature knowledge operation screen, the knowledge structure operation screen, or the concept dictionary operation screen is modified, deleted, or added, automatically modifies, deletes, or adds the link information corresponding to that knowledge on the other two screens.

5. A literature knowledge management method, comprising:
a textual document handling step that breaks up textual documents of literatures into knowledge constructed from a single word or plural words;
a textual document operation screen creating step that displays the textual documents by grouping the textual documents according to the knowledge into which the textual document handling step has broken the textual documents into, and creates a textual document operation screen that enables a user to select the word or words that constitute the knowledge of the user's choice;
a knowledge structure handling step that is associated with the textual documents, the knowledge structure comprising relation-type knowledge structure elements and related object-type knowledge structure elements;
a knowledge structure operation screen creating step that displays the knowledge structure managed by the knowledge structure handling step, and creates a knowledge structure operation screen that enables the user to select the relation-type knowledge structure elements and the related object-type knowledge structure elements constituting the knowledge structure of the user's choice;
a concept dictionary handling step that manages a concept dictionary constituting concept entries that hierarchically define concepts of the associated knowledge; and
a concept dictionary operation screen creating step that displays the concept dictionary managed by the concept dictionary handling step, and enables the user to select the concept entry corresponding to the knowledge of the user's choice.

6. The literature knowledge management method according to claim 5, further comprising a common cursor control step that displays a common cursor that points to an identical knowledge on the textual document operation screen, the knowledge structure operation screen, as well as the concept dictionary operation screen, and enables the user to select the knowledge of the user's choice by moving the common cursor.

7. The literature knowledge management method according to claim 5, further comprising a screen-specific cursor control step that displays a screen-specific cursor that points to the knowledge on the textual document operation screen, the knowledge structure operation screen, as well as the concept dictionary operation screen, enables the user to select the knowledge of the user's choice by moving the common cursor on one screen, and manages link information pertaining to the selected knowledge on the other two screens.

8. The literature knowledge management method according to claim 5, further comprising a literature knowledge auto-editing step that, when the knowledge on any one of the literature knowledge operation screen, the knowledge structure operation screen, or the concept dictionary operation screen is modified, deleted, or added, automatically modifies, deletes, or adds the link information corresponding to that knowledge on the other two screens.

9. A computer program that makes a computer to execute a literature knowledge management method, comprising:
a textual document handling step that breaks up textual documents of literatures into knowledge constructed from a single word or plural words;
a textual document operation screen creating step that displays the textual documents by grouping the textual documents according to the knowledge into which the textual document handling step has broken the textual documents into, and creates a textual document operation screen that enables a user to select the word or words that constitute the knowledge of the user's choice;
a knowledge structure handling step that is associated with the textual documents, the knowledge structure comprising relation-type knowledge structure elements and related object-type knowledge structure elements;
a knowledge structure operation screen creating step that displays the knowledge structure managed by the knowledge structure handling step, and creates a knowledge structure operation screen that enables the user to select the relation-type knowledge structure elements and the related object-type knowledge structure elements constituting the knowledge structure of the user's choice;
a concept dictionary handling step that manages a concept dictionary constituting concept entries that hierarchically define concepts of the associated knowledge; and
a concept dictionary operation screen creating step that displays the concept dictionary managed by the concept dictionary handling step, and enables the user to select the concept entry corresponding to the knowledge of the user's choice.

10. The program according to claim 9, further comprising a common cursor control step that displays a common cursor that points to an identical knowledge on the textual document operation screen, the knowledge structure operation screen, as well as the concept dictionary operation screen, and enables the user to select the knowledge of the user's choice by moving the common cursor.

11. The program according to claim 9, further comprising a screen-specific cursor control step that displays a screen-specific cursor that points to the knowledge on the textual document operation screen, the knowledge structure operation screen, as well as the concept dictionary operation screen, enables the user to select the knowledge of the user's choice by moving the common cursor on one screen, and manages link information pertaining to the selected knowledge on the other two screens.

12. The program according to claim 9, further comprising a literature knowledge auto-editing step that, when the knowledge on any one of the literature knowledge operation screen, the knowledge structure operation screen, or the concept dictionary operation screen is modified, deleted, or added, automatically modifies, deletes, or adds the link information corresponding to that knowledge on the other two screens.

13. A computer-readable recording medium on which is recorded the program according to claims 9 through 12.

14. A literature knowledge management apparatus, comprising:
a textual document handling unit that breaks up textual documents of literatures into knowledge constructed from a single word or plural words;
a knowledge structure handling unit that is associated with the textual documents, the knowledge structure comprising relation-type knowledge structure elements and related object-type knowledge structure elements;
a concept dictionary handling unit that manages a concept dictionary constituting concept entries that hierarchically define concepts of the associated knowledge; and
a word matching unit that retrieves from the knowledge structure managed by the knowledge structure handling unit the relation-type knowledge structure elements and/or the related object-type knowledge structure elements that match the words included in a search query that is input.

15. The literature knowledge management apparatus according to claim 14, wherein the word matching unit retrieves the relation-type knowledge structure elements and/or related object-type knowledge structure elements as a search result, the relation-type knowledge structure elements and/or related object-type knowledge structure elements being at least one of the following:
(1) related object-type knowledge structure elements that have a predetermined synonym relation and that are linked by the relation-type knowledge structure element,
(2) the relation-type knowledge structure elements and/or related object-type knowledge structure elements that belong to the same link graph,
(3) the relation-type knowledge structure elements and/or related object-type knowledge structure elements that belong to the same link graph, the number of paths between the elements being less than a predetermined value, and
(4) the relation-type knowledge structure elements and/or related object-type knowledge structure elements that belong to the same link graph, the elements being of the same type.

16. The literature knowledge management apparatus according to claim 14, wherein the word matching unit extracts a corresponding concept entry and/or the concept entries at a higher level and/or lower level than the corresponding concept entry from the concept dictionary managed by the concept dictionary handling unit and extracts the relation-type knowledge structure elements and/or related object-type knowledge structure elements associated with these extracted concept entries as a search result.

17. The literature knowledge management apparatus according to claim 14, wherein the word matching unit that retrieves as a search result the relation-type knowledge structure elements and/or related object-type knowledge structure elements that constitute a link graph, the relation-type knowledge structure elements and/or related object-type knowledge structure elements being at least one of the following:
(1) the relation-type knowledge structure elements and/or related object-type knowledge structure elements that have the same topology,
(2) the relation-type knowledge structure elements and/or related object-type knowledge structure elements that are associated with a corresponding concept entry and/or the concept entries that are at a higher and/or lower level than the corresponding entry extracted from the concept dictionary managed by the concept dictionary handling unit, and
(3) the relation-type knowledge structure elements and/or related object-type knowledge structure elements with the number of paths between the elements being less than the predetermined value.

18. The literature knowledge management apparatus according to claim 14, further comprising a Boolean expression normalization unit that normalizes the search query into a predetermined Boolean expression format.

19. The literature knowledge management apparatus according to claim 14, further comprising a Boolean matching unit that gets a knowledge structure element cluster for each part of the Boolean expression of the search query, and in order to determine the Boolean product of the parts of the Boolean expression, retrieves from each knowledge structure element cluster the knowledge structure that meets at least one of the following conditions:
(1) the knowledge structure that is in the same literature,
(2) the knowledge structure that is in the text that belongs to a predetermined collection of texts,
(3) the knowledge structure that is in the text that matches a predetermined structure search expression,
(4) the knowledge structure that is continuous,
(5) the knowledge structure that is continuous within a single literature, and
(6) the knowledge structure that is associated with the corresponding concept entry extracted from the concept dictionary processed by the concept dictionary handling unit and/or the concept entry at a higher level/lower level than the corresponding concept entry.

20. The literature knowledge management apparatus according to claim 14, further comprising a syntax structure creating unit that creates a syntax structure from the search query input in natural language.

21. The literature knowledge management apparatus according to claim 20, further comprising a literature knowledge converting unit that creates the knowledge structure from the syntax structure created by the syntax structure creating unit.

22. The literature knowledge management apparatus according to claim 21, further comprising:
a link graph similarity appraising unit that assesses the similarity between link graphs of the knowledge structure created by the literature knowledge creating unit, and gets the cluster of link graphs that are similar; and
a graph combining unit that determines an aggregate of the link graphs retrieved by the link graph similarity appraising unit that are similar, or a Boolean product of the combination of the link graphs that are similar.

23. The literature knowledge management apparatus according to claim 14, further comprising a result converting unit that creates a search result by converting to a predetermined format at least relation-type knowledge structure elements, or related object-type knowledge structure elements, or literatures, or concept entries retrieved as a result of the search.

24. A literature knowledge management method, comprising:
a textual document handling step that breaks up textual documents of literatures into knowledge constructed from a single word or plural words;
a knowledge structure handling step that is associated with the textual documents, the knowledge structure comprising relation-type knowledge structure elements and related object-type knowledge structure elements;
a concept dictionary handling step that manages a concept dictionary constituting concept entries that hierarchically define concepts of the associated knowledge; and
a word matching step that retrieves from the knowledge structure managed by the knowledge structure handling step the relation-type knowledge structure elements and/or the related object-type knowledge structure elements that match the words included in a search query that is input.

25. The literature knowledge management method according to claim 24, wherein the word matching step retrieves the relation-type knowledge structure elements and/or related object-type knowledge structure elements as a search result, the relation-type knowledge structure elements and/or related object-type knowledge structure elements being at least one of the following:
(1) related object-type knowledge structure elements that have a predetermined synonym relation and that are linked by the relation-type knowledge structure element,
(2) the relation-type knowledge structure elements and/or related object-type knowledge structure elements that belong to the same link graph,
(3) the relation-type knowledge structure elements and/or related object-type knowledge structure elements that belong to the same link graph, the number of paths between the elements being less than a predetermined value, and
(4) the relation-type knowledge structure elements and/or related object-type knowledge structure elements that belong to the same link graph, the elements being of the same type.

26. The literature knowledge management method according to claim 24, wherein the word matching step extracts a corresponding concept entry and/or the concept entries at a higher level and/or lower level than the corresponding concept entry from the concept dictionary managed by the concept dictionary handling step and extracts the relation-type knowledge structure elements and/or related object-type knowledge structure elements associated with these extracted concept entries as a search result.

27. The literature knowledge management method according to claim 24, wherein the word matching step that retrieves as a search result the relation-type knowledge structure elements and/or related object-type knowledge structure elements that constitute a link graph, the relation-type knowledge structure elements and/or related object-type knowledge structure elements being at least one of the following:
(1) the relation-type knowledge structure elements and/or related object-type knowledge structure elements that have the same topology,
(2) the relation-type knowledge structure elements and/or related object-type knowledge structure elements that are associated with a corresponding concept entry and/or the concept entries that are at a higher and/or lower level than the corresponding entry extracted from the concept dictionary managed by the concept dictionary handling step, and
(3) the relation-type knowledge structure elements and/or related object-type knowledge structure elements with the number of paths between the elements being less than the predetermined value.

28. The literature knowledge management method according to claim 24, further comprising a Boolean expression normalization step that normalizes the search query into a predetermined Boolean expression format.

29. The literature knowledge management method according to claim 24, further comprising a Boolean matching step that gets a knowledge structure element cluster for each part of the Boolean expression of the search query, and in order to determine the Boolean product of the parts of the Boolean expression, retrieves from each knowledge structure element cluster the knowledge structure that meets at least one of the following conditions:
(1) the knowledge structure that is in the same literature,
(2) the knowledge structure that is in the text that belongs to a predetermined collection of texts,
(3) the knowledge structure that is in the text that matches a predetermined structure search expression,
(4) the knowledge structure that is continuous,
(5) the knowledge structure that is continuous within a single literature, and
(6) the knowledge structure that is associated with the corresponding concept entry extracted from the concept dictionary processed by the concept dictionary handling step and/or the concept entry at a higher level/lower level than the corresponding concept entry.

30. The literature knowledge management method according to claim 24, further comprising a syntax structure creating step that creates a syntax structure from the search query input in natural language.

31. The literature knowledge management method according to claim 30, further comprising a literature knowledge converting step that creates the knowledge structure from the syntax structure created by the syntax structure creating step.

32. The literature knowledge management method according to claim 31, further comprising:
a link graph similarity appraising step that assesses the similarity between link graphs of the knowledge structure created by the literature knowledge creating step, and gets the cluster of link graphs that are similar; and
a graph combining step that determines an aggregate of the link graphs retrieved by the link graph similarity appraising step that are similar, or a Boolean product of the combination of the link graphs that are similar.

33. The literature knowledge management method according to claim 24, further comprising a result converting step that creates a search result by converting to a predetermined format at least rotation-type knowledge structure elements, or related object-type knowledge structure elements, or literatures, or concept entries retrieved as a result of the search.

34. A computer program that makes a computer to execute a literature knowledge management method, comprising:
a textual document handling step that breaks up textual documents of literatures into knowledge constructed from a single word or plural words;
a knowledge structure handling step that is associated with the textual documents, the knowledge structure comprising relation-type knowledge structure elements and related object-type knowledge structure elements;
a concept dictionary handling step that manages a concept dictionary constituting concept entries that hierarchically define concepts of the associated knowledge; and
a word matching step that retrieves from the knowledge structure managed by the knowledge structure handling step the relation-type knowledge structure elements and/or the related object-type knowledge structure elements that match the words included in a search query that is input.

35. The program according to claim 34, wherein the word matching step retrieves the relation-type knowledge structure elements and/or related object-type knowledge structure elements as a search result, the relation-type knowledge structure elements and/or related object-type knowledge structure elements being at least one of the following:
(1) related object-type knowledge structure elements that have a predetermined synonym relation and that are linked by the relation-type knowledge structure element,
(2) the relation-type knowledge structure elements and/or related object-type knowledge structure elements that belong to the same link graph,
(3) the relation-type knowledge structure elements and/or related object-type knowledge structure elements that belong to the same link graph, the number of paths between the elements being less than a predetermined value, and
(4) the relation-type knowledge structure elements and/or related object-type knowledge structure elements that belong to the same link graph, the elements being of the same type.

36. The program according to claim 34, wherein the word matching step extracts a corresponding concept entry and/or the concept entries at a higher level and/or lower level than the corresponding concept entry from the concept dictionary managed by the concept dictionary handling step and extracts the relation-type knowledge structure elements and/or related object-type knowledge structure elements associated with these extracted concept entries as a search result.

37. The program according to claim 34, wherein the word matching step that retrieves as a search result the relation-type knowledge structure elements and/or related object-type knowledge structure elements that constitute a link graph, the relation-type knowledge structure elements and/or related object-type knowledge structure elements being at least one of the following:
(1) the relation-type knowledge structure elements and/or related object-type knowledge structure elements that have the same topology,
(2) the relation-type knowledge structure elements and/or related object-type knowledge structure elements that are associated with a corresponding concept entry and/or the concept entries that are at a higher and/or lower level than the corresponding entry extracted from the concept dictionary managed by the concept dictionary handling step, and
(3) the relation-type knowledge structure elements and/or related object-type knowledge structure elements with the number of paths between the elements being less than the predetermined value.

38. The program according to claim 34, further comprising a Boolean expression normalization step that normalizes the search query into a predetermined Boolean expression format.

39. The program according to claim 34, further comprising a Boolean matching step that gets a knowledge structure element cluster for each part of the Boolean expression of the search query, and in order to determine the Boolean product of the parts of the Boolean expression, retrieves from each knowledge structure element cluster the knowledge structure that meets at least one of the following conditions:
(1) the knowledge structure that is in the same literature,
(2) the knowledge structure that is in the text that belongs to a predetermined collection of texts,
(3) the knowledge structure that is in the text that matches a predetermined structure search expression,
(4) the knowledge structure that is continuous,
(5) the knowledge structure that is continuous within a single literature, and
(6) the knowledge structure that is associated with the corresponding concept entry extracted from the concept dictionary processed by the concept dictionary handling step and/or the concept entry at a higher level/lower level than the corresponding concept entry.

40. The program according to claim 34, further comprising a syntax structure creating step that creates a syntax structure from the search query input in natural language.

41. The program according to claim 40, further comprising a literature knowledge converting step that creates the knowledge structure from the syntax structure created by the syntax structure creating step.

42. The program according to claim 41, further comprising:
a link graph similarity appraising step that assesses the similarity between link graphs of the knowledge structure created by the literature knowledge creating step, and gets the cluster of link graphs that are similar; and
a graph combining step that determines an aggregate of the link graphs retrieved by the link graph similarity appraising step that are similar, or a Boolean product of the combination of the link graphs that are similar.

43. The program according to claim 34, further comprising a result converting step that creates a search result by converting to a predetermined format at least relation-type knowledge structure elements, or related object-type knowledge structure elements, or literatures, or concept entries retrieved as a result of the search.

44. A computer-readable recording medium on which is recorded the program according to claims 34 through 43.

45. A dictionary information processing apparatus, comprising:
a semantic dictionary creating unit that creates semantic dictionary information that defines a correlation between a canonical form and variant forms of a term; and
a dictionary information checking unit that checks the information stored in the semantic dictionary information and/or the category dictionary information.

46. The dictionary information processing apparatus according to claim 45, wherein the semantic dictionary creating unit further comprises a field attribute appraising unit that assesses, based on attribute information of each field constituting a pre-existing database, whether each of the fields is to be considered as being a canonical form, a variant form, or a field that is not to be used, and
creates the semantic dictionary information from each field of the pre-existing database, based on an appraisal result of the field attribute appraising unit.

47. The dictionary information processing apparatus according to claim 45, wherein the semantic dictionary creating unit further comprises a dictionary term appraising unit that assesses, based on terms entered in a pre-existing dictionary information, whether each of the terms in the dictionary information is to be considered as a canonical form, variant form, or a term that is not to be used, and
creates the semantic dictionary information from each term of the dictionary information, based on an appraisal result of the dictionary term appraising unit.

48. The dictionary information processing apparatus according to claim 45, wherein the semantic dictionary creating unit further comprises a Web term appraising unit that assesses, based on terms entered in a pre-existing dictionary information, whether each of the terms in the Web information is to be considered as a canonical form, variant form, or a term that is not to be used, and
creates the semantic dictionary information from each term of the Web information, based on an appraisal result of the Web term appraising unit.

49. The dictionary information processing apparatus according to claim 45, wherein the category dictionary creating unit further comprises a structured data category structure information creating unit that creates category structure information based on a pre-existing structured data, and
creates the category dictionary information based on the category structure information created by the structured data category structure information creating unit.

50. The dictionary information processing apparatus according to claim 49, wherein the structured data category structure information creating unit creates, when there exist plural root nodes in the pre-existing structured data, the category structure information, the category structure information by adding a hypothetical root node at a level higher than the existing root nodes.

51. The dictionary information processing apparatus according to claim 49, wherein the structured data category structure information creating unit creates, when there exists merging in the pre-existing structured data, the category structure information of a non-merging simple tree structure by reproducing the corresponding portion on the portion where merging occurs.

52. The dictionary information processing apparatus according to claim 45, wherein the category dictionary creating unit further comprises a cluster category structure information creating unit that creates, based on a pre-existing cluster data, a cluster category structure information comprising a root node and leaf nodes, where a name of the cluster data represents the root node and names of the cluster element represent the leaf nodes, and
creates the category dictionary information based on the category structure information created by the cluster category structure information creating unit.

53. The dictionary information processing apparatus according to claim 45, wherein the category dictionary creating unit further comprises a MeSH term category structure information creating unit that creates, based on MeSH term data, a MeSH term category structure information, and
creates the category dictionary information based on the category structure information created by the MeSH term category structure information creating unit.

54. The dictionary information processing apparatus according to claim 45, wherein the category dictionary creating unit further comprises a database category structure information creating unit that creates, based on a pre-existing database, a category structu re information comprising a root node and leaf nodes, where a name of the pre-existing database or specific field represents the root node and data stored in the pre-existing database or the field represent the leaf nodes, and
creates the category dictionary information based on the category structure information created by the database category structure information creating unit.

55. The dictionary information processing apparatus according to claim 45, wherein the category dictionary creating unit further comprises an analysis program category structure information creating unit that creates, based on a pre-existing analysis program process result data, a category structure information comprising a root node and leaf nodes, where an analysis program name represents the root node and process result data represent the leaf nodes, and
creates the category dictionary information based on the category structure information created by the analysis program category structure information creating unit.

56. The dictionary information processing apparatus according to claim 45, wherein the dictionary information checking unit further comprises entry-wise checking unit that carries out entry-wise checking of the semantic dictionary information and/or category dictionary information, based on at least check term list, or check program, or check pattern.

57. The dictionary information processing apparatus according to claim 45, wherein the dictionary information checking unit further comprises a canonical form consistency checking unit that checks whether a variant form entered in the semantic dictionary is stored a different canonical form.

58. The dictionary information processing apparatus according to claim 45, wherein the dictionary information checking unit further comprises a statistics checking unit that carries out an entry-related and usage-related statistical processing of the canonical forms, the variant forms, and the categories stored in the semantic dictionary information and/or category dictionary information, and checks whether a result of the statistical processing falls within a predetermined normal range.

59. The dictionary information processing apparatus according to claim 45, wherein the dictionary information checking unit further comprises a co-occurrence checking unit that calculates a degree of similarity based on a co-occurrence relation between the canonical forms, the variant forms, and the categories entered in the semantic dictionary information and/or category dictionary information.

60. A dictionary information processing method, comprising:
a semantic dictionary creating step that creates semantic dictionary information that defines a correlation between a canonical form and variant forms of a term; and
a dictionary information checking step that checks the information stored in the semantic dictionary information and/or the category dictionary information.

61. The dictionary information processing method according to claim 60, wherein the semantic dictionary creating step further comprises a field attribute appraising step that assesses, based on attribute information of each field constituting a pre-existing database, whether each of the fields is to be considered as being a canonical form, a variant form, or a field that is not to be used, and
creates the semantic dictionary information from each field of the pre-existing database, based on an appraisal result of the field attribute appraising step.

62. The dictionary information processing method according to claim 60, wherein the semantic dictionary creating step further comprises a dictionary term appraising step that assesses, based on terms entered in a pre-existing dictionary information, whether each of the terms in the dictionary information is to be considered as a canonical form, variant form, or a term that is not to be used, and
creates the semantic dictionary information from each term of the dictionary information, based on an appraisal result of the dictionary term appraising step.

63. The dictionary information processing method according to claim 60, wherein the semantic dictionary creating step further comprises a Web term appraising step that assesses, based on terms entered in a pre-existing dictionary information, whether each of the terms in the Web information is to be considered as a canonical form, variant form, or a term that is not to be used, and
creates the semantic dictionary information from each term of the Web information, based on an appraisal result of the Web term appraising step.

64. The dictionary information processing method according to claim 60, wherein the category dictionary creating step further comprises a structured data category structure information creating step that creates category structure information based on a pre-existing structured data, and
creates the category dictionary information based on the category structure information created by the structured data category structure information creating step.

65. The dictionary information processing method according to claim 64, wherein the structured data category structure information creating step creates, when there exist plural root nodes in the pre-existing structured data, the category structure information, the category structure information by adding a hypothetical root node at a level higher than the existing root nodes.

66. The dictionary information processing method according to claim 64, wherein the structured data category structure information creating step creates, when there exists merging in the pre-existing structured data, the category structure information of a non-merging simple tree structure by reproducing the corresponding portion on the portion where merging occurs.

67. The dictionary information processing method according to claim 60, wherein the category dictionary creating step further comprises a cluster category structure information creating step that creates, based on a pre-existing cluster data, a cluster category structure information comprising a root node and leaf nodes, where a name of the cluster data represents the root node and names of the cluster element represent the leaf nodes, and
creates the category dictionary information based on the category structure information created by the cluster category structure information creating step.

68. The dictionary information processing method according to claim 60, wherein the category dictionary creating step further comprises a MeSH term category structure information creating step that creates, based on MeSH term data, a MeSH term category structure information, and
creates the category dictionary information based on the category structure information created by the MeSH term category structure information creating step.

69. The dictionary information processing method according to claim 60, wherein the category dictionary creating step further comprises a database category structure information creating step that creates, based on a pre-existing database, a category structure information comprising a root node and leaf nodes, where a name of the pre-existing database or specific field represents the root node and data stored in the pre-existing database or the field represent the leaf nodes, and
creates the category dictionary information based on the category structure information created by the database category structure information creating step.

70. The dictionary information processing method according to claim 60, wherein the category dictionary creating step further comprises an analysis program category structure information creating step that creates, based on a pre-existing analysis program process result data, a category structure information comprising a root node and leaf nodes, where an analysis program name represents the root node and process result data represent the leaf nodes, and
creates the category dictionary information based on the category structure information created by the analysis program category structure information creating step.

71. The dictionary information processing method according to claim 60, wherein the dictionary information checking step further comprises entry-wise checking step that carries out entry-wise checking of the semantic dictionary information and/or category dictionary information, based on at least check term list, or check program, or check pattern.

72. The dictionary information processing method according to claim 60, wherein the dictionary information checking step further comprises a canonical form consistency checking step that checks whether a variant form entered in the semantic dictionary is stored a different canonical form.

73. The dictionary information processing method according to claim 60, wherein the dictionary information checking step further comprises a statistics checking step that carries out an entry-related and usage-related statistical processing of the canonical forms, the variant forms, and the categories stored in the semantic dictionary information and/or category dictionary information, and checks whether a result of the statistical processing falls within a predetermined normal range.

74. The dictionary information processing method according to claim 60, wherein the dictionary information checking step further comprises a co-occurrence checking step that calculates a degree of similarity based on a co-occurrence relation between the canonical forms, the variant forms, and the categories entered in the semantic dictionary information and/or category dictionary information.

75. A computer program that makes a computer to execute a dictionary information processing method, comprising:
a semantic dictionary creating step that creates semantic dictionary information that defines a correlation between a canonical form and variant forms of a term; and
a dictionary information checking step that checks the information stored in the semantic dictionary information and/or the category dictionary information.

76. The program according to claim 75, wherein the semantic dictionary creating step further comprises a field attribute appraising step that assesses, based on attribute information of each field constituting a pre-existing database, whether each of the fields is to be considered as being a canonical form, a variant form, or a field that is not to be used, and
creates the semantic dictionary information from each field of the pre-existing database, based on an appraisal result of the field attribute appraising step.

77. The program according to claim 75, wherein the semantic dictionary creating step further comprises a dictionary term appraising step that assesses, based on terms entered in a pre-existing dictionary information, whether each of the terms in the dictionary information is to be considered as a canonical form, variant form, or a term that is not to be used, and
creates the semantic dictionary information from each term of the dictionary information, based on an appraisal result of the dictionary term appraising step.

78. The program according to claim 75, wherein the semantic dictionary creating step further comprises a Web term appraising step that assesses, based on terms entered in a pre-existing dictionary information, whether each of the terms in the Web information is to be considered as a canonical form, variant form, or a term that is not to be used, and
creates the semantic dictionary information from each term of the Web information, based on an appraisal result of the Web term appraising step.

79. The program according to claim 75, wherein the category dictionary creating step further comprises a structured data category structure information creating step that creates category structure information based on a pre-existing structured data, and
creates the category dictionary information based on the category structure information created by the structured data category structure information creating step.

80. The program according to claim 79, wherein the structured data category structure information creating step creates, when there exist plural root nodes in the pre-existing structured data, the category structure information, the category structure information by adding a hypothetical root node at a level higher than the existing root nodes.

81. The program according to claim 79, wherein the structured data category structure information creating step creates, when there exists merging in the pre-existing structured data, the category structure information of a non-merging simple tree structure by reproducing the corresponding portion on the portion where merging occurs.

82. The program according to claim 75, wherein the category dictionary creating step further comprises a cluster category structure information creating step that creates, based on a pre-existing cluster data, a cluster category structure information comprising a root node and leaf nodes, where a name of the cluster data represents the root node and names of the cluster element represent the leaf nodes, and
creates the category dictionary information based on the category structure information created by the cluster category structure information creating step.

83. The program according to claim 75, wherein the category dictionary creating step further comprises a MeSH term category structure information creating step that creates, based on MeSH term data, a MeSH term category structure information, and
creates the category dictionary information based on the category structure information created by the MeSH term category structure information creating step.

84. The program according to claim 75, wherein the category dictionary creating step further comprises a database category structure information creating step that creates, based on a pre-existing database, a category structure information comprising a root node and leaf nodes, where a name of the pre-existing database or specific field represents the root node and data stored in the pre-existing database or the field represent the leaf nodes, and
creates the category dictionary information based on the category structure information created by the database category structure information creating step.

85. The program according to claim 75, wherein the category dictionary creating step further comprises an analysis program category structure information creating step that creates, based on a pre-existing analysis program process result data, a category structure information comprising a root node and leaf nodes, where an analysis program name represents the root node and process result data represent the leaf nodes, and
creates the category dictionary information based on the category structure information created by the analysis program category structure information creating step.

86. The program according to claim 75, wherein the dictionary information checking step further comprises entry-wise checking step that carries out entry-wise checking of the semantic dictionary information and/or category dictionary information, based on at least check term list, or check program, or check pattern.

87. The program according to claim 75, wherein the dictionary information checking step further comprises a canonical form consistency checking step that checks whether a variant form entered in the semantic dictionary is stored a different canonical form.

88. The program according to claim 75, wherein the dictionary information checking step further comprises a statistics checking step that carries out an entry-related and usage-related statistical processing of the canonical forms, the variant forms, and the categories stored in the semantic dictionary information and/or category dictionary information, and checks whether a result of the statistical processing falls within a predetermined normal range.

89. The program according to claim 75, wherein the dictionary information checking step further comprises a co-occurrence checking step that calculates a degree of similarity based on a co-occu rrence relation between the canonical forms, the variant forms, and the categories entered in the semantic dictionary information and/or category dictionary information.

90. A computer-readable recording medium on which is recorded the program according to claims 75 through 89.

91. A document information extraction processing apparatus, comprising:
an attribute information registration unit that registers attribute information for a canonical form, a variant form, or a category item of every term defined in semantic dictionary information or a category dictionary, the attribute information being a condition for information extraction; and
an attribute decision extraction unit that, when there exist among the textual document information of an analysis object document the canonical form, the variant form or the category item that have a corresponding attribute information registered by the attribute information registration unit, extracts information pertaining to the canonical form, the variant form or the category item.

92. A document information extraction processing apparatus, comprising:
a dictionary entry checking unit that checks for bugs in canonical forms or variant forms of every term defined in semantic dictionary information; and
a checked dictionary extraction unit that extracts information pertaining to the canonical forms and variant forms present in textual document information of an analysis object document that have cleared the checking by the dictionary entry checking unit.

93. A document information extraction processing apparatus, comprising:
an extraction object part-of-speech information registration unit that registers extraction object part-of-speech information pertaining to a stipulated part-of-speech, the part-of-speech being a condition for information extraction;
a syntax analysis unit that carries out syntax analysis of textual document information of an analysis object document, and establishes the part-of-speech for every word registered in the textual document information; and
a morpheme extraction unit that, when a word that exists in the textual document information of the analysis object document is registered as a part-of-speech by the extraction object part-of-speech information registration unit, extracts information pertaining to the word and the part-of-speech.

94. A document information extraction processing method, comprising:
an attribute information registration step that registers attribute information for a canonical form, a variant form, or a category item of every term defined in semantic dictionary information or a category dictionary, the attribute information being a condition for information extraction; and
an attribute decision extraction step that, when there exist among the textual document information of an analysis object document the canonical form, the variant form or the category item that have a corresponding attribute information registered by the attribute information registration step, extracts information pertaining to the canonical form, the variant form or the category item.

95. A document information extraction processing method, comprising:
a dictionary entry checking step that checks for bugs in canonical forms or variant forms of every term defined in semantic dictionary information; and
a checked dictionary extraction step that extracts information pertaining to the canonical forms and variant forms present in textual document information of an analysis object document that have cleared the checking by the dictionary entry checking step.

96. A document information extraction processing method, comprising:
an extraction object part-of-speech information registration step that registers extraction object part-of-speech information pertaining to a stipulated part-of-speech, the part-of-speech being a condition for information extraction;
a syntax analysis step that carries out syntax analysis of textual document information of an analysis object document, and establishes the part-of-speech for every word registered in the textual document information; and
a morpheme extraction step that, when a word that exists in the textual document information of the analysis object document is registered as a part-of-speech by the extraction object part-of-speech information registration step, extracts information pertaining to the word and the part-of-speech.

97. A computer program that makes a computer to execute a document information extraction processing method, comprising:
an attribute information registration step that registers attribute information for a canonical form, a variant form, or a category item of every term defined in semantic dictionary information or a category dictionary, the attribute information being a condition for information extraction; and
an attribute decision extraction step that, when there exist among the textual document information of an analysis object document the canonical form, the variant form or the category item that have a corresponding attribute information registered by the attribute information registration step, extracts information pertaining to the canonical form, the variant form or the category item.

98. A computer program that makes a computer to execute a document information extraction processing method, comprising:
a dictionary entry checking step that checks for bugs in canonical forms or variant forms of every term defined in semantic dictionary information; and
a checked dictionary extraction step that extracts information pertaining to the canonical forms and variant forms present in textual document information of an analysis object document that have cleared the checking by the dictionary entry checking step.

99. A computer program that makes a computer to execute a document information extraction processing method, comprising:
an extraction object part-of-speech information registration step that registers extraction object part-of-speech information pertaining to a stipulated part-of-speech, the part-of-speech being a condition for information extraction;
a syntax analysis step that carries out syntax analysis of textual document information of an analysis object document, and establishes the part-of-speech for every word registered in the textual document information; and
a morpheme extraction step that, when a word that exists in the textual document information of the analysis object document is registered as a part-of-speech by the extraction object part-of-speech information registration step, extracts information pertaining to the word and the part-of-speech.

100. A computer-readable recording medium on which is recorded the program according to claims 97 through 99.

101. A text mining processing apparatus that totals an appearance frequency of each term appearing in an analysis object document, the text mining processing apparatus comprising a textual document display control unit,
wherein the textual document display control unit controls in such a way that:
textual document information of the analysis object document, and
totaled key list information are output to an output device,
the totaled key list information being included in the textual document information and being a list of terms to be totaled, wherein each term has a link button to a type of the term and/or the destination address.

102. A text mining processing apparatus that totals an appearance frequency of each term appearing in an analysis object document, the text mining processing apparatus comprising a dictionary entry search screen control unit,
wherein the dictionary entry search screen control unit controls in such a way that,
a search word input by a user,
information pertaining to a corresponding canonical form and a semantic dictionary entry of the canonical form searched and extracted based on the search word, from semantic dictionary information, and
information pertaining to a corresponding category and a category dictionary entry of the category searched and extracted, based on the search word, from category dictionary information
are output to an output device.

103. A text mining processing apparatus that totals an appearance frequency of each term appearing in an analysis object document, the text mining processing apparatus comprising a dictionary entry search screen control unit,
wherein the dictionary entry search screen control unit controls in such a way that,
textual document information of analysis target document, and
trace result information that includes at least a search result of a semantic dictionary or part-of-speech information obtained by syntax analysis process, or a search result of a category dictionary, for the terms that are included in the textual document information and that are totaled,
are output to an output device.

104. A text mining processing apparatus that totals an appearance frequency of each term appearing in an analysis object document, comprising:
a syntax structure analyzing unit that carries out, according to a syntax analysis result of textual document information of the analysis object document, a totaling process text mining on the analysis object document, by considering a sequential combination of nouns and verbs included in the textual document information as a single category.

105. A text mining processing apparatus that totals an appearance frequency of each term appearing in an analysis object document, comprising:
a multi-window display unit that controls in such a way that if a finer search is carried out using a search condition in a second search window on a search result of a first search window, the mutually. linked search windows and the search result display window are displayed in the form of multi-window display, and if contents of any of these windows change, the change is automatically reflected in the other windows as well.

106. A text mining processing apparatus that totals an appearance frequency of each term appearing in an analysis object document, comprising:
a 2-D map display screen control unit that outputs to an output device a 2-D map window by sorting or clustering category entries corresponding to rows and columns of a 2-D map that displays a text mining result.

107. A text mining processing apparatus that totals an appearance frequency of each term appearing in an analysis object document, comprising:
an operation history collecting unit that collects operation history information pertaining to at least time, or user identification, or operation name, or operation argument, or operation object, or operation result, or user comment pertaining to intention of operation, related to each operation during text mining.

108. The text mining processing apparatus according to claim 107, comprising an operation automated execution unit that creates, based on the operation history information collected by the operation history collecting unit, and executes a batch script.

109. A text mining processing apparatus that totals an appearance frequency of each term appearing in an analysis object document, comprising:
a category hierarchy creating unit that outputs to an output device a totalized result of each category registered in category dictionary information used in a text mining process by converting the totalized result into a hierarchied tree structure; and
a category selection unit that selects at least a portion of the hierarchied tree structure output by the category hierarchy creating unit.

110. The text mining processing apparatus according to claim 109, further comprising an intermediate node totaling unit that, when an intermediate node of a totalized result of all the categories that are converted to the hierarchied tree structure by the category hierarchy creating unit is treated as a concept entry,
treats a totalized result corresponding to all leaf node concept entries which are descendents of the intermediate node as the totalized result of the intermediate node, and/or,
when in a semantic dictionary used in the text mining process a canonical form or a variant form is defined for the intermediate node, treats the totalized result of the analysis object document that includes the canonical form or the variant form as the totalized result of the intermediate node.

111. A text mining processing method that totals an appearance frequency of each term appearing in an analysis object document, the text mining processing method comprising a textual document display control step,
wherein the textual document display control step controls in such a way that:
textual document information of the analysis object document, and
totaled key list information are output to an output device,
the totaled key list information being included in the textual document information and being a list of terms to be totaled, wherein each term has a link button to a type of the term and/or the destination address.

112. A text mining processing method that totals an appearance frequency of each term appearing in an analysis object document, the text mining processing method comprising a dictionary entry search screen control step,
wherein the dictionary entry search screen control step controls in such a way that,
a search word input by a user,
information pertaining to a corresponding canonical form and a semantic dictionary entry of the canonical form searched and extracted based on the search word, from semantic dictionary information, and
information pertaining to a corresponding category and a category dictionary entry of the category searched and extracted, based on the search word, from category dictionary information
are output to an output device.

113. A text mining processing method that totals an appearance frequency of each term appearing in an analysis object document, the text mining processing method comprising a dictionary entry search screen control step,
wherein the dictionary entry search screen control step controls in such a way that,
textual document information of analysis target document, and
trace result information that includes at least a search result of a semantic dictionary or part-of-speech information obtained by syntax analysis process, or a search result of a category dictionary, for the terms that are included in the textual document information and that are totaled,
are output to an output device.

114. A text mining processing method that totals an appearance frequency of each term appearing in an analysis object document, comprising:
a syntax structure analyzing step that carries out, according to a syntax analysis result of textual document information of the analysis object document, a totaling process text mining on the analysis object document, by considering a sequential combination of nouns and verbs included in the textual document information as a single category.

115. A text mining processing method that totals an appearance frequency of each term appearing in an analysis object document, comprising:
a multi-window display step that controls in such a way that if a finer search is carried out using a search condition in a second search window on a search result of a first search window, the mutually linked search windows and the search result display window are displayed in the form of multi-window display, and if contents of any of these windows change, the change is automatically reflected in the other windows as well.

116. A text mining processing method that totals an appearance frequency of each term appearing in an analysis object document, comprising:
a 2-D map display screen control step that outputs to an output device a 2-D map window by sorting or clustering category entries corresponding to rows and columns of a 2-D map that displays a text mining result.

117. A text mining processing method that totals an appearance frequency of each term appearing in an analysis object document, comprising:
an operation history collecting step that collects operation history information pertaining to at least time, or user identification, or operation name, or operation argument, or operation object, or operation result, or user comment pertaining to intention of operation, related to each operation during text mining.

118. The text mining processing method according to claim 117, comprising an operation automated execution step that creates, based on the operation history information collected by the operation history collecting step, and executes a batch script.

119. A text mining processing method that totals an appearance frequency of each term appearing in an analysis object document, comprising:
a category hierarchy creating step that outputs to an output device a totalized result of each category registered in category dictionary information used in a text mining process by converting the totalized result into a hierarchied tree structure; and
a category selection step that selects at least a portion of the hierarchied tree structure output by the category hierarchy creating step.

120. The text mining processing method according to claim 119, further comprising an intermediate node totaling step that, when an intermediate node of a totalized result of all the categories that are converted to the hierarchied tree structure by the category hierarchy creating step is treated as a concept entry,
treats a totalized result corresponding to all leaf node concept entries which are descendents of the intermediate node as the totalized result of the intermediate node, and/or,
when in a semantic dictionary used in the text mining process a canonical form or a variant form is defined for the intermediate node, treats the totalized result of the analysis object document that includes the canonical form or the variant form as the totalized result of the intermediate node.

121. A computer program that makes a computer to execute a text mining processing method that totals an appearance frequency of each term appearing in an analysis object document, the text mining processing method comprising a textual document display control step,
wherein the textual document display control step controls in such a way that:
textual document information of the analysis object document, and
totaled key list information are output to an output device,
the totaled key list information being included in the textual document information and being a list of terms to be totaled,
wherein each term has a link button to a type of the term and/or the destination address.

122. A computer program that makes a computer to execute a text mining processing method that totals an appearance frequency of each term appearing in an analysis object document, the text mining processing method comprising a dictionary entry search screen control step,
wherein the dictionary entry search screen control step controls in such a way that,
a search word input by a user,
information pertaining to a corresponding canonical form and a semantic dictionary entry of the canonical form searched and extracted based on the search word, from semantic dictionary information, and
information pertaining to a corresponding category and a category dictionary entry of the category searched and extracted, based on the search word, from category dictionary information
are output to an output device.

123. A computer program that makes a computer to execute a text mining processing method that totals an appearance frequency of each term appearing in an analysis object document, the text mining processing method comprising a dictionary entry search screen control step,
wherein the dictionary entry search screen control step controls in such a way that,
textual document information of analysis target document, and
trace result information that includes at least a search result of a semantic dictionary or part-of-speech information obtained by syntax analysis process, or a search result of a category dictionary, for the terms that are included in the textual document information and that are totaled,
are output to an output device.

124. A computer program that makes a computer to execute a text mining processing method that totals an appearance frequency of each term appearing in an analysis object document, comprising:
a syntax structure analyzing step that carries out, according to a syntax analysis result of textual document information of the analysis object document, a totaling process text mining on the analysis object document, by considering a sequential combination of nouns and verbs included in the textual document information as a single category.

125. A computer program that makes a computer to execute a text mining processing method that totals an appearance frequency of each term appearing in an analysis object document, comprising:
a multi-window display step that controls in such a way that if a finer search is carried out using a search condition in a second search window on a search result of a first search window, the mutually linked search windows and the search result display window are displayed in the form of multi-window display, and if contents of any of these windows change, the change is automatically reflected in the other windows as well.

126. A computer program that makes a computer to execute a text mining processing method that totals an appearance frequency of each term appearing in an analysis object document, comprising:
a 2-D map display screen control step that outputs to an output device a 2-D map window by sorting or clustering category entries corresponding to rows and columns of a 2-D map that displays a text mining result.

127. A computer program that makes a computer to execute a text mining processing method that totals an appearance frequency of each term appearing in an analysis object document, comprising:
an operation history collecting step that collects operation history information pertaining to at least time, or user identification, or operation name, or operation argument, or operation object, or operation result, or user comment pertaining to intention of operation, related to each operation during text mining.

128. The program according to claim 127, comprising an operation automated execution step that creates, based on the operation history information collected by the operation history collecting step, and executes a batch script.

129. A computer program that makes a computer to execute a text mining processing method that totals an appearance frequency of each term appearing in an analysis object document, comprising:
a category hierarchy creating step that outputs to an output device a totalized result of each category registered in category dictionary information used in a text mining process by converting the totalized result into a hierarchied tree structure; and
a category selection step that selects at least a portion of the hierarchied tree structure output by the category hierarchy creating step.

130. The program according to claim 129, further comprising an intermediate node totaling step that, when an intermediate node of a totalized result of all the categories that are converted to the hierarchied tree structure by the category hierarchy creating step is treated as a concept entry,
treats a totalized result corresponding to all leaf node concept entries which are descendents of the intermediate node as the totalized result of the intermediate node, and/or,
when in a semantic dictionary used in the text mining process a canonical form or a variant form is defined for the intermediate node, treats the totalized result of the analysis object document that includes the canonical form or the variant form as the totalized result of the intermediate node.

131. A computer-readable recording medium on which is recorded the program according to claims 121 through 130.

132. A text mining analysis apparatus, comprising:
a category changing unit that changes a category structure by the new concept assigned by the concept assigning unit;
a view assigning unit that selects a concept to be analyzed by text mining analysis, and assigns a view by setting view cutoff line constituting concepts, from among the concepts below the concept to be analyzed, that form a view cutoff line; and
a text mining analysis unit that carries out the text mining analysis using the view assigned by the view assigning unit.

133. The text mining analysis apparatus according to claim 132, wherein the concept assigning unit further includes at least any one of:
a first concept assigning unit that specifies a search condition related to a text string or a numerical value, and assigns as the new concept a cluster of documents which contain the text string or the numerical value that satisfy the search condition;
a second concept assigning unit that specifies the search condition and a search field, and assigns as the new concept a cluster of documents which contain the text string or the numerical value in the search field that satisfy the search condition; and
a third concept assigning unit that assigns as a concept a cluster of documents obtained by carrying out Boolean clustering operation of existing concepts.

134. The text mining analysis apparatus according to claim 132, wherein the category changing unit further includes at least any one of:
a first category changing unit that places the new concept below any concept of an existing category; and
a second category changing unit that forms a new category from new concepts.

135. The text mining analysis apparatus according to claim 132, wherein the view assigning unit further includes an attribute setting unit that sets attributes corresponding to the view cutoff line constituting concepts, and
the text mining analysis unit carries out the text mining analysis according to the attributes of the view cutoff line constituting concepts set by the attribute setting unit.

136. A text mining analysis method, comprising:
a category changing step that changes a category structure by the new concept assigned by the concept assigning step;
a view assigning step that selects a concept to be analyzed by text mining analysis, and assigns a view by setting view cutoff line constituting concepts, from among the concepts below the concept to be analyzed, that form a view cutoff line; and
a text mining analysis step that carries out the text mining analysis using the view assigned by the view assigning step.

137. The text mining analysis method according to claim 136, wherein the concept assigning step further includes at least any one of:
a first concept assigning step that specifies a search condition related to a text string or a numerical value, and assigns as the new concept a cluster of documents which contain the text string or the numerical value that satisfy the search condition;
a second concept assigning step that specifies the search condition and a search field, and assigns as the new concept a cluster of documents which contain the text string or the numerical value in the search field that satisfy the search condition; and
a third concept assigning step that assigns as a concept a cluster of documents obtained by carrying out Boolean clustering operation of existing concepts.

138. The text mining analysis method according to claim 136, wherein the category changing step further includes at least any one of:
a first category changing step that places the new concept below any concept of an existing category; and
a second category changing step that forms a new category from new concepts.

139. The text mining analysis method according to claim 136, wherein the view assigning step further includes an attribute setting step that sets attributes corresponding to the view cutoff line constituting concepts, and
the text mining analysis step carries out the text mining analysis according to the attributes of the view cutoff line constituting concepts set by the attribute setting step.

140. A computer program that makes a computer to execute a text mining analysis method, comprising:
a category changing step that changes a category structure by the new concept assigned by the concept assigning step;
a view assigning step that selects a concept to be analyzed by text mining analysis, and assigns a view by setting view cutoff line constituting concepts, from among the concepts below the concept to be analyzed, that form a view cutoff line; and
a text mining analysis step that carries out the text mining analysis using the view assigned by the view assigning step.

141. The program according to claim 140, wherein the concept assigning step further includes at least any one of:
a first concept assigning step that specifies a search condition related to a text string or a numerical value, and assigns as the new concept a cluster of documents which contain the text string or the numerical value that satisfy the search condition;
a second concept assigning step that specifies the search condition and a search field, and assigns as the new concept a cluster of documents which contain the text string or the numerical value in the search field that satisfy the search condition; and
a third concept assigning step that assigns as a concept a cluster of documents obtained by carrying out Boolean clustering operation of existing concepts.

142. The program according to claim 140, wherein the category changing step further includes at least any one of:
a first category changing step that places the new concept below any concept of an existing category; and
a second category changing step that forms a new category from new concepts.

143. The program according to claim 140, wherein the view assigning step further includes an attribute setting step that sets attributes corresponding to the view cutoff line constituting concepts, and
the text mining analysis step carries out the text mining analysis according to the attributes of the view cutoff line constituting concepts set by the attribute setting step.

144. A computer-readable recording medium on which is recorded the program according to claims 140 through 143.
